(19)

Europäisches
Patentamt
European
Patent Office
Office européen
des brevets

(11)  **EP 3 869 522 A2**

(12)  # EUROPEAN PATENT APPLICATION

(43) Date of publication:
**25.08.2021 Bulletin 2021/34**

(51) Int Cl.:
**G21B 1/00** *(2006.01)*    **G21B 3/00** *(2006.01)*

(21) Application number: **21155648.5**

(22) Date of filing: **18.01.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.01.2016  US 201662280300 P
22.02.2016  US 201662298431 P
22.03.2016  US 201662311896 P
01.04.2016  US 201662317230 P
05.04.2016  US 201662318694 P
22.04.2016  US 201662326527 P
18.05.2016  US 201662338041 P
27.05.2016  US 201662342774 P
22.06.2016  US 201662353426 P
27.06.2016  US 201662355313 P
19.07.2016  US 201662364192 P
28.07.2016  US 201662368121 P
26.08.2016  US 201662380301 P
09.09.2016  US 201662385872 P
21.10.2016  US 201662411398 P
14.12.2016  US 201662434331 P
13.01.2017  US 201762446256 P**

(62) Document number(s) of the earlier application(s) in
accordance with Art. 76 EPC:
**17706332.8 / 3 405 955**

(71) Applicant: **Brilliant Light Power, Inc.
Cranbury, NJ 08512 (US)**

(72) Inventor: **Mills, Randell Lee
Coatesville, PA 19320 (US)**

(74) Representative: **Uexküll & Stolberg
Partnerschaft von
Patent- und Rechtsanwälten mbB
Beselerstraße 4
22607 Hamburg (DE)**

Remarks:
•This application was filed on 06.02.2021 as a
divisional application to the application mentioned
under INID code 62.
•Claims filed after the date of filing of the application
/ after the date of receipt of the divisional application
(Rule 68(4) EPC)

(54)  **THERMOPHOTOVOLTAIC ELECTRICAL POWER GENERATOR**

(57)     A molten metal fuel to plasma to electricity power source that provides at least one of electrical and thermal power comprising (i) at least one reaction cell (5b31) for the catalysis of atomic hydrogen to form hydrinos, (ii) a chemical fuel mixture comprising at least two components chosen from: a source of $H_2O$ catalyst or $H_2O$ catalyst; a source of atomic hydrogen or atomic hydrogen; reactants to form the source of $H_2O$ catalyst or $H_2O$ catalyst and a source of atomic hydrogen or atomic hydrogen; and a molten metal to cause the fuel to be highly conductive, (iii) a fuel injection system comprising an electromagnetic pump (5k), (iv) at least one set of electrodes (8) that confine the fuel and an electrical power source that provides repetitive short bursts of low-voltage, high-current electrical energy to initiate rapid kinetics of the hydrino reaction and an energy gain due to forming hydrinos to form a brilliant-light emitting plasma, (v) a product recovery system such as at least one of an electrode electromagnetic pump recovery system and a gravity recovery system, (vi) a source of $H_2O$ vapor supplied to the plasma and (vii) a power converter capable of converting the high-power light output of the cell into electricity such as a concentrated solar power thermophotovoltaic device (26a) and a visible and infrared transparent window or a plurality of ultraviolet (UV) photovoltaic cells (15) or a plurality of photoelectric cells, and a UV window.

EP 3 869 522 A2

FIG. 2I10

**Description**

**CROSS-REFERENCES OF RELATED APPLICATIONS**

This application claims the benefit of U.S. Provisional Application Nos. 62/280,300, filed January 19, 2016; 62/298,431, filed February 22, 2016; 62/311,896, filed March 22, 2016; 62/317,230, filed April 1, 2016; 62/318,694, filed April 5, 2016; 62/326,527, filed April 22, 2016; 62/338,041, filed May 18, 2016; 62/342,774, filed May 27, 2016; 62/353,426, filed June 22, 2016; 62/355,313, filed June 27, 2016; 62/364,192, filed June 19, 2016; 62/368,121, filed July 28, 2016; 62/380,301, filed August 26, 2016; 62/385,872, filed September 9, 2016; 62/411,398, filed October 21, 2016; 62/434,331, filed December 14, 2016; and 62/446,256, filed January 13, 2017, all of which are incorporated herein by reference.

**SUMMARY OF THE DISCLOSURE**

The present disclosure relates to the field of power generation and, in particular, to systems, devices, and methods for the generation of power. More specifically, embodiments of the present disclosure are directed to power generation devices and systems, as well as related methods, which produce optical power, plasma, and thermal power and produces electrical power via an optical to electric power converter, plasma to electric power converter, photon to electric power converter, or a thermal to electric power converter. In addition, embodiments of the present disclosure describe systems, devices, and methods that use the ignition of a water or water-based fuel source to generate optical power, mechanical power, electrical power, and/or thermal power using photovoltaic power converters. These and other related embodiments are described in detail in the present disclosure.

Power generation can take many forms, harnessing the power from plasma. Successful commercialization of plasma may depend on power generation systems capable of efficiently forming plasma and then capturing the power of the plasma produced.

Plasma may be formed during ignition of certain fuels. These fuels can include water or water-based fuel source. During ignition, a plasma cloud of electron-stripped atoms is formed, and high optical power may be released. The high optical power of the plasma can be harnessed by an electric converter of the present disclosure. The ions and excited state atoms can recombine and undergo electronic relaxation to emit optical power. The optical power can be converted to electricity with photovoltaics.

Certain embodiments of the present disclosure are directed to a power generation system comprising: a plurality of electrodes configured to deliver power to a fuel to ignite the fuel and produce a plasma; a source of electrical power configured to deliver electrical energy to the plurality of electrodes; and at least one photovoltaic power converter positioned to receive at least a plurality of plasma photons.

In one embodiment, the present disclosure is directed to a power system that generates at least one of electrical energy and thermal energy comprising:

at least one vessel capable of a maintaining a pressure of below, at, or above atmospheric;
reactants, the reactants comprising:

a) at least one source of catalyst or a catalyst comprising nascent $H_2O$;
b) at least one source of $H_2O$ or $H_2O$;
c) at least one source of atomic hydrogen or atomic hydrogen; and
d) a molten metal;

at least one molten metal injection system comprising a molten metal reservoir and an electromagnetic pump;
at least one additional reactants injection system, wherein the additional reactants comprise:

a) at least one source of catalyst or a catalyst comprising nascent $H_2O$;
b) at least one source of $H_2O$ or $H_2O$, and
c) at least one source of atomic hydrogen or atomic hydrogen,

at least one reactants ignition system comprising a source of electrical power, wherein the source of electrical power receives electrical power from the power converter;
a system to recover the molten metal;
at least one power converter or output system of at least one of the light and thermal output to electrical power and/or thermal power.

In an embodiment, the molten metal ignition system comprises:

a) at least one set of electrodes to confine the molten metal; and

b) a source of electrical power to deliver a short burst of high-current electrical energy sufficient to cause the reactants to react to form plasma.

The electrodes may comprise a refractory metal.

In an embodiment, the source of electrical power that delivers a short burst of high-current electrical energy sufficient to cause the reactants to react to form plasma comprises at least one supercapacitor.

The molten metal injection system may comprise an electromagnetic pump comprising at least one magnet providing a magnetic field and current source to provide a vector-crossed current component.

The molten metal reservoir may comprise an inductively coupled heater.

The molten metal ignition system may comprise at least one set of electrodes that are separated to form an open circuit, wherein the open circuit is closed by the injection of the molten metal to cause the high current to flow to achieve ignition.

The molten metal ignition system current may be in the range of 500 A to 50,000 A.

The circuit of the molten metal ignition system may be closed by metal injection to cause an ignition frequency in the range of 1 Hz to 10,000 Hz wherein the molten metal comprises at least one of silver, silver-copper alloy, and copper, and the addition reactants may comprise at least one of $H_2O$ vapor and hydrogen gas.

In an embodiment, the additional reactants injection system may comprise at least one of a computer, $H_2O$ and $H_2$ pressure sensors, and flow controllers comprising at least one or more of the group of a mass flow controller, a pump, a syringe pump, and a high precision electronically controllable valve; the valve comprising at least one of a needle valve, proportional electronic valve, and stepper motor valve wherein the valve is controlled by the pressure sensor and the computer to maintain at least one of the $H_2O$ and $H_2$ pressure at a desired value.

The additional reactants injection system may maintain the $H_2O$ vapor pressure in the range of 0.1 Torr to 1 Torr.

In an embodiment, the system to recover the products of the reactants comprises at least one of the vessel comprising walls capable of providing flow to the melt under gravity, an electrode electromagnetic pump, and the reservoir in communication with the vessel and further comprising a cooling system to maintain the reservoir at a lower temperature than another portion of the vessel to cause metal vapor of the molten metal to condense in the reservoir, wherein the recovery system may comprise an electrode electromagnetic pump comprising at least one magnet providing a magnetic field and a vector-crossed ignition current component.

In an embodiment, the power system comprises a vessel capable of a maintaining a pressure of below, at, or above atmospheric comprising an inner reaction cell, a top cover comprising a blackbody radiator, and an outer chamber capable of maintaining the a pressure of below, at, or above atmospheric, wherein the top cover comprising a blackbody radiator is maintained at a temperature in the range of 1000 K to 3700 K, wherein at least one of the inner reaction cell and top cover comprising a blackbody radiator comprises a refractory metal having a high emissivity.

The power system may comprise at least one power converter of the reaction power output comprising at least one of the group of a thermophotovoltaic converter, a photovoltaic converter, a photoelectronic converter, a plasmadynamic converter, a thermionic converter, a thermoelectric converter, a Sterling engine, a Brayton cycle engine, a Rankine cycle engine, and a heat engine, and a heater.

In an embodiment, the light emitted by the cell is predominantly blackbody radiation comprising visible and near infrared light, and the photovoltaic cells are concentrator cells that comprise at least one compound chosen from perovskite, crystalline silicon, germanium, gallium arsenide (GaAs), gallium antimonide (GaSb), indium gallium arsenide (InGaAs), indium gallium arsenide antimonide (InGaAsSb), indium phosphide arsenide antimonide (InPAsSb), InGaP/InGaAs/Ge; InAlGaP/AlGaAs/GaInNAsSb/Ge; GaInP/GaAsP/SiGe; GaInP/GaAsP/Si; GaInP/GaAsP/Ge; GaInP/GaAsP/Si/SiGe; GaInP/GaAs/InGaAs; GaInP/GaAs/GaInNAs; GaInP/GaAs/InGaAs/InGaAs; GaInP/Ga(In)As/InGaAs; GaInP-GaAs-wafer-InGaAs; GaInP-Ga(In)As-Ge; and GaInP-GaInAs-Ge.

In an embodiment, the light emitted by the cell is predominantly ultraviolet light, and the photovoltaic cells are concentrator cells that comprise at least one compound chosen from a Group III nitride, GaN, AlN, GaAlN, and InGaN.

The power system may further comprise a vacuum pump and at least one chiller.

In one embodiment, the present disclosure is directed to a power system that generates at least one of electrical energy and thermal energy comprising:

at least one vessel capable of a maintaining a pressure of below, at, or above atmospheric;
reactants, the reactants comprising:

a) at least one source of catalyst or a catalyst comprising nascent $H_2O$;
b) at least one source of $H_2O$ or $H_2O$;
c) at least one source of atomic hydrogen or atomic hydrogen; and

d) a molten metal;

at least one molten metal injection system comprising a molten metal reservoir and an electromagnetic pump;
at least one additional reactants injection system, wherein the additional reactants comprise:

a) at least one source of catalyst or a catalyst comprising nascent $H_2O$;
b) at least one source of $H_2O$ or $H_2O$, and
c) at least one source of atomic hydrogen or atomic hydrogen;

at least one reactants ignition system comprising a source of electrical power to cause the reactants to form at least one of light-emitting plasma and thermal-emitting plasma wherein the source of electrical power receives electrical power from the power converter;
a system to recover the molten metal;
at least one power converter or output system of at least one of the light and thermal output to electrical power and/or thermal power;
wherein the molten metal ignition system comprises:

a) at least one set of electrodes to confine the molten metal; and
b) a source of electrical power to deliver a short burst of high-current electrical energy sufficient to cause the reactants to react to form plasma;

wherein the electrodes comprise a refractory metal;
wherein the source of electrical power to deliver a short burst of high-current electrical energy sufficient to cause the reactants to react to form plasma comprises at least one supercapacitor;
wherein the molten metal injection system comprises an electromagnetic pump comprising at least one magnet providing a magnetic field and current source to provide a vector-crossed current component;
wherein the molten metal reservoir comprises an inductively coupled heater;
wherein the molten metal ignition system comprises at least one set of electrodes that are separated to form an open circuit, wherein the open circuit is closed by the injection of the molten metal to cause the high current to flow to achieve ignition;
wherein the molten metal ignition system current is in the range of 500 A to 50,000 A;
wherein the molten metal ignition system wherein the circuit is closed to cause an ignition frequency in the range of 1 Hz to 10,000 Hz;
wherein the molten metal comprises at least one of silver, silver-copper alloy, and copper;
wherein the addition reactants comprise at least one of $H_2O$ vapor and hydrogen gas;
wherein the additional reactants injection system comprises at least one of a computer, $H_2O$ and $H_2$ pressure sensors, and flow controllers comprising at least one or more of the group of a mass flow controller, a pump, a syringe pump, and a high precision electronically controllable valve; the valve comprising at least one of a needle valve, proportional electronic valve, and stepper motor valve wherein the valve is controlled by the pressure sensor and the computer to maintain at least one of the $H_2O$ and $H_2$ pressure at a desired value;
wherein the additional reactants injection system maintains the $H_2O$ vapor pressure in the range of 0.1 Torr to 1 Torr;
wherein the system to recover the products of the reactants comprises at least one of the vessel comprising walls capable of providing flow to the melt under gravity, an electrode electromagnetic pump, and the reservoir in communication with the vessel and further comprising a cooling system to maintain the reservoir at a lower temperature than another portion of the vessel to cause metal vapor of the molten metal to condense in the reservoir;
wherein the recovery system comprising an electrode electromagnetic pump comprises at least one magnet providing a magnetic field and a vector-crossed ignition current component;
wherein the vessel capable of a maintaining a pressure of below, at, or above atmospheric comprises an inner reaction cell, a top cover comprising a blackbody radiator, and an outer chamber capable of maintaining the a pressure of below, at, or above atmospheric;
wherein the top cover comprising a blackbody radiator is maintained at a temperature in the range of 1000 K to 3700 K;
wherein at least one of the inner reaction cell and top cover comprising a blackbody radiator comprises a refractory metal having a high emissivity;
wherein the blackbody radiator further comprises a blackbody temperature sensor and controller;
wherein the at least one power converter of the reaction power output comprises at least one of the group of a thermophotovoltaic converter and a photovoltaic converter;
wherein the light emitted by the cell is predominantly blackbody radiation comprising visible and near infrared light, and the photovoltaic cells are concentrator cells that comprise at least one compound chosen from crystalline silicon, germanium, gallium arsenide (GaAs), gallium antimonide (GaSb), indium gallium arsenide (InGaAs), indium gallium arsenide antimonide (InGaAsSb), and indium phosphide arsenide antimonide (InPAsSb), Group III/V semiconductors, InGaP/InGaAs/Ge; InAlGaP/AlGaAs/GaInNAsSb/Ge; GaInP/GaAsP/SiGe; GaInP/GaAsP/Si; GaInP/GaAsP/Ge; GaInP/GaAsP/Si/SiGe; GaInP/GaAs/InGaAs; GaInP/GaAs/GaInNAs; GaInP/GaAs/InGaAs/InGaAs; GaInP/Ga(In)As/InGaAs; GaInP-GaAs-wafer-InGaAs; GaInP-Ga(In)As-Ge; and GaInP-GaInAs-Ge, and the power system further comprises a vacuum pump and at least one chiller.

In one embodiment, the present disclosure is directed to a power system that generates at least one of electrical energy and thermal energy comprising:

at least one vessel capable of a maintaining a pressure of below, at, or above atmospheric;
reactants, the reactants comprising:

a) at least one source of $H_2O$ or $H_2O$;
b) H2 gas; and
c) a molten metal;

at least one molten metal injection system comprising a molten metal reservoir and an electromagnetic pump;
at least one additional reactants injection system, wherein the additional reactants comprise:

a) at least one source of $H_2O$ or $H_2O$, and
b) H2;

at least one reactants ignition system comprising a source of electrical power to cause the reactants to form at least one of light-emitting plasma and thermal-emitting plasma wherein the source of electrical power receives electrical power from the power converter;
a system to recover the molten metal;
at least one power converter or output system of at least one of the light and thermal output to electrical power and/or thermal power;
wherein the molten metal ignition system comprises:

a) at least one set of electrodes to confine the molten metal; and
b) a source of electrical power to deliver a short burst of high-current electrical energy sufficient to cause the reactants to react to form plasma;

wherein the electrodes comprise a refractory metal;
wherein the source of electrical power to deliver a short burst of high-current electrical energy sufficient to cause the reactants to react to form plasma comprises at least one supercapacitor;
wherein the molten metal injection system comprises an electromagnetic pump comprising at least one magnet providing a magnetic field and current source to provide a vector-crossed current component;
wherein the molten metal reservoir comprises an inductively coupled heater to at least initially heat a metal that forms the molten metal;
wherein the molten metal ignition system comprises at least one set of electrodes that are separated to form an open circuit, wherein the open circuit is closed by the injection of the molten metal to cause the high current to flow to achieve ignition;
wherein the molten metal ignition system current is in the range of 500 A to 50,000 A;
wherein the molten metal ignition system wherein the circuit is closed to cause an ignition frequency in the range of 1 Hz to 10,000 Hz;
wherein the molten metal comprises at least one of silver, silver-copper alloy, and copper;
wherein the additional reactants injection system comprises at least one of a computer, $H_2O$ and $H_2$ pressure sensors, and flow controllers comprising at least one or more of the group of a mass flow controller, a pump, a syringe pump, and a high precision electronically controllable valve; the valve comprising at least one of a needle valve, proportional electronic valve, and stepper motor valve wherein the valve is controlled by the pressure sensor and the computer to maintain at least one of the $H_2O$ and $H_2$ pressure at a desired value;
wherein the additional reactants injection system maintains the $H_2O$ vapor pressure in the range of 0.1 Torr to 1 Torr;
wherein the system to recover the products of the reactants comprises at least one of the vessel comprising walls capable of providing flow to the melt under gravity, an electrode electromagnetic pump, and the reservoir in communication with the vessel and further comprising a cooling system to maintain the reservoir at a lower temperature than another portion of the vessel to cause metal vapor of the molten metal to condense in the reservoir;

wherein the recovery system comprising an electrode electromagnetic pump comprises at least one magnet providing a magnetic field and a vector-crossed ignition current component;

wherein the vessel capable of a maintaining a pressure of below, at, or above atmospheric comprises an inner reaction cell, a top cover comprising a high temperature blackbody radiator, and an outer chamber capable of maintaining the a pressure of below, at, or above atmospheric;

wherein the top cover comprising a blackbody radiator is maintained at a temperature in the range of 1000 K to 3700 K;

wherein at least one of the inner reaction cell and top cover comprising a blackbody radiator comprises a refractory metal having a high emissivity;

wherein the blackbody radiator further comprises a blackbody temperature sensor and controller;

wherein the at least one power converter of the reaction power output comprises at least one of a thermophotovoltaic converter and a photovoltaic converter;

wherein the light emitted by the cell is predominantly blackbody radiation comprising visible and near infrared light, and the photovoltaic cells are concentrator cells that comprise at least one compound chosen from crystalline silicon, germanium, gallium arsenide (GaAs), gallium antimonide (GaSb), indium gallium arsenide (InGaAs), indium gallium arsenide antimonide (InGaAsSb), and indium phosphide arsenide antimonide (InPAsSb), Group III/V semiconductors, InGaP/InGaAs/Ge; InAlGaP/AlGaAs/GaInNAsSb/Ge; GaInP/GaAsP/SiGe; GaInP/GaAsP/Si; GaInP/GaAsP/Ge; GaInP/GaAsP/Si/SiGe; GaInP/GaAs/InGaAs; GaInP/GaAs/GaInNAs; GaInP/GaAs/InGaAs/InGaAs; GaInP/Ga(In)As/InGaAs; GaInP-GaAs-wafer-InGaAs; GaInP-Ga(In)As-Ge; and GaInP-GaInAs-Ge, and the power system further comprises a vacuum pump and at least one chiller.

In one embodiment, the present disclosure is directed to a power system that generates at least one of electrical energy and thermal energy comprising:

at least one vessel capable of a maintaining a pressure of below, at, or above atmospheric;
reactants, the reactants comprising:

a) at least one source of catalyst or a catalyst comprising nascent $H_2O$;
b) at least one source of $H_2O$ or $H_2O$;
c) at least one source of atomic hydrogen or atomic hydrogen; and
d) a molten metal;

at least one molten metal injection system comprising a molten metal reservoir and an electromagnetic pump;
at least one additional reactants injection system, wherein the additional reactants comprise:

a) at least one source of catalyst or a catalyst comprising nascent $H_2O$;
b) at least one source of $H_2O$ or $H_2O$, and
c) at least one source of atomic hydrogen or atomic hydrogen;

at least one reactants ignition system comprising a source of electrical power to cause the reactants to form at least one of light-emitting plasma and thermal-emitting plasma wherein the source of electrical power receives electrical power from the power converter;
a system to recover the molten metal;
at least one power converter or output system of at least one of the light and thermal output to electrical power and/or thermal power;
wherein the molten metal ignition system comprises:

a) at least one set of electrodes to confine the molten metal; and
b) a source of electrical power to deliver a short burst of high-current electrical energy sufficient to cause the reactants to react to form plasma;

wherein the electrodes comprise a refractory metal;
wherein the source of electrical power to deliver a short burst of high-current electrical energy sufficient to cause the reactants to react to form plasma comprises at least one supercapacitor;
wherein the molten metal injection system comprises an electromagnetic pump comprising at least one magnet providing a magnetic field and current source to provide a vector-crossed current component;
wherein the molten metal reservoir comprises an inductively coupled heater to at least initially heat a metal that forms the molten metal;

wherein the molten metal ignition system comprises at least one set of electrodes that are separated to form an open circuit, wherein the open circuit is closed by the injection of the molten metal to cause the high current to flow to achieve ignition;

wherein the molten metal ignition system current is in the range of 500 A to 50,000 A;

wherein the molten metal ignition system wherein the circuit is closed to cause an ignition frequency in the range of 1 Hz to 10,000 Hz;

wherein the molten metal comprises at least one of silver, silver-copper alloy, and copper;

wherein the addition reactants comprise at least one of $H_2O$ vapor and hydrogen gas;

wherein the additional reactants injection system comprises at least one of a computer, $H_2O$ and $H_2$ pressure sensors, and flow controllers comprising at least one or more of the group of a mass flow controller, a pump, a syringe pump, and a high precision electronically controllable valve; the valve comprising at least one of a needle valve, proportional electronic valve, and stepper motor valve wherein the valve is controlled by the pressure sensor and the computer to maintain at least one of the $H_2O$ and $H_2$ pressure at a desired value;

wherein the additional reactants injection system maintains the $H_2O$ vapor pressure in the range of 0.1 Torr to 1 Torr;

wherein the system to recover the products of the reactants comprises at least one of the vessel comprising walls capable of providing flow to the melt under gravity, an electrode electromagnetic pump, and the reservoir in communication with the vessel and further comprising a cooling system to maintain the reservoir at a lower temperature than another portion of the vessel to cause metal vapor of the molten metal to condense in the reservoir;

wherein the recovery system comprising an electrode electromagnetic pump comprises at least one magnet providing a magnetic field and a vector-crossed ignition current component;

wherein the vessel capable of a maintaining a pressure of below, at, or above atmospheric comprises an inner reaction cell, a top cover comprising a blackbody radiator, and an outer chamber capable of maintaining the a pressure of below, at, or above atmospheric;

wherein the top cover comprising a blackbody radiator is maintained at a temperature in the range of 1000 K to 3700 K;

wherein at least one of the inner reaction cell and top cover comprising a blackbody radiator comprises a refractory metal having a high emissivity;

wherein the blackbody radiator further comprises a blackbody temperature sensor and controller;

wherein the at least one power converter of the reaction power output comprises at least one of the group of a thermophotovoltaic converter and a photovoltaic converter;

wherein the light emitted by the cell is predominantly blackbody radiation comprising visible and near infrared light, and the photovoltaic cells are concentrator cells that comprise at least one compound chosen from crystalline silicon, germanium, gallium arsenide (GaAs), gallium antimonide (GaSb), indium gallium arsenide (InGaAs), indium gallium arsenide antimonide (InGaAsSb), and indium phosphide arsenide antimonide (InPAsSb), Group III/V semiconductors, InGaP/InGaAs/Ge; InAlGaP/AlGaAs/GaInNAsSb/Ge; GaInP/GaAsP/SiGe; GaInP/GaAsP/Si; GaInP/GaAsP/Ge; GaInP/GaAsP/Si/SiGe; GaInP/GaAs/InGaAs; GaInP/GaAs/GaInNAs; GaInP/GaAs/InGaAs/InGaAs; GaInP/Ga(In)As/InGaAs; GaInP-GaAs-wafer-InGaAs; GaInP-Ga(In)As-Ge; and GaInP-GaInAs-Ge, and the power system further comprises a vacuum pump and at least one chiller.

In another embodiment, the present disclosure is directed to a power system that generates at least one of electrical energy and thermal energy comprising:

at least one vessel capable of a pressure of below atmospheric;
shot comprising reactants, the reactants comprising:

a) at least one source of catalyst or a catalyst comprising nascent $H_2O$;
b) at least one source of $H_2O$ or $H_2O$;
c) at least one source of atomic hydrogen or atomic hydrogen; and
d) at least one of a conductor and a conductive matrix;

at least one shot injection system comprising at least one augmented railgun, wherein the augmented railgun comprises separated electrified rails and magnets that produce a magnetic field perpendicular to the plane of the rails, and the circuit between the rails is open until closed by the contact of the shot with the rails;

at least one ignition system to cause the shot to form at least one of light-emitting plasma and thermal-emitting plasma, at least one ignition system comprising:

a) at least one set of electrodes to confine the shot; and
b) a source of electrical power to deliver a short burst of high-current electrical energy;

wherein the at least one set of electrodes form an open circuit, wherein the open circuit is closed by the injection of the shot to cause the high current to flow to achieve ignition, and the source of electrical power to deliver a short burst of high-current electrical energy comprises at least one of the following:

a voltage selected to cause a high AC, DC, or an AC-DC mixture of current that is in the range of at least one of 100 A to 1,000,000 A, 1 kA to 100,000 A, 10 kA to 50 kA;
a DC or peak AC current density in the range of at least one of 100 A/cm$^2$ to 1,000,000 A/cm$^2$, 1000 A/cm$^2$ to 100,000 A/cm$^2$, and 2000 A/cm$^2$ to 50,000 A/cm$^2$;
the voltage is determined by the conductivity of the solid fuel or wherein the voltage is given by the desired current times the resistance of the solid fuel sample;
the DC or peak AC voltage is in the range of at least one of 0.1 V to 500 kV, 0.1 V to 100 kV, and 1 V to 50 kV, and the AC frequency is in range of at least one of 0.1 Hz to 10 GHz, 1 Hz to 1 MHz, 10 Hz to 100 kHz, and 100 Hz to 10 kHz.

A system to recover reaction products of the reactants comprising at least one of gravity and an augmented plasma railgun recovery system comprising at least one magnet providing a magnetic field and a vector-crossed current component of the ignition electrodes;
at least one regeneration system to regenerate additional reactants from the reaction products and form additional shot comprising a pelletizer comprising a smelter to form molten reactants, a system to add $H_2$ and $H_2O$ to the molten reactants, a melt dripper, and a water reservoir to form shot,
wherein the additional reactants comprise:

a) at least one source of catalyst or a catalyst comprising nascent $H_2O$;
b) at least one source of $H_2O$ or $H_2O$;
c) at least one source of atomic hydrogen or atomic hydrogen; and
d) at least one of a conductor and a conductive matrix; and

at least one power converter or output system of at least one of the light and thermal output to electrical power and/or thermal power comprising at least one or more of the group of a photovoltaic converter, a photoelectronic converter, a plasmadynamic converter, a thermionic converter, a thermoelectric converter, a Sterling engine, a Brayton cycle engine, a Rankine cycle engine, and a heat engine, and a heater.
In another embodiment, the present disclosure is directed to a power system that generates at least one of electrical energy and thermal energy comprising:

at least one vessel capable of a pressure of below atmospheric;
shot comprising reactants, the reactants comprising at least one of silver, copper, absorbed hydrogen, and water;
at least one shot injection system comprising at least one augmented railgun wherein the augmented railgun comprises separated electrified rails and magnets that produce a magnetic field perpendicular to the plane of the rails, and the circuit between the rails is open until closed by the contact of the shot with the rails;
at least one ignition system to cause the shot to form at least one of light-emitting plasma and thermal-emitting plasma, at least one ignition system comprising:

a) at least one set of electrodes to confine the shot; and
b) a source of electrical power to deliver a short burst of high-current electrical energy;

wherein the at least one set of electrodes that are separated to form an open circuit, wherein the open circuit is closed by the injection of the shot to cause the high current to flow to achieve ignition, and he source of electrical power to deliver a short burst of high-current electrical energy comprises at least one of the following:

a voltage selected to cause a high AC, DC, or an AC-DC mixture of current that is in the range of at least one of 100 A to 1,000,000 A, 1 kA to 100,000 A, 10 kA to 50 kA;
a DC or peak AC current density in the range of at least one of 100 A/cm$^2$ to 1,000,000 A/cm$^2$, 1000 A/cm$^2$ to 100,000 A/cm$^2$, and 2000 A/cm$^2$ to 50,000 A/cm$^2$;
the voltage is determined by the conductivity of the solid fuel wherein the voltage is given by the desired current times the resistance of the solid fuel sample;
the DC or peak AC voltage is in the range of at least one of 0.1 V to 500 kV, 0.1 V to 100 kV, and 1 V to 50 kV, and the AC frequency is in range of at least one of 0.1 Hz to 10 GHz, 1 Hz to 1 MHz, 10 Hz to 100 kHz, and 100 Hz to 10 kHz.

A system to recover reaction products of the reactants comprising at least one of gravity and a augmented plasma railgun recovery system comprising at least one magnet providing a magnetic field and a vector-crossed current component of the ignition electrodes;
at least one regeneration system to regenerate additional reactants from the reaction products and form additional shot comprising a pelletizer comprising a smelter to form molten reactants, a system to add $H_2$ and $H_2O$ to the molten reactants, a melt dripper, and a water reservoir to form shot,
wherein the additional reactants comprise at least one of silver, copper, absorbed hydrogen, and water;
at least one power converter or output system comprising a concentrator ultraviolet photovoltaic converter wherein the photovoltaic cells comprise at least one compound chosen from a Group III nitride, GaAlN, GaN, and InGaN.

In another embodiment, the present disclosure is directed to a power system that generates at least one of electrical energy and thermal energy comprising:

at least one vessel;
shot comprising reactants, the reactants comprising:

a) at least one source of catalyst or a catalyst comprising nascent $H_2O$;
b) at least one source of $H_2O$ or $H_2O$;
c) at least one source of atomic hydrogen or atomic hydrogen; and
d) at least one of a conductor and a conductive matrix;

at least one shot injection system;
at least one shot ignition system to cause the shot to form at least one of light-emitting plasma and thermal-emitting plasma;
a system to recover reaction products of the reactants;
at least one regeneration system to regenerate additional reactants from the reaction products and form additional shot,
wherein the additional reactants comprise:

a) at least one source of catalyst or a catalyst comprising nascent $H_2O$;
b) at least one source of $H_2O$ or $H_2O$;
c) at least one source of atomic hydrogen or atomic hydrogen; and
d) at least one of a conductor and a conductive matrix;

at least one power converter or output system of at least one of the light and thermal output to electrical power and/or thermal power.

Certain embodiments of the present disclosure are directed to a power generation system comprising: a plurality of electrodes configured to deliver power to a fuel to ignite the fuel and produce a plasma; a source of electrical power configured to deliver electrical energy to the plurality of electrodes; and at least one photovoltaic power converter positioned to receive at least a plurality of plasma photons.

In one embodiment, the present disclosure is directed to a power system that generates at least one of direct electrical energy and thermal energy comprising:

at least one vessel;
reactants comprising:

a) at least one source of catalyst or a catalyst comprising nascent $H_2O$;
b) at least one source of atomic hydrogen or atomic hydrogen;
c) at least one of a conductor and a conductive matrix; and

at least one set of electrodes to confine the hydrino reactants,
a source of electrical power to deliver a short burst of high-current electrical energy;
a reloading system;
at least one system to regenerate the initial reactants from the reaction products, and
at least one plasma dynamic converter or at least one photovoltaic converter.

In one exemplary embodiment, a method of producing electrical power may comprise supplying a fuel to a region between a plurality of electrodes; energizing the plurality of electrodes to ignite the fuel to form a plasma; converting a plurality of plasma photons into electrical power with a photovoltaic power converter; and outputting at least a portion of the electrical power.

In another exemplary embodiment, a method of producing electrical power may comprise supplying a fuel to a region between a plurality of electrodes; energizing the plurality of electrodes to ignite the fuel to form a plasma; converting a plurality of plasma photons into thermal power with a photovoltaic power converter; and outputting at least a portion of the electrical power.

In an embodiment of the present disclosure, a method of generating power may comprise delivering an amount of fuel to a fuel loading region, wherein the fuel loading region is located among a plurality of electrodes; igniting the fuel by flowing a current of at least about 2,000 $A/cm^2$ through the fuel by applying the current to the plurality of electrodes to produce at least one of plasma, light, and heat; receiving at least a portion of the light in a photovoltaic power converter; converting the light to a different form of power using the photovoltaic power converter; and outputting the different form of power.

In an additional embodiment, the present disclosure is directed to a water arc plasma power system comprising: at least one closed reaction vessel; reactants comprising at least one of source of $H_2O$ and $H_2O$; at least one set of electrodes; a source of electrical power to deliver an initial high breakdown voltage of the $H_2O$ and provide a subsequent high current, and a heat exchanger system, wherein the power system generates arc plasma, light, and thermal energy, and at least one photovoltaic power converter. The water may be supplied as vapor on or across the electrodes. The plasma may be permitted to expand into a low-pressure region of the plasma cell to prevent inhibition of the hydrino reaction due to confinement. The arc electrodes may comprise a spark plug design. The electrodes may comprise at least one of copper, nickel, nickel with silver chromate and zinc plating for corrosion resistance, iron, nickel-iron, chromium, noble metals, tungsten, molybdenum, yttrium, iridium, and palladium. In an embodiment, the water arc is maintained at low water pressure such as in at least one range of about 0.01 Torr to 10 Torr and 0.1 Torr to 1 Torr. The pressure range may be maintained in one range of the disclosure by means of the disclosure for the SF-CIHT cell. Exemplary means to supply the water vapor are at least one of a mass flow controller and a reservoir comprising $H_2O$ such as a hydrated zeolite or a salt bath such as a KOH solution that off gases $H_2O$ at the desired pressure range. The water may be supplied by a syringe pump wherein the delivery into vacuum results in the vaporization of the water.

Certain embodiments of the present disclosure are directed to a power generation system comprising: an electrical power source of at least about 2,000 $A/cm^2$ or of at least about 5,000 kW; a plurality of electrodes electrically coupled to the electrical power source; a fuel loading region configured to receive a solid fuel, wherein the plurality of electrodes is configured to deliver electrical power to the solid fuel to produce a plasma; and at least one of a plasma power converter, a photovoltaic power converter, and thermal to electric power converter positioned to receive at least a portion of the plasma, photons, and/or heat generated by the reaction. Other embodiments are directed to a power generation system, comprising: a plurality of electrodes; a fuel loading region located between the plurality of electrodes and configured to receive a conductive fuel, wherein the plurality of electrodes are configured to apply a current to the conductive fuel sufficient to ignite the conductive fuel and generate at least one of plasma and thermal power; a delivery mechanism for moving the conductive fuel into the fuel loading region; and at least one of a photovoltaic power converter to convert the plasma photons into a form of power, or a thermal to electric converter to convert the thermal power into a nonthermal form of power comprising electricity or mechanical power. Further embodiments are directed to a method of generating power, comprising: delivering an amount of fuel to a fuel loading region, wherein the fuel loading region is located among a plurality of electrodes; igniting the fuel by flowing a current of at least about 2,000 $A/cm^2$ through the fuel by applying the current to the plurality of electrodes to produce at least one of plasma, light, and heat; receiving at least a portion of the light in a photovoltaic power converter; converting the light to a different form of power using the photovoltaic power converter; and outputting the different form of power.

Additional embodiments are directed to a power generation system, comprising: an electrical power source of at least about 5,000 kW; a plurality of spaced apart electrodes, wherein the plurality of electrodes at least partially surround a fuel, are electrically connected to the electrical power source, are configured to receive a current to ignite the fuel, and at least one of the plurality of electrodes is moveable; a delivery mechanism for moving the fuel; and a photovoltaic power converter configured to convert plasma generated from the ignition of the fuel into a non-plasma form of power. Additionally provided in the present disclosure is a power generation system, comprising: an electrical power source of at least about 2,000 $A/cm^2$; a plurality of spaced apart electrodes, wherein the plurality of electrodes at least partially surround a fuel, are electrically connected to the electrical power source, are configured to receive a current to ignite the fuel, and at least one of the plurality of electrodes is moveable; a delivery mechanism for moving the fuel; and a photovoltaic power converter configured to convert plasma generated from the ignition of the fuel into a non-plasma form of power.

Another embodiments is directed to a power generation system, comprising: an electrical power source of at least about 5,000 kW or of at least about 2,000 $A/cm^2$; a plurality of spaced apart electrodes, wherein at least one of the plurality of electrodes includes a compression mechanism; a fuel loading region configured to receive a fuel, wherein the fuel loading region is surrounded by the plurality of electrodes so that the compression mechanism of the at least one electrode is oriented towards the fuel loading region, and wherein the plurality of electrodes are electrically connected to the electrical power source and configured to supply power to the fuel received in the fuel loading region to ignite the fuel; a delivery mechanism for moving the fuel into the fuel loading region; and a photovoltaic power converter configured to convert photons generated from the ignition of the fuel into a non-photon form of power. Other embodiments of the present disclosure are directed to a power generation system, comprising: an electrical power source of at least about 2,000 A/cm$^2$; a plurality of spaced apart electrodes, wherein at least one of the plurality of electrodes includes a compression mechanism; a fuel loading region configured to receive a fuel, wherein the fuel loading region is surrounded by the plurality of electrodes so that the compression mechanism of the at least one electrode is oriented towards the fuel loading region, and wherein the plurality of electrodes are electrically connected to the electrical power source and configured to supply power to the fuel received in the fuel loading region to ignite the fuel; a delivery mechanism for moving the fuel into the fuel loading region; and a plasma power converter configured to convert plasma generated from the ignition of the fuel into a non-plasma form of power.

Embodiments of the present disclosure are also directed to power generation system, comprising: a plurality of electrodes; a fuel loading region surrounded by the plurality of electrodes and configured to receive a fuel, wherein the plurality of electrodes is configured to ignite the fuel located in the fuel loading region; a delivery mechanism for moving the fuel into the fuel loading region; a photovoltaic power converter configured to convert photons generated from the ignition of the fuel into a non-photon form of power; a removal system for removing a byproduct of the ignited fuel; and a regeneration system operably coupled to the removal system for recycling the removed byproduct of the ignited fuel into recycled fuel. Certain embodiments of the present disclosure are also directed to a power generation system, comprising: an electrical power source configured to output a current of at least about 2,000 A/cm$^2$ or of at least about 5,000 kW; a plurality of spaced apart electrodes electrically connected to the electrical power source; a fuel loading region configured to receive a fuel, wherein the fuel loading region is surrounded by the plurality of electrodes, and wherein the plurality of electrodes is configured to supply power to the fuel to ignite the fuel when received in the fuel loading region; a delivery mechanism for moving the fuel into the fuel loading region; and a photovoltaic power converter configured to convert a plurality of photons generated from the ignition of the fuel into a non-photon form of power. Certain embodiments may further include one or more of output power terminals operably coupled to the photovoltaic power converter; a power storage device; a sensor configured to measure at least one parameter associated with the power generation system; and a controller configured to control at least a process associated with the power generation system. Certain embodiments of the present disclosure are also directed to a power generation system, comprising: an electrical power source configured to output a current of at least about 2,000 A/cm$^2$ or of at least about 5,000 kW; a plurality of spaced apart electrodes, wherein the plurality of electrodes at least partially surround a fuel, are electrically connected to the electrical power source, are configured to receive a current to ignite the fuel, and at least one of the plurality of electrodes is moveable; a delivery mechanism for moving the fuel; and a photovoltaic power converter configured to convert photons generated from the ignition of the fuel into a different form of power.

Additional embodiments of the present disclosure are directed to a power generation system, comprising: an electrical power source of at least about 5,000 kW or of at least about 2,000 A/cm$^2$; a plurality of spaced apart electrodes electrically connected to the electrical power source; a fuel loading region configured to receive a fuel, wherein the fuel loading region is surrounded by the plurality of electrodes, and wherein the plurality of electrodes is configured to supply power to the fuel to ignite the fuel when received in the fuel loading region; a delivery mechanism for moving the fuel into the fuel loading region; a photovoltaic power converter configured to convert a plurality of photons generated from the ignition of the fuel into a non-photon form of power; a sensor configured to measure at least one parameter associated with the power generation system; and a controller configured to control at least a process associated with the power generation system. Further embodiments are directed to a power generation system, comprising: an electrical power source of at least about 2,000 A/cm$^2$; a plurality of spaced apart electrodes electrically connected to the electrical power source; a fuel loading region configured to receive a fuel, wherein the fuel loading region is surrounded by the plurality of electrodes, and wherein the plurality of electrodes is configured to supply power to the fuel to ignite the fuel when received in the fuel loading region; a delivery mechanism for moving the fuel into the fuel loading region; a plasma power converter configured to convert plasma generated from the ignition of the fuel into a non-plasma form of power; a sensor configured to measure at least one parameter associated with the power generation system; and a controller configured to control at least a process associated with the power generation system.

Certain embodiments of the present disclosure are directed to a power generation system, comprising: an electrical power source of at least about 5,000 kW or of at least about 2,000 A/cm$^2$; a plurality of spaced apart electrodes electrically connected to the electrical power source; a fuel loading region configured to receive a fuel, wherein the fuel loading region is surrounded by the plurality of electrodes, and wherein the plurality of electrodes is configured to supply power to the fuel to ignite the fuel when received in the fuel loading region, and wherein a pressure in the fuel loading region is a partial vacuum; a delivery mechanism for moving the fuel into the fuel loading region; and a photovoltaic power converter configured to convert plasma generated from the ignition of the fuel into a non-plasma form of power. Some embodiments may include one or more of the following additional features: the photovoltaic power converter may be located within a vacuum cell; the photovoltaic power converter may include at least one of an antireflection coating, an optical impedance matching coating, or a protective coating; the photovoltaic power converter may be operably coupled to a cleaning system configured to clean at least a portion of the photovoltaic power converter; the power generation system may include an optical filter; the photovoltaic power converter may comprise at least one of a monocrystalline cell, a polycrystalline cell, an amorphous cell, a string/ribbon silicon cell, a multi-junction cell, a homojunction cell, a heterojunction cell, a p-i-n device, a thin-film cell, a dye-sensitized cell, and an organic photovoltaic cell; and the photovoltaic power converter may comprise at multi-junction cell, wherein the multi-junction cell comprises at least one of an inverted cell, an upright cell, a lattice-mismatched cell, a lattice-matched cell, and a cell comprising Group III-V semiconductor materials.

Additional exemplary embodiments are directed to a system configured to produce power, comprising: a fuel supply configured to supply a fuel; a power supply configured to supply an electrical power; and at least one pair of electreodes configured to receive the fuel and the electrical power, wherein the electrodes selectively directs the electrical power to a local region about the electrodes to ignite the fuel within the local region. Some embodiments are directed to a method of producing electrical power, comprising: supplying a fuel to electrodes; supplying a current to the electrodes to ignite the localized fuel to produce energy; and converting at least some of the energy produced by the ignition into electrical power.

Other embodiments are directed to a power generation system, comprising: an electrical power source of at least about 2,000 A/cm$^2$; a plurality of spaced apart electrodes electrically connected to the electrical power source; a fuel loading region configured to receive a fuel, wherein the fuel loading region is surrounded by the plurality of electrodes, and wherein the plurality of electrodes is configured to supply power to the fuel to ignite the fuel when received in the fuel loading region, and wherein a pressure in the fuel loading region is a partial vacuum; a delivery mechanism for moving the fuel into the fuel loading region; and a photovoltaic power converter configured to convert plasma generated from the ignition of the fuel into a non-plasma form of power.

Further embodiments are directed to a power generation cell, comprising: an outlet port coupled to a vacuum pump; a plurality of electrodes electrically coupled to an electrical power source of at least about 5,000 kW; a fuel loading region configured to receive a water-based fuel comprising a majority $H_2O$, wherein the plurality of electrodes is configured to deliver power to the water-based fuel to produce at least one of an arc plasma and thermal power; and a power converter configured to convert at least a portion of at least one of the arc plasma and the thermal power into electrical power. Also disclosed is a power generation system, comprising: an electrical power source of at least about 5,000 A/cm$^2$; a plurality of electrodes electrically coupled to the electrical power source; a fuel loading region configured to receive a water-based fuel comprising a majority $H_2O$, wherein the plurality of electrodes is configured to deliver power to the water-based fuel to produce at least one of an arc plasma and thermal power; and a power converter configured to convert at least a portion of at least one of the arc plasma and the thermal power into electrical power. In an embodiment, the power converter comprises a photovoltaic converter of optical power into electricity.

Additional embodiments are directed to a method of generating power, comprising: loading a fuel into a fuel loading region, wherein the fuel loading region includes a plurality of electrodes; applying a current of at least about 2,000 A/cm$^2$ to the plurality of electrodes to ignite the fuel to produce at least one of an arc plasma and thermal power; performing at least one of passing the arc plasma through a photovoltaic converter to generate electrical power; and passing the thermal power through a thermal-to-electric converter to generate electrical power; and outputting at least a portion of the generated electrical power. Also disclosed is a power generation system, comprising: an electrical power source of at least about 5,000 kW; a plurality of electrodes electrically coupled to the power source, wherein the plurality of electrodes is configured to deliver electrical power to a water-based fuel comprising a majority $H_2O$ to produce a thermal power; and a heat exchanger configured to convert at least a portion of the thermal power into electrical power; and a photovoltaic power converter configured to convert at least a portion of the light into electrical power. In addition, another embodiment is directed to a power generation system, comprising: an electrical power source of at least about 5,000 kW; a plurality of spaced apart electrodes, wherein at least one of the plurality of electrodes includes a compression mechanism; a fuel loading region configured to receive a water-based fuel comprising a majority $H_2O$, wherein the fuel loading region is surrounded by the plurality of electrodes so that the compression mechanism of the at least one electrode is oriented towards the fuel loading region, and wherein the plurality of electrodes are electrically connected to the electrical power source and configured to supply power to the water-based fuel received in the fuel loading region to ignite the fuel; a delivery mechanism for moving the water-based fuel into the fuel loading region; and a photovoltaic power converter configured to convert plasma generated from the ignition of the fuel into a non-plasma form of power.

Preferred embodiments of the present invention are defined by the following clauses:

Clause 1: A power system that generates at least one of electrical energy and thermal energy comprising:
at least one vessel capable of a maintaining a pressure of below, at, or above atmospheric;

reactants, the reactants comprising:

a) at least one source of catalyst or a catalyst comprising nascent $H_2O$;
b) at least one source of $H_2O$ or $H_2O$;
c) at least one source of atomic hydrogen or atomic hydrogen; and
d) a molten metal;

at least one molten metal injection system comprising a molten metal reservoir and an electromagnetic pump;
at least one additional reactants injection system, wherein the additional reactants comprise:

a) at least one source of catalyst or a catalyst comprising nascent $H_2O$;
b) at least one source of $H_2O$ or $H_2O$, and
c) at least one source of atomic hydrogen or atomic hydrogen.

at least one reactants ignition system comprising a source of electrical power, wherein the source of electrical power receives electrical power from the power converter;
a system to recover the molten metal;
at least one power converter or output system of at least one of the light and thermal output to electrical power and/or thermal power.

Clause 2: The power system of Clause 1 wherein the molten metal ignition system comprises:

a) at least one set of electrodes to confine the molten metal; and
b) a source of electrical power to deliver a short burst of high-current electrical energy sufficient to cause the reactants to react to form plasma.

Clause 3: The power system of Clause 1 wherein the electrodes comprise a refractory metal.
Clause 4: The power system of Clause 3 wherein the source of electrical power to deliver a short burst of high-current electrical energy sufficient to cause the reactants to react to form plasma comprises at least one supercapacitor.
Clause 5: The power system of Clause 1 wherein the molten metal injection system comprises an electromagnetic pump comprising at least one magnet providing a magnetic field and current source to provide a vector-crossed current component.
Clause 6: The power system of Clause 1 wherein the molten metal reservoir comprises an inductively coupled heater.
Clause 7: The power system of Clause 2 wherein the molten metal ignition system comprises at least one set of electrodes that are separated to form an open circuit, wherein the open circuit is closed by the injection of the molten metal to cause the high current to flow to achieve ignition.
Clause 8: The power system of Clause 7 wherein the molten metal ignition system current is in the range of 500 A to 50,000 A.
Clause 9: The power system of Clause 8 wherein the molten metal ignition system wherein the circuit is closed to cause an ignition frequency in the range of 1 Hz to 10,000 Hz.
Clause 10: The power system of Clause 1 wherein the molten metal comprises at least one of silver, silver-copper alloy, and copper.
Clause 11: The power system of Clause 1 wherein the addition reactants comprise at least one of $H_2O$ vapor and hydrogen gas.
Clause 12: The power system of Clause 1 wherein the additional reactants injection system comprises at least one of a computer, $H_2O$ and $H_2$ pressure sensors, and flow controllers comprising at least one or more of the group of a mass flow controller, a pump, a syringe pump, and a high precision electronically controllable valve; the valve comprising at least one of a needle valve, proportional electronic valve, and stepper motor valve wherein the valve is controlled by the pressure sensor and the computer to maintain at least one of the $H_2O$ and $H_2$ pressure at a desired value.
Clause 13: The power system of Clause 12 wherein the additional reactants injection system maintains the $H_2O$ vapor pressure in the range of 0.1 Torr to 1 Torr.
Clause 14: The power system of Clause 1 wherein the system to recover the products of the reactants comprises at least one of the vessel comprising walls capable of providing flow to the melt under gravity, an electrode electromagnetic pump, and the reservoir in communication with the vessel and further comprising a cooling system to maintain the reservoir at a lower temperature than another portion of the vessel to cause metal vapor of the molten metal to condense in the reservoir.
Clause 15: The power system of Clause 14 wherein the recovery system comprising an electrode electromagnetic pump comprises at least one magnet providing a magnetic field and a vector-crossed ignition current component.

Clause 16: The power system of Clause 1 wherein the vessel capable of a maintaining a pressure of below, at, or above atmospheric comprises an inner reaction cell, a top cover comprising a blackbody radiator, and an outer chamber capable of maintaining the a pressure of below, at, or above atmospheric.

Clause 17: The power system of Clause 16 wherein the top cover comprising a blackbody radiator is maintained at a temperature in the range of 1000 K to 3700 K.

Clause 18: The power system of Clause 17 wherein at least one of the inner reaction cell and top cover comprising a blackbody radiator comprises a refractory metal having a high emissivity.

Clause 19: The power system of Clause 1 wherein the at least one power converter of the reaction power output comprises at least one of the group of a thermophotovoltaic converter, a photovoltaic converter, a photoelectronic converter, a plasmadynamic converter, a thermionic converter, a thermoelectric converter, a Sterling engine, a Brayton cycle engine, a Rankine cycle engine, and a heat engine, and a heater.

Clause 20: The power system of Clause 19 wherein the light emitted by the cell is predominantly blackbody radiation comprising visible and near infrared light, and the photovoltaic cells are concentrator cells that comprise at least one compound chosen from crystalline silicon, germanium, gallium arsenide (GaAs), gallium antimonide (GaSb), indium gallium arsenide (InGaAs), indium gallium arsenide antimonide (InGaAsSb), indium phosphide arsenide antimonide (InPAsSb), InGaP/InGaAs/Ge; InAlGaP/AlGaAs/GaInNAsSb/Ge; GaInP/GaAsP/SiGe; GaInP/GaAsP/Si; GaInP/GaAsP/Ge; GaInP/GaAsP/Si/SiGe; GaInP/GaAs/InGaAs; GaInP/GaAs/GaInNAs; GaInP/GaAs/InGaAs/InGaAs; GaInP/Ga(In)As/InGaAs; GaInP-GaAs-wafer-InGaAs; GaInP-Ga(In)As-Ge; and GaInP-GaInAs-Ge.

Clause 21: The power system of Clause 19 wherein the light emitted by the cell is predominantly ultraviolet light, and the photovoltaic cells are concentrator cells that comprise at least one compound chosen from a Group III nitride, GaN, AlN, GaAlN, and InGaN.

Clause 22: The power system of Clause 1 further comprising a vacuum pump and at least one chiller.

Clause 23: A power system that generates at least one of electrical energy and thermal energy comprising:

at least one vessel capable of a maintaining a pressure of below, at, or above atmospheric;

reactants, the reactants comprising:

a) at least one source of catalyst or a catalyst comprising nascent $H_2O$;
b) at least one source of $H_2O$ or $H_2O$;
c) at least one source of atomic hydrogen or atomic hydrogen; and
d) a molten metal;

at least one molten metal injection system comprising a molten metal reservoir and an electromagnetic pump;
at least one additional reactants injection system, wherein the additional reactants comprise:

a) at least one source of catalyst or a catalyst comprising nascent $H_2O$;
b) at least one source of $H_2O$ or $H_2O$, and
c) at least one source of atomic hydrogen or atomic hydrogen;

at least one reactants ignition system comprising a source of electrical power to cause the reactants to form at least one of light-emitting plasma and thermal-emitting plasma wherein the source of electrical power receives electrical power from the power converter;
a system to recover the molten metal;
at least one power converter or output system of at least one of the light and thermal output to electrical power and/or thermal power;

wherein the molten metal ignition system comprises:

a) at least one set of electrodes to confine the molten metal; and
b) a source of electrical power to deliver a short burst of high-current electrical energy sufficient to cause the reactants to react to form plasma;

wherein the electrodes comprise a refractory metal;
wherein the source of electrical power to deliver a short burst of high-current electrical energy sufficient to cause the reactants to react to form plasma comprises at least one supercapacitor;
wherein the molten metal injection system comprises an electromagnetic pump comprising at least one magnet providing a magnetic field and current source to provide a vector-crossed current component;

wherein the molten metal reservoir comprises an inductively coupled heater;

wherein the molten metal ignition system comprises at least one set of electrodes that are separated to form an open circuit, wherein the open circuit is closed by the injection of the molten metal to cause the high current to flow to achieve ignition; wherein the molten metal ignition system current is in the range of 500 A to 50,000 A; wherein the molten metal ignition system wherein the circuit is closed to cause an ignition frequency in the range of 1 Hz to 10,000 Hz;

wherein the molten metal comprises at least one of silver, silver-copper alloy, and copper;

wherein the addition reactants comprise at least one of $H_2O$ vapor and hydrogen gas;

wherein the additional reactants injection system comprises at least one of a computer, $H_2O$ and $H_2$ pressure sensors, and flow controllers comprising at least one or more of the group of a mass flow controller, a pump, a syringe pump, and a high precision electronically controllable valve; the valve comprising at least one of a needle valve, proportional electronic valve, and stepper motor valve wherein the valve is controlled by the pressure sensor and the computer to maintain at least one of the $H_2O$ and $H_2$ pressure at a desired value;

wherein the additional reactants injection system maintains the $H_2O$ vapor pressure in the range of 0.1 Torr to 1 Torr;

wherein the system to recover the products of the reactants comprises at least one of the vessel comprising walls capable of providing flow to the melt under gravity, an electrode electromagnetic pump, and the reservoir in communication with the vessel and further comprising a cooling system to maintain the reservoir at a lower temperature than another portion of the vessel to cause metal vapor of the molten metal to condense in the reservoir;

wherein the recovery system comprising an electrode electromagnetic pump comprises at least one magnet providing a magnetic field and a vector-crossed ignition current component;

wherein the vessel capable of a maintaining a pressure of below, at, or above atmospheric comprises an inner reaction cell, a top cover comprising a blackbody radiator, and an outer chamber capable of maintaining the a pressure of below, at, or above atmospheric;

wherein the top cover comprising a blackbody radiator is maintained at a temperature in the range of 1000 K to 3700 K;

wherein at least one of the inner reaction cell and top cover comprising a blackbody radiator comprises a refractory metal having a high emissivity;

wherein the blackbody radiator further comprises a blackbody temperature sensor and controller;

wherein the at least one power converter of the reaction power output comprises at least one of the group of a thermophotovoltaic converter and a photovoltaic converter;

wherein the light emitted by the cell is predominantly blackbody radiation comprising visible and near infrared light, and the photovoltaic cells are concentrator cells that comprise at least one compound chosen from crystalline silicon, germanium, gallium arsenide (GaAs), gallium antimonide (GaSb), indium gallium arsenide (InGaAs), indium gallium arsenide antimonide (InGaAsSb), and indium phosphide arsenide antimonide (InPAsSb), Group III/V semiconductors, InGaP/InGaAs/Ge; InAlGaP/AlGaAs/GaInNAsSb/Ge; GaInP/GaAsP/SiGe; GaInP/GaAsP/Si; GaInP/GaAsP/Ge; GaInP/GaAsP/Si/SiGe; GaInP/GaAs/InGaAs; GaInP/GaAs/GaInNAs; GaInP/GaAs/InGaAs/InGaAs; GaInP/Ga(In)As/InGaAs; GaInP-GaAs-wafer-InGaAs; GaInP-Ga(In)As-Ge; and GaInP-GaInAs-Ge, and the power system further comprises a vacuum pump and at least one chiller.

Clause 24: A power system that generates at least one of electrical energy and thermal energy comprising:

at least one vessel capable of a maintaining a pressure of below, at, or above atmospheric;

reactants, the reactants comprising:

a) at least one source of $H_2O$ or $H_2O$;
b) H2 gas; and
c) a molten metal;

at least one molten metal injection system comprising a molten metal reservoir and an electromagnetic pump;
at least one additional reactants injection system, wherein the additional reactants comprise:

a) at least one source of $H_2O$ or $H_2O$, and
b) H2;

at least one reactants ignition system comprising a source of electrical power to cause the reactants to form at least one of light-emitting plasma and thermal-emitting plasma wherein the source of electrical power receives electrical power from the power converter;
a system to recover the molten metal;
at least one power converter or output system of at least one of the light and thermal output to electrical power and/or thermal power;

wherein the molten metal ignition system comprises:

a) at least one set of electrodes to confine the molten metal; and
b) a source of electrical power to deliver a short burst of high-current electrical energy sufficient to cause the reactants to react to form plasma;

wherein the electrodes comprise a refractory metal;
wherein the source of electrical power to deliver a short burst of high-current electrical energy sufficient to cause the reactants to react to form plasma comprises at least one supercapacitor;
wherein the molten metal injection system comprises an electromagnetic pump comprising at least one magnet providing a magnetic field and current source to provide a vector-crossed current component;
wherein the molten metal reservoir comprises an inductively coupled heater to at least initially heat a metal that forms the molten metal;
wherein the molten metal ignition system comprises at least one set of electrodes that are separated to form an open circuit, wherein the open circuit is closed by the injection of the molten metal to cause the high current to flow to achieve ignition; wherein the molten metal ignition system current is in the range of 500 A to 50,000 A;
wherein the molten metal ignition system wherein the circuit is closed to cause an ignition frequency in the range of 1 Hz to 10,000 Hz;
wherein the molten metal comprises at least one of silver, silver-copper alloy, and copper;
wherein the additional reactants injection system comprises at least one of a computer, $H_2O$ and $H_2$ pressure sensors, and flow controllers comprising at least one or more of the group of a mass flow controller, a pump, a syringe pump, and a high precision electronically controllable valve; the valve comprising at least one of a needle valve, proportional electronic valve, and stepper motor valve wherein the valve is controlled by the pressure sensor and the computer to maintain at least one of the $H_2O$ and $H_2$ pressure at a desired value;
wherein the additional reactants injection system maintains the $H_2O$ vapor pressure in the range of 0.1 Torr to 1 Torr;
wherein the system to recover the products of the reactants comprises at least one of the vessel comprising walls capable of providing flow to the melt under gravity, an electrode electromagnetic pump, and the reservoir in communication with the vessel and further comprising a cooling system to maintain the reservoir at a lower temperature than another portion of the vessel to cause metal vapor of the molten metal to condense in the reservoir;
wherein the recovery system comprising an electrode electromagnetic pump comprises at least one magnet providing a magnetic field and a vector-crossed ignition current component;
wherein the vessel capable of a maintaining a pressure of below, at, or above atmospheric comprises an inner reaction cell, a top cover comprising a high temperature blackbody radiator, and an outer chamber capable of maintaining the a pressure of below, at, or above atmospheric;
wherein the top cover comprising a blackbody radiator is maintained at a temperature in the range of 1000 K to 3700 K;
wherein at least one of the inner reaction cell and top cover comprising a blackbody radiator comprises a refractory metal having a high emissivity;
wherein the blackbody radiator further comprises a blackbody temperature sensor and controller;
wherein the at least one power converter of the reaction power output comprises at least one of a thermophotovoltaic converter and a photovoltaic converter;
wherein the light emitted by the cell is predominantly blackbody radiation comprising visible and near infrared light, and the photovoltaic cells are concentrator cells that comprise at least one compound chosen from crystalline silicon, germanium, gallium arsenide (GaAs), gallium antimonide (GaSb), indium gallium arsenide (InGaAs), indium gallium arsenide antimonide (InGaAsSb), and indium phosphide arsenide antimonide (InPAsSb), Group III/V semiconductors, InGaP/InGaAs/Ge; InAlGaP/AlGaAs/GaInNAsSb/Ge; GaInP/GaAsP/SiGe; GaInP/GaAsP/Si; GaInP/GaAsP/Ge; GaInP/GaAsP/Si/SiGe; GaInP/GaAs/InGaAs; GaInP/GaAs/GaInNAs; GaInP/GaAs/InGaAs/InGaAs; GaInP/Ga(In)As/InGaAs; GaInP-GaAs-wafer-InGaAs; GaInP-Ga(In)As-Ge; and GaInP-GaInAs-Ge, and the power system further comprises a vacuum pump and at least one chiller.

## BRIEF DESCRIPTION OF THE DRAWINGS

The accompanying drawings, which are incorporated in and constitute a part of this specification, illustrate several embodiments of the disclosure and together with the description, serve to explain the principles of the disclosure. In the drawings:

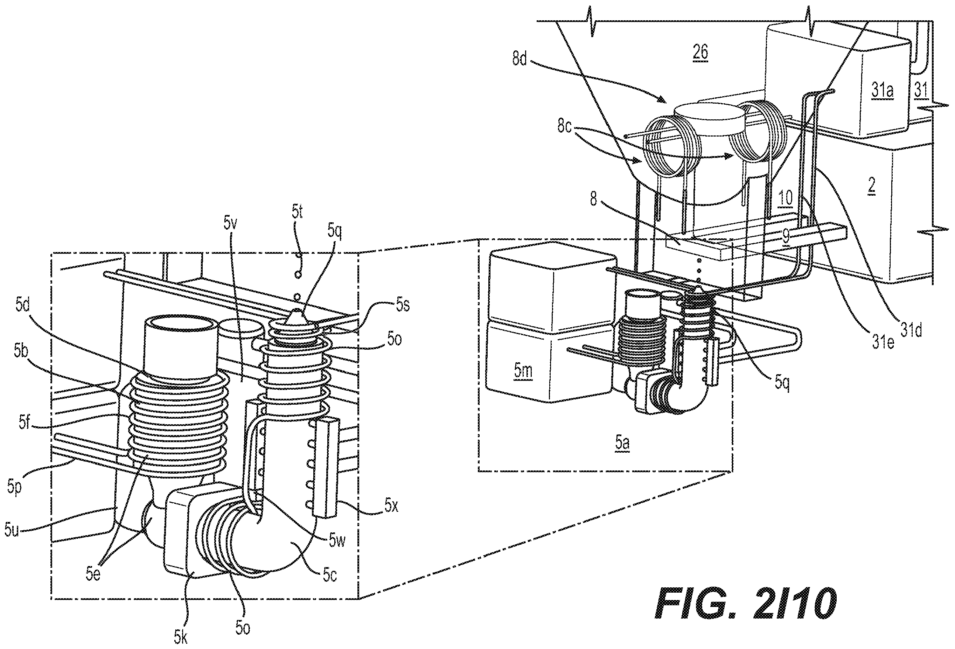

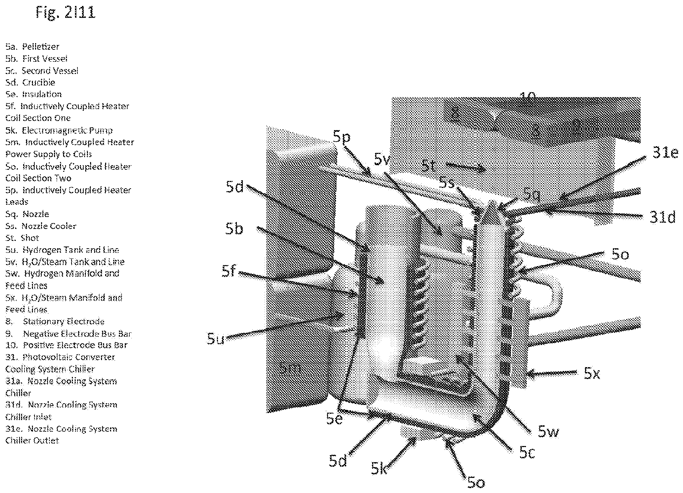

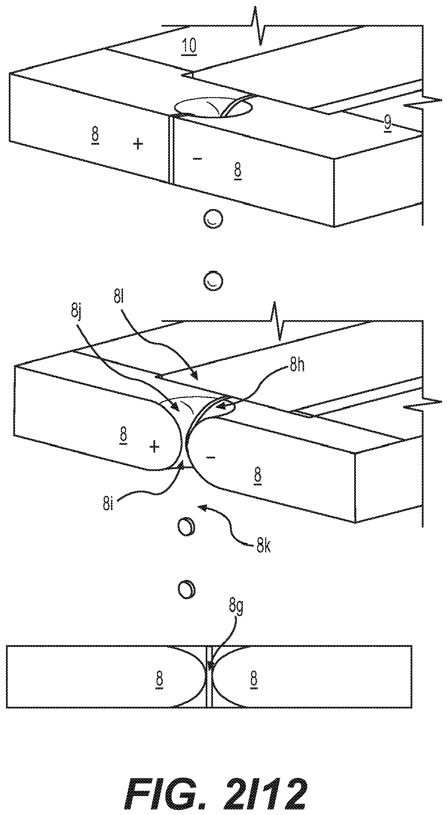

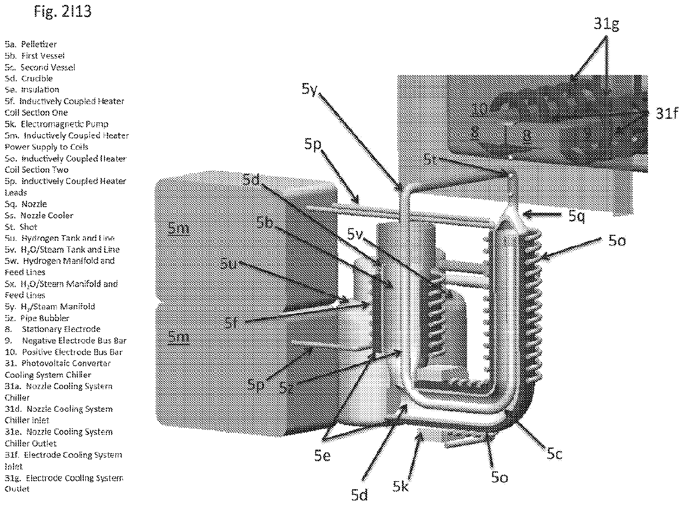

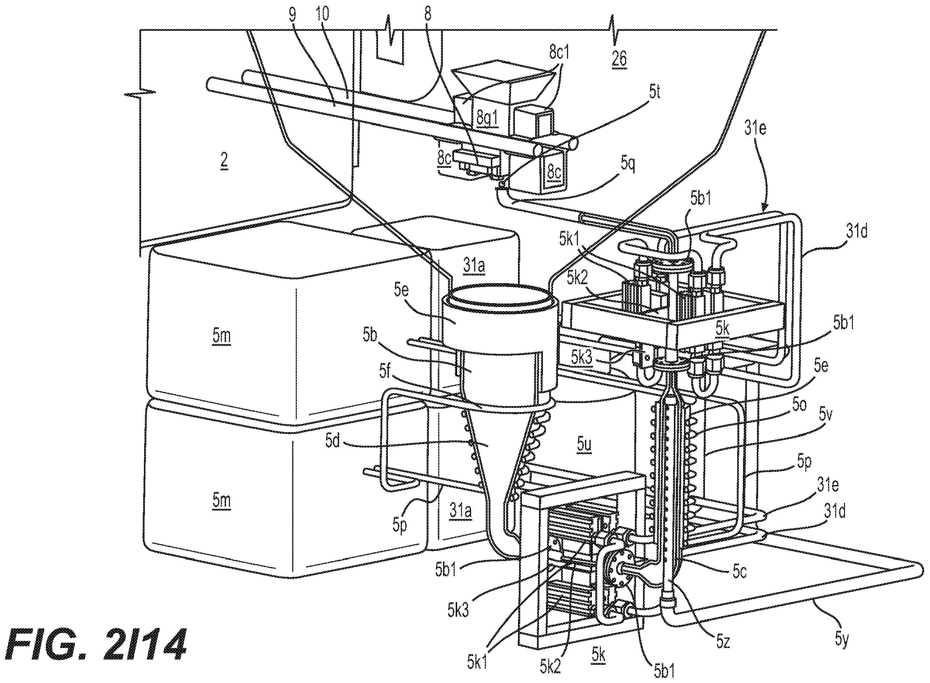

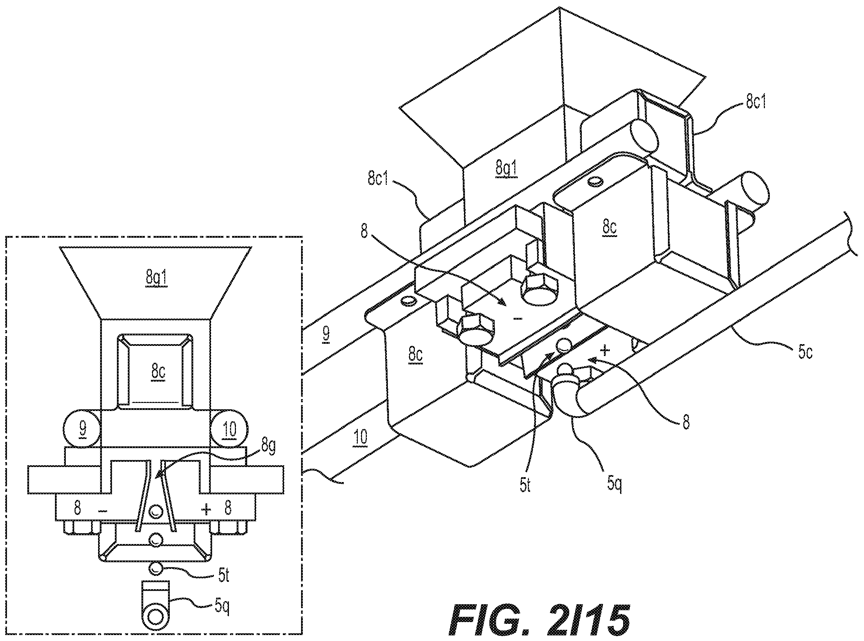

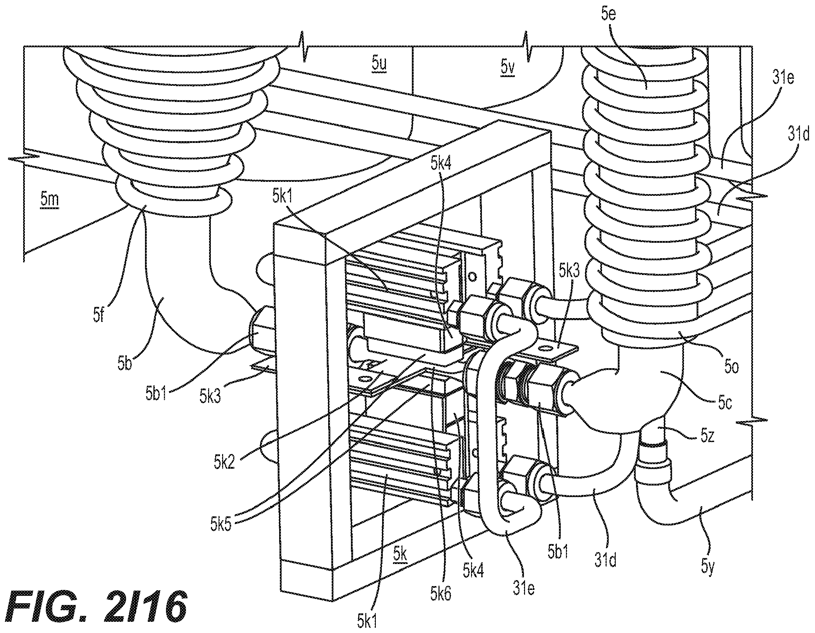

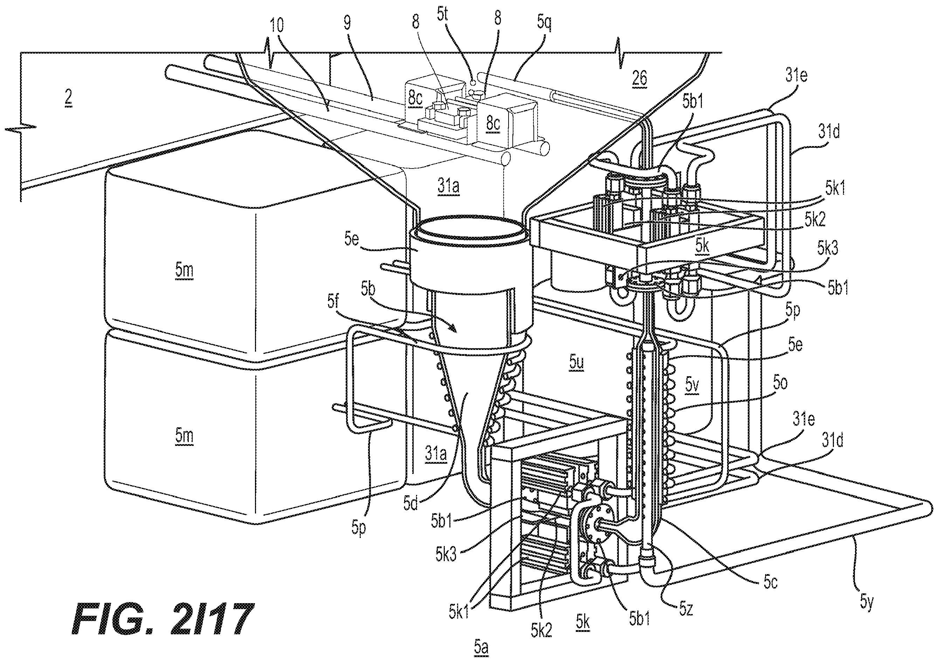

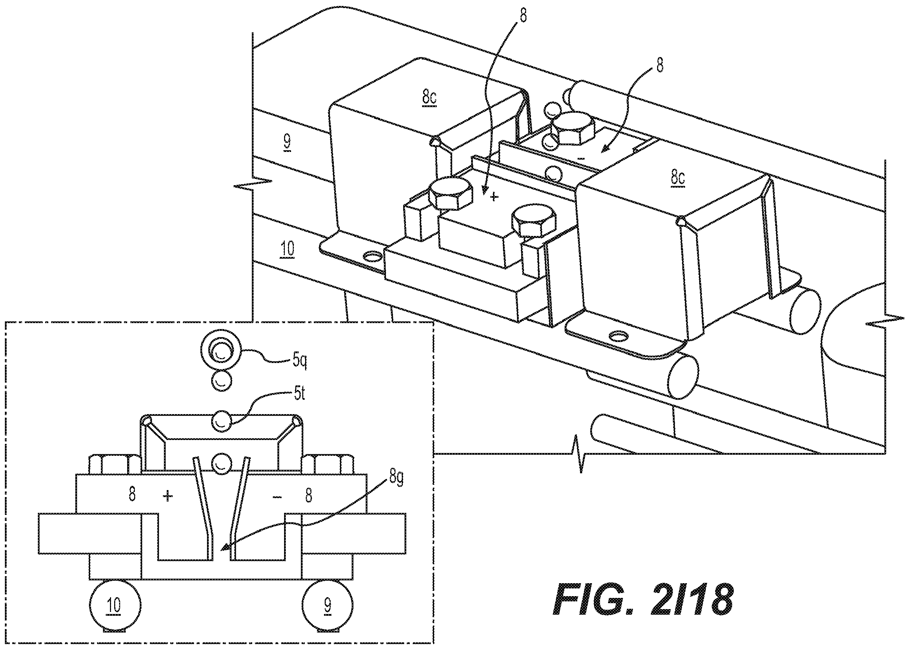

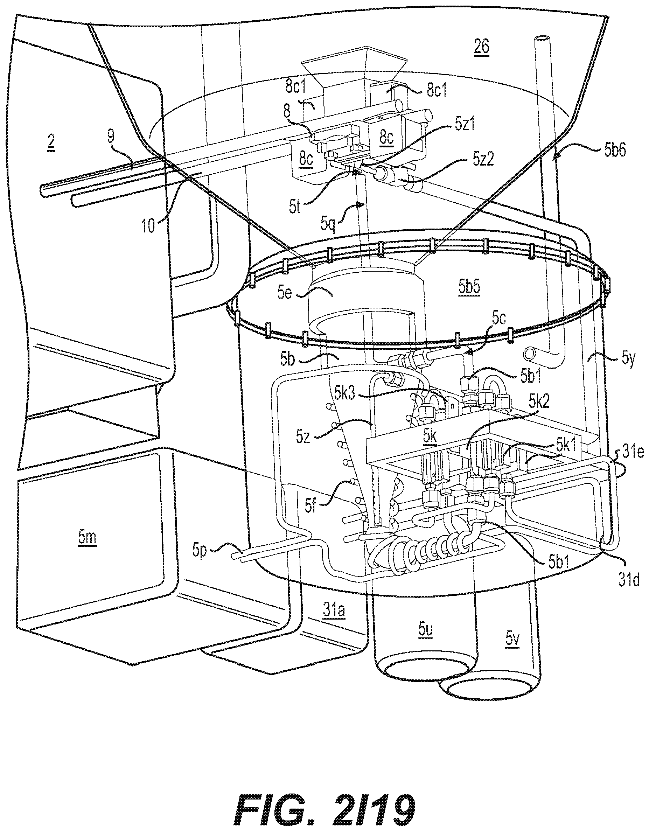

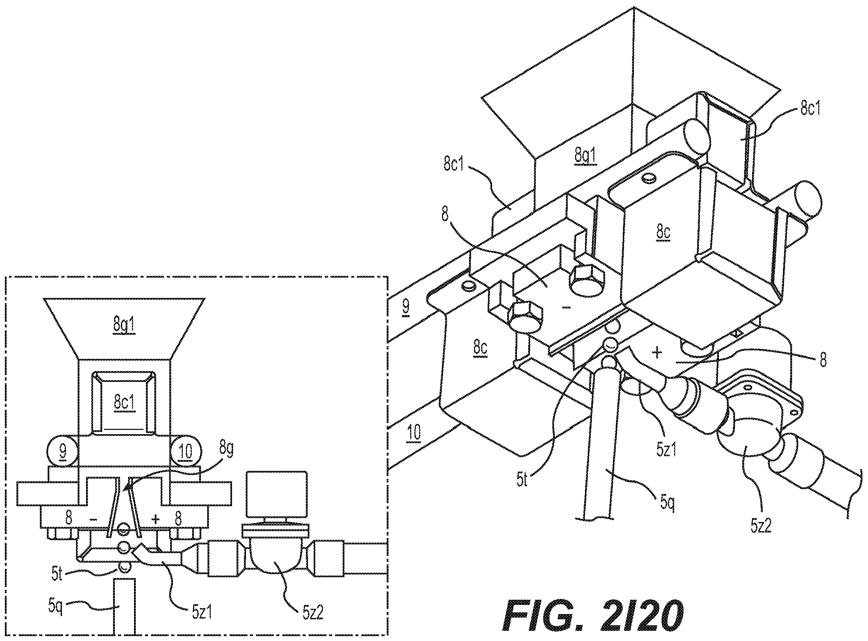

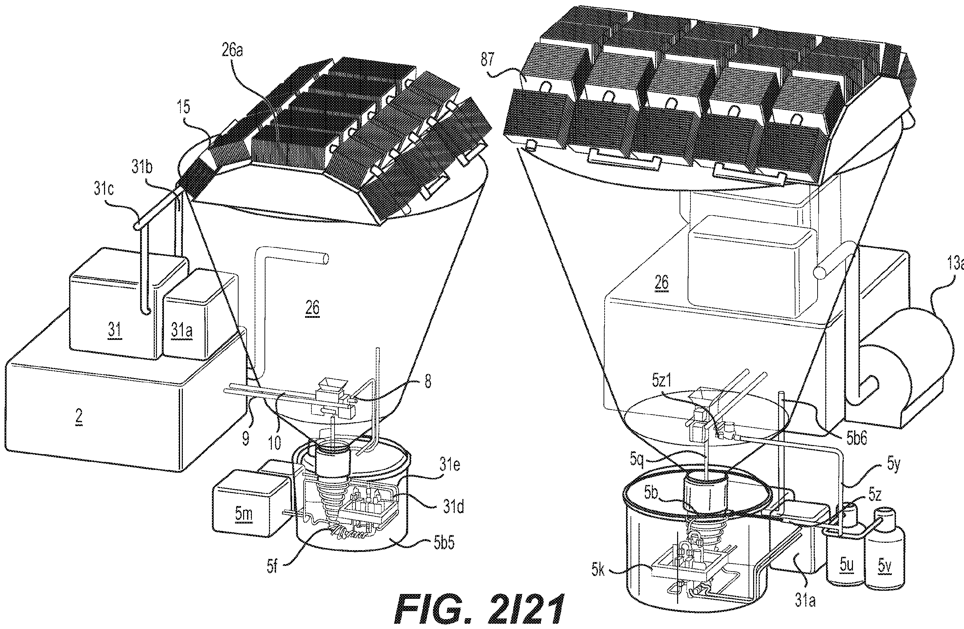

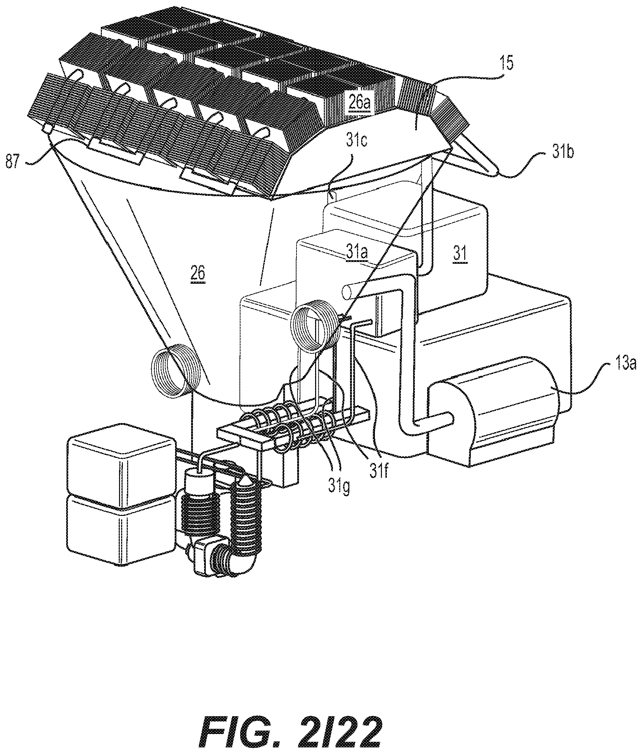

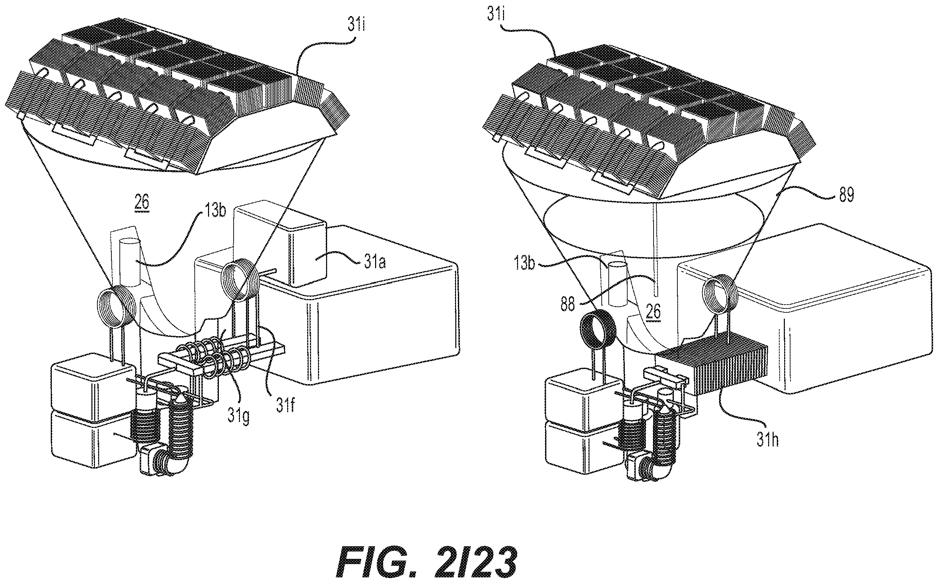

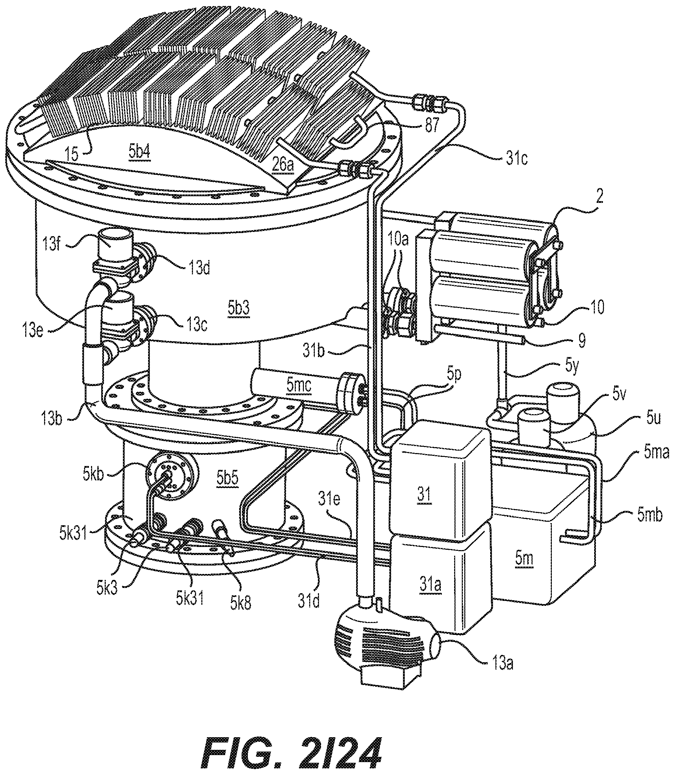

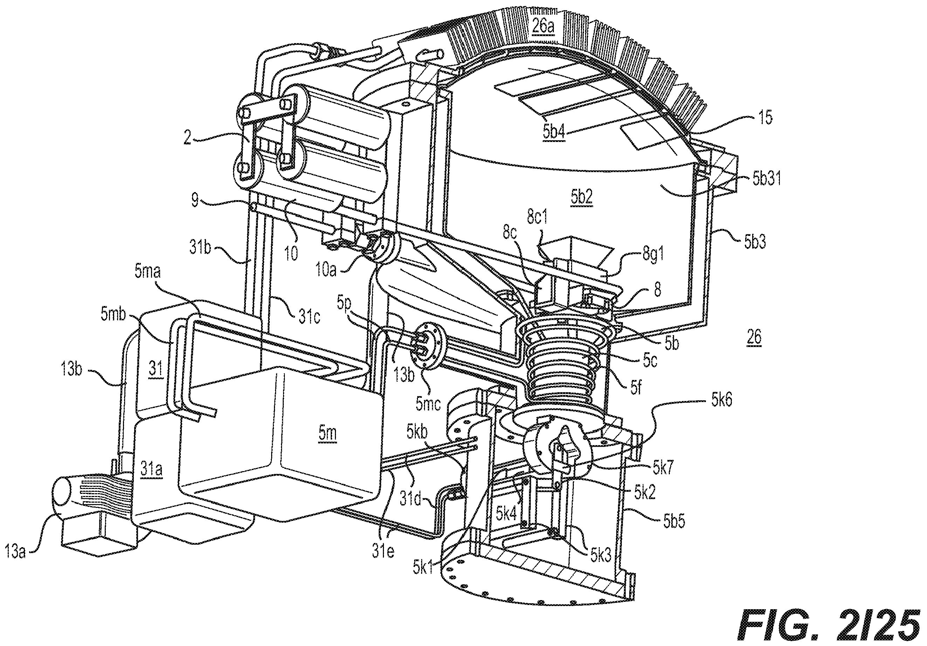

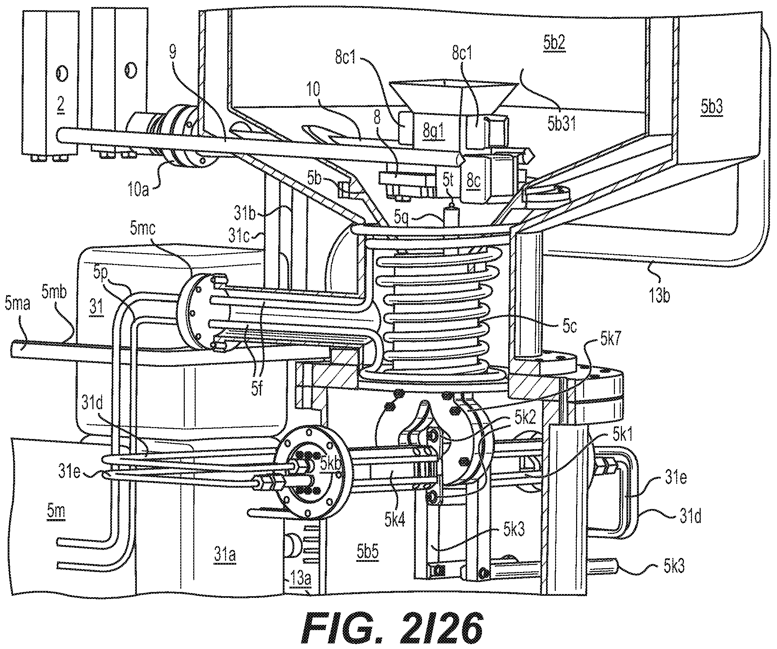

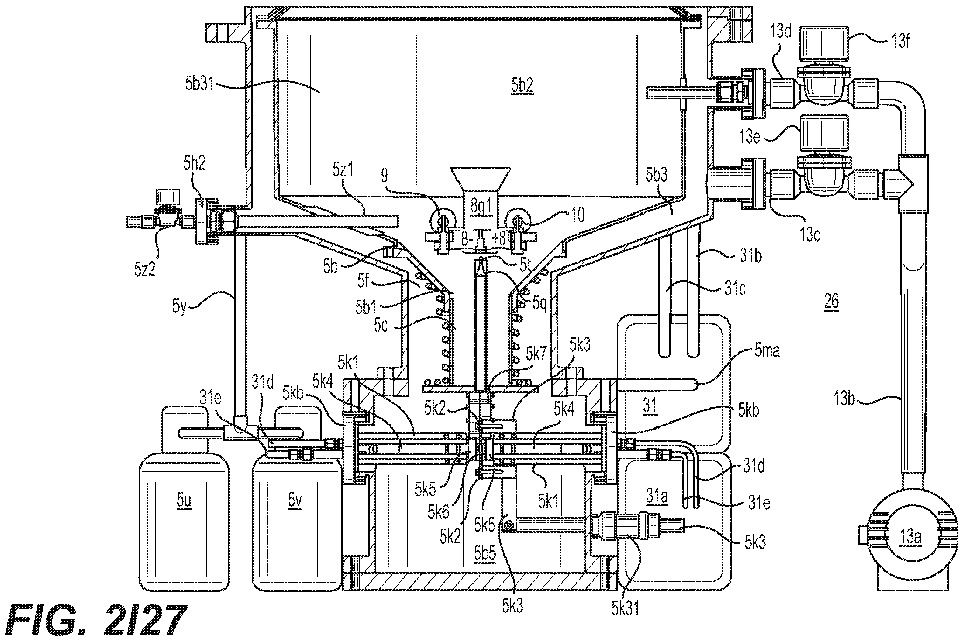

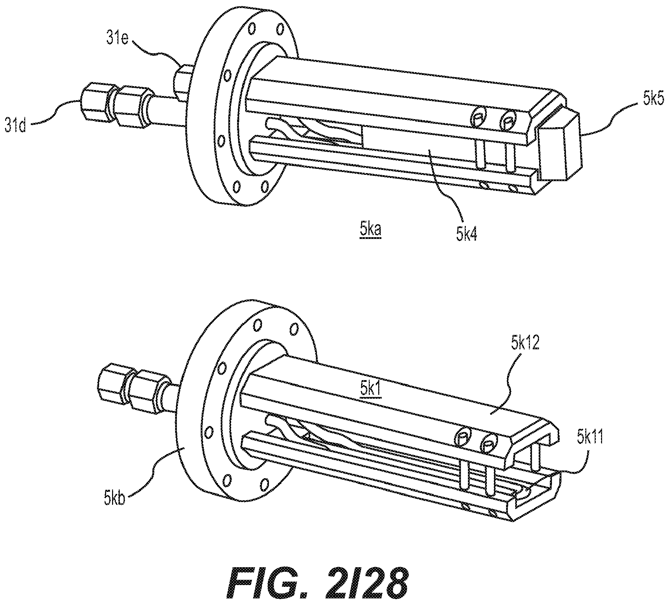

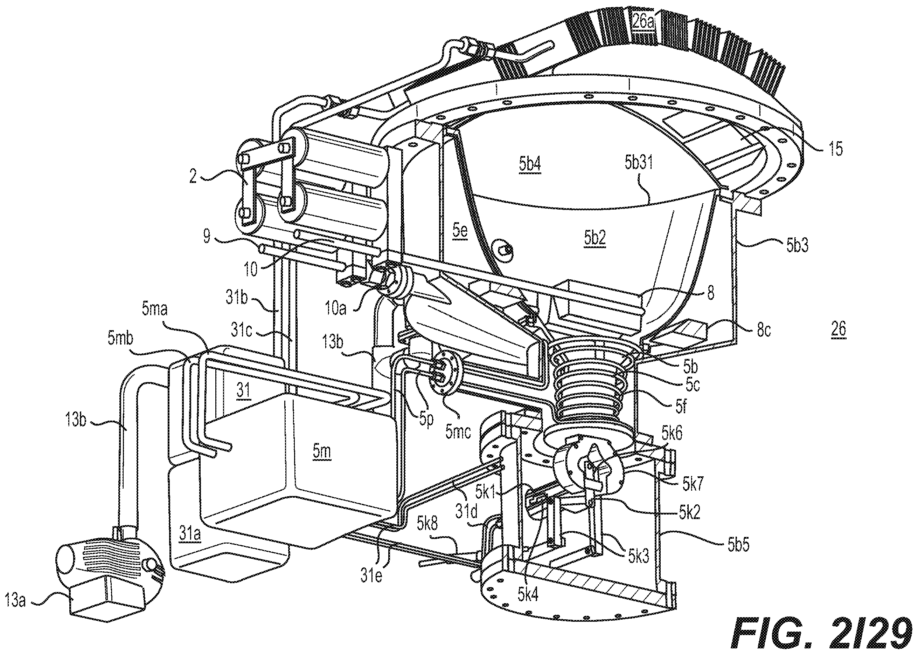

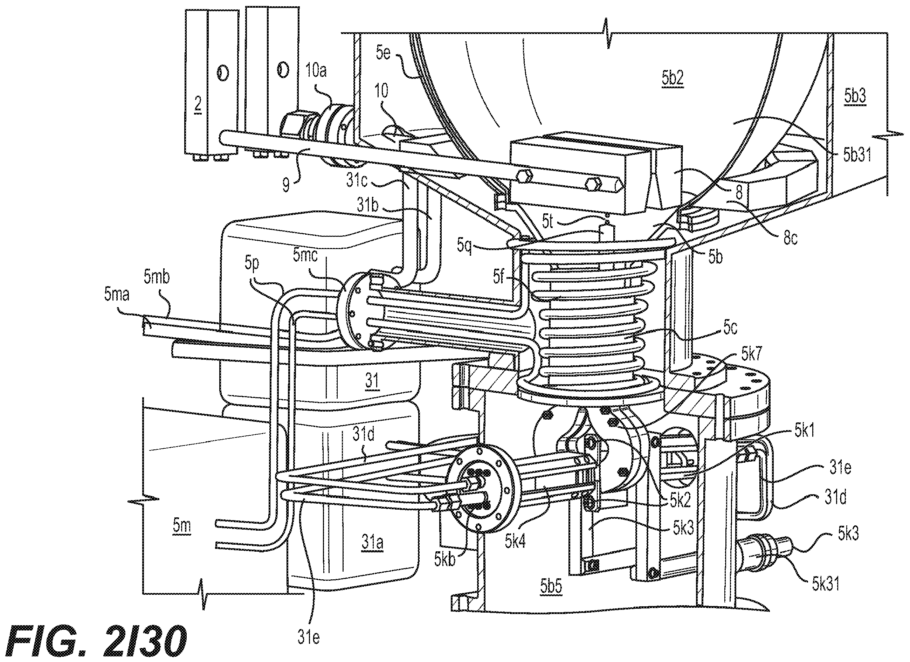

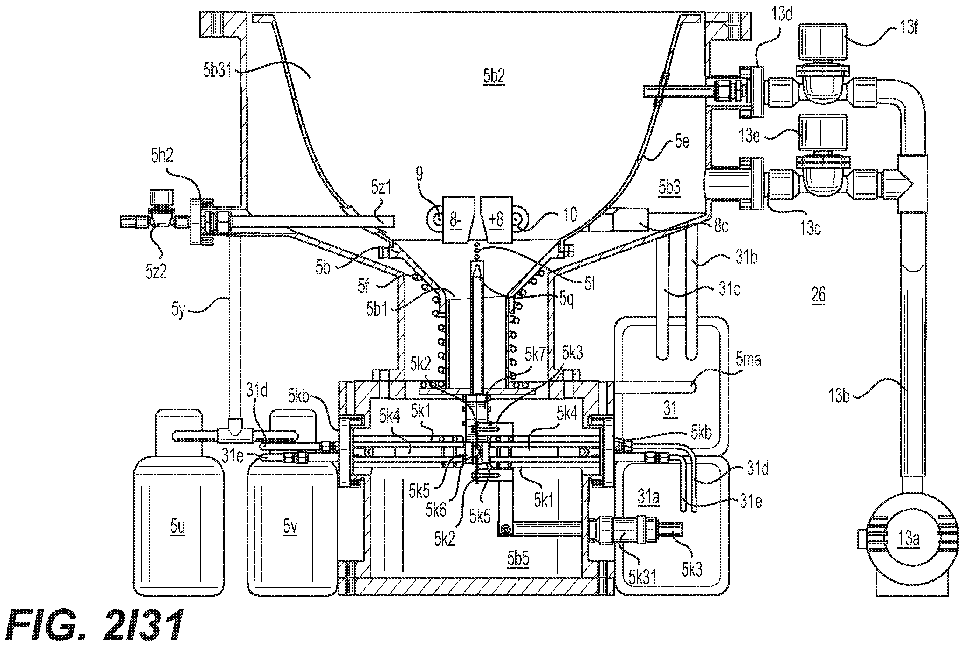

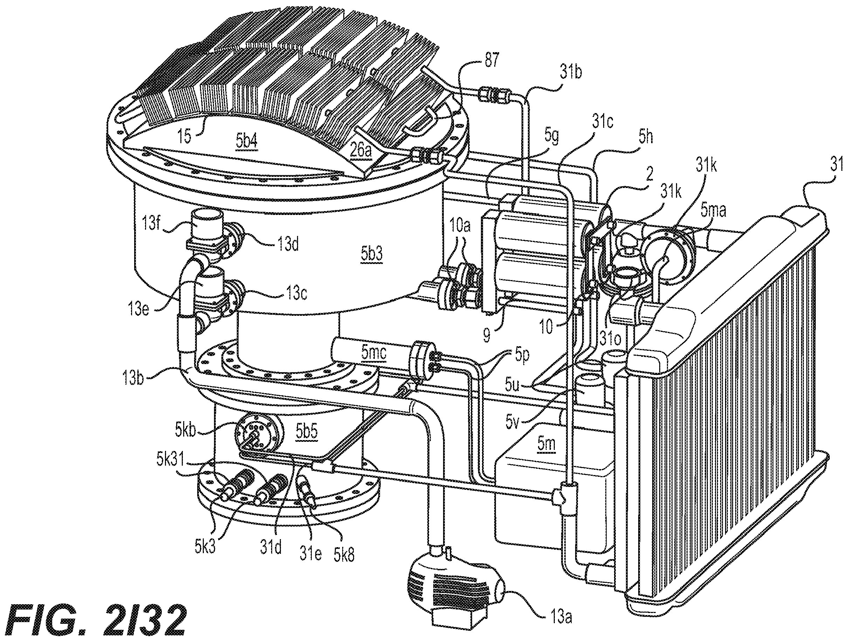

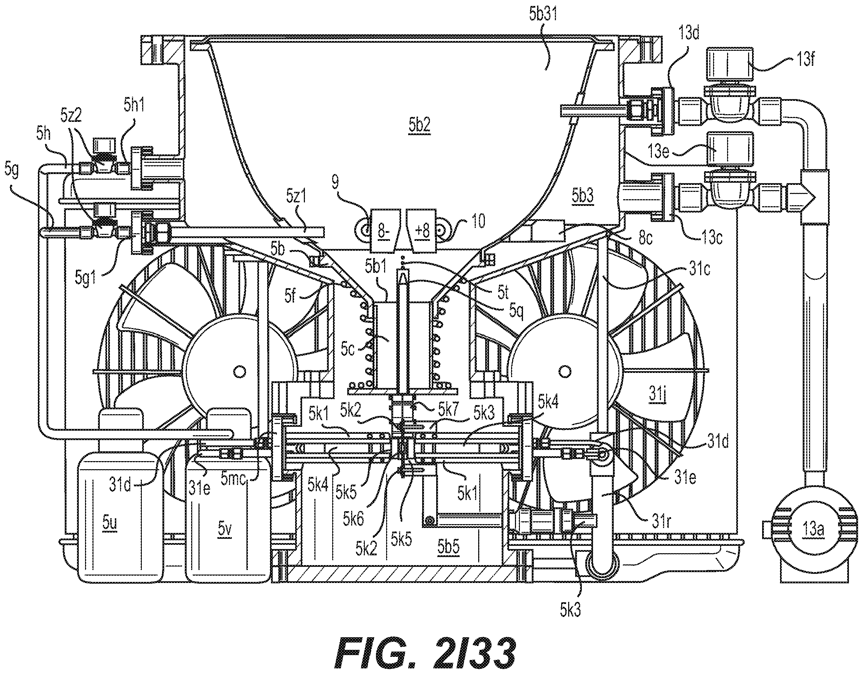

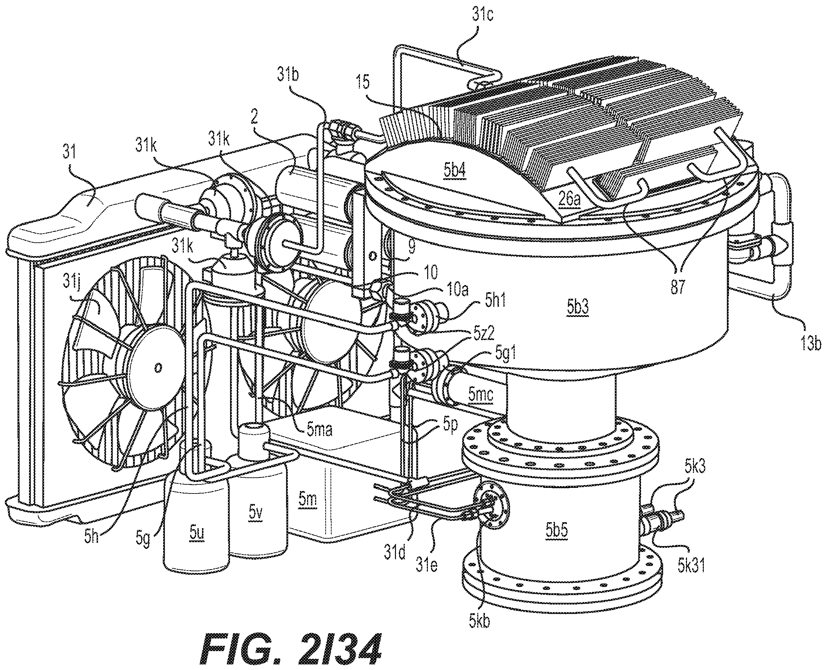

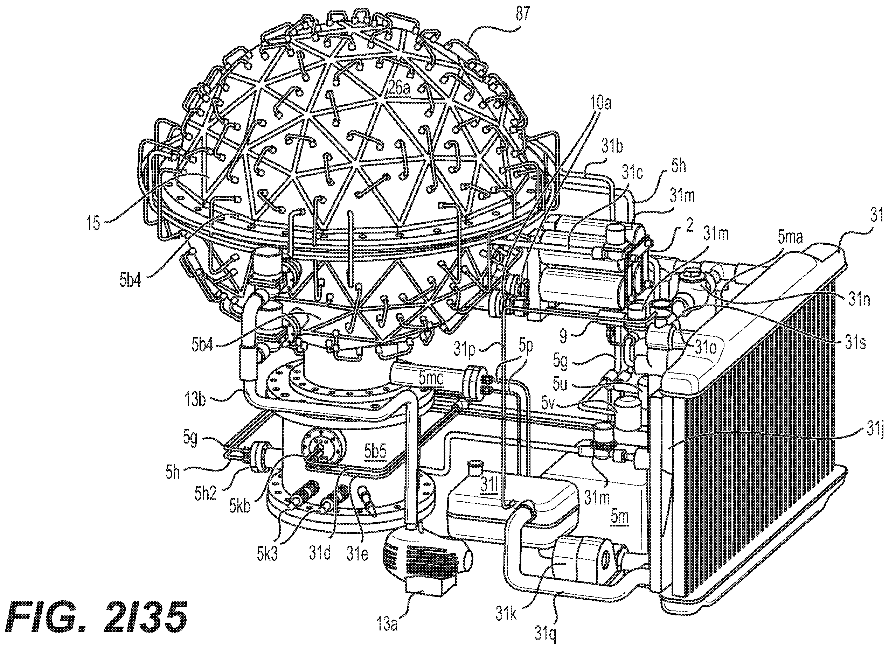

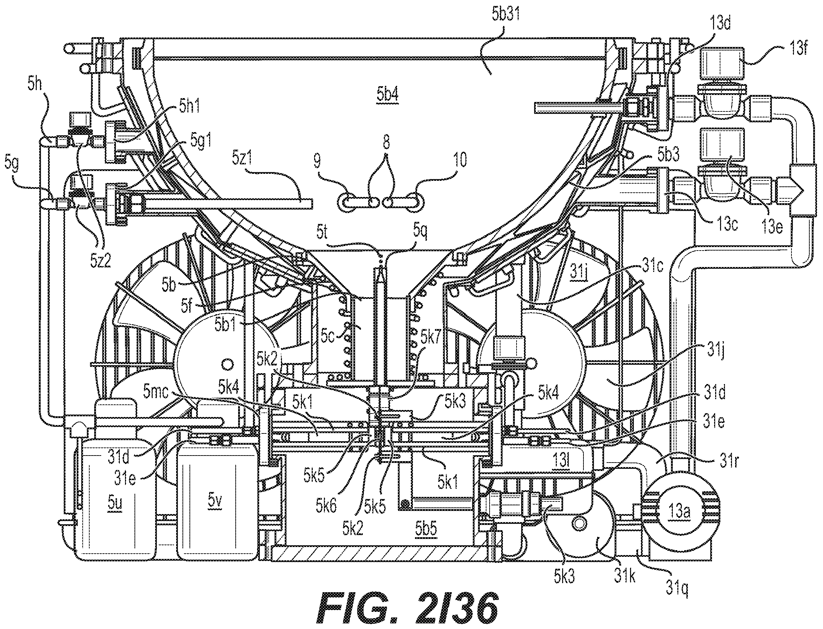

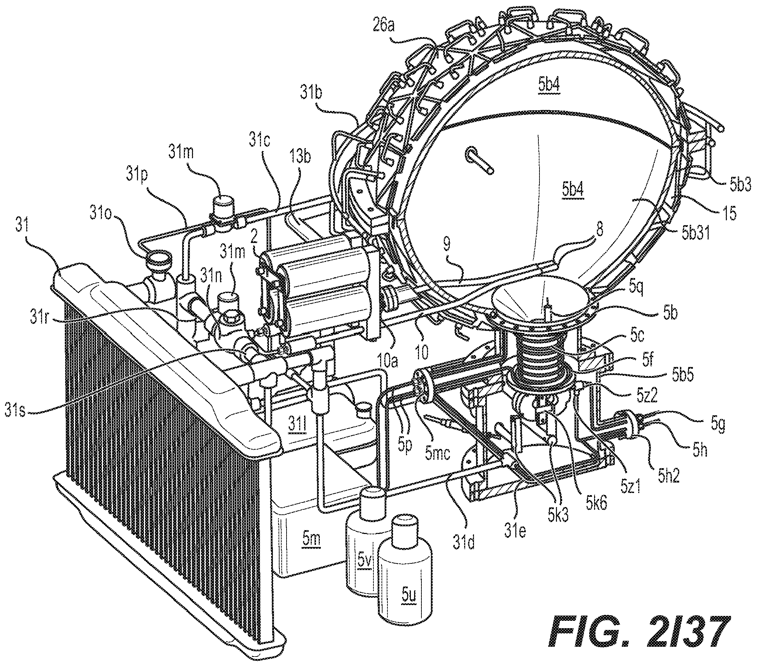

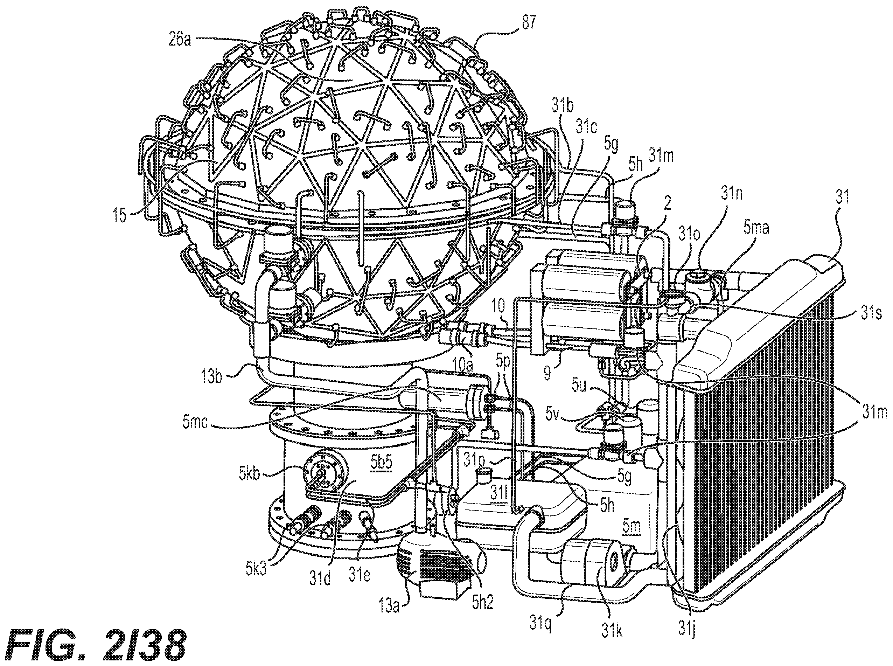

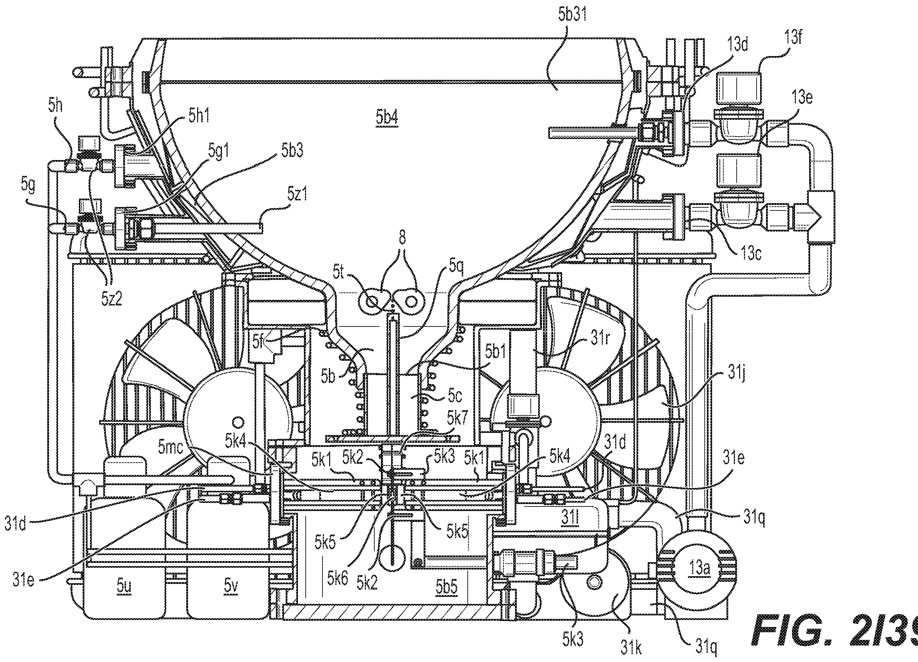

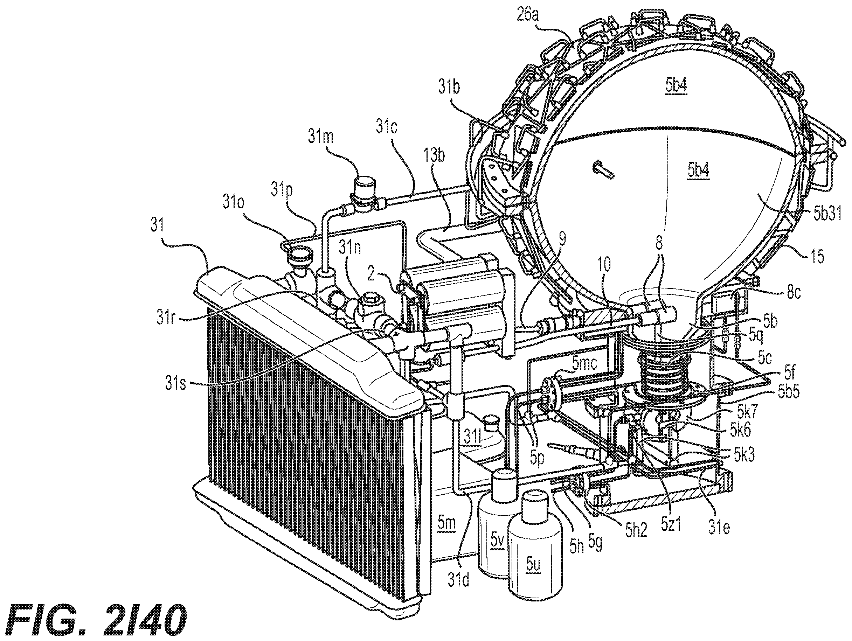

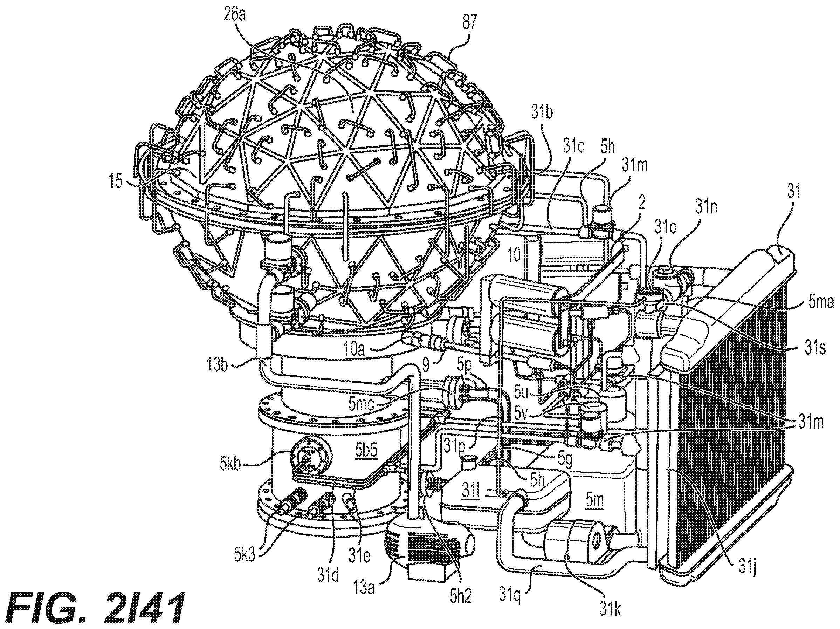

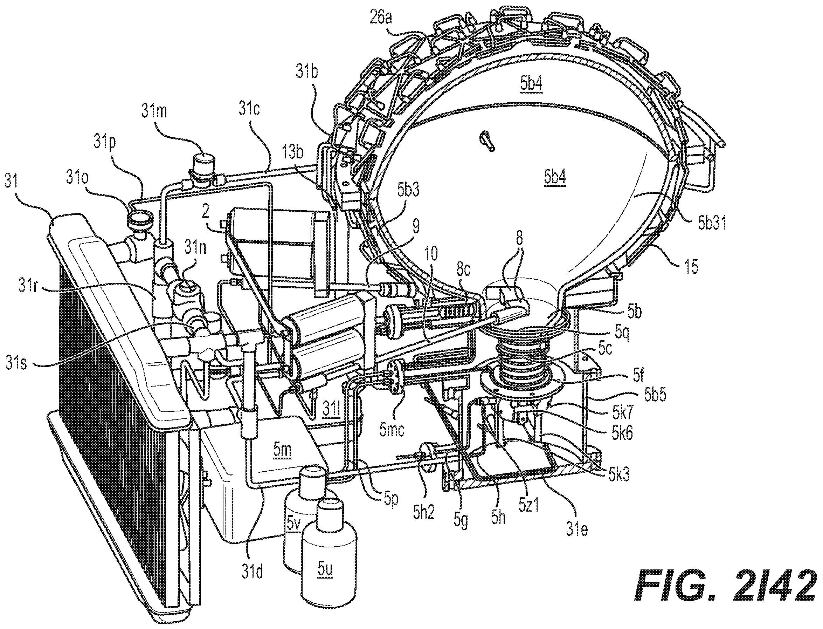

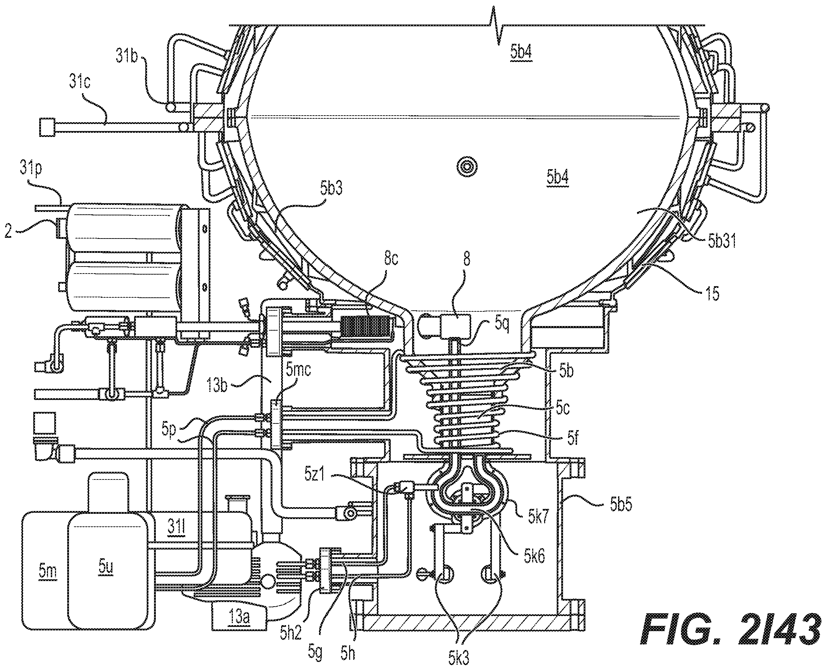

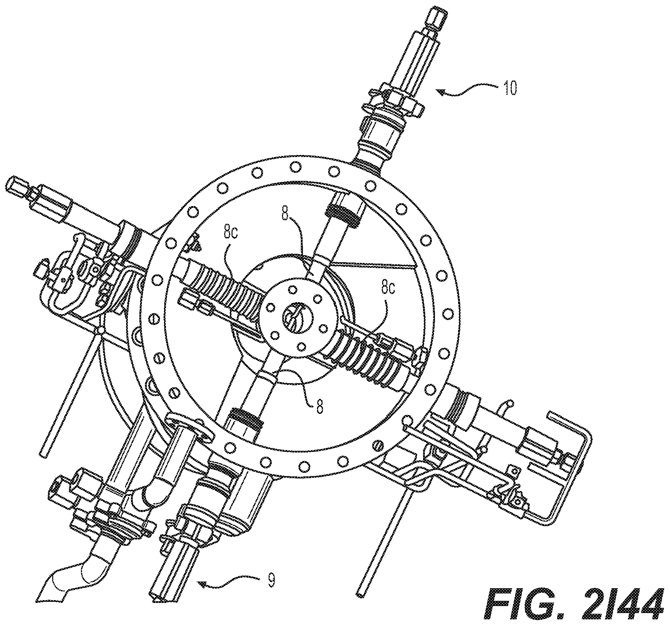

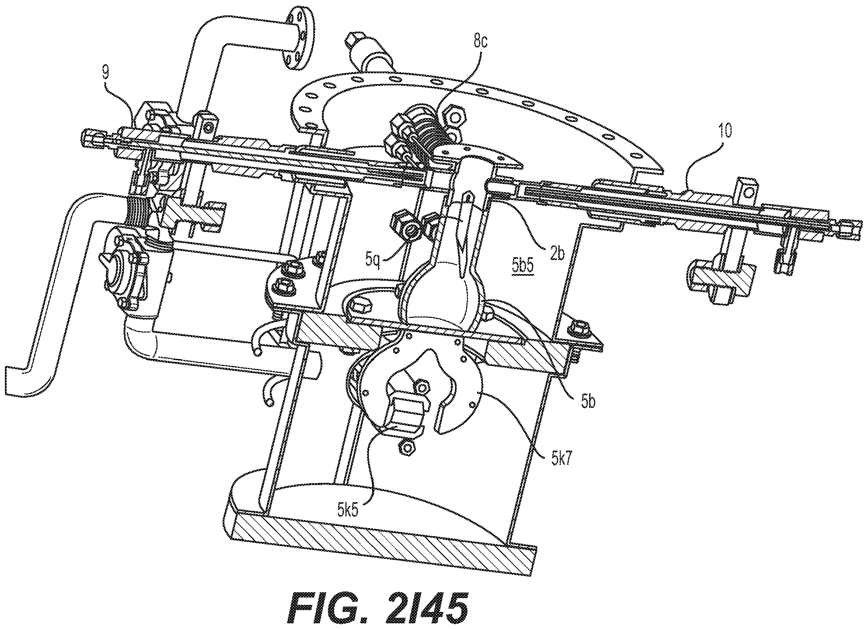

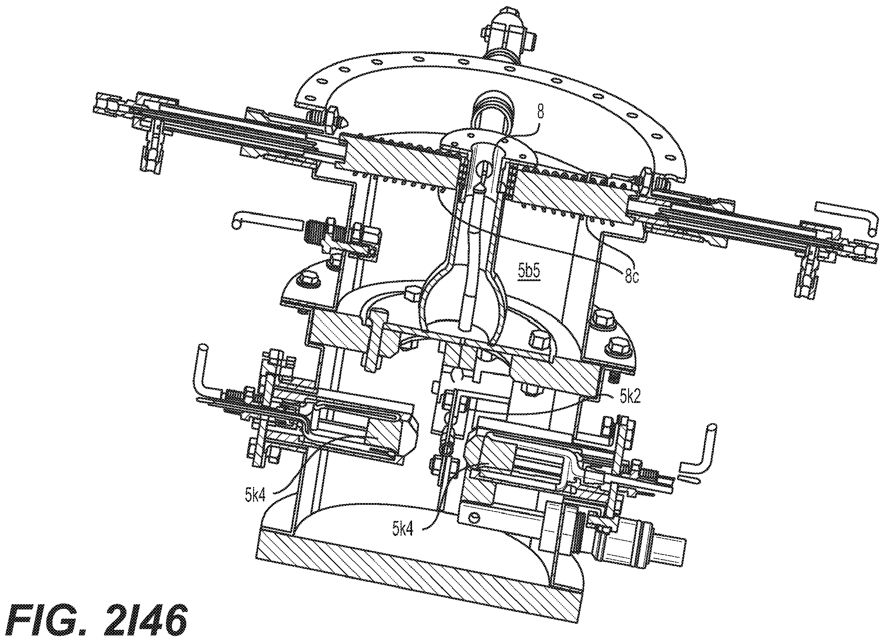

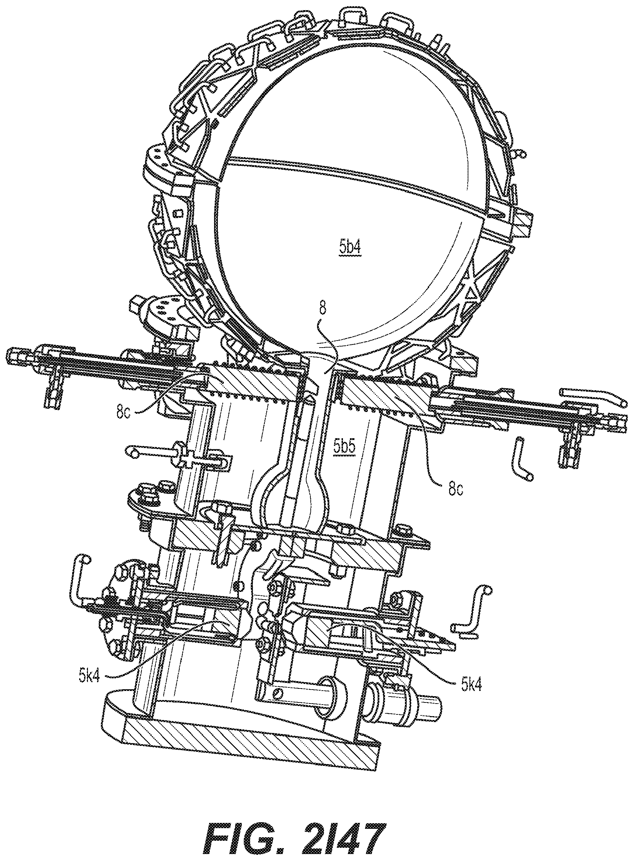

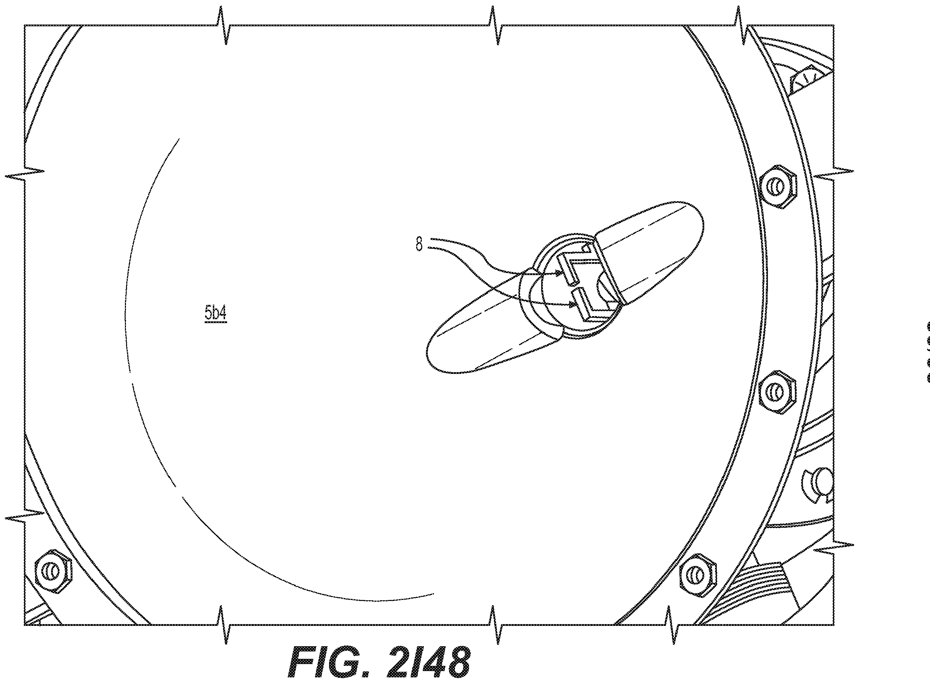

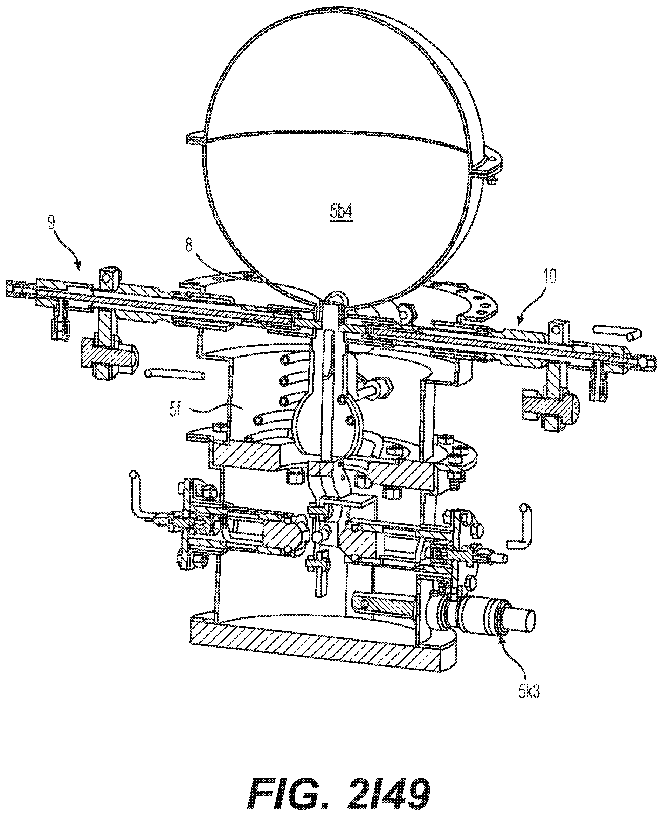

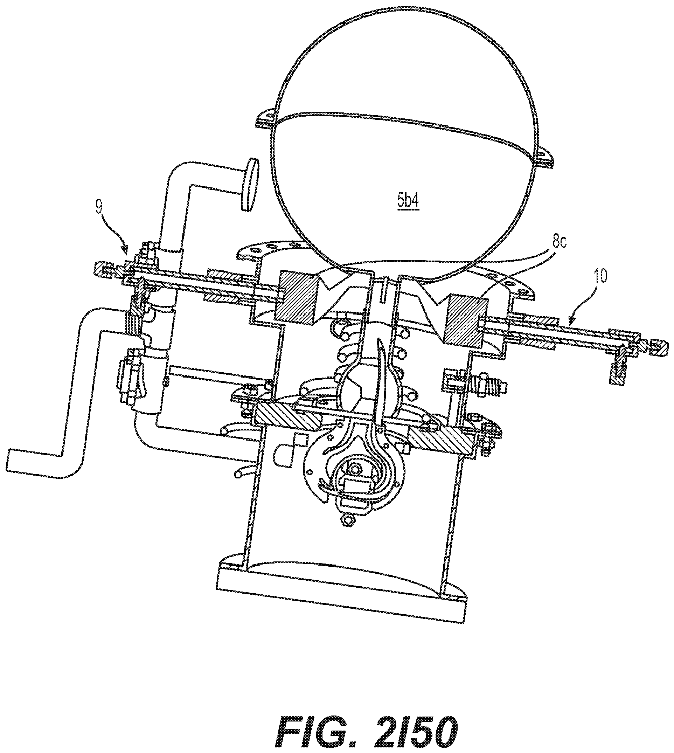

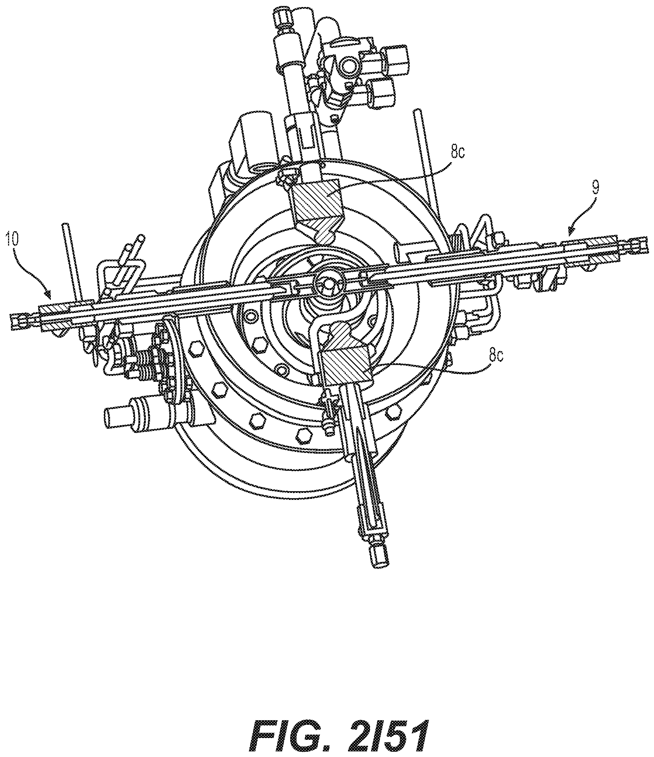

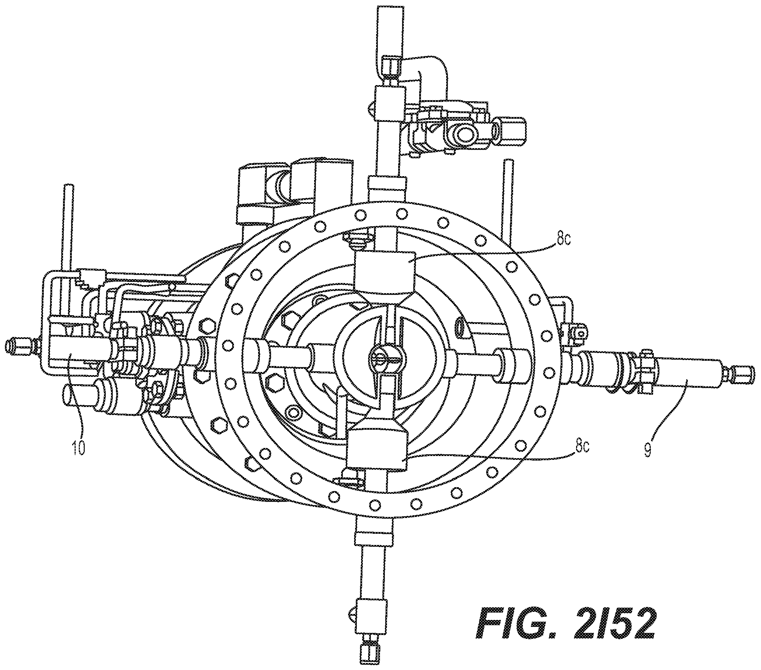

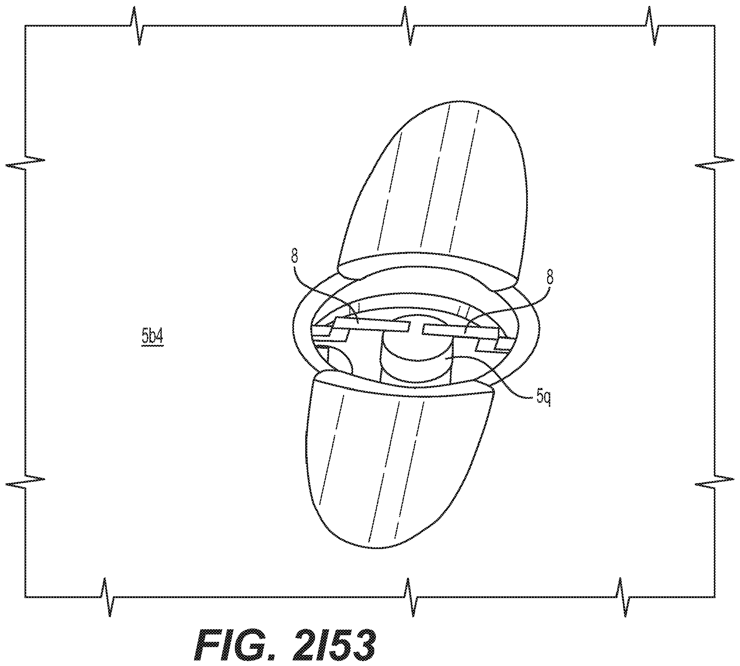

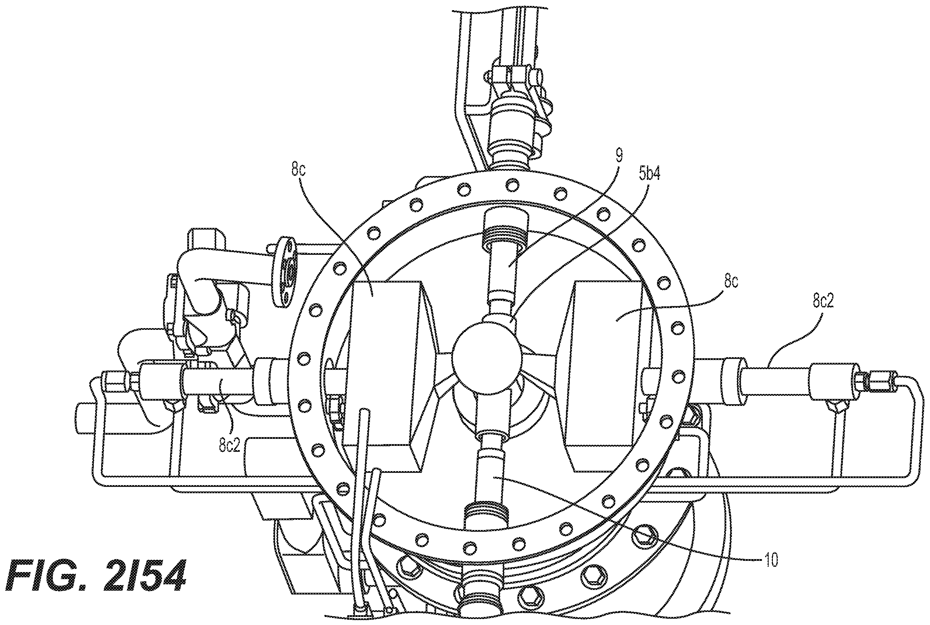

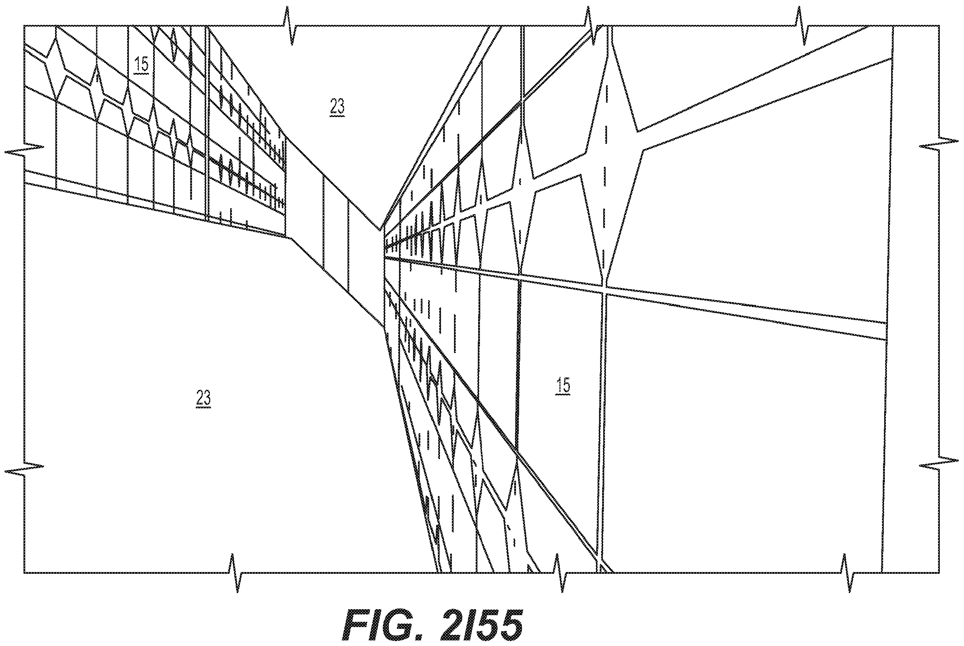

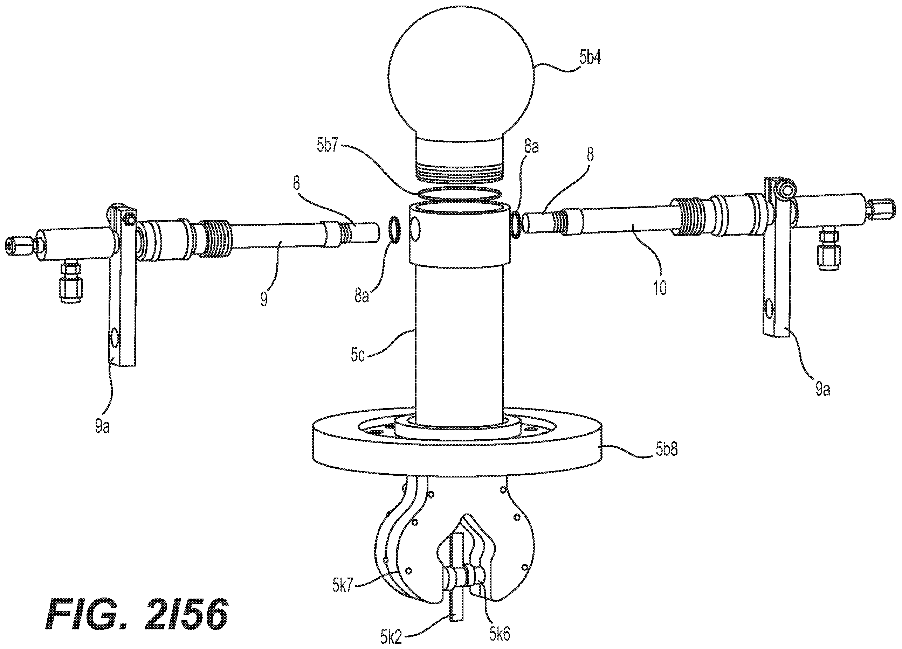

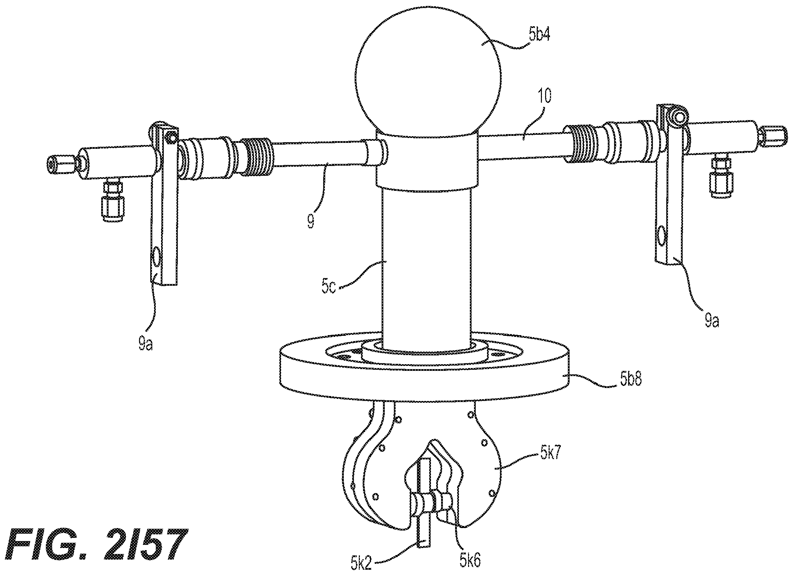

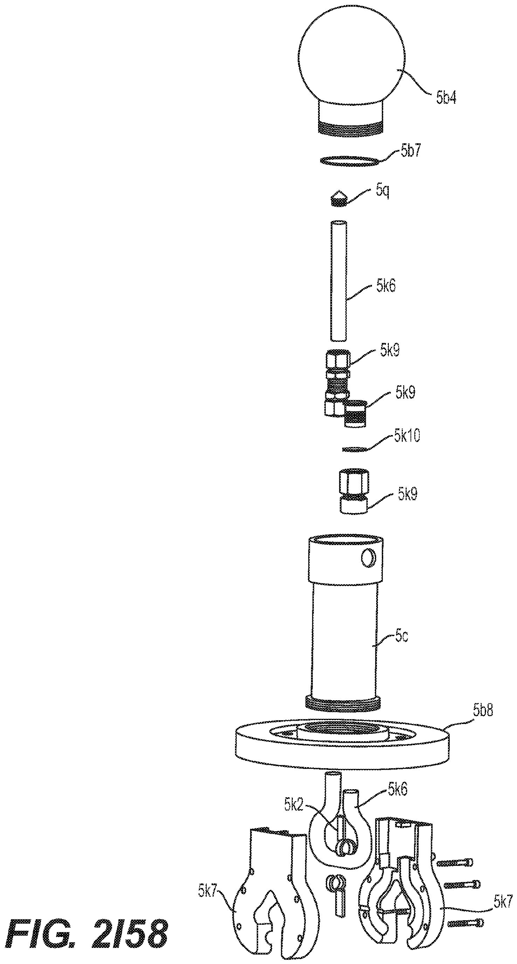

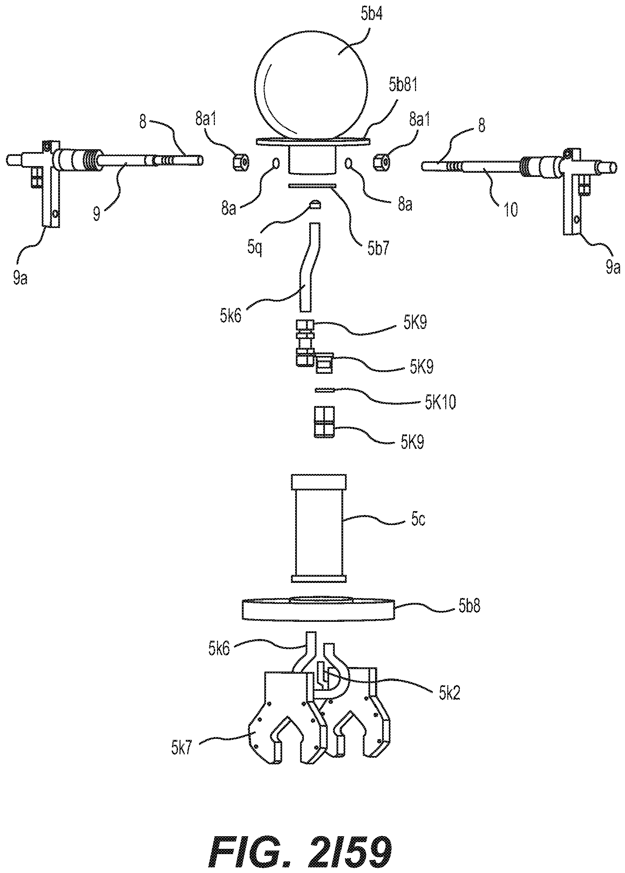

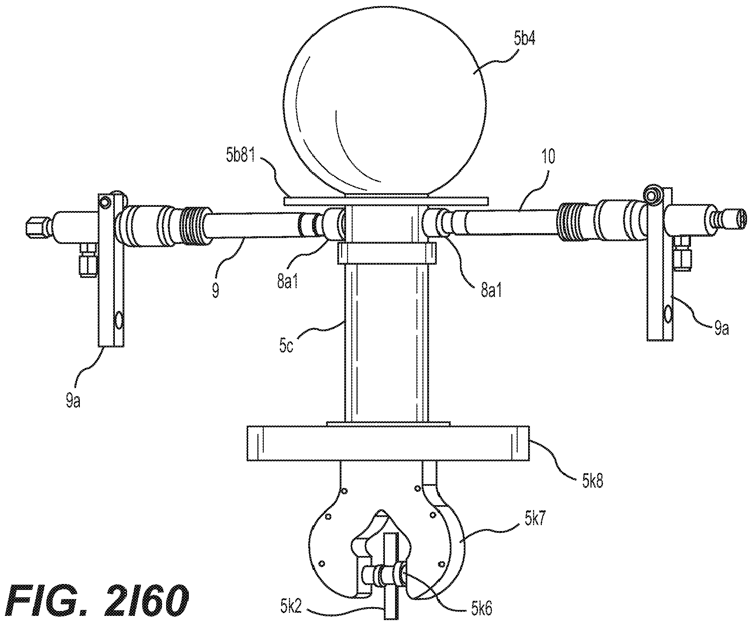

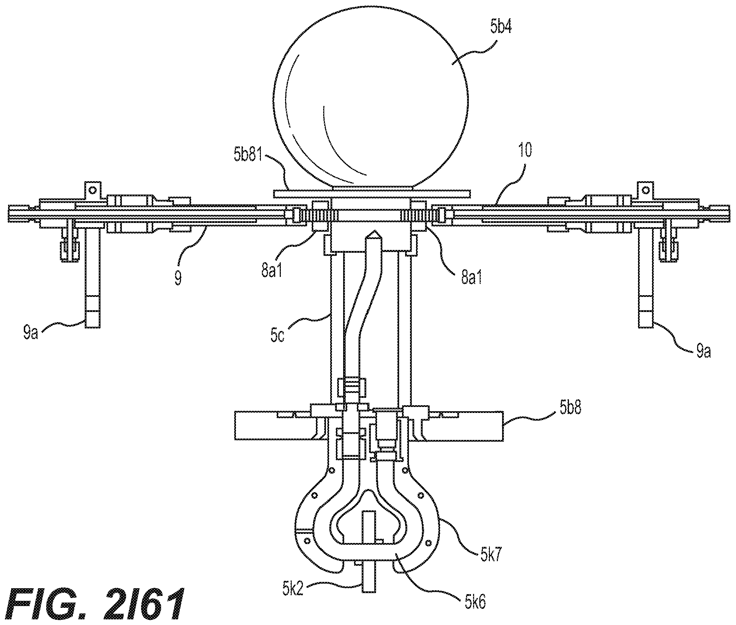

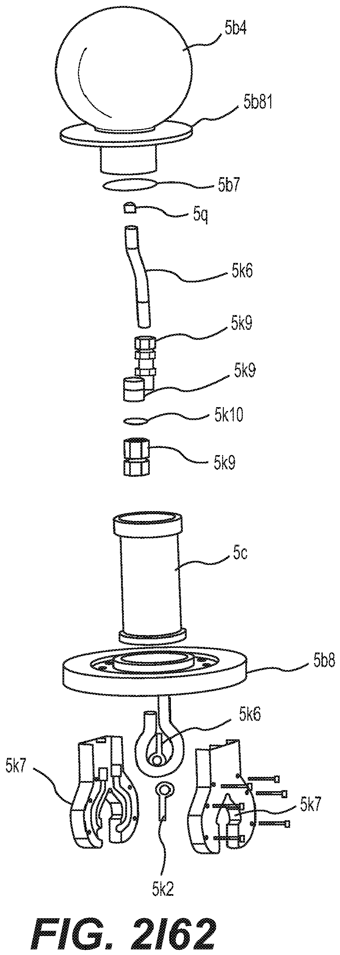

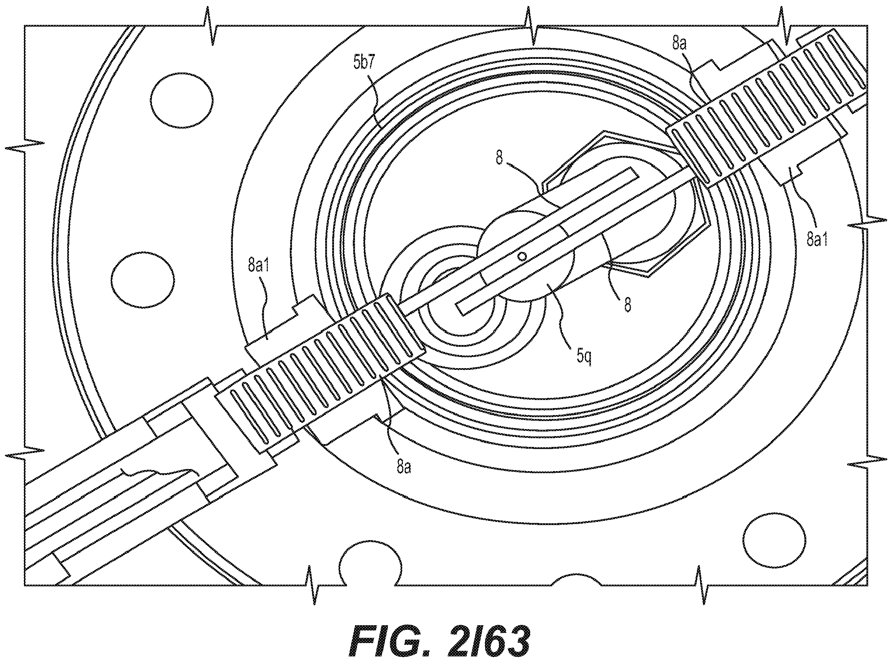

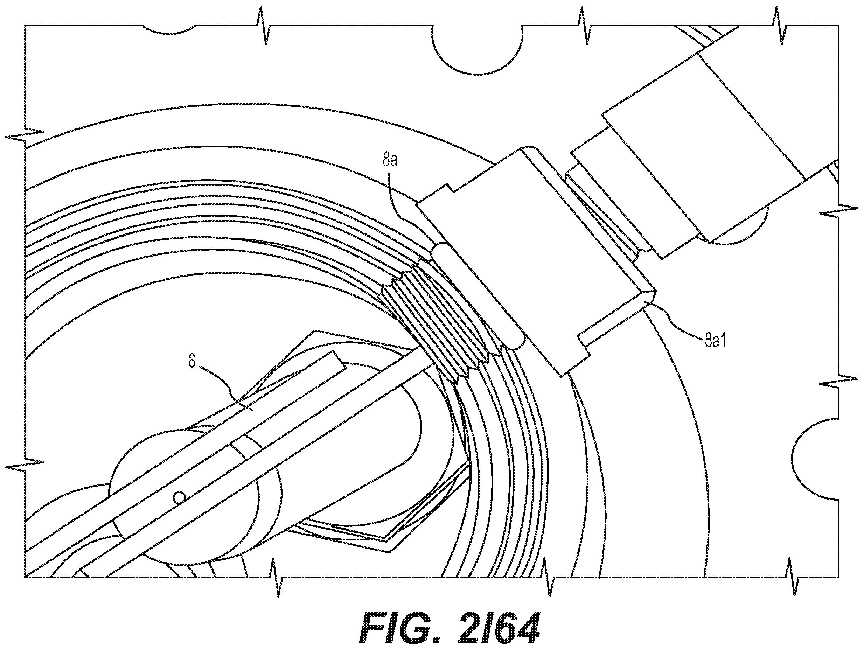

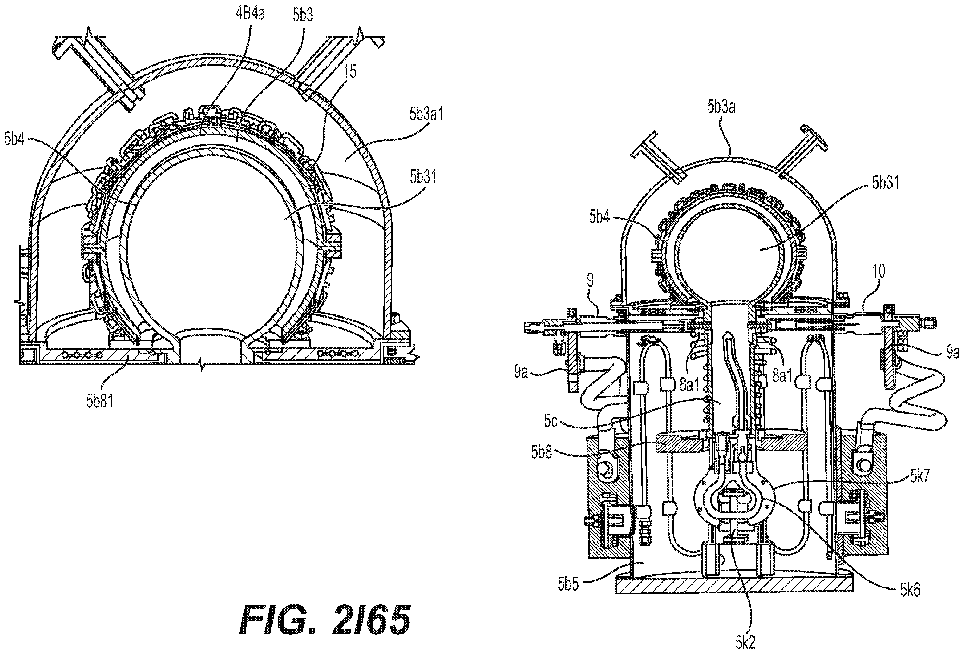

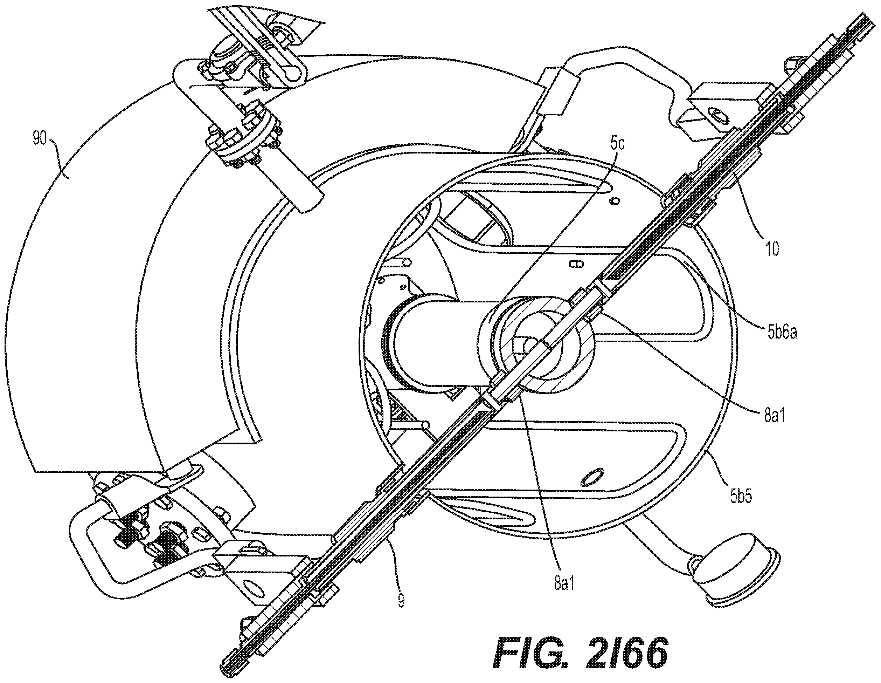

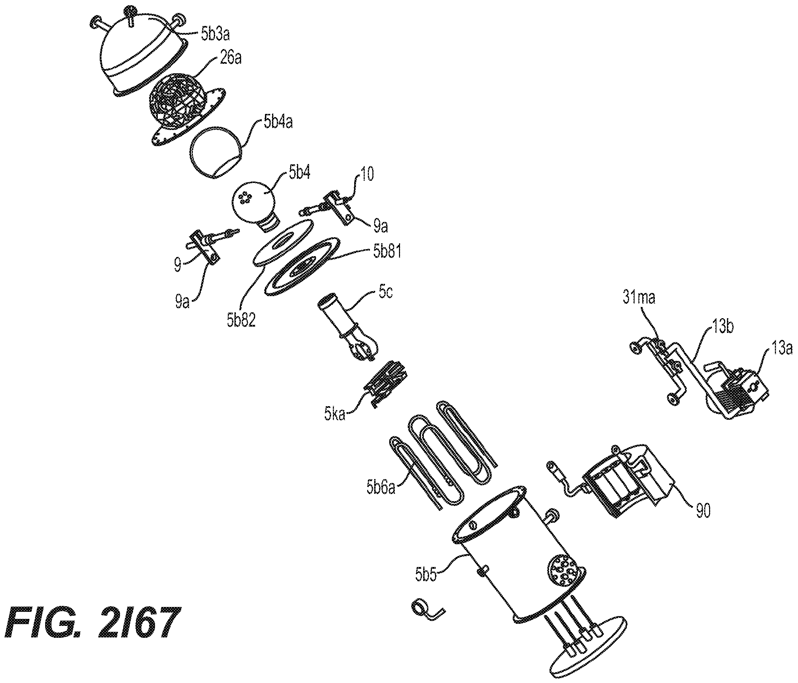

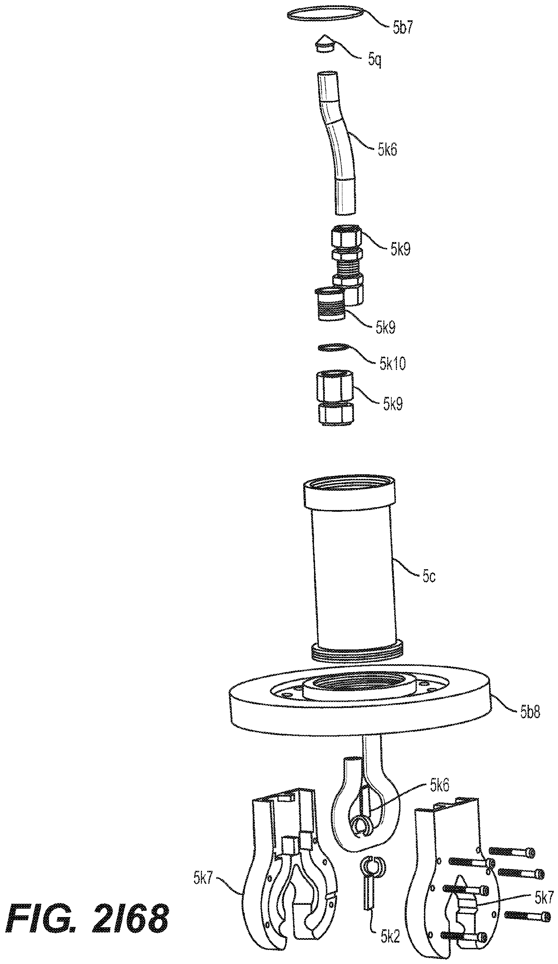

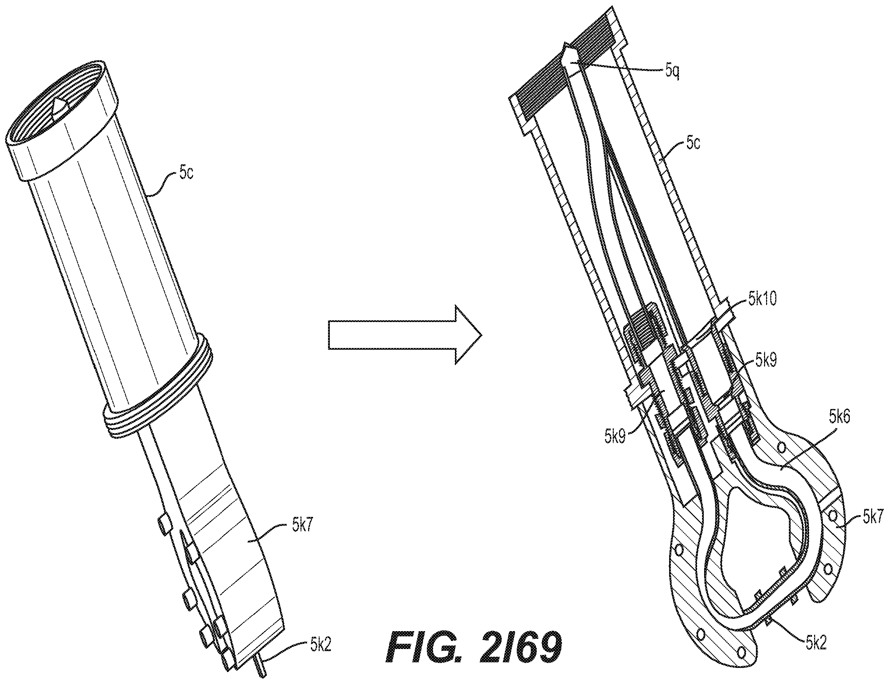

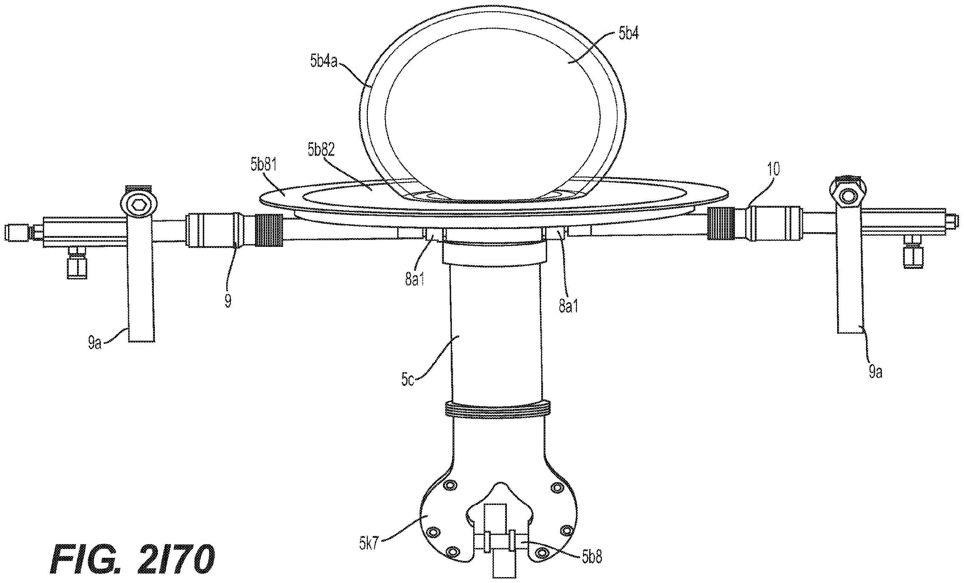

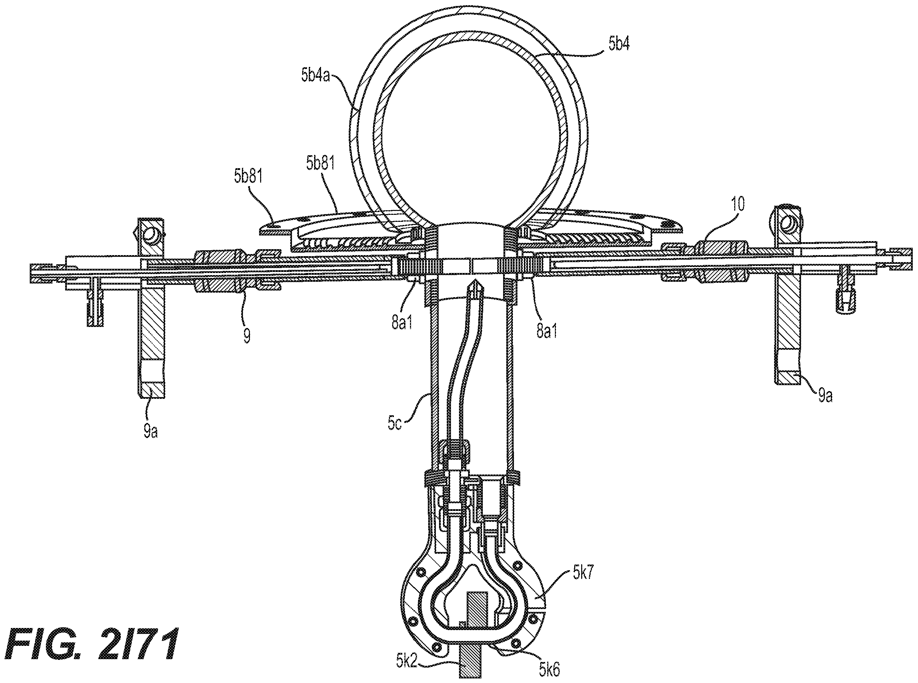

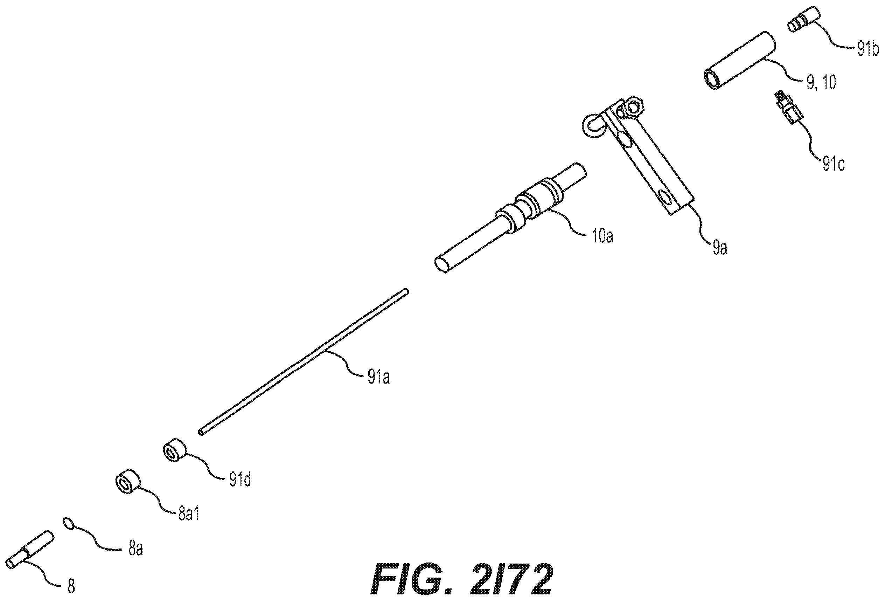

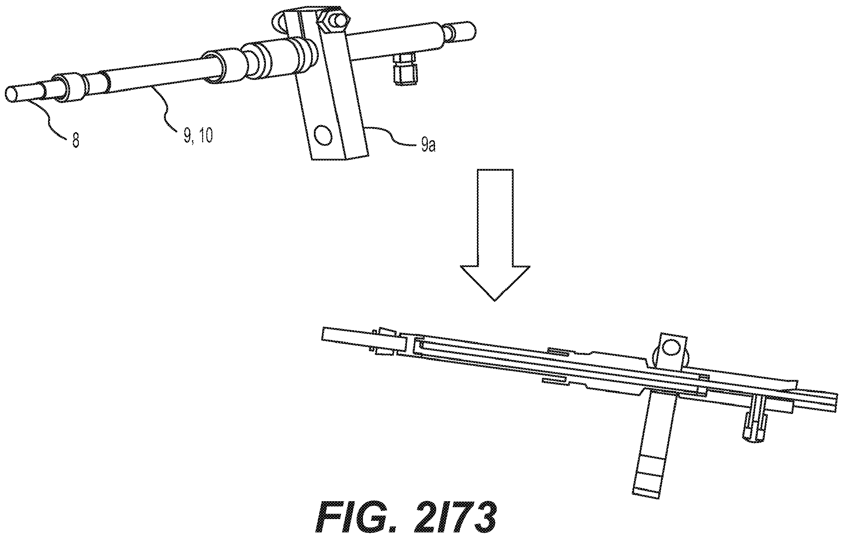

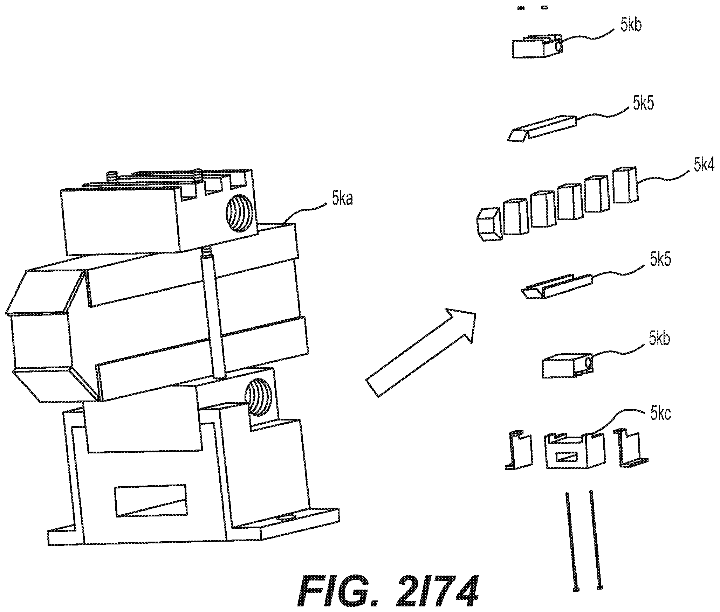

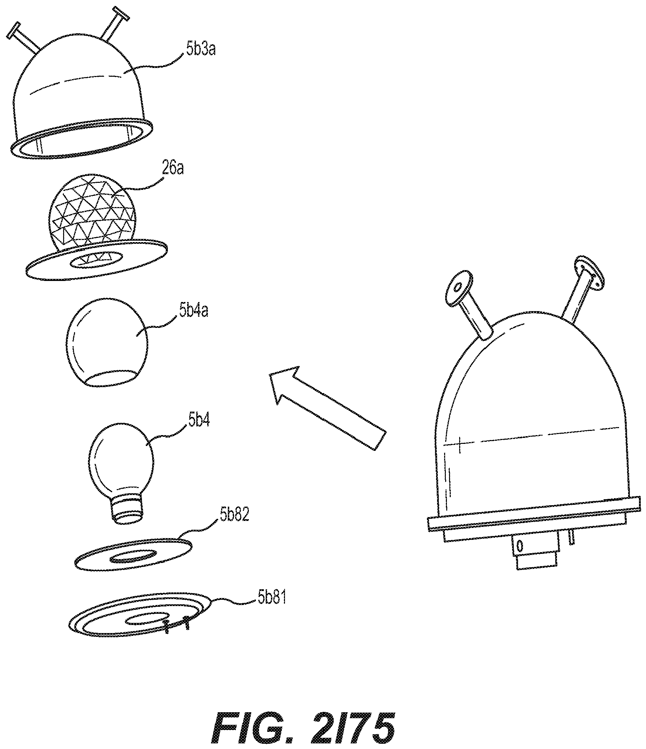

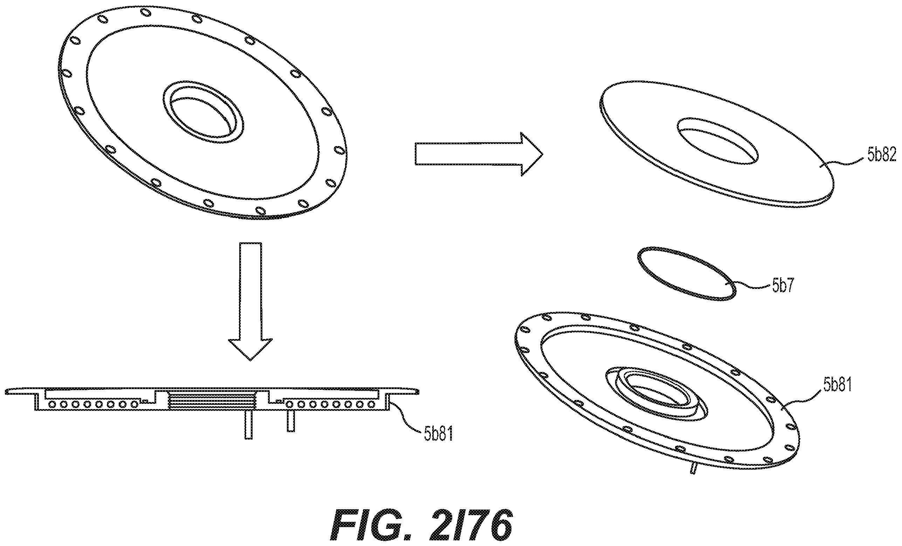

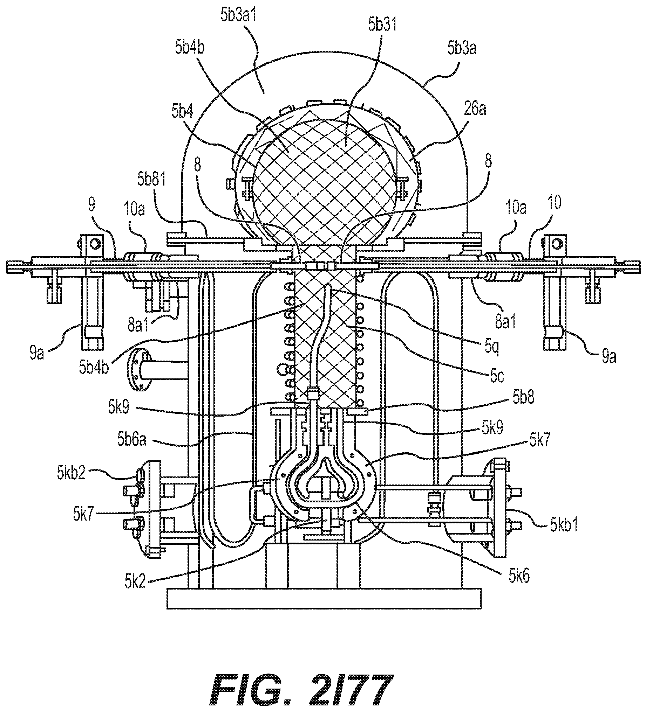

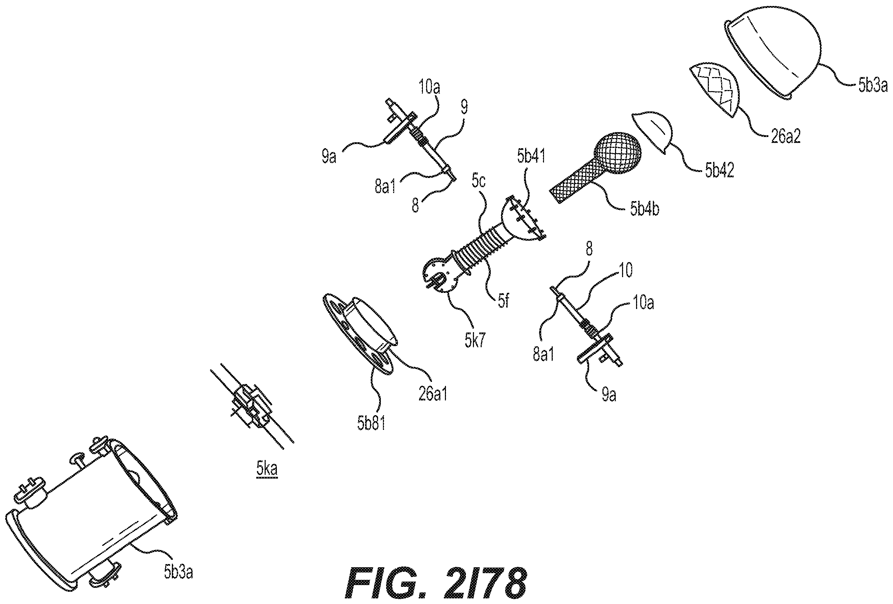

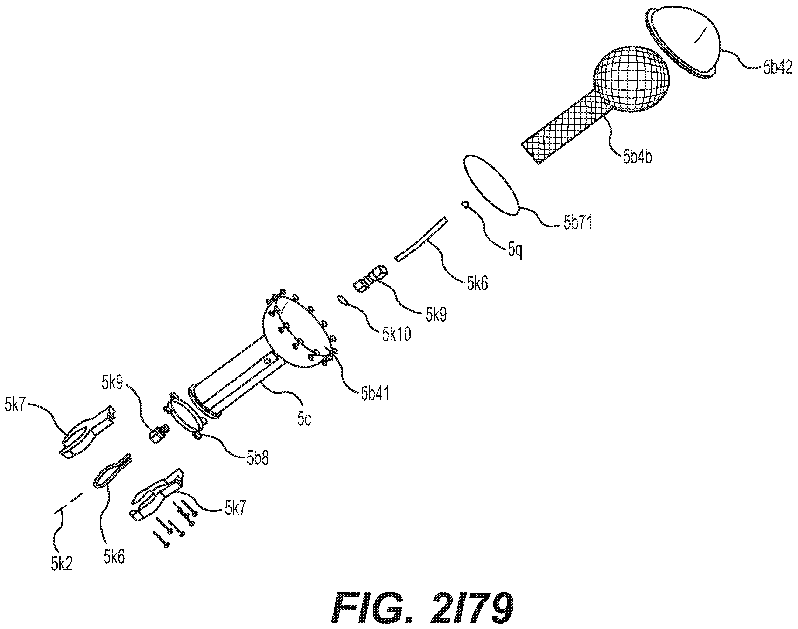

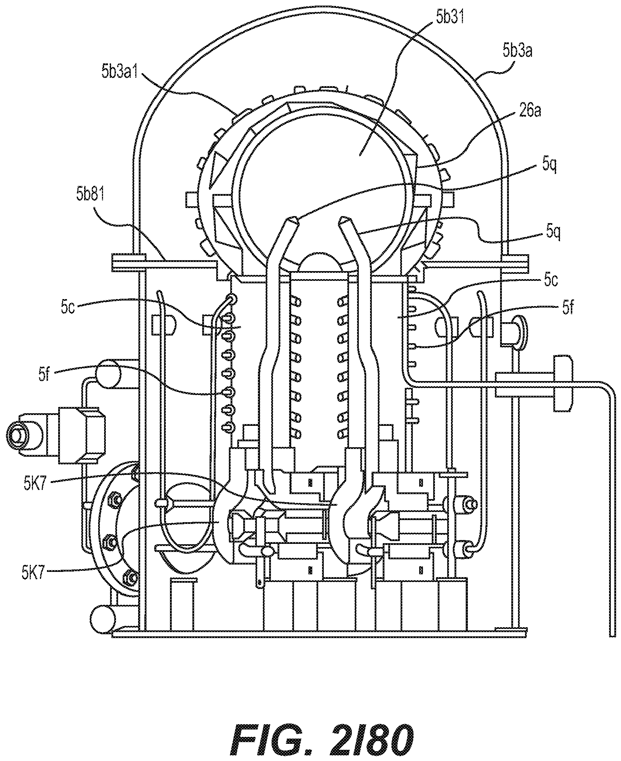

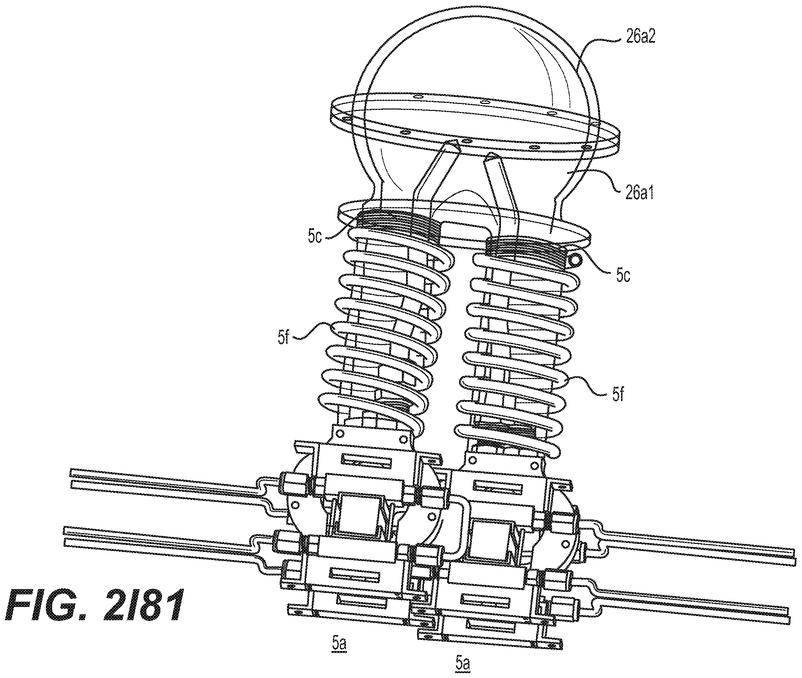

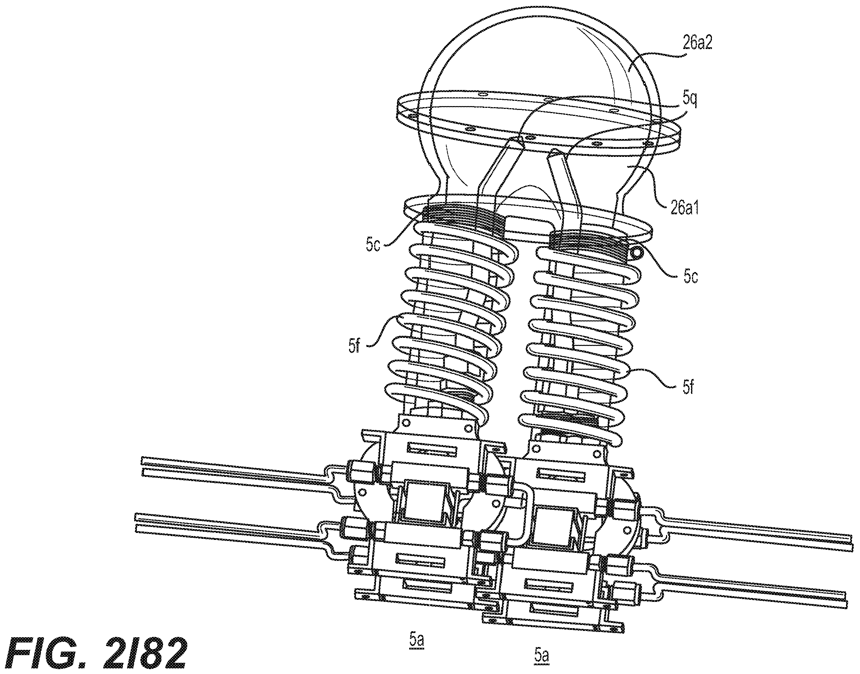

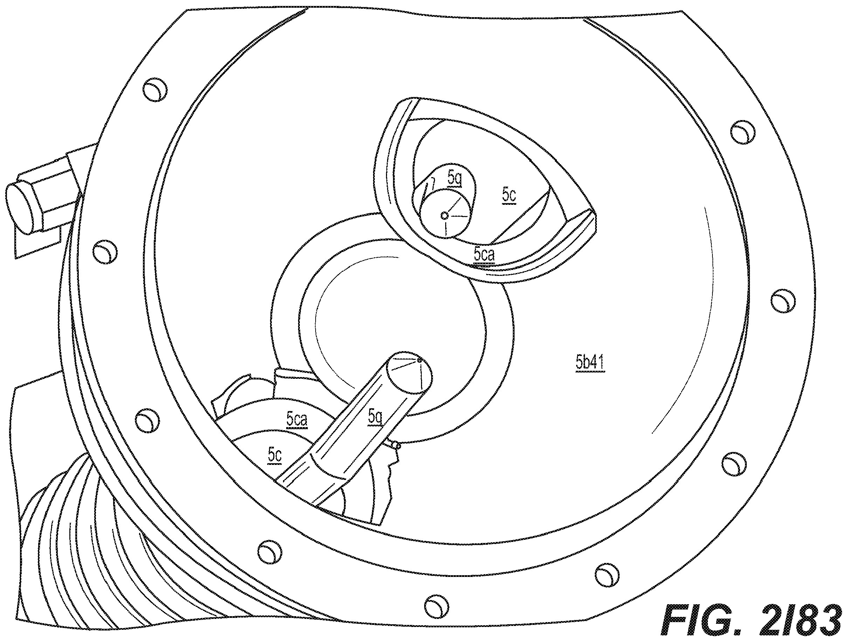

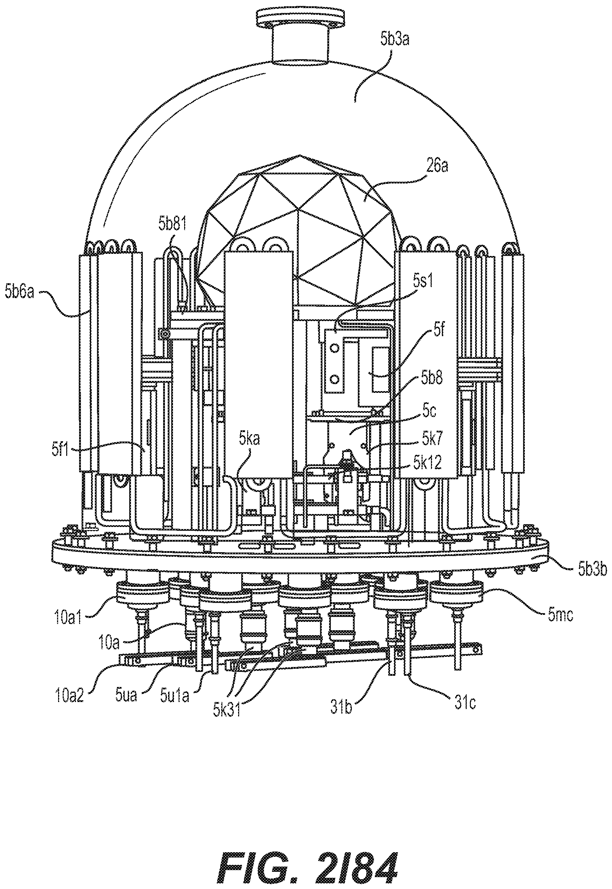

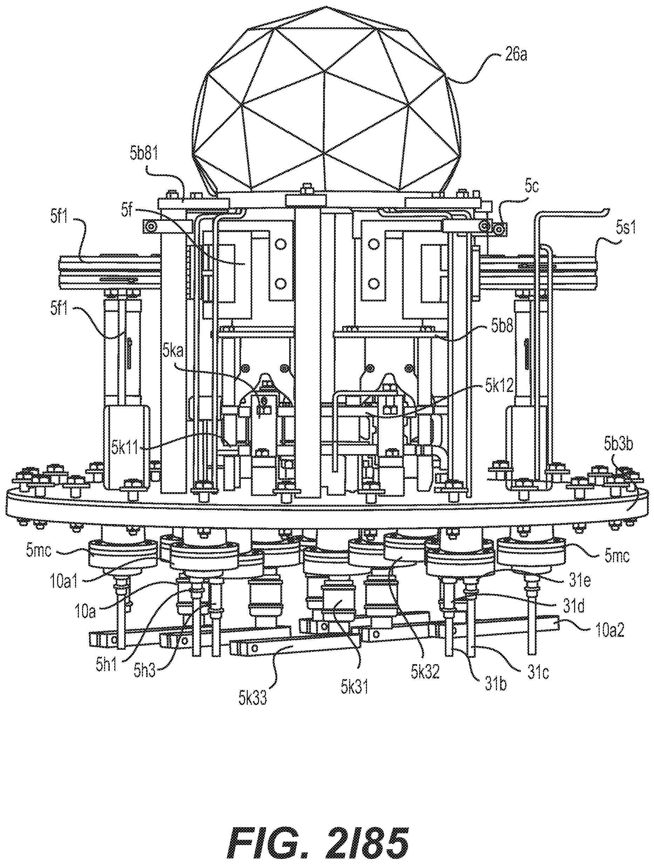

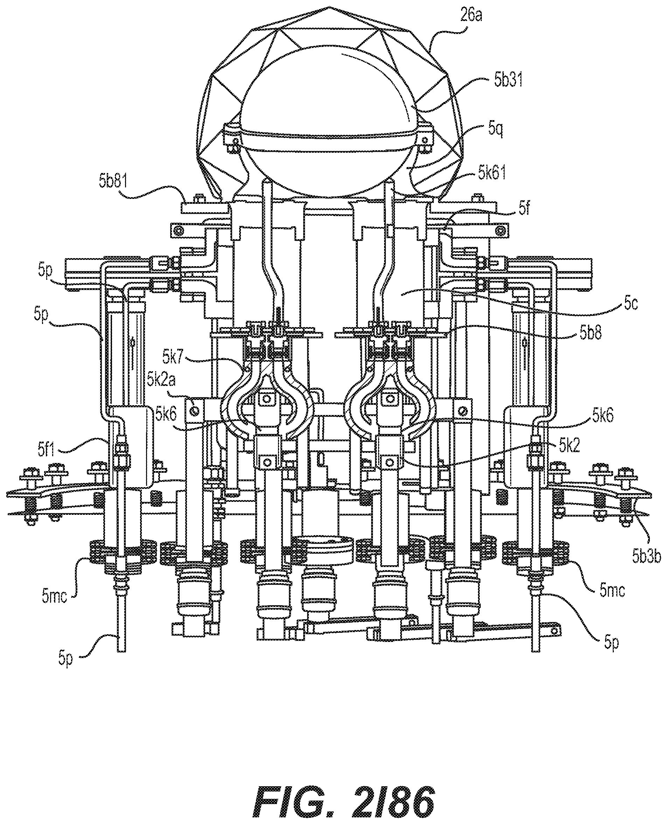

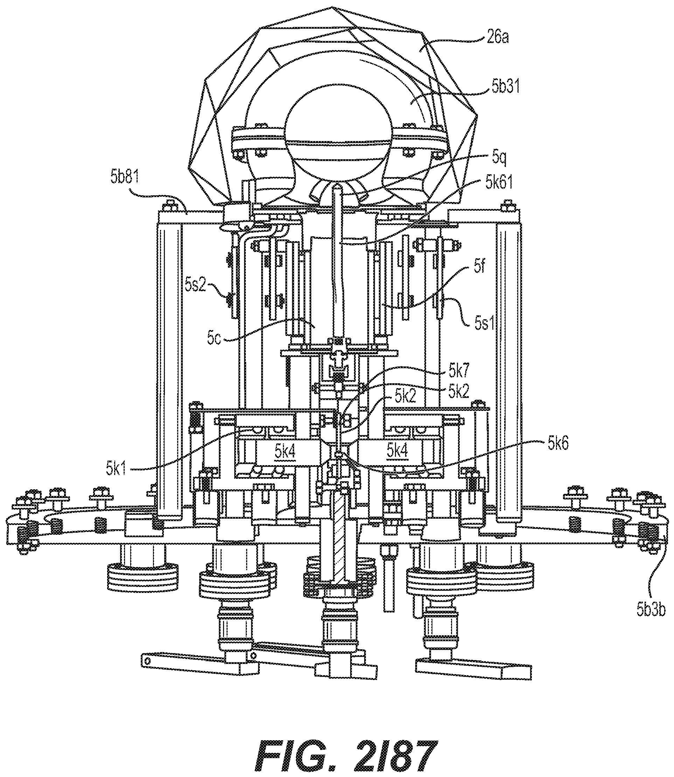

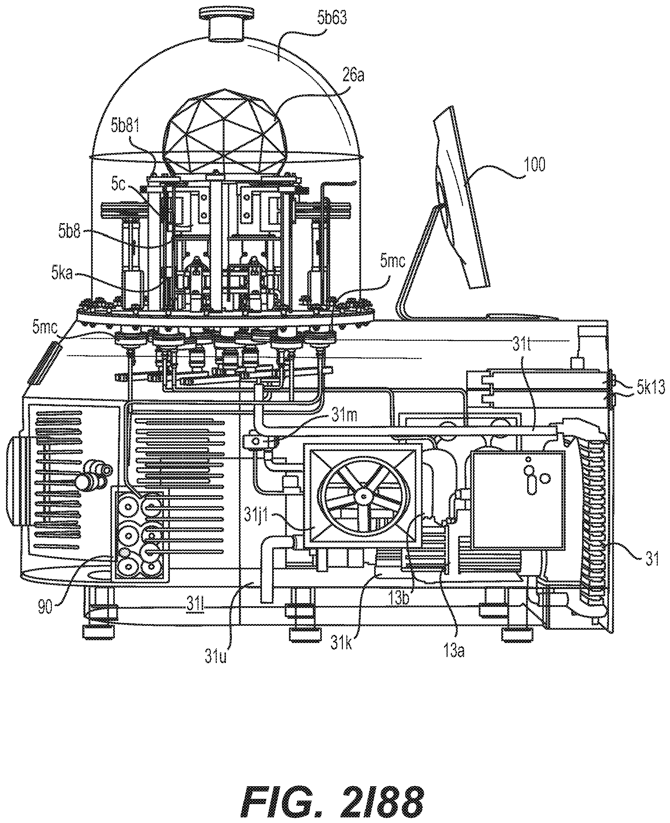

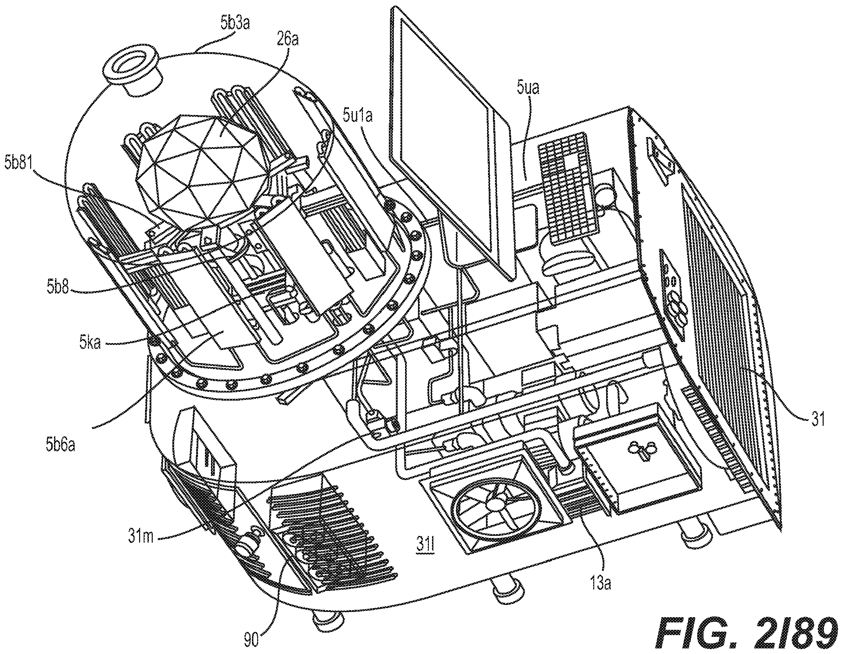

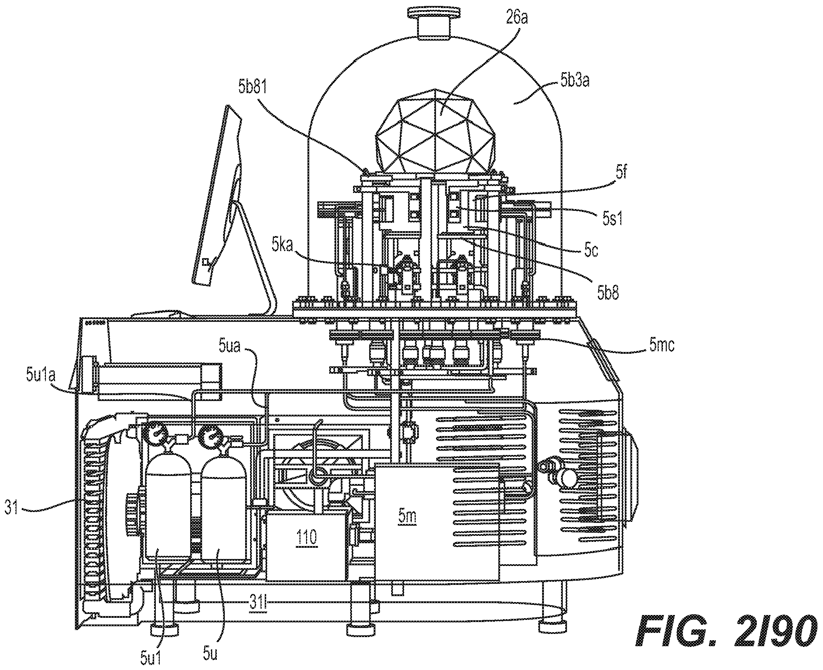

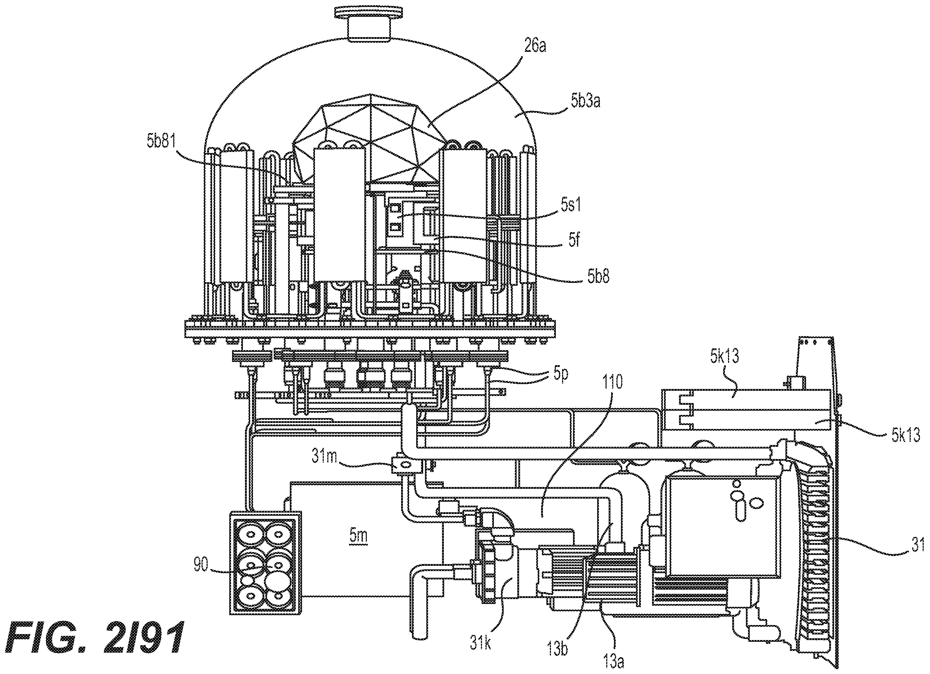

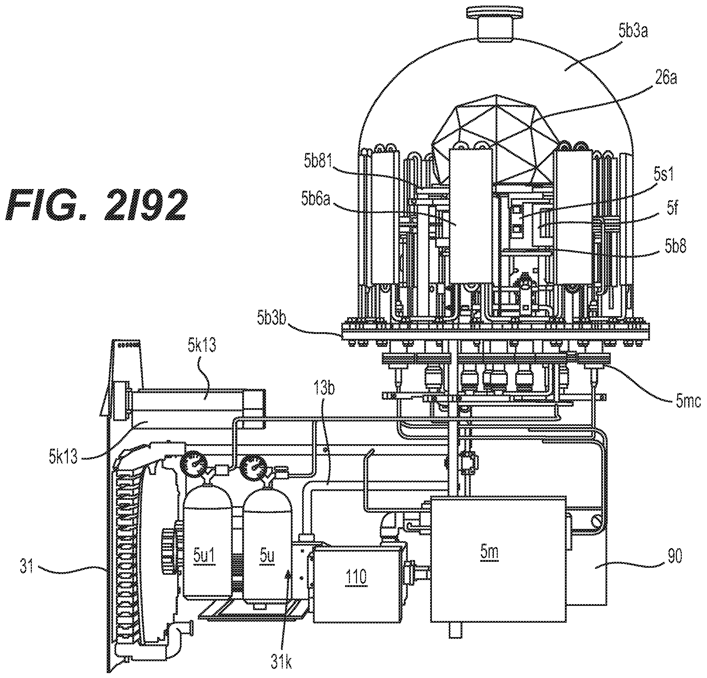

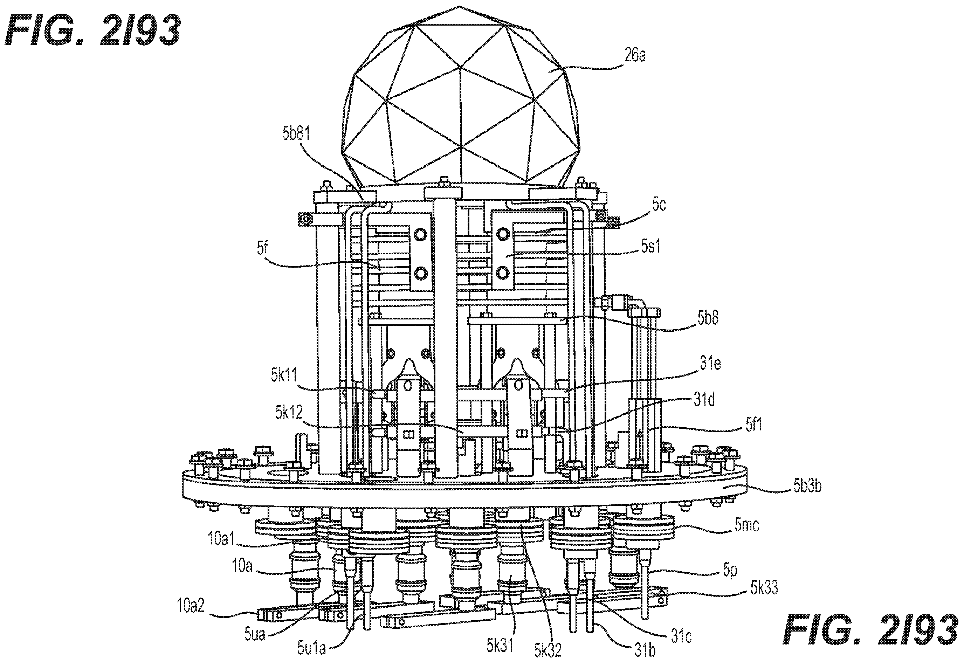

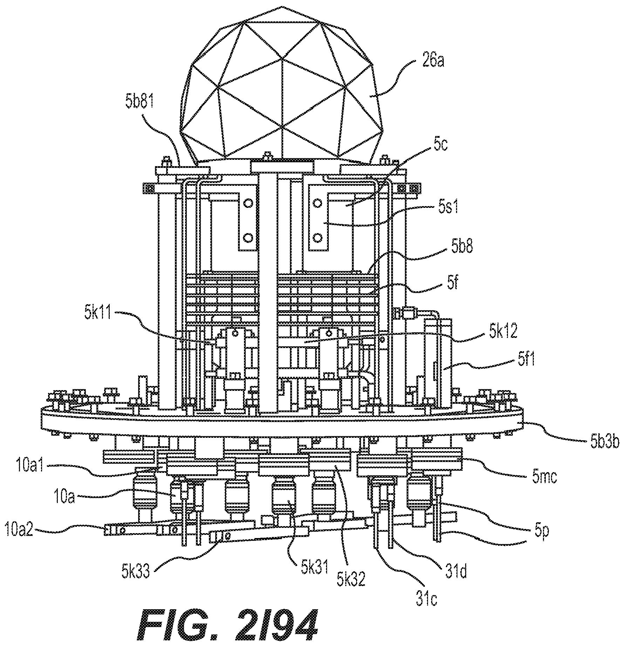

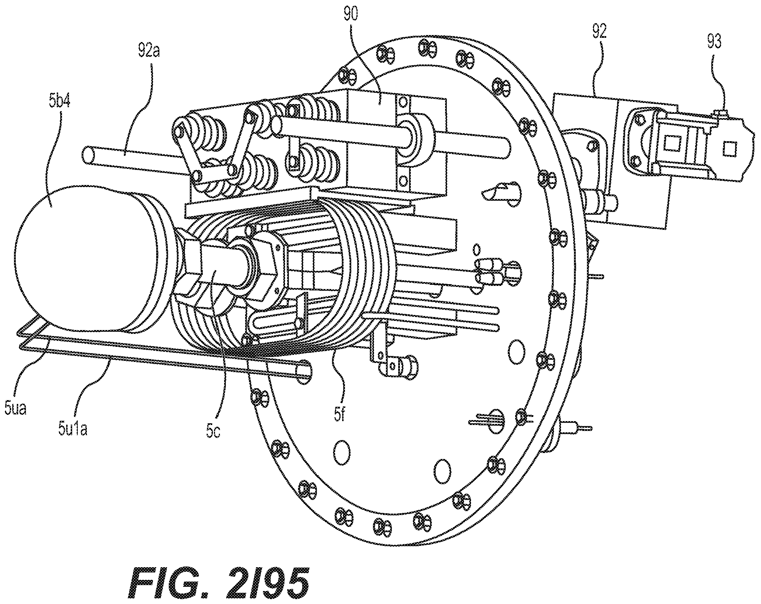

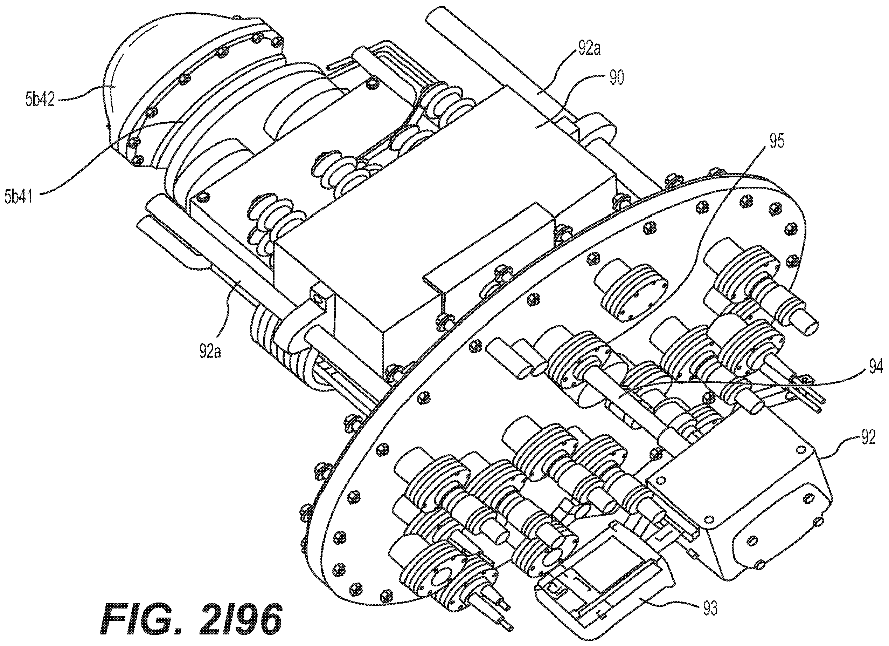

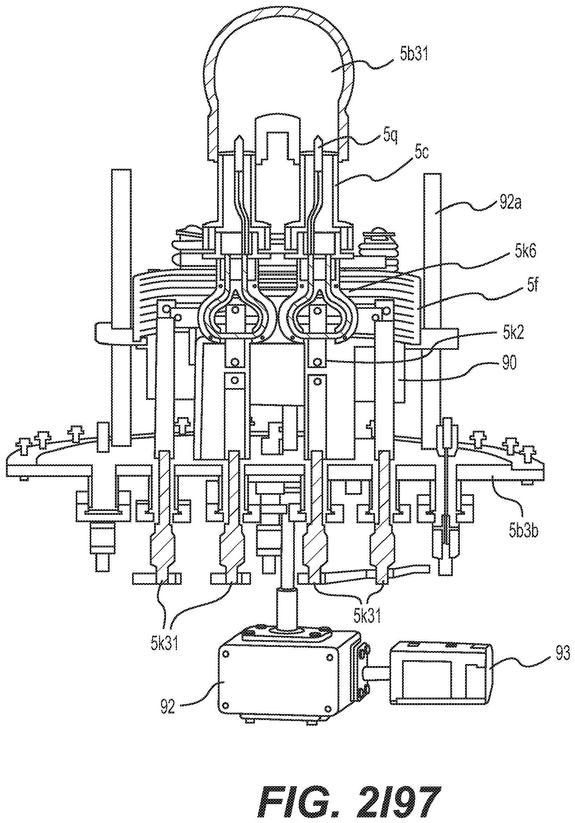

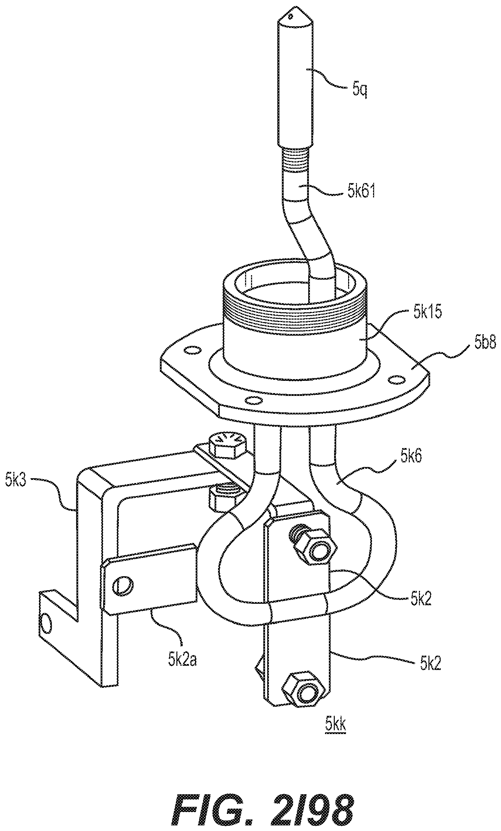

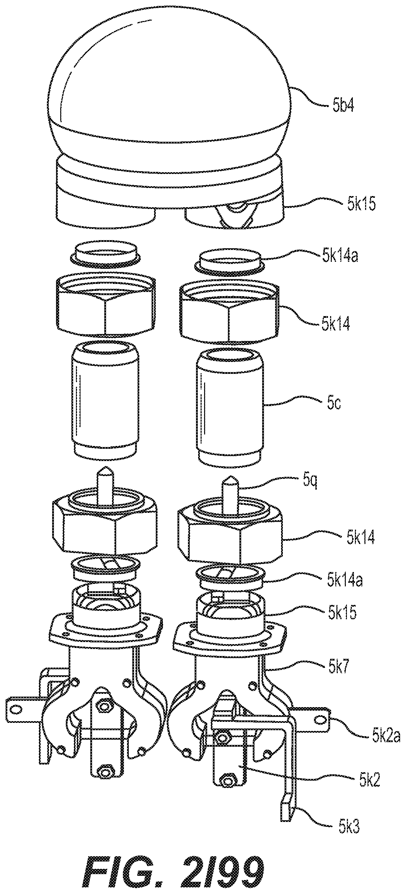

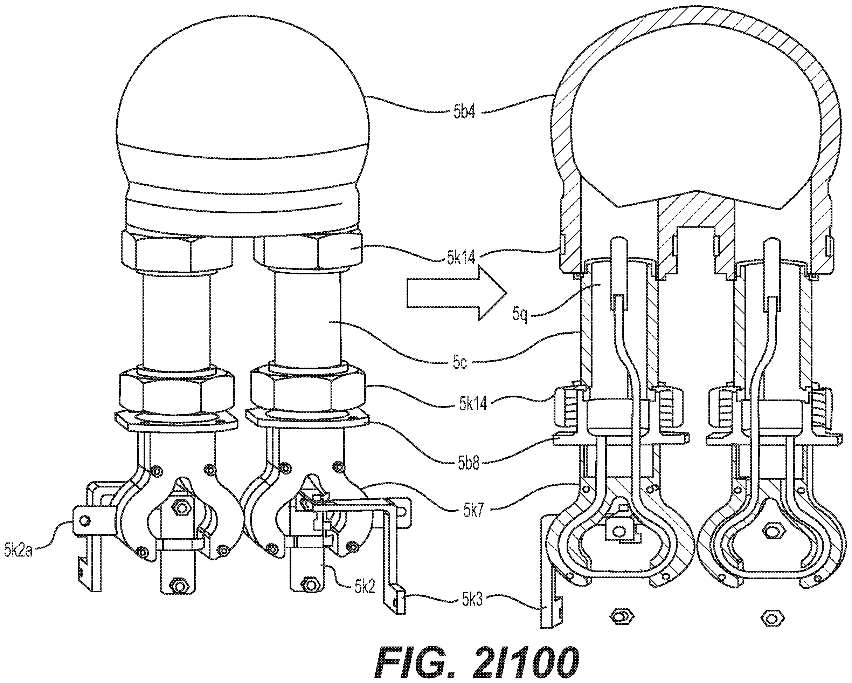

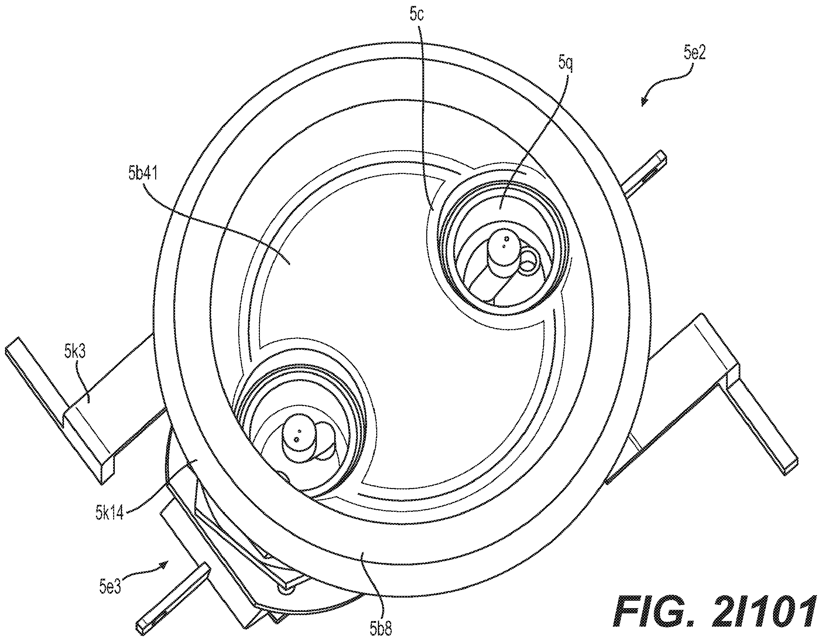

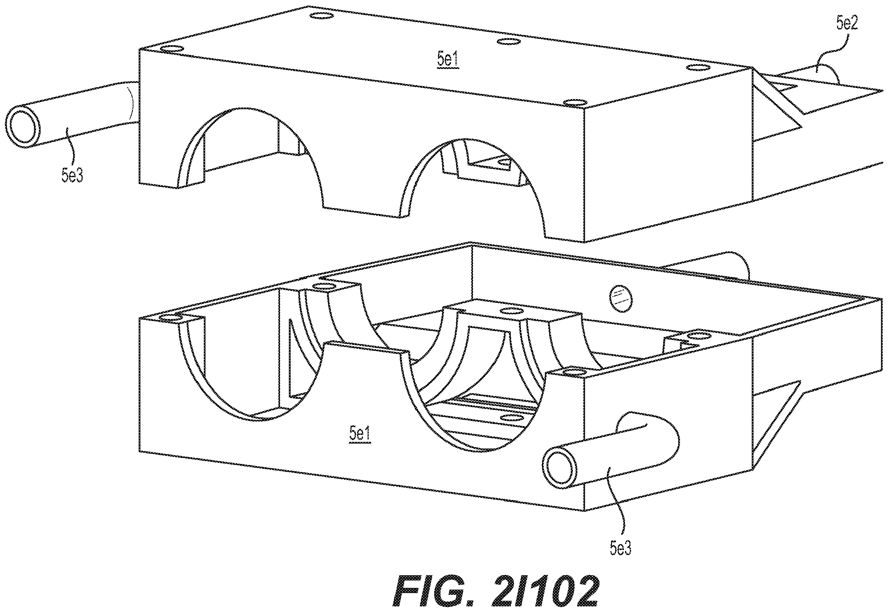

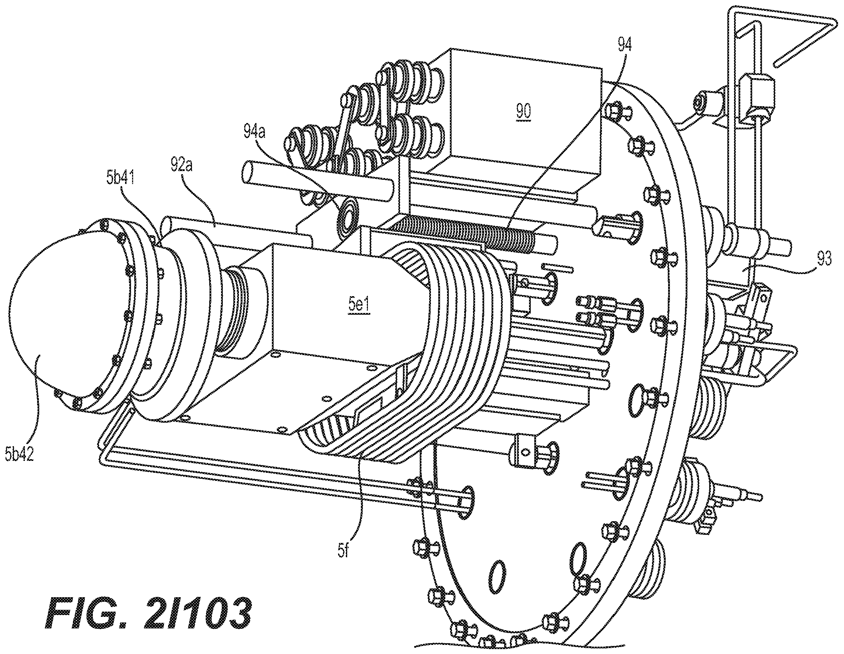

FIGURE 2I10 is a schematic drawing of a SF-CIHT cell power generator showing a cell capable of maintaining a vacuum, an ignition system having stationary electrodes and an electromagnetic injection system fed directly from a pelletizer, augmented plasma railgun and gravity recovery systems, the pelletizer, and a photovoltaic converter system showing details of the injection system having a electromagnetic pump and nozzle, the stationary electrode ignition system, the ignition product recovery systems, and the pelletizer to form shot fuel in accordance with an embodiment of the present disclosure.

FIGURE 2I11 is a schematic drawing of a SF-CIHT cell power generator showing the cross section of the pelletizer shown in FIGURE 2I10 in accordance with an embodiment of the present disclosure.

FIGURE 2I12 is a schematic drawing of a SF-CIHT cell power generator showing the electrodes and two cross sectional views of the electrodes shown in FIGURES 2I10 and 2I11 in accordance with an embodiment of the present disclosure.

FIGURE 2I13 is a schematic drawing of a SF-CIHT cell power generator showing the cross section of the pelletizer shown in FIGURE 2I10 having a pipe bubbler to introduce the gasses such as $H_2$ and steam to the melt in accordance with an embodiment of the present disclosure.

FIGURE 2I14 is a schematic drawing of a SF-CIHT cell power generator showing the cross section of the pelletizer having a pipe bubbler in the second vessel to introduce the gasses such as $H_2$ and steam to the melt, two electromagnetic pumps, and a nozzle to inject shot into the bottom of the electrodes in accordance with an embodiment of the present disclosure.

FIGURE 2I15 is a schematic drawing of a SF-CIHT cell power generator showing the electrodes with shot injection from the bottom in accordance with an embodiment of the present disclosure.

FIGURE 2I16 is a schematic drawing of a SF-CIHT cell power generator showing the details of an electromagnetic pump in accordance with an embodiment of the present disclosure.

FIGURE 2I17 is a schematic drawing of a SF-CIHT cell power generator showing the cross section of the pelletizer having a pipe bubbler in the second vessel to introduce the gasses such as $H_2$ and steam to the melt, two electromagnetic pumps, and a nozzle to inject shot into the top of the electrodes in accordance with an embodiment of the present disclosure.

FIGURE 2I18 is a schematic drawing of a SF-CIHT cell power generator showing the electrodes with shot injection from the top in accordance with an embodiment of the present disclosure.

FIGURE 2I19 is a schematic drawing of a SF-CIHT cell power generator showing the cross section of the pelletizer having both a pipe bubbler in the cone reservoir and a direct injector to introduce the gasses such as $H_2$ and steam to the melt, one electromagnetic pump, and a nozzle to inject shot into the bottom of the electrodes in accordance with an embodiment of the present disclosure.

FIGURE 2I20 is a schematic drawing of a SF-CIHT cell power generator showing the electrodes with shot injection and gas injection such as $H_2$ and steam injection from the bottom in accordance with an embodiment of the present disclosure.

FIGURE 2I21 is a schematic drawing of two full views of the SF-CIHT cell power generator shown in FIGURE 2I19 in accordance with an embodiment of the present disclosure.

FIGURE 2I22 is a schematic drawing of a SF-CIHT cell power generator showing an electrode cooling system in accordance with an embodiment of the present disclosure.

FIGURE 2I23 is a schematic drawing of a SF-CIHT cell power generator showing two views of cells with passive photovoltaic converter cooling systems, active and passive electrode cooling systems, and gas getter systems in accordance with an embodiment of the present disclosure.

FIGURE 2I24 is a schematic drawing of at least one of a thermophotovoltaic, photovoltaic, photoelectric, thermionic, and thermoelectric SF-CIHT cell power generator showing a capacitor bank ignition system in accordance with an embodiment of the present disclosure.

FIGURE 2I25 is a schematic drawing of an internal view of the SF-CIHT cell power generator shown in FIGURE 2I24 in accordance with an embodiment of the present disclosure.

FIGURE 2I26 is a schematic drawing of an internal view of the further details of the injection and ignition systems of the SF-CIHT cell power generator shown in FIGURE 2I25 in accordance with an embodiment of the present disclosure.

FIGURE 2I27 is a schematic drawing of an internal view of additional details of the injection and ignition systems of the SF-CIHT cell power generator shown in FIGURE 2I26 in accordance with an embodiment of the present disclosure.

FIGURE 2I28 is a schematic drawing of magnetic yoke assembly of the electromagnetic pump of SF-CIHT cell power generator shown in FIGURE 2I27 with and without the magnets in accordance with an embodiment of the present disclosure.

FIGURE 2I29 is a schematic drawing of at least one of a thermophotovoltaic, photovoltaic, photoelectric, thermionic, and thermoelectric SF-CIHT cell power generator showing blade electrodes held by fasteners and an electrode electromagnetic pump comprising a magnetic circuit in accordance with an embodiment of the present disclosure.

FIGURE 2I30 is a schematic drawing of an internal view of the further details of the injection and ignition systems of the SF-CIHT cell power generator shown in FIGURE 2I29 in accordance with an embodiment of the present disclosure.

FIGURE 2I31 is a schematic drawing of a cross sectional view of the further details of the injection and ignition systems of the SF-CIHT cell power generator shown in FIGURE 2I29 in accordance with an embodiment of the present disclosure.

FIGURE 2I32 is a schematic drawing of a thermophotovoltaic SF-CIHT cell power generator showing an inductively coupled heater, a capacitor bank ignition system, an electromagnetic pump injection system, a vacuum pump, and water pumps and a radiator cooling system in accordance with an embodiment of the present disclosure.

FIGURE 2I33 is a schematic drawing of an internal view of the SF-CIHT cell power generator shown in FIGURE 2I32 in accordance with an embodiment of the present disclosure.

FIGURE 2I34 is a schematic drawing of another external view of the SF-CIHT cell power generator shown in FIGURE 2I32 showing details of the cooling system comprising water pumps, a water tank, and a radiator in accordance with an embodiment of the present disclosure.

FIGURE 2I35 is a schematic drawing of a thermophotovoltaic SF-CIHT cell power generator showing an inductively coupled heater, a capacitor bank ignition system, an electromagnetic pump injection system, a vacuum pump, and water pumps, a radiator cooling system, and a dome radiator and a geodesic dome photovoltaic converter in accordance with an embodiment of the present disclosure.

FIGURE 2I36 is a schematic drawing of an internal view of the SF-CIHT cell power generator shown in FIGURE 2I35 in accordance with an embodiment of the present disclosure.

FIGURE 2I37 is a schematic drawing of another view of the SF-CIHT cell power generator shown in FIGURE 2I35 showing details of the cooling system comprising a water pump with solenoid valves, a water tank, and a radiator in accordance with an embodiment of the present disclosure.

FIGURE 2I38 is a schematic drawing of a thermophotovoltaic SF-CIHT cell power generator showing electrode penetrations at the cone reservoir in accordance with an embodiment of the present disclosure.

FIGURE 2I39 is a schematic drawing of an internal view of the SF-CIHT cell power generator shown in FIGURE 2I38 in accordance with an embodiment of the present disclosure.

FIGURE 2I40 is a schematic drawing of another internal view of the SF-CIHT cell power generator shown in FIGURE 2I38 in accordance with an embodiment of the present disclosure.

FIGURE 2I41 is a schematic drawing of a thermophotovoltaic SF-CIHT cell power generator showing angled electrode penetrations at the cone reservoir and an electrode electromagnetic pump comprising an electromagnet in accordance with an embodiment of the present disclosure.

FIGURE 2I42 is a schematic drawing of an internal view of the SF-CIHT cell power generator shown in FIGURE 2I41 in accordance with an embodiment of the present disclosure.

FIGURE 2I43 is a schematic drawing of another internal view of the SF-CIHT cell power generator shown in FIGURE 2I41 in accordance with an embodiment of the present disclosure.

FIGURE 2I44 is a schematic drawing of a thermophotovoltaic SF-CIHT cell power generator showing opposing electrode penetrations at the cone reservoir and an electrode electromagnetic pump comprising electromagnets that are transverse to the inter-electrode axis in accordance with an embodiment of the present disclosure.

FIGURE 2I45 is a schematic drawing of a thermophotovoltaic SF-CIHT cell power generator showing opposing electrode penetrations at the cone reservoir and an electrode electromagnetic pump comprising electromagnets that are transverse to the inter-electrode axis in accordance with an embodiment of the present disclosure.

FIGURE 2I46 is a schematic drawing of a thermophotovoltaic SF-CIHT cell power generator showing opposing electrode penetrations at the cone reservoir and an electrode electromagnetic pump comprising electromagnets that are transverse to the inter-electrode axis in accordance with an embodiment of the present disclosure.

FIGURE 2I47 is a schematic drawing of a thermophotovoltaic SF-CIHT cell power generator showing opposing electrode penetrations at the cone reservoir and an electrode electromagnetic pump comprising electromagnets that are transverse to the inter-electrode axis in accordance with an embodiment of the present disclosure.

FIGURE 2I48 is a schematic drawing of a thermophotovoltaic SF-CIHT cell power generator showing opposing electrode penetrations at the cone reservoir and an electrode electromagnetic pump comprising magnets and magnetic yokes that are transverse to the inter-electrode axis with the ignition point at the entrance of the dome in accordance with an embodiment of the present disclosure.

FIGURE 2I49 is a schematic drawing of a thermophotovoltaic SF-CIHT cell power generator showing opposing electrode penetrations at the cone reservoir and an electrode electromagnetic pump comprising magnets and magnetic yokes that are transverse to the inter-electrode axis with the ignition point at the entrance of the dome in accordance with an embodiment of the present disclosure.

FIGURE 2I50 is a schematic drawing of a thermophotovoltaic SF-CIHT cell power generator showing opposing electrode penetrations at the cone reservoir and an electrode electromagnetic pump comprising magnets and magnetic yokes that are transverse to the inter-electrode axis with the ignition point at the entrance of the dome in accordance with an embodiment of the present disclosure.

FIGURE 2I51 is a schematic drawing of a thermophotovoltaic SF-CIHT cell power generator showing opposing electrode penetrations at the cone reservoir and an electrode electromagnetic pump comprising magnets and magnetic yokes that are transverse to the inter-electrode axis with the ignition point at the entrance of the dome in accordance with an embodiment of the present disclosure.

FIGURE 2I52 is a schematic drawing of a thermophotovoltaic SF-CIHT cell power generator showing opposing electrode penetrations at the cone reservoir and an electrode electromagnetic pump comprising magnets and magnetic yokes that are transverse to the inter-electrode axis with the ignition point at the entrance of the dome in accordance with an embodiment of the present disclosure.

FIGURE 2I53 is a schematic drawing of a thermophotovoltaic SF-CIHT cell power generator showing opposing electrode penetrations at the cone reservoir and an electrode electromagnetic pump comprising magnets and magnetic yokes that are transverse to the inter-electrode axis with the ignition point at the entrance of the dome in accordance with an embodiment of the present disclosure.

FIGURE 2I54 is a schematic drawing of a thermophotovoltaic SF-CIHT cell power generator showing opposing electrode penetrations at the cone reservoir and an electrode electromagnetic pump comprising cooled magnets and magnetic yokes that are transverse to the inter-electrode axis with the ignition point at the entrance of the dome in accordance with an embodiment of the present disclosure.

FIGURE 2I55 is a schematic drawing of a SF-CIHT cell power generator showing details of an optical distribution and the photovoltaic converter system in accordance with an embodiment of the present disclosure.

FIGURE 2I56 is a schematic drawing of a thermophotovoltaic SF-CIHT cell power generator showing opposing electrode penetrations at the reservoir and the electromagnetic pump comprising threaded joints and Swagelok-type connectors in accordance with an embodiment of the present disclosure.

FIGURE 2I57 is a schematic drawing of a thermophotovoltaic SF-CIHT cell power generator shown in FIGURE 2I56 showing the threaded joints and Sawelok-type connectors connected in accordance with an embodiment of the present disclosure.

FIGURE 2I58 is a schematic drawing of a thermophotovoltaic SF-CIHT cell power generator showing the details of the reservoir and electromagnetic pump components comprising threaded joints and Swagelok-type connectors in accordance with an embodiment of the present disclosure.

FIGURE 2I59 is a schematic drawing of a thermophotovoltaic SF-CIHT cell power generator showing the details of the reservoir and electromagnetic pump components comprising threaded joints, lock nuts, Swagelok-type connectors, and dome separator plate in accordance with an embodiment of the present disclosure.

FIGURE 2I60 is a schematic drawing of a thermophotovoltaic SF-CIHT cell power generator showing the connected parts of FIGURE 2I59 in accordance with an embodiment of the present disclosure.

FIGURE 2I61 is a schematic drawing of a thermophotovoltaic SF-CIHT cell power generator showing the cross section of FIGURE 2I60 in accordance with an embodiment of the present disclosure.

FIGURE 2I62 is a schematic drawing of a thermophotovoltaic SF-CIHT cell power generator showing the details of the reservoir and electromagnetic pump components comprising threaded joints, Swagelok-type connectors, and the dome separator plate in accordance with an embodiment of the present disclosure.

FIGURE 2I63 is a schematic drawing of a thermophotovoltaic SF-CIHT cell power generator showing the details of parallel plate screwed-in electrodes, each having a lock nut for tightening in accordance with an embodiment of the present disclosure.

FIGURE 2I64 is a schematic drawing of a thermophotovoltaic SF-CIHT cell power generator showing the details of parallel plate screwed-in electrodes, each having a lock nut for tightening in accordance with an embodiment of the present disclosure.

FIGURE 2I65 is a schematic drawing of a thermophotovoltaic SF-CIHT cell power generator showing the PV converter, transparent dome, and blackbody radiator inside of an upper pressure chamber accordance with an embodiment of the present disclosure.

FIGURE 2I66 is a schematic drawing of a thermophotovoltaic SF-CIHT cell power generator showing the components in the lower chamber in accordance with an embodiment of the present disclosure.

FIGURE 2I67 is a schematic drawing of a thermophotovoltaic SF-CIHT cell power generator showing an exploded view in accordance with an embodiment of the present disclosure.

FIGURE 2I68 is a schematic drawing of a thermophotovoltaic SF-CIHT cell power generator showing an exploded view of the electromagnetic pump and reservoir assembly in accordance with an embodiment of the present disclosure.

FIGURE 2I69 is a schematic drawing of a thermophotovoltaic SF-CIHT cell power generator showing an exploded cross sectional view of the electromagnetic pump and reservoir assembly in accordance with an embodiment of the present disclosure.

FIGURE 2I70 is a schematic drawing of a thermophotovoltaic SF-CIHT cell power generator showing components housed in the upper and lower chambers in accordance with an embodiment of the present disclosure.

FIGURE 2I71 is a schematic drawing of a thermophotovoltaic SF-CIHT cell power generator showing a cross sectional view of components housed in the upper and lower chambers in accordance with an embodiment of the present disclosure.

FIGURE 2I72 is a schematic drawing of a thermophotovoltaic SF-CIHT cell power generator showing an exploded view of ignition components in accordance with an embodiment of the present disclosure.

FIGURE 2I73 is a schematic drawing of a thermophotovoltaic SF-CIHT cell power generator showing an assembled view of ignition components and the cross sectional view in accordance with an embodiment of the present disclosure.

FIGURE 2I74 is a schematic drawing of a thermophotovoltaic SF-CIHT cell power generator showing exploded and assembled views of the magnet system of the electromagnetic pump in accordance with an embodiment of the present disclosure.

FIGURE 2I75 is a schematic drawing of a thermophotovoltaic SF-CIHT cell power generator showing an exploded view of the components of the upper chamber in accordance with an embodiment of the present disclosure.

FIGURE 2I76 is a schematic drawing of a thermophotovoltaic SF-CIHT cell power generator showing an exploded view of the components of the separator plate between the upper and lower chambers in accordance with an embodiment of the present disclosure.

FIGURE 2I77 is a schematic drawing of a thermophotovoltaic SF-CIHT cell power generator having components housed in a single outer pressure vessel showing the cross section of the pressure vessel and main cell assembly in accordance with an embodiment of the present disclosure.

FIGURE 2I78 is a schematic drawing of a thermophotovoltaic SF-CIHT cell power generator having components housed in a single outer pressure vessel showing the exploded view of the pressure vessel and main cell assembly in accordance with an embodiment of the present disclosure.

FIGURE 2I79 is a schematic drawing of a thermophotovoltaic SF-CIHT cell power generator having components housed in a single outer pressure vessel showing the exploded view of the reservoir and blackbody radiator assembly in accordance with an embodiment of the present disclosure.

FIGURE 2I80 is a schematic drawing of a thermophotovoltaic SF-CIHT cell power generator comprising dual EM pump injectors as liquid electrodes having components housed in a single outer pressure vessel showing the cross sectional view in accordance with an embodiment of the present disclosure.

FIGURE 2I81 is a schematic drawing of a thermophotovoltaic SF-CIHT cell power generator comprising dual EM pump injectors as liquid electrodes showing the reservoir and blackbody radiator assembly in accordance with an embodiment of the present disclosure.

FIGURE 2I82 is a schematic drawing of a thermophotovoltaic SF-CIHT cell power generator comprising dual EM pump injectors as liquid electrodes showing a transparent view of the reservoir and blackbody radiator assembly in accordance with an embodiment of the present disclosure.

FIGURE 2I83 is a schematic drawing of a thermophotovoltaic SF-CIHT cell power generator comprising dual EM pump injectors as liquid electrodes showing the lower hemisphere of the blackbody radiator and the twin nozzles in accordance with an embodiment of the present disclosure.

FIGURE 2I84 is a schematic drawing of a thermophotovoltaic SF-CIHT cell power generator comprising dual EM pump injectors as liquid electrodes showing the generator with the outer pressure vessel showing the penetrations of the base of the outer pressure vessel in accordance with an embodiment of the present disclosure.

FIGURE 2I85 is a schematic drawing of a thermophotovoltaic SF-CIHT cell power generator comprising dual EM pump injectors as liquid electrodes showing the generator with the outer pressure vessel top removed showing the penetrations of the base of the outer pressure vessel in accordance with an embodiment of the present disclosure.

FIGURE 2I86 is a schematic coronal xz section drawing of a thermophotovoltaic SF-CIHT cell power generator comprising dual EM pump injectors as liquid electrodes in accordance with an embodiment of the present disclosure.

FIGURE 2I87 is a schematic yz cross section drawing of a thermophotovoltaic SF-CIHT cell power generator comprising dual EM pump injectors as liquid electrodes in accordance with an embodiment of the present disclosure.

FIGURE 2I88 is a schematic drawing of a thermophotovoltaic SF-CIHT cell power generator comprising dual EM pump injectors as liquid electrodes showing the generator support components in accordance with an embodiment of the present disclosure.

FIGURE 2I89 is a schematic drawing of a thermophotovoltaic SF-CIHT cell power generator comprising dual EM pump injectors as liquid electrodes showing the generator support components in accordance with an embodiment of the present disclosure.

FIGURE 2I90 is a schematic drawing of a thermophotovoltaic SF-CIHT cell power generator comprising dual EM pump injectors as liquid electrodes showing the generator support components in accordance with an embodiment of the present disclosure.

FIGURE 2I91 is a schematic drawing of a thermophotovoltaic SF-CIHT cell power generator comprising dual EM pump injectors as liquid electrodes showing the generator support components in accordance with an embodiment of the present disclosure.

FIGURE 2I92 is a schematic drawing of a thermophotovoltaic SF-CIHT cell power generator comprising dual EM pump injectors as liquid electrodes showing the generator support components in accordance with an embodiment of the present disclosure.

FIGURE 2I93 is a schematic drawing of a thermophotovoltaic SF-CIHT cell power generator comprising dual EM pump injectors as liquid electrodes showing the vertically retractable antenna in the up or reservoir heating position in accordance with an embodiment of the present disclosure.

FIGURE 2I94 is a schematic drawing of a thermophotovoltaic SF-CIHT cell power generator comprising dual EM pump injectors as liquid electrodes showing the vertically retractable antenna in the down or cooling heating position in accordance with an embodiment of the present disclosure.

FIGURE 2I95 is a schematic drawing of a thermophotovoltaic SF-CIHT cell power generator comprising dual EM pump injectors as liquid electrodes showing the actuator to vary the vertical position of the heater coil in accordance with an embodiment of the present disclosure.

FIGURE 2I96 is a schematic drawing of a thermophotovoltaic SF-CIHT cell power generator comprising dual EM pump injectors as liquid electrodes showing the drive mechanism of the actuator to vary the vertical position of the heater coil in accordance with an embodiment of the present disclosure.

FIGURE 2I97 is a cross sectional schematic drawing of a thermophotovoltaic SF-CIHT cell power generator comprising dual EM pump injectors as liquid electrodes showing the actuator to vary the vertical position of the heater coil in accordance with an embodiment of the present disclosure.

FIGURE 2I98 is a schematic drawing of a thermophotovoltaic SF-CIHT cell power generator comprising dual EM pump injectors as liquid electrodes showing the electromagnetic pump assembly in accordance with an embodiment of the present disclosure.

FIGURE 2I99 is a schematic drawing of a thermophotovoltaic SF-CIHT cell power generator comprising dual EM pump injectors as liquid electrodes showing the slipnut reservoir connectors in accordance with an embodiment of the present disclosure.

FIGURE 2I100 is a schematic drawing showing external and cross sectional views of a thermophotovoltaic SF-CIHT cell power generator comprising dual EM pump injectors as liquid electrodes comprising the slipnut reservoir connectors in accordance with an embodiment of the present disclosure.

FIGURE 2I101 is a top, cross sectional schematic drawing of a thermophotovoltaic SF-CIHT cell power generator comprising dual EM pump injectors as liquid electrodes in accordance with an embodiment of the present disclosure.

FIGURE 2I102 is a cross sectional schematic drawing showing the particulate insulation containment vessel in accordance with an embodiment of the present disclosure.

FIGURE 2I103 is a cross sectional schematic drawing of a thermophotovoltaic SF-CIHT cell power generator comprising dual EM pump injectors as liquid electrodes showing the particulate insulation containment vessel in accordance with an embodiment of the present disclosure.

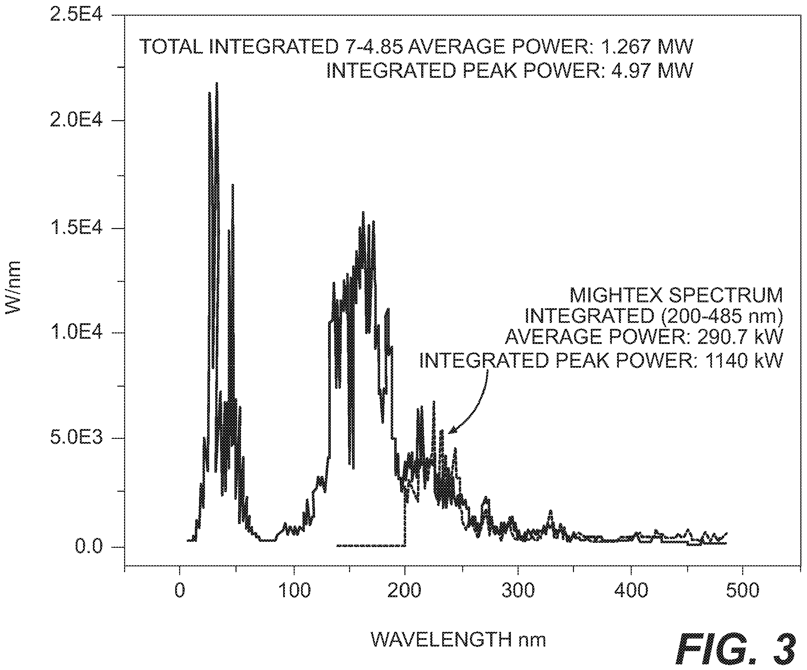

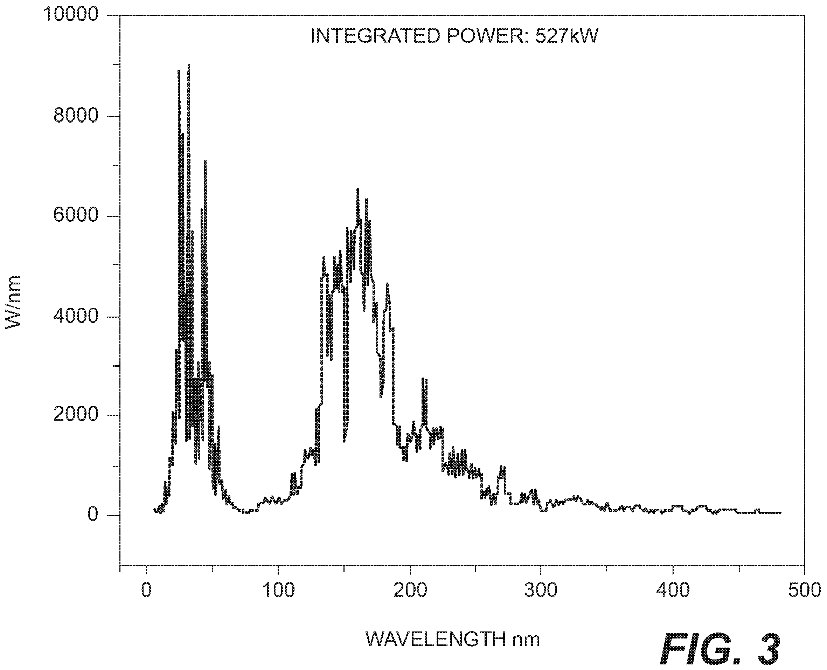

FIGURE 3 is the absolute spectrum in the 5 nm to 450 nm region of the ignition of a 80 mg shot of silver comprising absorbed $H_2$ and $H_2O$ from gas treatment of silver melt before dripping into a water reservoir showing an average optical power of 527 kW, essentially all in the ultraviolet and extreme ultraviolet spectral region in accordance with an embodiment of the present disclosure.

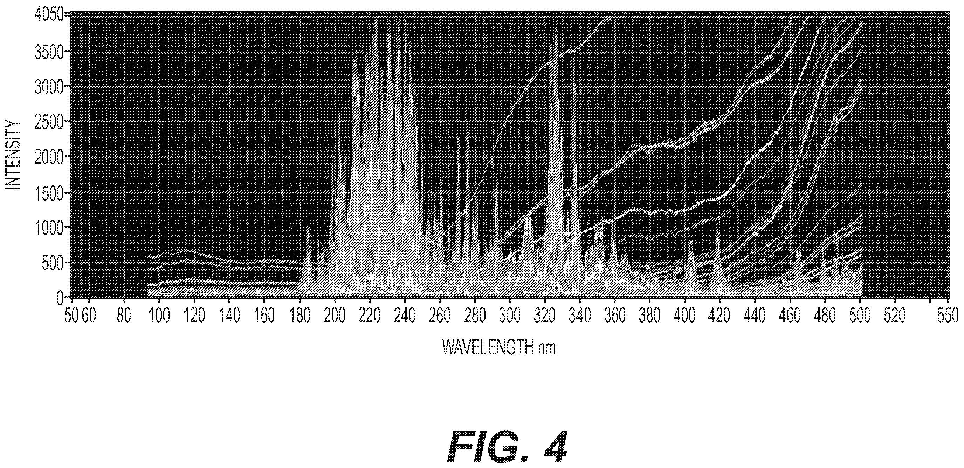

FIGURE 4 is the spectrum (100 nm to 500 nm region with a cutoff at 180 nm due to the sapphire spectrometer window) of the ignition of a molten silver pumped into W electrodes in atmospheric argon with an ambient $H_2O$ vapor pressure of about 1 Torr showing UV line emission that transitioned to 5000K blackbody radiation when the atmosphere became optically thick to the UV radiation with the vaporization of the silver in accordance with an embodiment of the present disclosure.

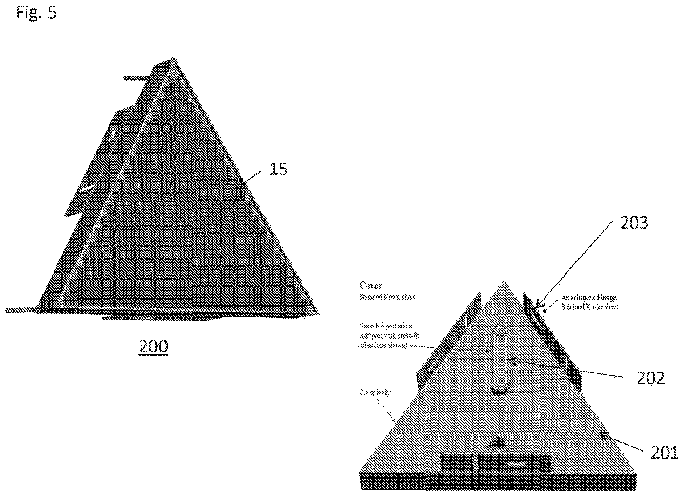

FIGURE 5 is a schematic drawing of a triangular element of the geodesic dense receiver array of the photovoltaic converter in accordance with an embodiment of the present disclosure.

Disclosed herein are catalyst systems to release energy from atomic hydrogen to form lower energy states wherein the electron shell is at a closer position relative to the nucleus. The released power is harnessed for power generation and additionally new hydrogen species and compounds are desired products. These energy states are predicted by classical physical laws and require a catalyst to accept energy from the hydrogen in order to undergo the corresponding energy-releasing transition.

Classical physics gives closed-form solutions of the hydrogen atom, the hydride ion, the hydrogen molecular ion, and the hydrogen molecule and predicts corresponding species having fractional principal quantum numbers. Atomic hydrogen may undergo a catalytic reaction with certain species, including itself, that can accept energy in integer multiples of the potential energy of atomic hydrogen, $m \cdot 27.2$ eV, wherein m is an integer. The predicted reaction involves a resonant, nonradiative energy transfer from otherwise stable atomic hydrogen to the catalyst capable of accepting the energy. The product is H(1/p), fractional Rydberg states of atomic hydrogen called "hydrino atoms," wherein n = 1/2, 1/3, 1/4,..., 1/p ($p \leq 137$ is an integer) replaces the well-known parameter n = integer in the Rydberg equation for hydrogen excited states. Each hydrino state also comprises an electron, a proton, and a photon, but the field contribution from the photon increases the binding energy rather than decreasing it corresponding to energy desorption rather than absorption. Since the potential energy of atomic hydrogen is 27.2 eV, $m$ H atoms serve as a catalyst of $m \cdot 27.2$ eV for another ($m$+1)th H atom [1]. For example, a H atom can act as a catalyst for another H by accepting 27.2 eV from it via through-space energy transfer such as by magnetic or induced electric dipole-dipole coupling to form an intermediate that decays

$$m^2 \cdot 13.6 \; eV \left( \frac{91.2}{m^2} \; nm \right).$$

with the emission of continuum bands with short wavelength cutoffs and energies of $\phantom{xx}$ In addition to atomic H, a molecule that accepts $m \cdot 27.2$ eV from atomic H with a decrease in the magnitude of the potential energy of the molecule by the same energy may also serve as a catalyst. The potential energy of $H_2O$ is 81.6 eV. Then, by the same mechanism, the nascent $H_2O$ molecule (not hydrogen bonded in solid, liquid, or gaseous state) formed by a thermodynamically favorable reduction of a metal oxide is predicted to serve as a catalyst to form $H(1/4)$ with an energy release of 204 eV, comprising an 81.6 eV transfer to HOH and a release of continuum radiation with a cutoff at 10.1 nm (122.4 eV).

In the $H$-atom catalyst reaction involving a transition to the $H \left[ \dfrac{a_H}{p = m+1} \right]$ state, $m$ H atoms serve as a catalyst of $m \cdot 27.2$ eV for another ($m$+1)th H atom. Then, the reaction between $m$+1 hydrogen atoms whereby $m$ atoms resonantly and nonradiatively accept $m \cdot 27.2$ eV from the ($m$+1)th hydrogen atom such that $mH$ serves as the catalyst is given by

$$m \cdot 27.2 \; eV + mH + H \rightarrow mH^+_{fast} + me^- + H* \left[ \frac{a_H}{m+1} \right] + m \cdot 27.2 \; eV \tag{1}$$

$$H* \left[ \frac{a_H}{m+1} \right] \rightarrow H \left[ \frac{a_H}{m+1} \right] + [(m+1)^2 - 1^2] \cdot 13.6 \; eV - m \cdot 27.2 \; eV \tag{2}$$

$$mH^+_{fast} + me^- \rightarrow mH + m \cdot 27.2 \; eV \tag{3}$$

And, the overall reaction is

$$H \rightarrow H \left[ \frac{a_H}{p = m+1} \right] + [(m+1)^2 - 1^2] \cdot 13.6 \; eV \tag{4}$$

The catalysis reaction ($m$=3) regarding the potential energy of nascent $H_2O$ [1] is

$$81.6 \, eV + H_2O + H\left[a_H\right] \rightarrow 2H^+_{fast} + O^- + e^- + H*\left[\frac{a_H}{4}\right] + 81.6 \, eV \tag{5}$$

$$H*\left[\frac{a_H}{4}\right] \rightarrow H\left[\frac{a_H}{4}\right] + 122.4 \, eV \tag{6}$$

$$2H^+_{fast} + O^- + e^- \rightarrow H_2O + 81.6 \, eV \tag{7}$$

And, the overall reaction is

$$H\left[a_H\right] \rightarrow H\left[\frac{a_H}{4}\right] + 81.6 \, eV + 122.4 \, eV \tag{8}$$

After the energy transfer to the catalyst (Eqs. (1) and (5)), an intermediate $H*\left[\dfrac{a_H}{m+1}\right]$ is formed having the radius of the H atom and a central field of m + 1 times the central field of a proton. The radius is predicted to decrease as the electron undergoes radial acceleration to a stable state having a radius of 1/(m + 1) the radius of the uncatalyzed hydrogen atom, with the release of $m^2 \cdot 13.6 eV$ of energy. The extreme-ultraviolet continuum radiation band due to the

$H*\left[\dfrac{a_H}{m+1}\right]$ intermediate (e.g. Eq. (2) and Eq. (6)) is predicted to have a short wavelength cutoff and energy

$E_{\left(H \rightarrow H\left[\frac{a_H}{p=m+1}\right]\right)}$ given by

$$E_{\left(H \rightarrow H\left[\frac{a_H}{p=m+1}\right]\right)} = m^2 \cdot 13.6 \, eV \, ; \; \lambda_{\left(H \rightarrow H\left[\frac{a_H}{p=m+1}\right]\right)} = \frac{91.2}{m^2} \, nm \tag{9}$$

and extending to longer wavelengths than the corresponding cutoff. Here the extreme-ultraviolet continuum radiation band due to the decay of the $H*[a_H/4]$ intermediate is predicted to have a short wavelength cutoff at $E = m^2 \cdot 13.6 = 9 \cdot 13.6 = 122.4$ eV (10.1 nm) [where p = m + 1 = 4 and m = 3 in Eq. (9)] and extending to longer wavelengths. The continuum radiation band at 10.1 nm and going to longer wavelengths for the theoretically predicted transition of H to lower-energy, so called "hydrino" state H(1/4), was observed only arising from pulsed pinch gas discharges comprising some hydrogen. Another observation predicted by Eqs. (1) and (5) is the formation of fast, excited state H atoms from recombination of fast $H^+$. The fast atoms give rise to broadened Balmer $\alpha$ emission. Greater than 50 eV Balmer $\alpha$ line broadening that reveals a population of extraordinarily high-kinetic-energy hydrogen atoms in certain mixed hydrogen plasmas is a well-established phenomenon wherein the cause is due to the energy released in the formation of hydrinos. Fast H was previously observed in continuum-emitting hydrogen pinch plasmas.

Additional catalyst and reactions to form hydrino are possible. Specific species (e.g. $He^+$, $Ar^+$, $Sr^+$, K, Li, HCl, and NaH, OH, SH, SeH, nascent $H_2O$, nH (n=integer)) identifiable on the basis of their known electron energy levels are required to be present with atomic hydrogen to catalyze the process. The reaction involves a nonradiative energy transfer followed by $q \cdot 13.6 \, eV$ continuum emission or $q \cdot 13.6 \, eV$ transfer to H to form extraordinarily hot, excited-state H and a hydrogen atom that is lower in energy than unreacted atomic hydrogen that corresponds to a fractional principal quantum number. That is, in the formula for the principal energy levels of the hydrogen atom:

$$E_n = -\frac{e^2}{n^2 8\pi\varepsilon_o a_H} = -\frac{13.598 \ eV}{n^2}.$$ (10)

$$n = 1, 2, 3, \ldots$$ (11)

where $a_H$ is the Bohr radius for the hydrogen atom (52.947 pm), $e$ is the magnitude of the charge of the electron, and $\varepsilon_o$ is the vacuum permittivity, fractional quantum numbers:

$$n = 1, \frac{1}{2}, \frac{1}{3}, \frac{1}{4}, \ldots, \frac{1}{p}; \quad \text{where } p \le 137 \text{ is an integer}$$ (12)

replace the well known parameter $n$ = integer in the Rydberg equation for hydrogen excited states and represent lower-energy-state hydrogen atoms called "hydrinos." The $n$ = 1 state of hydrogen and the $n = \frac{1}{\text{integer}}$ states of hydrogen are nonradiative, but a transition between two nonradiative states, say $n$ = 1 to $n$=1/2, is possible via a nonradiative energy transfer. Hydrogen is a special case of the stable states given by Eqs. (10) and (12) wherein the corresponding radius of the hydrogen or hydrino atom is given by

$$r = \frac{a_H}{p},$$ (13)

where p = 1,2,3,.... In order to conserve energy, energy must be transferred from the hydrogen atom to the catalyst in units of an integer of the potential energy of the hydrogen atom in the normal $n$=1 state, and the radius transitions to $\frac{a_H}{m+p}$. Hydrinos are formed by reacting an ordinary hydrogen atom with a suitable catalyst having a net enthalpy of reaction of

$$m \cdot 27.2 \ eV$$ (14)

where $m$ is an integer. It is believed that the rate of catalysis is increased as the net enthalpy of reaction is more closely matched to $m \cdot 27.2$ eV. It has been found that catalysts having a net enthalpy of reaction within $\pm 10\%$, preferably $\pm 5\%$, of $m \cdot 27.2$ eV are suitable for most applications.

The catalyst reactions involve two steps of energy release: a nonradiative energy transfer to the catalyst followed by additional energy release as the radius decreases to the corresponding stable final state. Thus, the general reaction is given by

$$m \cdot 27.2 \ eV + Cat^{q+} + H\left[\frac{a_H}{p}\right] \to Cat^{(q+r)+} + re^- + H*\left[\frac{a_H}{(m+p)}\right] + m \cdot 27.2 \ eV$$ (15)

$$H*\left[\frac{a_H}{(m+p)}\right] \to H\left[\frac{a_H}{(m+p)}\right] + [(p+m)^2 - p^2] \cdot 13.6 \ eV - m \cdot 27.2 \ eV$$ (16)

$$Cat^{(q+r)+} + re^- \rightarrow Cat^{q+} + m \cdot 27.2 \ eV \ \text{and} \tag{17}$$

the overall reaction is

$$H\left[\frac{a_H}{p}\right] \rightarrow H\left[\frac{a_H}{(m+p)}\right] + [(p+m)^2 - p^2] \cdot 13.6 \ eV \tag{18}$$

$q, r, m,$ and p are integers. $H*\left[\dfrac{a_H}{(m+p)}\right]$ has the radius of the hydrogen atom (corresponding to the 1 in the denominator) and a central field equivalent to ($m$+$p$) times that of a proton, and $H\left[\dfrac{a_H}{(m+p)}\right]$ is the corresponding stable state with the radius of $\dfrac{1}{(m+p)}$ that of $H$.

The catalyst product, $H(1/p)$, may also react with an electron to form a hydrino hydride ion $H^-(1/p)$, or two $H(1/p)$ may react to form the corresponding molecular hydrino $H_2(1/p)$. Specifically, the catalyst product, $H(1/p)$, may also react with an electron to form a novel hydride ion $H^-(1/p)$ with a binding energy $E_B$:

$$E_B = \frac{\hbar^2 \sqrt{s(s+1)}}{8\mu_e a_0^2 \left[1 + \frac{\sqrt{s(s+1)}}{p}\right]^2} - \frac{\pi\mu_0 e^2 \hbar^2}{m_e^2}\left(\frac{1}{a_H^3} + \frac{2^2}{a_0^3\left[\frac{1+\sqrt{s(s+1)}}{p}\right]^3}\right) \tag{19}$$

where p = integer > 1, $S$=1/2, $\hbar$ is Planck's constant bar, $\mu_o$ is the permeability of vacuum, $m_e$ is the mass of the

electron, $\mu_e$ is the reduced electron mass given by $\mu_e = \dfrac{m_e m_p}{\dfrac{m_e}{\sqrt{\dfrac{3}{4}}} + m_p}$ where $m_p$ is the mass of the proton, $a_o$ is the

Bohr radius, and the ionic radius is $r_1 = \dfrac{a_0}{p}\left(1 + \sqrt{s(s+1)}\right).$ From Eq. (19), the calculated ionization energy of the hydride ion is 0.75418 eV, and the experimental value is 6082.99 $\pm$ 0.15 $cm^{-1}$ (0.75418 eV). The binding energies of hydrino hydride ions may be measured by X-ray photoelectron spectroscopy (XPS).

Upfield-shifted NMR peaks are direct evidence of the existence of lower-energy state hydrogen with a reduced radius relative to ordinary hydride ion and having an increase in diamagnetic shielding of the proton. The shift is given by the sum of the contributions of the diamagnetism of the two electrons and the photon field of magnitude p (Mills GUTCP Eq. (7.87)):

$$\frac{\Delta B_T}{B} = -\mu_0 \frac{pe^2}{12m_e a_0 \left(1+\sqrt{s(s+1)}\right)}\left(1+p\alpha^2\right) = -\left(p29.9 + p^2 1.59 \times 10^{-3}\right) ppm \qquad (20)$$

where the first term applies to $H^-$ with $p = 1$ and p = integer >1 for $H^-(1/p)$ and $\alpha$ is the fine structure constant. The predicted hydrino hydride peaks are extraordinarily upfield shifted relative to ordinary hydride ion. In an embodiment, the peaks are upfield of TMS. The NMR shift relative to TMS may be greater than that known for at least one of ordinary $H^-$, H, $H_2$, or $H^+$ alone or comprising a compound. The shift may be greater than at least one of 0, -1, -2, -3, -4, -5, -6, -7, -8, -9, -10, -11, -12, -13, -14, -15, -16, -17, -18, -19, -20, - 21, -22, -23, -24, -25, -26, -27, -28, -29, -30, -31, -32, -33, -34, -35, -36, -37, -38, -39, and - 40 ppm. The range of the absolute shift relative to a bare proton, wherein the shift of TMS is about -31.5 relative to a bare proton, may be -(p29.9 + $p^2$2.74) ppm (Eq. (20)) within a range of about at least one of $\pm 5$ ppm, $\pm$ 10 ppm, $\pm 20$ ppm, $\pm 30$ ppm, $\pm 40$ ppm, $\pm 50$ ppm, $\pm 60$ ppm, $\pm 70$ ppm, $\pm 80$ ppm, $\pm 90$ ppm, and $\pm$ 100 ppm. The range of the absolute shift relative to a bare proton may be -(p29.9 + $p^2$1.59 X $10^{-3}$) ppm (Eq. (20)) within a range of about at least one of about 0.1% to 99%, 1% to 50%, and 1% to 10%. In another embodiment, the presence of a hydrino species such as a hydrino atom, hydride ion, or molecule in a solid matrix such as a matrix of a hydroxide such as NaOH or KOH causes the matrix protons to shift upfield. The matrix protons such as those of NaOH or KOH may exchange. In an embodiment, the shift may cause the matrix peak to be in the range of about -0.1 ppm to -5 ppm relative to TMS. The NMR determination may comprise magic angle spinning $^1H$ nuclear magnetic resonance spectroscopy (MAS $^1H$ NMR).

$H(1/p)$ may react with a proton and two $H(1/p)$ may react to form $H_2(1/p)^+$ and $H_2(1/p)$, respectively. The hydrogen molecular ion and molecular charge and current density functions, bond distances, and energies were solved from the Laplacian in ellipsoidal coordinates with the constraint of nonradiation.

$$(\eta-\zeta)R_\xi \frac{\partial}{\partial\xi}(R_\xi \frac{\partial\phi}{\partial\xi}) + (\zeta-\xi)R_\eta \frac{\partial}{\partial\eta}(R_\eta \frac{\partial\phi}{\partial\eta}) + (\xi-\eta)R_\zeta \frac{\partial}{\partial\zeta}(R_\zeta \frac{\partial\phi}{\partial\zeta}) = 0 \qquad (21)$$

The total energy $E_T$ of the hydrogen molecular ion having a central field of + $pe$ at each focus of the prolate spheroid molecular orbital is

$$E_T = -p^2 \left\{ \frac{\frac{e^2}{8\pi\varepsilon_o a_H}(4\ln 3 - 1 - 2\ln 3)\left[1 + p\sqrt{\frac{2\hbar\sqrt{\frac{2e^2}{4\pi\varepsilon_o (2a_H)^3}}}{m_e c^2}}\right]}{-\frac{1}{2}\hbar\sqrt{\frac{\frac{pe^2}{4\pi\varepsilon_o \left(\frac{2a_H}{p}\right)^3} - \frac{pe^2}{8\pi\varepsilon_o \left(\frac{3a_H}{p}\right)^3}}{\mu}}} \right\} \qquad (22)$$

$$= -p^2 16.13392 \, eV - p^3 0.118755 \, eV$$

where p is an integer, $C$ is the speed of light in vacuum, and $\mu$ is the reduced nuclear mass. The total energy of the hydrogen molecule having a central field of + $pe$ at each focus of the prolate spheroid molecular orbital is

$$E_T = -p^2 \left\{ \frac{\frac{e^2}{8\pi\varepsilon_o a_0}\left[\left(2\sqrt{2}-\sqrt{2}+\frac{\sqrt{2}}{2}\right)\ln\frac{\sqrt{2}+1}{\sqrt{2}-1}-\sqrt{2}\right]\left[1+p\sqrt{\frac{2\hbar\sqrt{\frac{e^2}{4\pi\varepsilon_o a_0^3}}{m_e}}{m_e c^2}}\right]}{-\frac{1}{2}\hbar\sqrt{\frac{\sqrt{\frac{pe^2}{8\pi\varepsilon_o\left(\frac{a_0}{p}\right)^3}-\frac{pe^2}{8\pi\varepsilon_o\left(\frac{\left(1+\frac{1}{\sqrt{2}}\right)a_0}{p}\right)^3}}}{\mu}}} \right\}$$

(23)

$$= -p^2 31.351\ eV - p^3 0.326469\ eV$$

The bond dissociation energy, $E_D$, of the hydrogen molecule $H_2(1/p)$ is the difference between the total energy of the corresponding hydrogen atoms and $E_T$

$$E_D = E(2H(1/p)) - E_T$$ (24)

where

$$E(2H(1/p)) = -p^2 27.20\ eV$$ (25)

$E_D$ is given by Eqs. (23-25):

$$E_D = -p^2 27.20\ eV - E_T$$
$$= -p^2 27.20\ eV - \left(-p^2 31.351\ eV - p^3 0.326469\ eV\right)$$ (26)
$$= p^2 4.151\ eV + p^3 0.326469\ eV$$

$H_2(1/p)$ may be identified by X-ray photoelectron spectroscopy (XPS) wherein the ionization product in addition to the ionized electron may be at least one of the possibilities such as those comprising two protons and an electron, a hydrogen (H) atom, a hydrino atom, a molecular ion, hydrogen molecular ion, and $H_2(1/p)^+$ wherein the energies may be shifted by the matrix.

The NMR of catalysis-product gas provides a definitive test of the theoretically predicted chemical shift of $H_2(1/p)$. In general, the $^1H$ NMR resonance of $H_2(1/p)$ is predicted to be upfield from that of $H_2$ due to the fractional radius in elliptic coordinates wherein the electrons are significantly closer to the nuclei. The predicted shift, $\frac{\Delta B_T}{B}$, for $H_2(1/p)$ is given by the sum of the contributions of the diamagnetism of the two electrons and the photon field of magnitude p (Mills GUTCP Eqs. (11.415-11.416)):

$$\frac{\Delta B_T}{B} = -\mu_0\left(4-\sqrt{2}\ln\frac{\sqrt{2}+1}{\sqrt{2}-1}\right)\frac{pe^2}{36a_0 m_e}\left(1+p\alpha^2\right)$$ (27)

$$\frac{\Delta B_T}{B} = -\left(p28.01 + p^2 1.49 \times 10^{-3}\right) ppm \tag{28}$$

where the first term applies to $H_2$ with $p = 1$ and $p$ = integer >1 for $H_2(1/p)$. The experimental absolute $H_2$ gas-phase resonance shift of -28.0 ppm is in excellent agreement with the predicted absolute gas-phase shift of -28.01 ppm (Eq. (28)). The predicted molecular hydrino peaks are extraordinarily upfield shifted relative to ordinary $H_2$. In an embodiment, the peaks are upfield of TMS. The NMR shift relative to TMS may be greater than that known for at least one of ordinary $H^-$, H, $H_2$, or $H^+$ alone or comprising a compound. The shift may be greater than at least one of 0, -1, -2, -3, -4, -5, - 6, -7, -8, -9, -10, -11, -12, -13, -14, -15, -16, -17, -18, -19, -20, -21, -22, -23, -24, -25, -26, - 27, -28, -29, -30, -31, -32, -33, -34, -35, -36, -37, -38, -39, and -40 ppm. The range of the absolute shift relative to a bare proton, wherein the shift of TMS is about -31.5 ppm relative to a bare proton, may be -(p28.01 + p²2.56) ppm (Eq. (28)) within a range of about at least one of $\pm 5$ ppm, $\pm$ 10 ppm, $\pm 20$ ppm, $\pm 30$ ppm, $\pm 40$ ppm, $\pm 50$ ppm, $\pm 60$ ppm, $\pm 70$ ppm, $\pm 80$ ppm, $\pm 90$ ppm, and $\pm$ 100 ppm. The range of the absolute shift relative to a bare proton may be -(p28.01 + p²1.49 X 10⁻³) ppm (Eq. (28)) within a range of about at least one of about 0.1% to 99%, 1% to 50%, and 1% to 10%.

The vibrational energies, $E_{vib}$, for the $\upsilon = 0$ to $\upsilon = 1$ transition of hydrogen-type molecules $H_2(1/p)$ are

$$E_{vib} = p^2 0.515902 \ eV \tag{29}$$

where $p$ is an integer .

The rotational energies, $E_{rot}$, for the $J$ to $J + 1$ transition of hydrogen-type molecules $H_2(1/p)$ are

$$E_{rot} = E_{J+1} - E_J = \frac{\hbar^2}{I}\left[J+1\right] = p^2\left(J+1\right)0.01509 \ eV \tag{30}$$

where $p$ is an integer and $I$ is the moment of inertia. Ro-vibrational emission of $H_2(1/4)$ was observed on e-beam excited molecules in gases and trapped in solid matrix.

The $p^2$ dependence of the rotational energies results from an inverse $p$ dependence of the internuclear distance and the corresponding impact on the moment of inertia $I$. The predicted internuclear distance $2c'$ for $H_2(1/p)$ is

$$2c' = \frac{a_o \sqrt{2}}{p} \tag{31}$$

At least one of the rotational and vibration energies of $H_2(1/p)$ may be measured by at least one of electron-beam excitation emission spectroscopy, Raman spectroscopy, and Fourier transform infrared (FTIR) spectroscopy. $H_2(1/p)$ may be trapped in a matrix for measurement such as in at least one of MOH, MX, and $M_2CO_3$ (M = alkali; X = halide) matrix.

In an embodiment, the molecular hydrino product is observed as an inverse Raman effect (IRE) peak at about 1950 cm⁻¹. The peak is enhanced by using a conductive material comprising roughness features or particle size comparable to that of the Raman laser wavelength that supports a Surface Enhanced Raman Scattering (SERS) to show the IRE peak.

I. Catalysts

In the present disclosure the terms such as hydrino reaction, H catalysis, H catalysis reaction, catalysis when referring to hydrogen, the reaction of hydrogen to form hydrinos, and hydrino formation reaction all refer to the reaction such as that of Eqs. (15-18)) of a catalyst defined by Eq. (14) with atomic H to form states of hydrogen having energy levels given by Eqs. (10) and (12). The corresponding terms such as hydrino reactants, hydrino reaction mixture, catalyst mixture, reactants for hydrino formation, reactants that produce or form lower-energy state hydrogen or hydrinos are also used interchangeably when referring to the reaction mixture that performs the catalysis of H to H states or hydrino states having energy levels given by Eqs. (10) and (12).

The catalytic lower-energy hydrogen transitions of the present disclosure require a catalyst that may be in the form of an endothermic chemical reaction of an integer $m$ of the potential energy of uncatalyzed atomic hydrogen, 27.2 *eV*, that accepts the energy from atomic H to cause the transition. The endothermic catalyst reaction may be the ionization of one or more electrons from a species such as an atom or ion (e.g. *m*= 3 for $Li \rightarrow Li^{2+}$) and may further comprise the concerted reaction of a bond cleavage with ionization of one or more electrons from one or more of the partners of the initial bond (e.g. *m*= 2 for $NaH \rightarrow Na^{2+} + H$). $He^+$ fulfills the catalyst criterion-a chemical or physical process with an enthalpy change equal to an integer multiple of 27.2 *eV* since it ionizes at 54.417 *eV,* which is 2·27.2 *eV*. An integer number of hydrogen atoms may also serve as the catalyst of an integer multiple of 27.2 *eV* enthalpy. catalyst is capable of accepting energy from atomic hydrogen in integer units of one of about 27.2 eV ± 0.5 eV and $\dfrac{27.2}{2}$ eV ± 0.5 eV. 2

In an embodiment, the catalyst comprises an atom or ion M wherein the ionization of *t* electrons from the atom or ion M each to a continuum energy level is such that the sum of ionization energies of the *t* electrons is approximately one of $m \cdot 27.2$ *eV* and $m \cdot \dfrac{27.2}{2}$ *eV* where *m* is an integer.

In an embodiment, the catalyst comprises a diatomic molecule MH wherein the breakage of the M-H bond plus the ionization of *t* electrons from the atom M each to a continuum energy level is such that the sum of the bond energy and ionization energies of the *t* electrons is approximately one of $m \cdot 27.2$ *eV* and $m \cdot \dfrac{27.2}{2}$ *eV* where *m* is an integer.

In an embodiment, the catalyst comprises atoms, ions, and/or molecules chosen from molecules of AlH, AsH, BaH, BiH, CdH, ClH, CoH, GeH, InH, NaH, NbH, OH, RhH, RuH, SH, SbH, SeH, SiH, SnH, SrH, TlH, $C_2$, $N_2$, $O_2$, $CO_2$, $NO_2$, and $NO_3$ and atoms or ions of Li, Be, K, Ca, Ti, V, Cr, Mn, Fe, Co, Ni, Cu, Zn, As, Se, Kr, Rb, Sr, Nb, Mo, Pd, Sn, Te, Cs, Ce, Pr, Sm, Gd, Dy, Pb, Pt, Kr, $2K^+$, $He^+$, $Ti^{2+}$, $Na^+$, $Rb^+$, $Sr^+$, $Fe^{3+}$, $Mo^{2+}$, $Mo^{4+}$, $In^{3+}$, $He^+$, $Ar^+$, $Xe^+$, $Ar^{2+}$ and $H^+$, and $Ne^+$ and $H^+$.

In other embodiments, MH⁻ type hydrogen catalysts to produce hydrinos provided by the transfer of an electron to an acceptor A, the breakage of the M-H bond plus the ionization of *t* electrons from the atom M each to a continuum energy level such that the sum of the electron transfer energy comprising the difference of electron affinity (EA) of MH and A, M-H bond energy, and ionization energies of the *t* electrons from M is approximately $m \cdot 27.2$ *eV* where *m* is an integer. NM⁻ type hydrogen catalysts capable of providing a net enthalpy of reaction of approximately $m \cdot 27.2$ *eV* are OH⁻, SiH⁻, CoH⁻, NiH⁻, and SeH⁻

In other embodiments, MH⁺ type hydrogen catalysts to produce hydrinos are provided by the transfer of an electron from an donor A which may be negatively charged, the breakage of the M-H bond, and the ionization of *t* electrons from the atom M each to a continuum energy level such that the sum of the electron transfer energy comprising the difference of ionization energies of MH and A, bond M-H energy, and ionization energies of the *t* electrons from M is approximately $m \cdot 27.2$ *eV* where *m* is an integer.

In an embodiment, at least one of a molecule or positively or negatively charged molecular ion serves as a catalyst that accepts about m27.2 eV from atomic H with a decrease in the magnitude of the potential energy of the molecule or positively or negatively charged molecular ion by about m27.2 eV. Exemplary catalysts are $H_2O$, OH, amide group $NH_2$, and $H_2S$.

$O_2$ may serve as a catalyst or a source of a catalyst. The bond energy of the oxygen molecule is 5.165 eV, and the first, second, and third ionization energies of an oxygen atom are 13.61806 *eV,* 35.11730 *eV,* and 54.9355 *eV,* respectively. The reactions $O_2 \rightarrow O + O^{2+}$, $O_2 \rightarrow O + O^{3+}$, and $2O \rightarrow 2O^+$ provide a net enthalpy of about 2, 4, and 1 times $E_h$, respectively, and comprise catalyst reactions to form hydrino by accepting these energies from H to cause the formation of hydrinos.

## II. Hydrinos

$$E_B = \frac{13.6 \ eV}{(1/p)^2}$$

A hydrogen atom having a binding energy given by where p is an integer greater than 1, preferably from 2 to 137, is the product of the H catalysis reaction of the present disclosure. The binding energy of an atom, ion, or molecule, also known as the ionization energy, is the energy required to remove one electron from the atom, ion or molecule. A hydrogen atom having the binding energy given in Eqs. (10) and (12) is hereafter referred to as a "hydrino atom" or "hydrino." The designation for a hydrino of radius $\dfrac{a_H}{p}$, where $a_H$ is the radius of an ordinary hydrogen atom and $p$ is an integer, is $H\left[\dfrac{a_H}{p}\right]$. A hydrogen atom with a radius $a_H$ is hereinafter referred to as "ordinary hydrogen atom" or "normal hydrogen atom." Ordinary atomic hydrogen is characterized by its binding energy of 13.6 eV.

According to the present disclosure, a hydrino hydride ion (H⁻) having a binding energy according to Eq. (19) that is greater than the binding of ordinary hydride ion (about 0.75 eV) for $p$ = 2 up to 23, and less for $p$ = 24 (H⁻) is provided. For $p$ = 2 to $p$ = 24 of Eq. (19), the hydride ion binding energies are respectively 3, 6.6, 11.2, 16.7, 22.8, 29.3, 36.1, 42.8, 49.4, 55.5, 61.0, 65.6, 69.2, 71.6, 72.4, 71.6, 68.8, 64.0, 56.8, 47.1, 34.7, 19.3, and 0.69 eV. Exemplary compositions comprising the novel hydride ion are also provided herein.

Exemplary compounds are also provided comprising one or more hydrino hydride ions and one or more other elements. Such a compound is referred to as a "hydrino hydride compound."

Ordinary hydrogen species are characterized by the following binding energies (a) hydride ion, 0.754 eV ("ordinary hydride ion"); (b) hydrogen atom ("ordinary hydrogen atom"), 13.6 eV; (c) diatomic hydrogen molecule, 15.3 eV ("ordinary hydrogen molecule"); (d) hydrogen molecular ion, 16.3 eV ("ordinary hydrogen molecular ion"); and (e) $H_3^+$, 22.6 eV ("ordinary trihydrogen molecular ion"). Herein, with reference to forms of hydrogen, "normal" and "ordinary" are synonymous.

According to a further embodiment of the present disclosure, a compound is provided comprising at least one increased binding energy hydrogen species such as (a) a hydrogen atom having a binding energy of about $\dfrac{13.6\ eV}{\left(\dfrac{1}{p}\right)^2}$,

such as within a range of about 0.9 to 1.1 times $\dfrac{13.6\ eV}{\left(\dfrac{1}{p}\right)^2}$ where p is an integer from 2 to 137; (b) a hydride ion (H⁻) having a binding energy of about

$$Binding\ Energy = \frac{\hbar^2\sqrt{s(s+1)}}{8\mu_e a_0^2\left[\dfrac{1+\sqrt{s(s+1)}}{p}\right]^2} - \frac{\pi\mu_0 e^2\hbar^2}{m_e^2}\left(\frac{1}{a_H^3} + \frac{2^2}{a_0^3\left[\dfrac{1+\sqrt{s(s+1)}}{p}\right]^3}\right),$$

such as within a range of about 0.9 to 1.1 times

$$Binding\ Energy = \frac{\hbar^2\sqrt{s(s+1)}}{8\mu_e a_0^2\left[\dfrac{1+\sqrt{s(s+1)}}{p}\right]^2} - \frac{\pi\mu_0 e^2\hbar^2}{m_e^2}\left(\frac{1}{a_H^3} + \frac{2^2}{a_0^3\left[\dfrac{1+\sqrt{s(s+1)}}{p}\right]^3}\right)$$

where p is an integer from 2 to 24; (c) $H_4^+(1/p)$; (d) a trihydrino molecular ion, $H_3^+(1/p)$, having a binding energy of about

$$\frac{22.6}{\left(\frac{1}{p}\right)^2}\ eV$$

such as within a range of about 0.9 to 1.1 times $\dfrac{22.6}{\left(\frac{1}{p}\right)^2}\ eV$ where p is an integer from 2 to 137; (e) a dihydrino having a binding energy of about $\dfrac{15.3}{\left(\frac{1}{p}\right)^2}\ eV$ such as within a range of about 0.9 to 1.1 times $\dfrac{15.3}{\left(\frac{1}{p}\right)^2}\ eV$ where p is an integer from 2 to 137; (f) a dihydrino molecular ion with a binding energy of about $\dfrac{16.3}{\left(\frac{1}{p}\right)^2}\ eV$ such as within a range of about 0.9 to 1.1 times $\dfrac{16.3}{\left(\frac{1}{p}\right)^2}\ eV$ where p is an integer, preferably an integer from 2 to 137.

According to a further embodiment of the present disclosure, a compound is provided comprising at least one increased binding energy hydrogen species such as (a) a dihydrino molecular ion having a total energy of about

$$E_T = -p^2\left\{\frac{\dfrac{e^2}{8\pi\varepsilon_o a_H}(4\ln 3 - 1 - 2\ln 3)\left[1 + p\sqrt{\dfrac{2\hbar\sqrt{\dfrac{2e^2}{4\pi\varepsilon_o\left(2a_H\right)^3}}{m_e}}{m_e c^2}}\right]}{-\dfrac{1}{2}\hbar\sqrt{\dfrac{\dfrac{pe^2}{4\pi\varepsilon_o\left(\dfrac{2a_H}{p}\right)^3} - \dfrac{pe^2}{8\pi\varepsilon_o\left(\dfrac{3a_H}{p}\right)^3}}{\mu}}}\right\}$$

$$= -p^2 16.13392\ eV - p^3 0.118755\ eV$$

such as within a range of about 0.9 to 1.1 times

$$E_T = -p^2 \left\{ \frac{\dfrac{e^2}{8\pi\varepsilon_o a_H}(4\ln 3 - 1 - 2\ln 3)\left[1 + p\sqrt{\dfrac{2\hbar\sqrt{\dfrac{2e^2}{4\pi\varepsilon_o (2a_H)^3}}{m_e}}{m_e c^2}}\right]}{-\dfrac{1}{2}\hbar\sqrt{\dfrac{\dfrac{pe^2}{4\pi\varepsilon_o \left(\dfrac{2a_H}{p}\right)^3} - \dfrac{pe^2}{8\pi\varepsilon_o \left(\dfrac{3a_H}{p}\right)^3}}{\mu}}} \right\}$$

$$= -p^2 16.13392 \; eV - p^3 0.118755 \; eV$$

where $p$ is an integer, $\hbar$ is Planck's constant bar, $m_e$ is the mass of the electron, $c$ is the speed of light in vacuum, and $\mu$ is the reduced nuclear mass, and (b) a dihydrino molecule having a total energy of about

$$E_T = -p^2 \left\{ \frac{\dfrac{e^2}{8\pi\varepsilon_o a_0}\left[\left(2\sqrt{2} - \sqrt{2} + \dfrac{\sqrt{2}}{2}\right)\ln\dfrac{\sqrt{2}+1}{\sqrt{2}-1} - \sqrt{2}\right]\left[1 + p\sqrt{\dfrac{2\hbar\sqrt{\dfrac{e^2}{4\pi\varepsilon_o a_0^3}}{m_e}}{m_e c^2}}\right]}{-\dfrac{1}{2}\hbar\sqrt{\dfrac{\dfrac{pe^2}{8\pi\varepsilon_o \left(\dfrac{a_0}{p}\right)^3} - \dfrac{pe^2}{8\pi\varepsilon_o \left(\dfrac{\left(1+\dfrac{1}{\sqrt{2}}\right)a_0}{p}\right)^3}}{\mu}}} \right\}$$

$$= -p^2 31.351 \; eV - p^3 0.326469 \; eV$$

such as within a range of about 0.9 to 1.1 times

$$E_T = -p^2 \left\{ \frac{\dfrac{e^2}{8\pi\varepsilon_o a_0}\left[\left(2\sqrt{2}-\sqrt{2}+\dfrac{\sqrt{2}}{2}\right)\ln\dfrac{\sqrt{2}+1}{\sqrt{2}-1}-\sqrt{2}\right]\left[1+p\sqrt{\dfrac{2\hbar\sqrt{\dfrac{e^2}{4\pi\varepsilon_o a_0^3}}{m_e}}{m_e c^2}}\right]}{-\dfrac{1}{2}\hbar\sqrt{\dfrac{\dfrac{pe^2}{8\pi\varepsilon_o\left(\dfrac{a_0}{p}\right)^3}-\dfrac{pe^2}{8\pi\varepsilon_o\left(\dfrac{\left(1+\dfrac{1}{\sqrt{2}}\right)a_0}{p}\right)^3}}{\mu}}} \right\}$$

$$= -p^2 31.351\ eV - p^3 0.326469\ eV$$

where $p$ is an integer and $a_o$ is the Bohr radius.

According to one embodiment of the present disclosure wherein the compound comprises a negatively charged increased binding energy hydrogen species, the compound further comprises one or more cations, such as a proton, ordinary $H_2^+$, or ordinary $H_3^+$.

A method is provided herein for preparing compounds comprising at least one hydrino hydride ion. Such compounds are hereinafter referred to as "hydrino hydride compounds." The method comprises reacting atomic hydrogen with a catalyst having a net enthalpy of reaction of about $\dfrac{m}{2}\cdot 27\ eV$, where m is an integer greater than 1, preferably an integer less than 400, to produce an increased binding energy hydrogen atom having a binding energy of about

$$\frac{13.6\ eV}{\left(\dfrac{1}{p}\right)^2}$$

where $p$ is an integer, preferably an integer from 2 to 137. A further product of the catalysis is energy. The increased binding energy hydrogen atom can be reacted with an electron source, to produce an increased binding energy hydride ion. The increased binding energy hydride ion can be reacted with one or more cations to produce a compound comprising at least one increased binding energy hydride ion.

The novel hydrogen compositions of matter can comprise:

(a) at least one neutral, positive, or negative hydrogen species (hereinafter "increased binding energy hydrogen species") having a binding energy

(i) greater than the binding energy of the corresponding ordinary hydrogen species, or
(ii) greater than the binding energy of any hydrogen species for which the corresponding ordinary hydrogen species is unstable or is not observed because the ordinary hydrogen species' binding energy is less than thermal energies at ambient conditions (standard temperature and pressure, STP), or is negative; and

(b) at least one other element. The compounds of the present disclosure are hereinafter referred to as "increased binding energy hydrogen compounds."

By "other element" in this context is meant an element other than an increased binding energy hydrogen species. Thus, the other element can be an ordinary hydrogen species, or any element other than hydrogen. In one group of compounds, the other element and the increased binding energy hydrogen species are neutral. In another group of compounds, the other element and increased binding energy hydrogen species are charged such that the other element provides the balancing charge to form a neutral compound. The former group of compounds is characterized by molecular and coordinate bonding; the latter group is characterized by ionic bonding.

Also provided are novel compounds and molecular ions comprising

(a) at least one neutral, positive, or negative hydrogen species (hereinafter "increased binding energy hydrogen species") having a total energy

(i) greater than the total energy of the corresponding ordinary hydrogen species, or
(ii) greater than the total energy of any hydrogen species for which the corresponding ordinary hydrogen species is unstable or is not observed because the ordinary hydrogen species' total energy is less than thermal energies at ambient conditions, or is negative; and

(b) at least one other element.

The total energy of the hydrogen species is the sum of the energies to remove all of the electrons from the hydrogen species. The hydrogen species according to the present disclosure has a total energy greater than the total energy of the corresponding ordinary hydrogen species. The hydrogen species having an increased total energy according to the present disclosure is also referred to as an "increased binding energy hydrogen species" even though some embodiments of the hydrogen species having an increased total energy may have a first electron binding energy less that the first electron binding energy of the corresponding ordinary hydrogen species. For example, the hydride ion of Eq. (19) for $p = 24$ has a first binding energy that is less than the first binding energy of ordinary hydride ion, while the total energy of the hydride ion of Eq. (19) for p = 24 is much greater than the total energy of the corresponding ordinary hydride ion.

Also provided herein are novel compounds and molecular ions comprising

(a) a plurality of neutral, positive, or negative hydrogen species (hereinafter "increased binding energy hydrogen species") having a binding energy

(i) greater than the binding energy of the corresponding ordinary hydrogen species, or
(ii) greater than the binding energy of any hydrogen species for which the corresponding ordinary hydrogen species is unstable or is not observed because the ordinary hydrogen species' binding energy is less than thermal energies at ambient conditions or is negative; and

(b) optionally one other element. The compounds of the present disclosure are hereinafter referred to as "increased binding energy hydrogen compounds."

The increased binding energy hydrogen species can be formed by reacting one or more hydrino atoms with one or more of an electron, hydrino atom, a compound containing at least one of said increased binding energy hydrogen species, and at least one other atom, molecule, or ion other than an increased binding energy hydrogen species.

Also provided are novel compounds and molecular ions comprising

(a) a plurality of neutral, positive, or negative hydrogen species (hereinafter "increased binding energy hydrogen species") having a total energy

(i) greater than the total energy of ordinary molecular hydrogen, or
(ii) greater than the total energy of any hydrogen species for which the corresponding ordinary hydrogen species is unstable or is not observed because the ordinary hydrogen species' total energy is less than thermal energies at ambient conditions or is negative; and

(b) optionally one other element. The compounds of the present disclosure are hereinafter referred to as "increased binding energy hydrogen compounds."

In an embodiment, a compound is provided comprising at least one increased binding energy hydrogen species chosen from (a) hydride ion having a binding energy according to Eq. (19) that is greater than the binding of ordinary hydride ion (about 0.8 eV) for $p = 2$ up to 23, and less for $p = 24$ ("increased binding energy hydride ion" or "hydrino hydride ion"); (b) hydrogen atom having a binding energy greater than the binding energy of ordinary hydrogen atom (about 13.6 eV) ("increased binding energy hydrogen atom" or "hydrino"); (c) hydrogen molecule having a first binding energy greater than about 15.3 eV ("increased binding energy hydrogen molecule" or "dihydrino"); and (d) molecular hydrogen ion having a binding energy greater than about 16.3 eV ("increased binding energy molecular hydrogen ion" or "dihydrino molecular ion"). In the disclosure, increased binding energy hydrogen species and compounds is also referred to as lower-energy hydrogen species and compounds. Hydrinos comprise an increased binding energy hydrogen species or equivalently a lower-energy hydrogen species.

## III. Chemical Reactor

The present disclosure is also directed to other reactors for producing increased binding energy hydrogen species and compounds of the present disclosure, such as dihydrino molecules and hydrino hydride compounds. Further products of the catalysis are power and optionally plasma and light depending on the cell type. Such a reactor is hereinafter referred to as a "hydrogen reactor" or "hydrogen cell." The hydrogen reactor comprises a cell for making hydrinos. The cell for making hydrinos may take the form of a chemical reactor or gas fuel cell such as a gas discharge cell, a plasma torch cell, or microwave power cell, and an electrochemical cell. In an embodiment, the catalyst is HOH and the source of at least one of the HOH and H is ice. In an embodiment, the cell comprises an arc discharge cell and that comprises ice at least one electrode such that the discharge involves at least a portion of the ice.

In an embodiment, the arc discharge cell comprises a vessel, two electrodes, a high voltage power source such as one capable of a voltage in the range of about 100 V to 1 MV and a current in the range of about 1 A to 100 kA, and a source of water such as a reservoir and a means to form and supply $H_2O$ droplets. The droplets may travel between the electrodes. In an embodiment, the droplets initiate the ignition of the arc plasma. In an embodiment, the water arc plasma comprises H and HOH that may react to form hydrinos. The ignition rate and the corresponding power rate may be controlled by controlling the size of the droplets and the rate at which they are supplied to the electrodes. The source of high voltage may comprise at least one high voltage capacitor that may be charged by a high voltage power source. In an embodiment, the arc discharge cell further comprises a means such as a power converter such as one of the present invention such as at least one of a PV converter and a heat engine to convert the power from the hydrino process such as light and heat to electricity.

Exemplary embodiments of the cell for making hydrinos may take the form of a liquid-fuel cell, a solid-fuel cell, a heterogeneous-fuel cell, a CIHT cell, and an SF-CIHT cell. Each of these cells comprises: (i) a source of atomic hydrogen; (ii) at least one catalyst chosen from a solid catalyst, a molten catalyst, a liquid catalyst, a gaseous catalyst, or mixtures thereof for making hydrinos; and (iii) a vessel for reacting hydrogen and the catalyst for making hydrinos. As used herein and as contemplated by the present disclosure, the term "hydrogen," unless specified otherwise, includes not only proteum ($^1H$), but also deuterium ($^2H$) and tritium ($^3H$). Exemplary chemical reaction mixtures and reactors may comprise SF-CIHT, CIHT, or thermal cell embodiments of the present disclosure. Additional exemplary embodiments are given in this Chemical Reactor section. Examples of reaction mixtures having $H_2O$ as catalyst formed during the reaction of the mixture are given in the present disclosure. Other catalysts may serve to form increased binding energy hydrogen species and compounds. The reactions and conditions may be adjusted from these exemplary cases in the parameters such as the reactants, reactant wt%'s, $H_2$ pressure, and reaction temperature. Suitable reactants, conditions, and parameter ranges are those of the present disclosure. Hydrinos and molecular hydrino are shown to be products of the reactors of the present disclosure by predicted continuum radiation bands of an integer times 13.6 eV, otherwise unexplainable extraordinarily high H kinetic energies measured by Doppler line broadening of H lines, inversion of H lines, formation of plasma without a breakdown fields, and anomalously plasma afterglow duration as reported in Mills Prior Publications. The data such as that regarding the CIHT cell and solid fuels has been validated independently, off site by other researchers. The formation of hydrinos by cells of the present disclosure was also confirmed by electrical energies that were continuously output over long-duration, that were multiples of the electrical input that in most cases exceed the input by a factor of greater than 10 with no alternative source. The predicted molecular hydrino $H_2(1/4)$ was identified as a product of CIHT cells and solid fuels by MAS H NMR that showed a predicted upfield shifted matrix peak of about -4.4 ppm, ToF-SIMS and ESI-ToFMS that showed $H_2(1/4)$ complexed to a getter matrix as m/e = M + n2 peaks wherein M is the mass of a parent ion and n is an integer, electron-beam excitation emission spectroscopy and photoluminescence emission spectroscopy that showed the predicted rotational and vibration spectrum of $H_2(1/4)$ having 16 or quantum number p = 4 squared times the energies of $H_2$, Raman and FTIR spectroscopy that showed the rotational energy of $H_2(1/4)$ of 1950 cm$^{-1}$, being 16 or quantum number p = 4 squared times the rotational energy of $H_2$, XPS that showed the predicted total binding energy of $H_2(1/4)$ of 500 eV, and a ToF-SIMS peak with an arrival time before the m/e=1 peak that corresponded to H with a kinetic energy of about 204 eV that matched the predicted energy release for H to H(1/4) with the energy transferred to a third body H as reported in Mills Prior Publications and in R. Mills X Yu, Y. Lu, G Chu, J. He, J. Lotoski, "Catalyst Induced Hydrino Transition (CIHT) Electrochemical Cell", International Journal of Energy Research, (2013) and R. Mills, J. Lotoski, J. Kong, G Chu, J. He, J. Trevey, "High-Power-Density Catalyst Induced Hydrino Transition (CIHT) Electrochemical Cell" (2014) which are herein incorporated by reference in their entirety.

Using both a water flow calorimeter and a Setaram DSC 131 differential scanning calorimeter (DSC), the formation of hydrinos by cells of the present disclosure such as ones comprising a solid fuel to generate thermal power was confirmed by the observation of thermal energy from hydrino-forming solid fuels that exceed the maximum theoretical energy by a factor of 60 times. The MAS H NMR showed a predicted $H_2(1/4)$ upfield matrix shift of about -4.4 ppm. A Raman peak starting at 1950 $cm^{-1}$ matched the free space rotational energy of $H_2(1/4)$ (0.2414 eV). These results are reported in Mills Prior Publications and in R. Mills, J. Lotoski, W. Good, J. He, "Solid Fuels that Form HOH Catalyst", (2014) which is herein incorporated by reference in its entirety.

## IV. Solid Fuel Catalyst Induced Hydrino Transition (SF-CIHT) Cell and Power Converter

In an embodiment, a power system that generates at least one of direct electrical energy and thermal energy comprises at least one vessel, reactants comprising: (a) at least one source of catalyst or a catalyst comprising nascent $H_2O$; (b) at least one source of atomic hydrogen or atomic hydrogen; and (c) at least one of a conductor and a conductive matrix, and at least one set of electrodes to confine the hydrino reactants, a source of electrical power to deliver a short burst of high-current electrical energy, a reloading system, at least one system to regenerate the initial reactants from the reaction products, and at least one direct converter such as at least one of a plasma to electricity converter such as PDC, a photovoltaic converter, and at least one thermal to electric power converter. In a further embodiment, the vessel is capable of a pressure of at least one of atmospheric, above atmospheric, and below atmospheric. In an embodiment, the regeneration system can comprise at least one of a hydration, thermal, chemical, and electrochemical system. In another embodiment, the at least one direct plasma to electricity converter can comprise at least one of the group of plasmadynamic power converter, $\overline{E} \times \overline{B}$ direct converter, magnetohydrodynamic power converter, magnetic mirror magnetohydrodynamic power converter, charge drift converter, Post or Venetian Blind power converter, gyrotron, photon bunching microwave power converter, and photoelectric converter. In a further embodiment, the at least one thermal to electricity converter can comprise at least one of the group of a heat engine, a steam engine, a steam turbine and generator, a gas turbine and generator, a Rankine- cycle engine, a Brayton-cycle engine, a Stirling engine, a thermionic power converter, and a thermoelectric power converter. The converter may be one given in Mills Prior Publications and Mills Prior Applications. The hydrino reactants such as H sources and HOH sources and SunCell systems may comprise those of the present disclosure or in prior US Patent Applications such as Hydrogen Catalyst Reactor, PCT/US08/61455, filed PCT 4/24/2008; Heterogeneous Hydrogen Catalyst Reactor, PCT/US09/052072, filed PCT 7/29/2009; Heterogeneous Hydrogen Catalyst Power System, PCT/US10/27828, PCT filed 3/18/2010; Electrochemical Hydrogen Catalyst Power System, PCT/US11/28889, filed PCT 3/17/2011; $H_2O$-Based Electrochemical Hydrogen-Catalyst Power System, PCT/US12/31369 filed 3/30/2012; CIHT Power System, PCT/US13/041938 filed 5/21/13; Power Generation Systems and Methods Regarding Same, PCT/IB2014/058177 filed PCT 1/10/2014; Photovoltaic Power Generation Systems and Methods Regarding Same, PCT/US14/32584 filed PCT 4/1/2014; Electrical Power Generation Systems and Methods Regarding Same, PCT/US2015/033165 filed PCT 5/29/2015; Ultraviolet Electrical Generation System Methods Regarding Same, PCT/US2015/065826 filed PCT 12/15/2015, and Thermophotovoltaic Electrical Power Generator, PCT/US16/12620 filed PCT 1/8/2016 ("Mills Prior Applications") herein incorporated by reference in their entirety.

In an embodiment, $H_2O$ is ignited to form hydrinos with a high release of energy in the form of at least one of thermal, plasma, and electromagnetic (light) power. ("Ignition" in the present disclosure denotes a very high reaction rate of H to hydrinos that may be manifest as a burst, pulse or other form of high power release.) $H_2O$ may comprise the fuel that may be ignited with the application a high current such as one in the range of about 2000 A to 100,000 A. This may be achieved by the application of a high voltage such as about 5,000 to 100,000 V to first form highly conducive plasma such as an arc. Alternatively, a high current may be passed through a compound or mixture comprising $H_2O$ wherein the conductivity of the resulting fuel such as a solid fuel is high. (In the present disclosure a solid fuel is used to denote a reaction mixture that forms a catalyst such as HOH and H that further reacts to form hydrinos. However, the reaction mixture may comprise other physical states than solid. In embodiments, the reaction mixture may be at least one state of gaseous, liquid, molten matrix such as molten conductive matrix such a molten metal such as at least one of molten silver, silver-copper alloy, and copper, solid, slurry, sol gel, solution, mixture, gaseous suspension, pneumatic flow, and other states known to those skilled in the art.) In an embodiment, the solid fuel having a very low resistance comprises a reaction mixture comprising $H_2O$. The low resistance may be due to a conductor component of the reaction mixture. In embodiments, the resistance of the solid fuel is at least one of in the range of about $10^{-9}$ ohm to 100 ohms, $10^{-8}$ ohm to 10 ohms, $10^{-3}$ ohm to 1 ohm, $10^{-4}$ ohm to $10^{-1}$ ohm, and $10^{-4}$ ohm to $10^{-2}$ ohm. In another embodiment, the fuel having a high resistance comprises $H_2O$ comprising a trace or minor mole percentage of an added compound or material. In the latter case, high current may be flowed through the fuel to achieve ignition by causing breakdown to form a highly conducting state such as an arc or arc plasma.

In an embodiment, the reactants can comprise a source of $H_2O$ and a conductive matrix to form at least one of the source of catalyst, the catalyst, the source of atomic hydrogen, and the atomic hydrogen. In a further embodiment, the reactants comprising a source of $H_2O$ can comprise at least one of bulk $H_2O$, a state other than bulk $H_2O$, a compound or compounds that undergo at least one of react to form $H_2O$ and release bound $H_2O$. Additionally, the bound $H_2O$ can

comprise a compound that interacts with $H_2O$ wherein the $H_2O$ is in a state of at least one of absorbed $H_2O$, bound $H_2O$, physisorbed $H_2O$, and waters of hydration. In embodiments, the reactants can comprise a conductor and one or more compounds or materials that undergo at least one of release of bulk $H_2O$, absorbed $H_2O$, bound $H_2O$, physisorbed $H_2O$, and waters of hydration, and have $H_2O$ as a reaction product. In other embodiments, the at least one of the source of nascent $H_2O$ catalyst and the source of atomic hydrogen can comprise at least one of: (a) at least one source of $H_2O$; (b) at least one source of oxygen, and (c) at least one source of hydrogen.

In an embodiment, the hydrino reaction rate is dependent on the application or development of a high current. In an embodiment of an SF-CIHT cell, the reactants to form hydrinos are subject to a low voltage, high current, high power pulse that causes a very rapid reaction rate and energy release. In an exemplary embodiment, a 60 Hz voltage is less than 15 V peak, the current ranges from 10,000 $A/cm^2$ and 50,000 $A/cm^2$ peak, and the power ranges from 150,000 $W/cm^2$ and 750,000 $W/cm^2$. Other frequencies, voltages, currents, and powers in ranges of about 1/100 times to 100 times these parameters are suitable. In an embodiment, the hydrino reaction rate is dependent on the application or development of a high current. In an embodiment, the voltage is selected to cause a high AC, DC, or an AC-DC mixture of current that is in the range of at least one of 100 A to 1,000,000 A, 1 kA to 100,000 A, 10 kA to 50 kA. The DC or peak AC current density may be in the range of at least one of 100 $A/cm^2$ to 1,000,000 $A/cm^2$, 1000 $A/cm^2$ to 100,000 $A/cm^2$, and 2000 $A/cm^2$ to 50,000 $A/cm^2$. The DC or peak AC voltage may be in at least one range chosen from about 0.1 V to 1000 V, 0.1 V to 100 V, 0.1 V to 15 V, and 1 V to 15 V. The AC frequency may be in the range of about 0.1 Hz to 10 GHz, 1 Hz to 1 MHz, 10 Hz to 100 kHz, and 100 Hz to 10 kHz. The pulse time may be in at least one range chosen from about $10^{-6}$ s to 10 s, $10^{-5}$ s to 1 s, $10^{-4}$ s to 0.1 s, and $10^{-3}$ s to 0.01 s.

In an embodiment, the transfer of energy from atomic hydrogen catalyzed to a hydrino state results in the ionization of the catalyst. The electrons ionized from the catalyst may accumulate in the reaction mixture and vessel and result in space charge build up. The space charge may change the energy levels for subsequent energy transfer from the atomic hydrogen to the catalyst with a reduction in reaction rate. In an embodiment, the application of the high current removes the space charge to cause an increase in hydrino reaction rate. In another embodiment, the high current such as an arc current causes the reactant such as water that may serve as a source of H and HOH catalyst to be extremely elevated in temperature. The high temperature may give rise to the thermolysis of the water to at least one of H and HOH catalyst. In an embodiment, the reaction mixture of the SF-CIHT cell comprises a source of H and a source of catalyst such as at least one of *nH* (n is an integer) and HOH. The at least one of *nH* and HOH may be formed by the thermolysis or thermal decomposition of at least one physical phase of water such as at least one of solid, liquid, and gaseous water. The thermolysis may occur at high temperature such as a temperature in at least one range of about 500K to 10,000K, 1000K to 7000K, and 1000K to 5000K. In an exemplary embodiment, the reaction temperature is about 3500 to 4000K such that the mole fraction of atomic H is high as shown by J. Lede, F. Lapicque, and J Villermaux [J. Lédé, F. Lapicque, J. Villermaux, "Production of hydrogen by direct thermal decomposition of water", International Journal of Hydrogen Energy, 1983, V8, 1983, pp. 675-679; H. H. G. Jellinek, H. Kachi, "The catalytic thermal decomposition of water and the production of hydrogen", International Journal of Hydrogen Energy, 1984, V9, pp. 677-688; S. Z. Baykara, "Hydrogen production by direct solar thermal decomposition of water, possibilities for improvement of process efficiency", International Journal of Hydrogen Energy, 2004, V29, pp. 1451-1458; S. Z. Baykara, "Experimental solar water thermolysis", International Journal of Hydrogen Energy, 2004, V29, pp. 1459-1469 which are herein incorporated by reference]. The thermolysis may be assisted by a solid surface such as that of at least one of the nozzle 5q, the injector 5z1, and the electrodes 8 of FIGURES 2I10-2I43. The solid surface may be heated to an elevated temperature by the input power and by the plasma maintained by the hydrino reaction. The thermolysis gases such as those down stream of the ignition region may be cooled to prevent recombination or the back reaction of the products into the starting water. The reaction mixture may comprise a cooling agent such as at least one of a solid, liquid, or gaseous phase that is at a lower temperature than the temperature of the product gases. The cooling of the thermolysis reaction product gases may be achieved by contacting the products with the cooling agent. The cooling agent may comprise at least one of lower temperature steam, water, and ice.

In an embodiment, the SF-CIHT generator comprises a power system that generates at least one of electrical energy and thermal energy comprising:

at least one vessel;
shot comprising reactants, the reactants comprising:

a) at least one source of catalyst or a catalyst comprising nascent $H_2O$;
b) at least one source of $H_2O$ or $H_2O$;
c) at least one source of atomic hydrogen or atomic hydrogen; and
d) at least one of a conductor and a conductive matrix;

at least one shot injection system;

at least one shot ignition system to cause the shot to form at least one of light-emitting plasma and thermal-emitting plasma;

a system to recover reaction products of the reactants;

at least one regeneration system to regenerate additional reactants from the reaction products and form additional shot,

wherein the additional reactants comprise:

a) at least one source of catalyst or a catalyst comprising nascent $H_2O$;
b) at least one source of $H_2O$ or $H_2O$;
c) at least one source of atomic hydrogen or atomic hydrogen; and
d) at least one of a conductor and a conductive matrix; and

at least one power converter or output system of at least one of the light and thermal output to electrical power and/or thermal power such as at least one of the group of a photovoltaic converter, a photoelectronic converter, a plasmadynamic converter, a thermionic converter, a thermoelectric converter, a Sterling engine, a Brayton cycle engine, a Rankine cycle engine, and a heat engine, and a heater.

In an embodiment, the shot fuel may comprise at least one of a source of H, $H_2$, a source of catalyst, a source of $H_2O$, and $H_2O$. Suitable shot comprises a conductive metal matrix and a hydrate such as at least one of an alkali hydrate, an alkaline earth hydrate, and a transition metal hydrate. The hydrate may comprise at least one of $MgCl_2 \cdot 6H_2O$, $BaI_2 \cdot 2H_2O$, and $ZnCl_2 \cdot 4H_2O$. Alternatively, the shot may comprise at least one of silver, copper, absorbed hydrogen, and water.

The ignition system may comprise:

a) at least one set of electrodes to confine the shot; and
b) a source of electrical power to deliver a short burst of high-current electrical energy wherein the short burst of high-current electrical energy is sufficient to cause the shot reactants to react to form plasma. The source of electrical power may receive electrical power from the power converter. In an embodiment, the shot ignition system comprises at least one set of electrodes that are separated to form an open circuit, wherein the open circuit is closed by the injection of the shot to cause the high current to flow to achieve ignition. In an embodiment, the ignition system comprises a switch to at least one of initiate the current and interrupt the current once ignition is achieved. The flow of current may be initiated by a shot that completes the gap between the electrodes. The switching may be performed electronically by means such as at least one of an insulated gate bipolar transistor (IGBT), a silicon controlled rectifier (SCR), and at least one metal oxide semiconductor field effect transistor (MOSFET). Alternatively, ignition may be switched mechanically. The current may be interrupted following ignition in order to optimize the output hydrino generated energy relative to the input ignition energy. The ignition system may comprise a switch to allow controllable amounts of energy to flow into the fuel to cause detonation and turn off the power during the phase wherein plasma is generated. In an embodiment, the source of electrical power to deliver a short burst of high-current electrical energy comprises at least one of the following:

a voltage selected to cause a high AC, DC, or an AC-DC mixture of current that is in the range of at least one of 100 A to 1,000,000 A, 1 kA to 100,000 A, 10 kA to 50 kA;

a DC or peak AC current density in the range of at least one of 100 A/cm$^2$ to 1,000,000 A/cm$^2$, 1000 A/cm$^2$ to 100,000 A/cm$^2$, and 2000 A/cm$^2$ to 50,000 A/cm$^2$;

wherein the voltage is determined by the conductivity of the solid fuel wherein the voltage is given by the desired current times the resistance of the solid fuel sample;

the DC or peak AC voltage is in the range of at least one of 0.1 V to 500 kV, 0.1 V to 100 kV, and 1 V to 50 kV, and the AC frequency is in range of at least one of 0.1 Hz to 10 GHz, 1 Hz to 1 MHz, 10 Hz to 100 kHz, and 100 Hz to 10 kHz.

The output power of the SF-CIHT cell may comprise thermal and photovoltaic-convertible light power. In an embodiment, the light to electricity converter may comprise one that exploits at least one of the photovoltaic effect, the thermionic effect, and the photoelectron effect. The power converter may be a direct power converter that converts the kinetic energy of high-kinetic-energy electrons into electricity. In an embodiment, the power of the SF-CIHT cell may be at least partially in the form of thermal energy or may be at least partially converted into thermal energy. The electricity power converter may comprise a thermionic power converter. An exemplary thermionic cathode may comprise scandium-doped tungsten. The cell may exploit the photon-enhanced thermionic emission (PETE) wherein the photo-effect enhances electron emission by lifting the electron energy in a semiconductor emitter across the bandgap into the conduction band from which the electrons are thermally emitted. In an embodiment, the SF-CIHT cell may comprise an absorber of light such as at least one of extreme ultraviolet (EUV), ultraviolet (UV), visible, and near infrared light. The absorber may be outside if the cell. For example, it may be outside of the window of the PV converter 26a. The absorber may become elevated in temperature as a result of the absorption. The absorber temperature may be in the range of about 500 °C to 4000 °C. The heat may be input to a thermophotovoltaic or thermionic cell. Thermoelectric and heat engines such as Stirling, Rankine, Brayton, and other heat engines known in the art are within the scope of the disclosure.

At least one first light to electricity converter such as one that exploits at least one of the photovoltaic effect, the thermionic effect, and the photoelectron effect of a plurality of converters may be selective for a first portion of the electromagnetic spectrum and transparent to at least a second portion of the electromagnetic spectrum. The first portion may be converted to electricity in the corresponding first converter, and the second portion for which the first converter is non-selective may propagate to another, second converter that is selective for at least a portion of the propagated second portion of electromagnetic spectrum.

In embodiment, the SF-CIHT cell or generator also referred to as the SunCell® shown in FIGURES 2I10 to 2I43 comprises six fundamental low-maintenance systems, some having no moving parts and capable of operating for long duration: (i) a start-up inductively coupled heater comprising a power supply 5m, leads 5p, and antenna coils 5f and 5o to first melt silver or silver-copper alloy to comprise the molten metal or melt and optionally an electrode electromagnetic pump comprising magnets 8c to initially direct the ignition plasma stream; (ii) a fuel injector such as one comprising a hydrogen supply such as a hydrogen permeation supply through the blackbody radiator wherein the hydrogen may be derived from water by electrolysis, and an injection system comprising an electromagnetic pump 5k to inject molten silver or molten silver-copper alloy and a source of oxygen such as an oxide such as $LiVO_3$ or another oxide of the disclosure, and alternatively a gas injector 5z1 to inject at least one of water vapor and hydrogen gas; (iii) an ignition system to produce a low-voltage, high current flow across a pair of electrodes 8 into which the molten metal, hydrogen, and oxide, or molten metal and at least one of $H_2O$ and hydrogen gases are injected to form a brilliant light-emitting plasma; (iv) a blackbody radiator heated to incandescent temperature by the plasma; (v) a light to electricity converter 26a comprising so-called concentrator photovoltaic cells 15 that receive light from the blackbody radiator and operate at a high light intensity such as over one thousand Suns; and (vi) a fuel recovery and a thermal management system 31 that causes the molten metal to return to the injection system following ignition. In another, embodiment, the light from the ignition plasma may directly irradiate the PV converter 26a to be converted to electricity.

In an embodiment, the plasma emits a significant portion of the optical power and energy as EUV and UV light. The pressure may be reduced by maintaining a vacuum in the reaction chamber, cell 1, to maintain the plasma at condition of being less optically thick to decease the attenuation of the short wavelength light. In an embodiment, the light to electricity converter comprises the photovoltaic converter of the disclosure comprising photovoltaic (PV) cells that are responsive to a substantial wavelength region of the light emitted from the cell such as that corresponding to at least 10% of the optical power output. In an embodiment, the fuel may comprise silver shot having at least one of trapped hydrogen and trapped $H_2O$. The light emission may comprise predominantly ultraviolet light such as light in the wavelength region of about 120 nm to 300 nm. The PV cell may response to at least a portion of the wavelength region of about 120 nm to 300 nm. The PV cell may comprise a group III nitride such as at least one of InGaN, GaN, and AlGaN. In an embodiment, the PV cell comprises SiC. In an embodiment, the PV cell may comprise a plurality of junctions. The junctions may be layered in series. In another embodiment, the junctions are independent or electrically parallel. The independent junctions may be mechanically stacked or wafer bonded. An exemplary multi-junction PV cell comprises at least two junctions comprising n-p doped semiconductor such as a plurality from the group of InGaN, GaN, and AlGaN. The n dopant of GaN may comprise oxygen, and the p dopant may comprise Mg. An exemplary triple junction cell may comprise InGaN//GaN//AlGaN wherein // may refer to an isolating transparent wafer bond layer or mechanical stacking. The PV may be run at high light intensity equivalent to that of concentrator photovoltaic (CPV). The substrate may be at least one of sapphire, Si, SiC, and GaN wherein the latter two provide the beast lattice matching for CPV applications. Layers may be deposited using metalorganic vapor phase epitaxy (MOVPE) methods known in the art. The cells may be cooled by cold plates such as those used in CPV or diode lasers such as commercial GaN diode lasers. The grid contact may be mounted on the front and back surfaces of the cell as in the case of CPV cells. In an embodiment, the PV converter may have a protective window that is substantially transparent to the light to which it is responsive. The window may be at least 10% transparent to the responsive light. The window may be transparent to UV light. The window may comprise a coating such as a UV transparent coating on the PV cells. The coating may comprise may comprise the material of UV windows of the disclosure such as a sapphire or $MgF_2$ window. Other suitable windows comprise LiF and $CaF_2$. The coating may be applied by deposition such as vapor deposition.

The cells of the PV converter 26a may comprise a photonic design that forces the emitter and cell single modes to cross resonantly couple and impedance-match just above the semiconductor bandgap, creating there a 'squeezed' narrowband near-field emission spectrum. Specifically, exemplary PV cells may comprise surface-plasmon-polariton thermal emitters and silver-backed semiconductor-thin-film photovoltaic cells.

In an embodiment, of the generator comprising at least one of an electromagnetic pump and an electrode electromagnetic pump to pump injected molten metal referred to herein as shot, melt, or molten metal, the shot experiences a Lorentz force directed perpendicularly to the magnetic field and to the direction of the current flowing across the armature comprising the shot. The Lorentz force **F** that is parallel to the rails is given by

$$\mathbf{F} = L\mathbf{i} \times \mathbf{B} \tag{32}$$

where $i$ is the current, **L** is the path length of the current through the shot or pellet between the rails, and **B** is the magnetic flux. Exemplary shot comprises molten silver spheres or droplets having entrapped gases such as at least one of $H_2$ and $H_2O$.

The second vessel 5c may comprise at least one manifold that supplies at least one of $H_2$ and gaseous $H_2O$ to the melt such as hydrogen manifold and input lines 5w and steam manifold and input lines 5x as the melt flows towards a nozzle 5q at the end of the pipe-like second vessel 5c directed at the injection site. In an embodiment, the $H_2$ and $H_2O$ injection system comprises gas lines, manifolds, pressure gauges, regulators, flow meters, and injectors and may further comprise a $H_2$-steam mixer and regulator in case that both gas are injected with a common manifold. In an embodiment, liquid water may be injected into the melt. The injection may be achieved by at least one of a pump such as a peristaltic pump and gravity feed. In an embodiment, the metal of the fuel may comprise a copper-silver alloy. $H_2$ gas injected into the melt through hydrogen manifold and input lines 5w may be used to reduce any oxide of the alloy such as CuO formed during the operation of the cell. Additionally, oxide of the alloy may be reduced in situ in the cell by addition of hydrogen gas that may be intermittent. Oxide of the alloy may also be reduced by hydrogen treatment outside of the cell.

The pelletizer 5a may be heated with at least one heater such as at least one inductively coupled heater. In an embodiment, the inductively couple heater may comprise and inductively coupled heater power supply 5m. The pelletizer 5a may be heated with a first inductively coupled heater coil 5f that may extend along the first vessel 5b from its inlet to the inlet of the electromagnetic pump 5k. The first inductively couple heater comprising coil 5f may be circumferential to the first vessel 5b having crucible 5d and insulation 5e. The heater may further comprise a second inductively coupled heater coil 5o that may extend along the second vessel 5c from the outlet of the electromagnetic pump 5k to the nozzle 5q of the second vessel 5c. The second inductively couple heater comprising coil 5o may be circumferential to the second vessel 5c having crucible 5d and insulation 5e. The corresponding first and second heating coils define a first and second heating section or zone. The first section may be heated to a temperature that is at least above the melting point of silver (962 °C) to form the melt that is pumped. The vessel and coil may comprise a high Q cavity further comprising the recovered product melt. In an embodiment, a gas such as at least one of $H_2O$ and $H_2$ may be injected to increase the resistivity of the melt to improve the coupling of the radiation from the inductively coupled heater with the melt. The second section may be superheated relative to the first. The temperature of the melt in the second section may be maintained in at least one range of about 965 °C to 3000 °C, 965 °C to 2000 °C, and 965 °C to 1300 °C. An optical pyrometer, thermistor, or thermocouple may be used to monitor the temperature of the melt. In an embodiment, power dissipated in the pump 5k due to mechanisms such as resistive heating may contribute to heating the melt. The superheating may increase the absorption of at least one treatment gas such as at least one of $H_2$ and steam in the melt.

In an embodiment, the pelletizer may comprise a plurality of heaters such as inductively coupled heaters each comprising an antenna such as a coil antenna and an inductively coupled heater power supply 5m to supply electromagnetic power to heater coils 5f and 5o through inductively coupled heater leads 5p. The inductively coupled heater power supply 5m may comprise a shared power supply to the plurality of antennas wherein the power to each antenna may be adjusted by a circuit such as a matching or tuning circuit. In another embodiment, each antenna may be driven by its independent power supply. In the case, of shared or separate power supplies, each heater may further comprise a controller of the power delivered by each coil. In another embodiment, the inductively coupled heater comprises one antenna driven by one power supply wherein the antenna is designed to selectively deliver a desired proportion of the power to each of the first heating section and second heating section. The heating power may be divided between the two sections according partition means such as fixed differences in (i) antenna gain achieved by different numbers coil turns for example, (ii) variable, controllable antenna gain, (iii) switches, and (iv) matching or tuning networks. The two coil sections may be connected by additional inductively coupled heater leads 5p between the sections that may bridge the electromagnetic pump 5k. The leads may be designed to transmit rather than dissipate power such that the heating power is selectively delivered and dissipated into the fuel melt by the coils 5f and 5o.

The sections heated by inductively coupled heaters may each comprise a crucible comprising material transparent to the radiation such as RF radiation of the inductively coupled heater. Exemplary materials are silicon dioxide such as quartz or silica, zirconia, and sapphire, alumina, $MgF_2$, silicon nitride, and graphite. Each crucible may be insulated with high temperature insulation 5e that is also transparent to the radiation of the inductively coupled heater. The portion of the second vessel 5c that is in contact with the electromagnetic pump 5k may comprise a conductor and a magnetic-field-permeable material such that the applied current and magnetic field of the pump 5k may pass through the melt. The RF transparent sections may be connected to the conductive and magnetic-field-permeable section by joints such as ones comprising a flange and a gasket. The joint may comprise a clamp such as a C-clamp, clamshell type, bolted fittings, or tightened wires. The joints may operate at high temperature and may be stable to molten fuel. An exemplary gasket is a graphite gasket. Alternatively, the gaskets may comprise a wet seal type common in molten fuel cells wherein the fuel is liquid in the vessel and is solid at the perimeter of the joints or unions of the vessel with the pump wherein the temperature is below the melting point. The union may comprise at least one of the penetration for the pipe bubbler and the valve.

In the case that the pump is of a type suitable for a common crucible and tube material and the pump tube, the pump tube through the electromagnetic pump 5k may comprise a material that is transparent to the radiation of the inductively coupled heater. The material of the pump tube may be the same material as that of at least one of the first vessel and the second vessel. The joint may comprise a ceramic-to-ceramic joint wherein ceramic comprises a material that is transparent to the radiation of the inductively coupled heater such as at least one of silica, quartz, alumina, sapphire, zirconia, $MgF_2$, and silicon nitride. Alternatively, in the case that the pump is of a type suitable for a common crucible and tube material and the pump tube comprises the common or the same material as at least one of the vessels, the joint may be eliminated such that there is continuity of the vessel through the pump. An exemplary material of at least one of the vessels and the pump tube of an exemplary induction-type or mechanical pump is silicon nitride. In another embodiment, at least one component from the group of the first vessel, the second vessel, the manifold section of the second vessel, and the pump tube may be comprise a material that absorbs the radiation of the inductively coupled heater such as a metal or graphite such that the fuel metal contained in the component is heated indirectly. The heater may heat the component, and heat transfer from the heated component may secondarily heat the fuel metal inside of the component.

In a specific exemplary embodiment, the first vessel 5b comprises an RF transparent material such as quartz. The quartz section of the first vessel is connected to a metal elbow such as a high-temperature stainless steel (SS) elbow that connects to a metal pipe tube such as a high-temperature stainless steel (SS) pipe tube of the electromagnetic pump 5k. The tube connects to the second vessel 5c that comprises a metal elbow such as a high-temperature stainless steel (SS) elbow that further connects to an RF transparent material such as quartz. The quartz tube ends in the nozzle 5q. The second vessel may further comprise an S or C-shaped section that may penetrate the cell and align the nozzle 5q with the gap 8g of the electrodes 8. The each joint between sections that connect may comprise a clamp and a gasket such as a graphite gasket. In an embodiment, the pelletizer comprises a short heating section 5b such as an RF transparent section, a metal joint transition to the pump tube, the electromagnetic pump 5k that may be in a vertical section of the vessel 5b, a transition to an elbow such as a metal elbow having a metal fitting or penetration for a pipe bubbler 5z that runs through a second longer RF transparent heating section 5c that ends in the nozzle 5q. The RF transparent sections comprising the first and second vessels may comprise quartz, the quartz to metal joints may comprise quartz and metal lips on the joined sections held together with clamps. An exemplary pipe tube size and vessel size are 1 cm ID and 2 cm ID, respectively. The pipe tube may comprise a high temperature stainless steel, and the RF transparent vessel may comprise quartz.

In another embodiment, at least one of the pelletizer components such as the melt conduit components and gas delivery component comprising at least one of the first vessel 5b, second vessel 5c, pump tube, manifold section of the second vessel 5c (FIGURE 2I11), and pipe bubbler 5z (FIGURE 2I13) may comprise a material that absorbs at least some power from the inductively coupled heater(s) and indirectly heats the fuel melt such as silver or Ag-Cu alloy melt. In the latter case, the vessel walls such as quartz, silica, sapphire, zirconia, alumina, or ceramic walls may be transparent to the RF power of the inductively coupled heater. The pelletizer components may comprise high temperature stainless steel, niobium, nickel, chromium-molybdenum steel such as modified 9 Cr-1Mo-V (P91), 21/4Cr-1Mo steel (P22), molybdenum, tungsten, H242, TZM, titanium, chromium, cobalt, tungsten carbide, and other metals and alloys that have a melting point higher than that of the fuel melt. The metal may have a high efficiency for absorbing the radiation from the heater. The components such as the vessels may be narrow to effectively heat the fuel melt indirectly. Exemplary vessels are tubes having tube sizes of the 1/4 inch to 3/8 inch ID. The melt contact surfaces of the components such as the vessels, pump tube, and pipe bubbler may be pre-oxidized by means such as heating in an oxygen atmosphere in order to form a passivation layer to prevent reaction with injected steam or water that becomes steam. In an embodiment, the walls of the component may be wetted with the melt such as silver melt that protects the walls form reaction with water. In this case, water reactive metals may be used for the pelletizer component. The joints may be welds, Swagelok, and others known in the art for connecting metal parts. The parts may be made of the same materials as the pump tube such as at least one of zirconium, niobium, titanium, tantalum, other refractory metal, and high temperature stainless steel such as at least one of Haynes 188, Haynes 230 and Haynes HR-160.

In an embodiment, at least one vessel of the pelletizer that is heated by at least one of the inductively coupled heaters such as 5f and 5o comprises a material such as a metal that absorbs the radiated power of the inductively coupled heater and indirectly heats the metal such as silver that is contained in the vessel. Exemplary metals that are very efficiency at absorbing the RF radiation of the inductively coupled heater are tantalum, niobium, ferrous metals, and chromoly metal. In an embodiment, at least one vessel of the pelletizer comprises tubing comprising a material that efficiently absorbs the radiation from the inductively coupled heater such as tantalum, niobium, or a ferrous metal such as chromoly. The tubing may be coiled to be permissive of heating a longer length section within a coil of an inductively coupled heater. The tubing may have a small diameter such as in the range of about 1 mm to 10 mm to effectively indirectly heat the metal inside of the tubing. The tubing such as polished or electro-polished tubing may have a low emissivity. The tubing may be wrapped with insulation such as insulation substantially transparent to the radiation of the inductively coupled heater. The insulation may be effective at minimizing the conductive and convective heat losses and may further at least partially reflect infrared radiation from the tubing to decrease radiative power losses. In an embodiment, the pelletizer may further comprise a vacuum chamber or a cell extension that provides a vacuum chamber around at least of portion of the pelletizer. The vacuum about the vessels may decrease conductive and convective heat losses and lower the required heater power to maintain the melt at the desired temperatures. The vacuum may further decrease oxidation of the tubing that maintains its desired low emissivity.

In the gas treatment section comprising gas manifolds, the vessel wall may be comprised of a material that has a diminished to low permeability to hydrogen and is capable of a high temperature. Suitable materials are refractory metals such as tungsten and molybdenum and nitride bonded silicon nitride tube. The vessel may be lined with insulation in the absence of the inductively couple heater in the manifold section. This section may be insulated and heated by the contiguous section of the second vessel from which the melt flows into this section. If necessary, in addition to insulation, the temperature may be maintained by an inductively coupled heater that heats the metal wall and indirectly heats the melt. Alternatively, another type of heater such as a resistive heater may be used. In an embodiment, the manifold section further comprises a mixer to increase the rate of incorporation $H_2$ and gaseous $H_2O$ into the melt. The mixer may comprise an electromagnetic type such as one that utilizes at least one of current and magnetic fields to produce eddy currents in the melt or mechanical type that comprises a moving stirrer blade or impeller. The $H_2$ and gaseous $H_2O$ become incorporated into the melt to form molten fuel that is ejected from a nozzle 5q at the ignition site. The pelletizer 5a further comprises a source of $H_2$ and $H_2O$ such as gas tanks and lines 5u and 5v that connect to the manifolds 5w and 5x, respectively. Alternatively, $H_2O$ is provided as steam by $H_2O$ tank, steam generator, and steam line 5v. The hydrogen gas may be provided by the electrolysis of water using electricity generated by the generator.

The ejection of elevated pressure melt from the nozzle 5q achieves injection of fuel into the electrodes wherein the elevated pressure is produced by the at least one electromagnetic pump 5k. The pressure may be increased by controlling the cross sectional area of the ejection nozzle 5q relative to that of the melt vessel 5c. The nozzle orifice may be adjustable and controllable. Sensors such as conductivity or optical sensors such as infrared sensors and a computer may control the pressure of pump 5k and the injection rate. The nozzle 5q may further comprise a valve such as one of the disclosure that may provide additional injection control. The valve may comprise a needle type with the nozzle opening as the valve seat. In an embodiment of the SF-CIHT cell comprising an electromagnetic pump 5k, a fast controller such as a fast current controller of the electromagnetic pump serves as a valve since the pressure produced by the pump is eliminated at essentially the same time scale as the current according to the Lorentz force (Eq. (32)) that depends on the current. The shot size may be controlled by controlling at least one of the nozzle size, the pressure across the nozzle orifice, vibration applied to the nozzle with a vibrator such as an electromagnetic or piezoelectric vibrator, and the temperature, viscosity and surface tension of the melt. The movement of the shots may be sensed with a sensor such as an optical sensor such as an infrared sensor. The position data may be feedback into at least one of the controller of the injection and the ignition to synchronize the flow of fuel into the ignition process. The nozzle 5q may be surrounded by a Faraday cage to prevent the RF field from inducing eddy currents in the shot and causing the shot to deviate from a straight course into the electrode gap where ignition occurs.

The shot formed by surface tension following ejection from the nozzle 5q may radiate heat and cool. The flight distance from the nozzle 5q to the point of ignition between the electrodes 8 may be sufficient such that the metal forms spheres, and each sphere may cool sufficiently for a shell to form on the outside. To enhance the cooling rate to assist in the formation of at least one of spherical shot and spherical shot with an outer solid shell, the ejected molten fuel stream may be sprayed with water such as water droplets with a sprayer such as one of the disclosure. An exemplary water sprayer is Fog Buster Model #10110, U.S. Patent No. 5,390,854. Excess water may be condensed with a chiller to maintain a rough vacuum in the cell. In an embodiment, the sprayer and water condenser or chiller may be replaced with a nozzle cooler 5s that may cool the shot 5t just as it is ejected. The cooling may comprise at least one of a heat sink such as one comprising a thermal mass that radiates heat, a heat exchanger on the nozzle with lines 31d and 31e to a chiller, and a chiller 31a, and a Peltier chiller on the nozzle 5s. The melt flowing into the nozzle section of the pelletizer 5a may have a substantially elevated temperature in order to absorb applied gases such as $H_2$ and $H_2O$ in the upstream gas application section. The melt temperature may be quenched with the nozzle cooling. The temperature may be lowered to just above the melting point just as the melt is ejected. The lower-temperature melt may form spheres, and each may subsequently form a solid shell with radiative cooling as it travels from the nozzle to the electrodes. Using a rough, high capacity cooling means such the heat sinking and the heat exchanger and chiller, the temperature at ejection may be established to within a rough temperature range such as to within about 50 °C of the melting point of the melt. A more precise temperature near the desired temperature such as to within about 1 to 5 °C of the melting point of the melt may be achieved with a highly controllable, low capacity cooler such as the Peltier chiller.

The pelletizer 5a may further comprise a chiller to cool the inductively coupled heater which may comprise a separate chiller or the same chiller as at least one of the nozzle chiller 31a and power converter chiller such as the PV converter chiller 31. The ignition system comprising the electrodes and bus bars may also be cooled with a heat exchanger that rejects the heat to a chiller that may comprise one such as 31 that also cools another system such as the PV converter.

The ignition of the fuel forms hydrinos and oxygen that may be pumped off with a vacuum pump 13a such as a root pump, a scroll pump, a cryopump, a diaphragm pump, a dry vacuum root pump, and others known to those skilled in the art. Excess water and hydrogen may be recovered and recirculated. The water may be removed by differential pumping. In an embodiment, hydrogen and oxygen formed in the plasma may be removed by pumping and other means of the disclosure such as by the separatory means. The removal of the hydrogen and oxygen may be used as a means to remove excess water. In the case that an atmosphere comprising water is maintained at the electrodes, excess water may be removed by pumping. The water may be condensed at a chiller in the cell 26 or connected with the inside of the cell 26 and reused. Hydrogen may be recovered with a scrubber such as a hydrogen storage material. Alternatively, it may be pumped off as well using pump 13a, for example. The pressure may be maintained in a pressure range that prevents at least one of excessive attenuation of the light emitted by the cell and allows the ignition particles to fall substantially unimpeded under the influence of gravity. The pressure may be maintained in at least one pressure range of about 1 nanoTorr to 100 atm, 0.1 milliTorr to 1 atm and 10 milliTorr to 2 Torr.

The generator may comprise an electrostatic precipitator (ESP) that may comprise a high voltage power supply that may be run off of at least one of the photovoltaic (PV) converter and the power conditioner of the PV converter power. The power supply may supply power between ESP electrodes to cause the electrostatic precipitation and recovery of ignition products. In an embodiment, the ESP precipitator further comprises a set of electrodes such as a central electrode such as a wire electrode 88 (FIGURE 2I23) of a polarity and at least one counter electrode 89 of opposite polarity.

Other embodiments are anticipated by the disclosure by mixing and matching aspects of the present embodiments of the disclosure such as those regarding recovery systems, injection systems, and ignition systems. For example, the shot or pellets may drop directly into the electrodes from nozzle 5q from above the electrodes (FIGURE 2I17). The ignition products may flow into the pelletizer that may be above or below the electrodes. Metal may be pumped above the electrodes, and the shot may be dropped or injected into the electrodes. In another embodiment, the ignition product may be transported to the pelletizer that may be above the electrodes. The PV panels may be oriented to maximize the capture of the light wherein other positions than that shown for the photovoltaic converter 26a are anticipated and can be determined by one skilled in the art with routine knowledge. The same applies to the relative orientation of other systems and combinations of systems of the disclosure.

In an embodiment shown in FIGURES 2I10-2I23, the ignition system comprises a pair of stationary electrodes 8 having a gap 8g between them that establishes an open circuit, a source of electrical power to cause ignition of the fuel 2, and a set of bus bars 9 and 10 connecting the source of electrical power 2 to the pair of electrodes 8. At least one of the electrodes and bus bar may be cooled by a cooling system of the ignition system. The gap 8g may be filled with conductive fuel with the concomitant closing of the circuit by the injection of molten fuel from the injection system such as that comprising an electromagnetic pump 5k and a nozzle 5q. The injected molten fuel may comprise spherical shots 5t that may be at least one of molten, partially molten, and molten with a solidified shell. The solid fuel may be delivered as a stream of shots, a continuous stream, or a combination of shot and a stream. The molten fuel feed to the electrodes may further comprise a continuous steam or intermittent periods of shots and continuous steam. The source of electricity 2 may comprise at least one capacitor such as a bank of capacitors charged by the light to electricity converter such as the PV or PE converter. The charge circuit may be in parallel with the source of electricity 2 and the electrodes 8. In another embodiment, the charging circuit may be in series with the source of electricity 2 and the rollers 2 wherein a switch connects the charging circuit to the source of electricity when the electrodes are in an open circuit state. The voltage may be in the range of about 0.1 V to 10 V. The desired maximum voltage may be achieved by connecting capacitors in series. A voltage regulator may control the maximum charging voltage. The peak current may be in the range of about 100 A to 40 kA. The desired maximum current may be achieved by connecting capacitors in parallel with a desired voltage achieved by parallel sets connected in series. The ignition circuit may comprise a surge protector to protect the ignition system against voltage surges created during ignition. An exemplary surge protector may comprise at least one capacitor and one diode such as Vishay diode (VS-UFB130FA20). The voltage and current are selected to achieve the ignition to produce the maximum light emission in the region that the power converter is selective while minimizing the input energy. An exemplary source of electrical power comprises two capacitors in series (Maxwell Technologies K2 Ultracapacitor 2.85V/3400F) to provide about 5 to 6 V and 2500 A to 10,000 A. Another exemplary source of electrical power comprises four capacitors in series (Maxwell Technologies K2 Ultracapacitor 2.85V/3400F) to provide about 9.5 V and about 4 kA to 10 kA. Another exemplary source of electrical power comprises two parallel sets of capacitors (Maxwell Technologies K2 Ultracapacitor 2.85V/3400F) with three in series to provide about 8.5 V and about 4 kA to 10 kA and three parallel sets with two in series to provide about 5 to 6 V and about 4 kA to 10 kA. An exemplary source of electrical power comprises two parallel sets of two capacitors in series (Maxwell Technologies K2 Ultracapacitor 2.85V/3400F) to provide about 5 to 6 V and 2500 A to 10,000 A. An exemplary source of electrical power comprises at least one capacitor bank comprising 24 capacitors (Maxwell Technologies K2 Ultracapacitor 2.85V/3400F) comprising four parallel sets of six in series to provide about 16 to 18 V and 8000 A to 14000 A per bank. The banks may be connected in at least one of series and parallel. Alternatively, the bank may be expanded. An exemplary capacitor bank comprising 48 capacitors (Maxwell Technologies K2 Ultracapacitor 2.85V/3400F) comprising four parallel sets of twelve in series to provide about 30 to 40 V and 15000 A to 25000 A. Higher current may be achieved with higher voltage capacitors such as custom 3400 F Maxwell capacitors with a higher voltage than 2.85 V each that are connected in at least one of series and parallel to achieve the desired voltage and current.

In an embodiment shown in FIGURES 2I13 and 2I14, the manifold and injectors comprise a pipe bubbler 5z running longitudinally inside of at least one of the first vessel 5b and the second vessel 5c. In an embodiment, the pipe bubbler 5z comprises a closed channel or conduit for gas and at least one perforation along its length to delivery gas into the fuel melt surrounding it. In an embodiment, the pipe bubbler has perforations or ports distributed over its surface along its length to deliver gas over its surface along its length. The pipe bubbler may be centerline inside at least one vessel. The centerline position may be maintained by spoke supports along the pipe bubbler. At its input end, the pipe bubbler may enter the inside of the first vessel 5b at the first vessel's open inlet and may run through at least one of the first vessel 5b and the second vessel 5c such that it ends before the nozzle 5q (FIGURE 2I13). In another embodiment shown in FIGURE 2I14 that avoids the pipe bubbler running through an electromagnetic pump 5k, the pipe bubbler runs in at least one of the first or second vessel without running through the pump 5k. The pipe bubbler 5z may make a penetration into the vessel at a wall region such as at a joint or elbow such that of the second vessel 5c (FIGURE 2I16) and may terminate before entering a pump 5k (FIGURE 2I14). The pipe bubbler may be supplied with at least one hydrogen gas line, liquid or gaseous water line, and a common hydrogen and liquid or gaseous water line such as a line 5y from a manifold connected to a source of at least one of $H_2$ and $H_2O$ and 5v and 5u.

In an embodiment, at least one of the first vessel 5b and the second vessel 5c may comprise a coil having a coiled pipe bubbler 5z that may increase the residence time to inject at least one of $H_2O$ and $H_2$ into the fuel melt. At least one of the pelletizer components such as the vessels 5b and 5c, the pump tube, and the pipe bubbler 5z may be comprised of a metal wherein the fuel melt may be heated indirectly. The pipe bubbler may be positioned inside of the vessels with setscrews through the walls of the vessels. For example, the pipe bubbler centering may be achieved by the adjusting the relative protrusion length of each of three screws set 120 ° apart around the circumference of the vessel.

The pelletizer may further comprise a chamber that receives melt from a vessel such as the first vessel. The chamber may comprise at least one bubbler tube such as a plurality of bubbler tubes in the chamber and may further comprise a manifold to feed the bubbler tubes. The water may be supplied to the chamber as steam to be incorporated into the melt such as molten silver. The steam may be preheated to at least the temperature of the chamber to avoid heat loss. The steam may be preheated by heat exchange from a heated section of the pelletizer such as the first vessel. The steam may be heated with a heater such as an inductively coupled heater. The at least one of steam and hydrogen treated melt such a molten silver may flow out of the chamber to the second vessel that may comprise tubing that may be heated with a heater such as an inductively coupled heater. The tubing may penetrate the cell wall and terminate in a nozzle 5q that injects the melt into the electrodes. The chamber may comprise a pump such as an electromagnetic pump in at least one of the chamber inlet and outlet.

In the case that the pipe bubbler attaches to both of the $H_2$ and $H_2O$ gas tanks, lines 5u and 5v, respectively, may attach to a gas mixer such as a manifold that then attaches to the pipe bubbler through a connecting pipe 5y (FIGURE 2I14). In another embodiment, the pipe bubbler may comprise a plurality of pipe bubblers. Each may be independently connected to a separate gas supply such as the $H_2$ and $H_2O$ gas tanks by lines 5u and 5v, respectively. The pipe bubbler may be comprise multiple sections that can be at least one of connected and disconnected during assembly and disassembly such as during fabrication and maintenance. The pipe bubbler may comprise suitable joints to achieve the connections. One first pipe bubbler section may serve to deliver gas into the melt up to the electromagnetic (EM) pump. A second pipe bubbler section may perform at least one of channel and deliver the gases along the EM pump section, and a third pipe bubbler section may deliver gases along the second vessel 5c. In another embodiment, the multi-section pipe bubbler comprises a first section inside the first vessel running though its inlet and along its length and a second pipe bubbler section inside of the second vessel 5c that terminates before the nozzle 5q. In an embodiment, the pipe bubbler may enter the vessel after the pump 5k such that the pressure from the injected gases does not cause the melt to reverse flow. The bubbler 5z may enter the vessel through a joining section such as an elbow that may connect dissimilar vessel materials such as metal and quartz (FIGURES 2I14 and 2I16) that are connected by joints 5b 1 of the disclosure. The inductively coupled heater may comprise two full coils. The first inductively coupled heater coil 5f heats the first vessel and the second inductively coupled heater coil 5o heats the second vessel 5c. The pipe bubbler may comprise a metal or alloy resistant to reaction with $H_2O$ at the operating temperature, capable to maintaining its integrity and avoiding silver alloy formation at the melt temperature. Suitable exemplary materials that lack $H_2O$ reactivity with sufficient melting points are at least one of the metals and alloys from the group of Cu, Ni, CuNi, Hastelloy C, Hastelloy X, Inconel, Incoloy, carbon steel, stainless steel, chromium-molybdenum steel such as modified 9Cr-1Mo-V (P91), 21/4Cr-1Mo steel (P22), Co, Ir, Fe, Mo, Os, Pd, Pt, Re, Rh, Ru, Tc, and W.

The pipe bubbler may be attached at the input end to at least one of the $H_2$ and $H_2O$ gas tanks by lines 5u and 5v, respectively. Alternatively, $H_2O$ is provided as steam by $H_2O$ tank, steam generator, and steam line 5v. In an embodiment, the pelletizer comprises a steam generator 5v for adding the $H_2O$ to the melt such as silver melt in the vessel such as at least one of 5b and 5c that may comprise quartz vessels. In an embodiment, the steam generator comprises a capillary wick system that has a heat gradient to create steam at one end, and wick water out of a reservoir from the opposite end. In an embodiment, the steam generator comprises a high surface area heated material such as a metal foam or mat such as ones comprising nickel or copper to provide boiling sites for the conversion of water from a $H_2O$ reservoir into steam for hydrating the shot. Other exemplary high surface area materials comprise ceramics such as zeolite, silica, and alumina. The steam generator may be run under pressure to increase the steam temperature and heat content. The pressure may be obtained by controlling the size of the steam-flow outlet to control a restriction to flow such that steam is generated at a rate relative to the restricted output flow to cause a desired steam pressure. The line may comprise a pressure reducer. The steam generator may comprise a condenser to condense water droplets and low-temperature steam. The condensed water may reflux back into the cell. The steam may be flowed through the pipe bubbler 5z and injected into the melt such as molten silver that is injected into the electrodes 8. In another embodiment such as one wherein the gaseous water is injected into the plasma by a gas injector of the disclosure, the pressure may be maintained low such as in at least one range of about 0.001 Torr to 760 Torr, 0.01 Tor to 400 Torr, and 0.1 Torr to 100 Torr. At least one of low heat, chilling liquid water, maintaining ice, and cooling ice may be applied to the water in a reservoir or tank such as 5v operated under reduced pressure to form low-pressure gaseous water. The chilling and ice may be maintained with a chiller such as 31 and 31a. The reduced pressure may be provided by the vacuum pump 13a. In an embodiment, the wt% of water in the silver may be optimal for the hydrino reaction wherein the rate increases with $H_2O$ wt% starting from pure metal plasma, reaches a maximum rate and hydrino yield at the optimal wt%, and may decrease with further $H_2O$ plasma content due to competing processes such as hydrogen bonding of HOH to lower the nascent HOH concentration and recombination of atomic H to lower the atomic H concentration. In an embodiment, the $H_2O$ weight percentage (wt%) of the ignition plasma that comprises the conductive matrix such as a metal such as silver, silver-copper alloy, and copper is in at least one wt% range of about $10^{-10}$ to 25, $10^{-10}$ to 10, $10^{-10}$ to 5, $10^{-10}$ to 1, $10^{-10}$ to $10^{-1}$, $10^{-10}$ to $10^{-2}$, $10^{-10}$ to $10^{-3}$, $10^{-10}$ to $10^{-4}$, $10^{-10}$ to $10^{-5}$, $10^{-10}$ to $10^{-6}$, $10^{-10}$ to $10^{-7}$, $10^{-10}$ to $10^{-8}$, $10^{-10}$ to $10^{-9}$, $10^{-9}$ to $10^{-1}$, $10^{-8}$ to $10^{-2}$, $10^{-1}$ to $10^{-2}$, $10^{-6}$ to $10^{-2}$, $10^{-5}$ to $10^{-2}$, $10^{-4}$ to $10^{-1}$, $10^{-4}$ to $10^{-2}$, $10^{-4}$ to $10^{-3}$, and $10^{-3}$ to $10^{-1}$. In an embodiment wherein the shot comprises copper alone or with another material such as a metal such as silver, the cell atmosphere may comprise hydrogen to react with any copper oxide that may form by reaction with oxygen formed in the cell. The hydrogen pressure may be in at least one range of about 1 mTorr to 1000 Torr, 10 mTorr to 100 Torr, and 100 mTorr to 10 Torr. The hydrogen pressure may be one that reacts with copper oxide at a rate that it forms or higher and below a pressure that significantly attenuates the UV light from the fuel ignition. The SF-CIHT generator may further comprise a hydrogen sensor and a controller to control the hydrogen pressure in the cell from a source such as 5u.

The stationary electrodes 8 of FIGURES 2I10-2I23 may be shaped to cause the plasma and consequently the light emitted for the plasma to be projected towards the PV converter 26a. The electrodes may be shaped such the molten fuel initially flows through a first electrode section or region 8i (FIGURE 2I12) comprising a neck or narrower gap to second electrode section or region 8j having a broader gap. Ignition preferentially occurs in the second section 8j such that plasma expands from the second electrode section 8j towards the PV converter 26a. The necked section may create a Venturi effect to cause the rapid flow of the molten fuel to the second electrode section. In an embodiment, the electrodes may comprise a shape to project the ignition event towards the PV converter, away from the direction of injection. Suitable exemplary shapes are a minimum energy surface, a pseudosphere, a conical cylinder, an upper sheet parabola, an upper half sheet hyperbola, an upper half sheet catenoid, and an upper half sheet astroidal ellipsoid with the apex truncated as a suitable inlet comprising the first section. The electrodes may comprise a surface in three dimensions with a split that may be filled with insulation 8h between half sections (FIGURE 2I12) to comprise the two separated electrodes 8 having an open circuit gap 8g. The open circuit is closed by injection of the melt shot causing contact across the conductive parts of the geometric form comprising the gap 8g. In another embodiment, the electrodes may comprise a rectangular section of the three-dimensional surface that is split. In either embodiment, the split 8h may be formed by machining away material such that the geometric form remains except for the missing material comprising the split 8h. In an embodiment, the velocity of the shot may be controlled to be sufficient to cause the plasma and emitted light to be in region 81 directed to the PV converter 26a. The power of the electromagnetic pump 5k and nozzle orifice size may be controlled to control the pressure at the nozzle 5q and the velocity of the shot.

Control of the site of ignition on the electrode surface may be used to control the region in the cell and direction of the plasma expansion and light emission. In an embodiment, the electrode 8 is shaped to mold the melt shot 5t to a geometric form having a focus region with reduced resistance to cause the current to concentrate in the focus region to selectively cause concentrated ignition in the focus region. In an embodiment, the selective concentrated ignition causes at least one of the plasma expansion and light emission into a region of the cell 81 directed towards the PV converter 26a. In an embodiment, the electrodes 8 may be partially electrically conductive and partially electrically insulated. The insulated section 8i may guide the fuel from the site of injection 8k into the conductive section 8j to be ignited such that the plasma preferentially expands into the region 8l towards the PV converter 26a. In an embodiment, the high current that causes ignition is delayed in time from the time that the melted shot initially completes the electrical connection between the electrodes. The delay may allow the shot melt to travel to a part of the electrodes 8j on the opposite side of the injection site 8i. The subsequent ignition on the opposite side 8j may direct the plasma and light towards the PV converter 26a. The delay circuit may comprise at least one of an inductor and a delay line.

In an embodiment, the electrodes may comprise a minimum energy surface such as a minimum energy surface, a pseudosphere, a conical cylinder, an upper sheet parabola, an upper half sheet hyperbola, an upper half sheet catenoid, and an upper half sheet astroidal ellipsoid with the apex truncated. "Dud" melt being absent hydrogen and $H_2O$ such that it is not capable of undergo ignition may be injected into the electrodes. The melt may distribute over the electrode surface according to the minimum energy. The distribution may restore the original electrode surface to repair any ignition damage. The system may further comprise a tool to reform the electrode surface to the original shape following the deposition of melt. The tool may be one of the disclosure such as a mechanical tool such as a mill or a grinder or an electrical tool such as an electrical discharge machining (EDM) tool. The fuel metal may be removed with a mechanical tool such as a wiper, blade, or knife that may be moved by an electric motor controlled by a controller.

In an embodiment, the electrodes may comprise a metal such as highly electrically conductive metal such as copper that is different from the conductive matrix of the fuel such as silver. Excess adherence of fuel metal such as silver to the electrodes may be removed by heating the electrode to a temperature that exceeds the melting point of the fuel metal but is below the melting point of the electrode metal. Maintaining the temperature below the melting point of the electrode may also prevent alloy formation of the electrode and fuel metals such as Cu and Ag. In this case, the excess metal may flow off of the electrodes to restore the original form. The excess metal may flow into the pelletizer to be recycled. The electrode heating may be achieved by using the heat from at least one of the ignition process using power from the source of electrical power 2 and the power from the formation of hydrinos. The heating may be achieved by reducing any cooling of the electrodes by the electrode cooling system.

In an embodiment, the electrodes may comprise a conductive material that has a higher melting point than the melting point of the shot. Exemplary materials are at least one of the metals and alloys from the group of WC, TaW, CuNi, Hastelloy C, Hastelloy X, Inconel, Incoloy, carbon steel, stainless steel, chromium-molybdenum steel such as modified 9Cr-1Mo-V (P91), 21/4Cr-1Mo steel (P22), Nd, Ac, Au, Sm, Cu, Pm, U, Mn, doped Be, Gd, Cm, Tb, doped Si, Dy, Ni, Ho, Co, Er, Y, Fe, Sc, Tm, Pd, Pa, Lu, Ti, Pt, Zr, Cr, V, Rh, Hf, Tc, Ru, doped B, Ir, Nb, Mo, Ta, Os, Re, W, and C and alloys. The electrodes may be operated at a temperature above the melting point of the shot such that the shot flows off the electrodes rather than solidifying and blocking the gap 8g. In the case of shot comprising Ag, the electrode operating temperature may be above 962 °C. In an embodiment, the electrodes may comprise a conductive material that has a higher melting point than the boiling point of the shot. Exemplary materials are WC, refractory metals, Tc, Ru, doped B, Ir, Nb, Mo, Ta, Os, Re, W, and C. The electrodes may be operated at a temperature above the boiling point of the shot such that the shot flows and boils off the electrodes rather than solidifying or wetting the electrodes and blocking the gap 8g. In the case of shot comprising Ag, the electrode operating temperature may be above 2162 °C. The high operating temperature may provide heat removal from the electrodes by at least one of conduction and radiation.

In an embodiment, the electrodes 8 may comprise a startup electrode heater to elevate the temperature of the electrodes. The electrodes may comprise a plurality of regions, components, or layers, any of which may be selectively heated by at least one heater or may comprise a heater. The heating may reduce the adhesion of the shot. The heater may comprise a resistive heater or other heater of the disclosure. In an embodiment for startup, the electrodes comprise a startup heater that heats them to prevent the shot from adhering. The electrode heater may comprise the source of electrical power 2 and a means to short the electrodes such as a movable conductive bridge between electrodes or a means to move the electrodes into contact to short them until the heating is achieved. Any electrode cooling may be suspended until the electrodes are trending over the operating temperature such as in the range of 100 °C to 3000 °C for suitable materials of the disclosure. The electrode temperature may be maintained below the melting point of the electrodes. The cooling may be suspended during the period of electrode warm-up during startup by pumping off the coolant. The chiller pump may pump off the coolant. The electrode may be operated at least one temperature range below the melting point of the shot, above the melting point of the shot, and above the boiling point of the shot wherein the electrodes comprise a material suitable for such temperature operation.

In an embodiment, the electrodes may comprise a bilayer. The bottom layer on the side 8k may comprise an insulator such as a ceramic such as an alkaline earth oxide, alumina, anodized aluminum, or zirconia, and the top layer on the side of 8l may comprise a conductor such as copper, silver, copper-silver alloy, molybdenum, tungsten carbide (WC), tungsten, Ta, TaW, Nb, and graphite coated conductor such as graphite coated Cu or W. The graphite coated W may form a metal-carbide-carbon (W-WC-C) structure that may be very durable for wear.

In an embodiment, the electrodes 8 comprise a metal to which silver has low adhesion or does not substantially wet such as at least one of aluminum, molybdenum, tungsten, Ta, TaW, tungsten carbide (WC), and graphite coated conductor such as graphite coated Cu or W. Low melting point electrodes such as aluminum electrodes may be cooled to prevent melting. The nonconductive bottom layer may comprise an insulator such as an alkaline earth oxide, alumina, or anodized aluminum. In an embodiment, the bottom layer may comprise a conductor of much lower conductivity than the electrodes. The bottom layer may be conductive but electrically isolated. The bilayer electrodes may further comprise a thin insulating spacer between electrically conductive layers wherein only the highly conductive layer such as the top layer is connected to the source of electricity 2. An exemplary bottom layer of low conductivity relative to the ignition portion of the electrode such as a silver, copper, Mo, tungsten, Ta, TaW, WC, or graphite coated conductor such as graphite coated Cu or W portion comprises graphite. In an embodiment, graphite serves as a layer to which the shot such as silver shot does not adhere.

In an embodiment, the electrodes may be maintained at an elevated temperature to prevent the melt from rapidly cooling and adhering to the electrodes that may cause undesired electrical shorting. Any adhering melt may be removed by at least one of an ignition event and ignition current. In an embodiment, the start-up power source may preheat the electrodes to prevent cooled melt from adhering to the electrodes. While in operation, the electrode cooling system may be controlled to maintain an electrode temperature that achieves ignition in the desired location on the electrodes while preventing the melt from adhering in an undesired manner.

The electrode temperature may be maintained in a temperature range that avoids wetting or adherence of the molten shot such as silver shot to the electrodes. The electrodes such as W electrodes may be operated at least one elevated temperature range such as about 300 °C to 3000 °C and 300 °C to 900 °C wherein a high Ag contract angle is favored. Alternatively, the electrodes such as WC electrodes may be operated at lower temperature such as about 25 °C to 300 °C wherein a high Ag contract angle is favored. The lower temperature may be achieved by cooling with electrode cooling system inlet and outlet 31f and 31g (FIGURE 2I13). The bottom and top layers may each comprise a gap 8g that are connected. In an embodiment, the electrodes such as the W plate electrodes comprise gap between the W plates and the bus bars such as copper bus bars such that the W electrodes operate at a temperature to cause the silver to vaporize such as in the temperature range of about 1700 to 2500 °C.

In a startup mode, the channel of electrode electromagnetic (EM) pump may be injected with molten solid fuel by EM pump 5k. The solid fuel may comprise silver that may solidify. Current from the source of electricity 2 may be flowed through the solid until its temperature is above the melting point, and the silver may pumped out of the channel by the electrode EM pump. The heating of the material in the channel of the electrode EM pump heats the electrodes. Thus, the channel of the electrode EM pump may serve as the startup heater.

The bilayer electrodes may serve to project the ignition event towards the PV converter, away from the direction of injection on the side 8k. The open circuit is closed by injection of the melt shot causing contact across the conductive parts of the gap 8g only in the top layer. The gap 8g of the bottom non-conductive layer may be sufficiently deep that the pressure resistance to the blast from the ignition of fuel may preferentially force the expanding light emitting plasma upward to emit in region 81. In an exemplary embodiment, one bilayer set electrodes comprises copper, Mo, tungsten, Ta, TaW, tungsten carbide (WC), or graphite coated conductor such as graphite coated Cu or W upper electrodes on a bottom ceramic layer such as alumina, zirconia, MgO, or firebrick having a hole to the gap 8g of the top layer. The top and bottom layers may comprise opposing cones or conical sections with a neck at the interface of the two layers and a gap. Alternatively, the layers may form back-to-back V's in cross section. Such exemplary bilayer electrodes are a downward V-shaped graphite or zirconia bottom layer and an upward V-shaped W or WC upper layer. The electrodes are constant along the transverse axis to form V-shaped troughs with a gap that is filled with the shot to cause the circuit to be closed and ignition to occur. The downward facing V-shaped layer may have low conductivity and may guide the shot to the second layer of high conductivity that ignites the plasma. The upward V-shape of the top layer may direct the plasma and light towards the PV converter.

In an embodiment, the electrode may comprise a bilayer electrode such as one comprising a downward V-shaped layer such as graphite or zirconia bottom layer and a top layer having vertical walls or near vertical walls towards the gap 8g. Exemplary materials of the top layer are W, WC, and Mo. The open circuit is closed by injection of the melt shot causing contact across the conductive parts of the gap 8g only in the top layer.

In an embodiment, the electrode may comprise a trilayer electrode such as one comprising a bottom layer comprising a downward V-shape, a middle current delivery layer such as a flat plate with the plate edge slightly extended into the gap 8g, and an upward V-shaped electrode lead layer that is recessed away from the gap 8g. The bottom layer may comprise a material that resists adhesion of the shot melt such as silver shot melt. Suitable exemplary materials are graphite and zirconia. The graphite may be highly oriented with the face that best resists adhesion oriented to contact the shot. The graphite may be pyrolytic graphite. The middle current delivery layer may comprise a conductor with a high melting point and high hardness such as flat W, WC, or Mo plate. The top electrode lead layer may comprise a high conductor that may also be highly thermal conductive to aid in heat transfer. Suitable exemplary materials are copper, silver, copper-silver alloy, and aluminum. In an embodiment, the top lead electrode layer also comprises a material that resists adhesion of the shot melt such as silver or Ag-Cu alloy. Suitable exemplary non-adhering lead electrodes are WC and W. Alternatively, the lead electrode such as a copper electrode may be coated or clad with a surface that is resistant for the adherence of the shot melt. Suitable coatings or claddings are WC, W, carbon or graphite.

The coating or cladding may be applied over the surface regions that are exposed to the shot melt during ignition. The open circuit may be closed by injection of the melt shot causing contact across the conductive parts of the gap 8g only in the middle layer. The top lead layer may be cooled such as cooled through internal conduits. The contact between the middle and top cooled layer may heat sink and cool the middle layer. The contact between the bottom and middle cooled layer may heat sink and cool the bottom layer. In a tested embodiment, the shot injection rate was 1000 Hz, the voltage drop across the electrodes was less than 0.5 V, and the ignition current was in the range of about 100 A to 10 kA.

The electrode may comprise a plurality of layers such as Mo, tungsten, Ta, TaW, WC, or graphite coated conductor such as graphite coated Cu or W on a lead portion such as a copper portion with ignition on the Mo, W, Ta, TaW, WC, or graphite coated conductor such as graphite coated Cu or W surface, and the electrode may further comprise a non-conductive layer to direct the ignition in the direction of the PV converter. The W or Mo may be welded to or electroplated on the lead portion. The WC may be deposited by deposition techniques know in the art such as welding, thermospray, high velocity oxy fuel (HVOF) deposition, plasma vapor deposition, electro-spark deposition, and chemical vapor deposition. In another embodiment, the graphite layer of a bilayer electrode comprising graphite on a lead portion may comprise the ignition electrode. The graphite ignition electrode may thin and comprise a large area connection with a highly conductive lead such as copper or silver plate lead. Then the resistance may be low, and the graphite surface may prevent sticking. In an embodiment, the graphite electrode may comprise conductive elements such as copper posts in a graphite electrode to give the graphite more conductivity. The post may be added by drilling holes in the graphite and mechanically adding them or by pouring molten copper into the holes then machining a clean graphite-copper-post surface that faces the ignition.

A schematic drawing of a SF-CIHT cell power generator showing the cross section of the pelletizer having a pipe bubbler in the second vessel to introduce the gasses such as $H_2$ and steam to the melt, two electromagnetic pumps, and a nozzle to injection shot on the bottom and top of the electrodes is shown in FIGURES 2I14 and 2I17, respectively. Details of the corresponding injection and ignition systems are shown in FIGURES 2I15 and 2I18, respectively. Details of the electromagnetic (EM) pump and pipe bubbler vessel penetration are shown in FIGURE 2I16. The electromagnetic pump 5k may comprise a plurality of stages and may be positioned at a plurality of locations along the pelletizer (FIGURE 2I14). The electromagnetic (EM) pump assembly 5ka is shown in FIGURE 2I28. The EM pump 5k (FIGURES 2I16 and 2I24-2I28) may comprise an EM pump heat exchanger 5k1, an electromagnetic pump coolant lines feed-through assembly 5kb, magnets 5k4, magnetic yolks and optionally thermal barrier 5k5 that may comprise a gas or vacuum gap having optional radiation shielding, pump tube 5k6, bus bars 5k2, and bus bar current source connections 5k3 having feed-through 5k31 that may be supplied by current from the PV converter. The pump tube 5k6 may be coated to reduce corrosion. Exemplary coatings are corrosion resistant metals with a higher melting point than the fuel metal such as nickel and a noble metal such as Pt or Ir in the case of Ag or Ag-Cu alloy melt. At least one of the magnets and the magnetic circuit may comprise a polished surface such as the end surface facing the gap to serve as the radiation shield. At least one of the magnets 5k4 and yoke 5k5 of the magnetic circuit may be cooled by EM pump heat exchanger 5k1 such as one that is cooled with a coolant such as water having coolant inlet lines 31d and coolant outlet lines 31e to a chiller 31a. The pump tube 5k6 of the EM pump 5k may be connected to the vessels such as the first vessel 5b, the second vessel 5c, and the vessel section to the nozzle 5q by joints of the disclosure 5b1. In an embodiment, the EM pump 5k may be position at the end of the first vessel 5b, and another may be position at the vessel wall at the end of the second vessel 5c. An extension of the pump tube of the latter may be used as the line that penetrates the cell wall and is sealed at the cell wall. The pump tube extension may comprise an S-shaped tube for injecting below the electrodes 8. In another embodiment, the pump tube extension may vertically enter the cell, transition horizontally at an elbow or bend, and the nozzle 5q may comprise a bend with an end outlet. Alternatively, the nozzle may comprise a hole in the sidewall of the tube that is capped at the end so that the pressure in the tube ejects the melt out the sidewall hole and into the electrodes 8. The section of the tube in the cell may be at least one of insulated and heated to maintain the melt at a desired temperature. The heating may be with an inductively coupled heater coil that penetrates the cell wall and encloses at least a portion of the tube. The tube section inside of the cell and any other objects in the cell such as heater coils and bus bars may be coated with a material that resists adhesion by the ignition products. Exemplary materials of the disclosure comprise graphite, tungsten, and tungsten carbide.

In an embodiment, the plasma and adhering metal shot are ejected from the electrodes, and fuel recirculation is achieved by using the Lorentz force, exploiting the principles of the railgun such as a shot and plasma armature type that may further comprise an augmented railgun type herein also referred to as an electrode electromagnetic pump. The Lorentz force may cause the flow of the adhering shot into the ignition section of the electrodes and causes the ignition plasma to be directed and flow into a collection region such as inlet of the fuel regeneration system such as the pelletizer.

In an embodiment shown in FIGURES 2I14 and 2I15, the electrodes may comprise a downward (negative z-axis oriented) V-shape with a gap at the 8g at the top of the V. The V may be formed by flat plate electrodes mounted on opposite faces of supports that form a V with a gap at the top. Exemplary electrode materials comprising a conductor that operates a high temperature and resists adhesion of Ag are W, WC, and Mo. The supports may be water-cooled. The supports may be a least partially hollow. The hollow portions may each comprise a conduit for coolant that flows through the conduits and cools the electrodes. In an embodiment, the electrodes may further comprise an upper section having vertical walls or near vertical walls at the gap 8g. The walls may form a channel. The open ignition circuit of the electrodes may be closed by injection of the melt shot causing contact across the conductive parts of the gap 8g at the top of the V.

The cell surfaces that may be exposed to ignition product may be coated with an adherence resistant material such as graphite or aluminum that may be anodized or another such material of the disclosure. The surfaces may be coated with alumina such as alpha alumina that may be sputter coated on a substrate such as a high-temperature metal. In another embodiment, the surfaces may be coated with a housing that comprises or is coated with a material that resists melt adherence such as one of the disclosure. The bus bars may penetrate the cell through separate of a common flange wherein each bus bar is electrically isolated. At least one of the bus bars, electrode mounts, and electrodes may be shaped to at least one of minimize the surface for adherence of the ignition product and posses a low cross section for accumulation of returning melt such as Ag or Ag-Cu melt. In an embodiment, the electrodes 8 may comprise straight rod bus bars 9 and 10 that are beveled at the ends to form the electrodes 8 or electrode mounts. The surface of each beveled bus bar may be covered with a fastened electrode plate. The bus bars may comprise flat copper bus bars having electrodes mounted to the inner surface. Each bus bar may be covered with a plate electrode such as a tungsten plate or other durable conductor. The plates may be curved to form a gap 8g. The curved plate may comprise at least one of a tube or a semicircular cross section of a tube that is electrically connected to the bus bar. The tube electrode may also connect to a bus bar of a different geometry such as a rod. The tube may be concentric to the rod connection points. An exemplary electrode separation across the gap 8g is in at least one range of about 0.05 to 10 mm, and 1 to 3 mm. The electrodes such as ones comprising plates or tubes may be capable of high temperature. The electrodes may comprise a refractory metal such as at least one of Tc, Ru, doped B, Ir, Nb, Mo, Ta, Os, Re, W, and C, and another such metal of the disclosure. The high temperature electrodes may serve as a blackbody radiator for thermophotovoltaic power conversion. The electrodes may comprise a heat embrittlement resistant composition. The electrodes may comprise a sintered material such as a sintered refractory metal. The electrodes may be at least one of segmented and thick to avoid breakage when heat embrittled. The electrodes may comprise a thermally insulating layer or gap between the refractory metal plate and the bus bar to permit the electrode temperature to be elevated relative to that of the bus bar. The curved plate electrodes may form a thermally insulating layer or gap. The thermally insulating material such as MgO or $Al_2O_3$ may comprise a ceramic that may be molded or machined. At least one of the bus bars and electrode mounts may be cooled such as water or air-cooled. Other coolants such as molten metals such as molten lithium are within the scope of the disclosure.

In an embodiment, the electrodes further comprise a source of magnetic field such as a set of magnets at opposite ends of the channel of the electrodes such as 8c of FIGURES 2I14 and 2I15. The magnets may be electrically isolated from the bus bars 9 and 10 when mounted across them by an electrical insulator such as a ceramic or high-temperature paint or coating such as a boron nitride coating that may be applied on the bus bar contact region by means such as spraying. An insulator sleeve such as a ceramic tube may electrically isolate fasteners such as bolts or screws. Other such parts may be electrically isolated from another electrified system by the electrically insulating materials of the disclosure. The magnets 8c and channel 8g supporting the ignition current may comprise an electromagnetic pump that performs the function of ejecting any shot adhering to at least one of the electrodes and the channel and ejecting ignition particles from the electrodes 8 and the channel 8g. The ejection may be by the Lorentz force according to Eq. (32) formed by a crossed applied magnetic field such as that from magnets 8c and ignition current through at least one of the plasma particles and shot such as silver shot adhering to the electrode surfaces such as those of the channel 8g. The current carrying particles may be charged. The plasma may additionally comprise electrons and ions. The ignition current may be from the source of electrical power 2 (FIGURE 2I10). Current may be carried through metal that adheres and shorts the electrodes of the bottom layer. The current is crossed with the applied magnetic field such that a Lorentz force is created to push the adhering metal from the electrode surfaces. The direction of the magnetic field and current may be selected to cause shot and plasma particles such as those from the shot ignition to be directed away from the channel 8g (FIGURE 2I15 and FIGURE 2I17) in the positive or negative direction wherein the shot may be injected in the positive z-axis direction (FIGURES 2I14 and 2I15) or the negative z-axis direction (FIGURES 2I17 and 2I18). The magnets may produce a magnetic field along the y-axis parallel to the electrode or channel axis and perpendicular to the ignition current along the x-axis. The channel with crossed current and magnetic field comprising an electromagnetic (EM) pump directed along the positive z-axis may perform at least one function of pumping injected shot upward into the electrodes to be ignited, pumping adhering shot upward to be ignited, pumping adhering shot upward out of the electrodes and channel, and pumping ignition particles upward out of the electrodes and channel. Alternatively, by reversing one of the current or magnetic field direction, the Lorentz force due to the crossed ignition current and magnetic field may perform at least one function of pumping adhering shot downward to be ignited, pumping adhering shot downward out of the electrodes and channel, pumping ignition particles downward out of the electrodes and channel, pumping ignition particles downward away from the PV converter, and pumping ignition particles downward toward the inlet to the pelletizer to recover the ignition product. The strength of the crossed current and magnetic field and well as the dimensions of the channel provide the pump pressure through the channel comprising the electromagnetic pump tube. The width of the pump tube and any splay are selected to distribute the current from the source of electrical power 2 for ignition and pumping to achieve optimization of both. The electrode EM pump may further comprise a switch that may reverse the direction of the current to reverse the direction of the EM pump. In an exemplary embodiment wherein the shot is injected upward by EM pump 5k and the electrodes short due to adhering shot, the electrode EM pump switch may be activated to reverse the current and pump the shot downward to the inlet of the pelletizer. The electrodes may further comprise a sensor and a controller. The sensor may comprise a current sensor that may detect an electrode short. The sensor may feed the shorting data into the controller that may inactivate the EM pump 5k to stop further injection of shot and activate the switch to reverse the current of the electrode EM pump until the short is cleared. In other embodiments of the disclosure, the electrodes and magnets may be designed to direct the plasma in an upward arch to perform at least one function of (i) ejecting the shot and particles from the electrodes and channel such as 8g and (ii) recovering the ignition product and un-ignited shot to the pelletizer, while avoiding guiding ignition particles to the PV converter 26a.

In an embodiment, the electrodes may comprise a downward (negative z-axis oriented) V-shape with a gap 8g at the top of the V. The open circuit may be closed by injection of the melt shot causing contact across the conductive parts of the gap 8g at the top of the V. The V may be formed by flat plate electrodes mounted on opposite faces of supports that form a V with a gap at the top. Exemplary electrode materials comprising a conductor that operates a high temperature and resists adhesion of Ag are W, WC, and Mo. The electrodes may further comprise a first electrode EM pump comprising a channel at the top of the electrodes above the gap 8g with the source of magnetic field 8c crossed to the ignition current. In an exemplary embodiment, the melted shot may be injected from below in the positive z-axis direction (FIGURES 2I14 and 2I15), and the electrode EM pump may perform at least one function of facilitating the upward flow of the shot into the gap 8g to cause ignition, pumping adhering shot out of the electrodes and channel, and pumping ignition products out of the electrodes and channel 8g. In an embodiment, the electrodes comprises a second electrode EM pump comprising magnets 8c1 and second electrode channel 8g1 that produces a Lorentz force to at least one of force the particles away from the PV converter and facilitate recovery of the particles to the pelletizer. The second electrode EM pump may be above the first electrode EM pump to receive plasma and particles from the ignition and pump the particles away from the PV converter 26a. The polarity of the magnets of the second electrode EM pump may be opposite to those of the first while using a portion of the ignition current that is common to the electrodes and both electrode EM pumps. The electrode EM pumps may be augmented types. At least one of the first EM pump and the second electrode EM pump may comprise an independent source of current that may be in the same or different direction as the ignition current. The source of current may be from the PV converter. In an embodiment of the second electrode EM pump, the current may be in a direction different from that of the ignition current wherein the crossed magnetic field is oriented to at least one of produce a force on the ignition particles away from the PV converter and at least partially facilitate the transport of the particles to the inlet of the pelletizer. For example, the independent current may be in the opposite direction of the ignition current, and the magnetic field may be in the same direction as that of the first electrode EM pump. In an embodiment, at least one of the magnets and current of the second electrode EM pump may be less strong than those parameters of the fist electrode EM pump such that the velocity of the ignition particles is reduced. In an embodiment, the particle direction may not be completely reversed. At least one of the Lorentz force and gravity may at least one of prevent the particles from impacting the PV converter and facilitate recovery of the particles.

In an embodiment, each of the first and second set of magnets of the first and second electrode pumps are mounted to the bus bars 9 and 10, and the magnets are protected from overheating by at least one method of thermally isolating or cooling the magnets. The magnets of each electrode electromagnetic pump may comprise at least one of a thermal barrier or thermal isolation means such as insulation or a thermally insulating spacer and a mean of cooling such as a cold plate or water cooling lines or coils and a chiller. The cool or cold plate may comprise a micro-channel plate such as one of a concentrator photovoltaic cell such as one made by Masimo or a diode laser cold plate that are known in the art.

In another embodiment, the second electrode EM pump comprises a channel, a current source that may comprise a portion of the source of electricity to cause ignition, and magnets wherein the orientation of at least one of the channel, the current, and magnetic field produces a Lorentz force that may be along the positive or negative z-axis and have a component in the xy-plane. The Lorentz force of the second electrode EM pump may be oriented to at least one of produce a force on the ignition particles away from the PV converter and at least partially facilitate the transport of the particles to the inlet of the pelletizer. In an embodiment, the Lorentz force may be in the positive z-direction and have a component in the xy-plane. The crossed current and magnetic fields of the embodiments of the electrode EM pumps of the disclosure may cause the ejection of adhering shot and the flow of the plasma particles to the regeneration system such as the pelletizer. The trajectory of the pumped ignition particles may be such that impacting the PV converter may be avoided. The particle trajectory may further be towards a desired portion of the cell wall such as a portion with no penetrations such as the electrode penetrations.

In an embodiment, at least one of the electrodes and the ignition plasma has a component of the current along the z-axis and a component in the xy-plane, and the magnets such as 8c and 8c1 are oriented to provide a magnetic field that is crossed with the current. In an embodiment, the crossed applied magnetic field from magnets causes a Lorentz force having a component in the transverse xy-plane as well as the z-axis direction. The z-directed force may eject the plasma and any shot adhering to the electrodes. The xy-plane-directed force may cause the ignition particles to be forced to the cell walls to be recovered. In an embodiment, the electrodes are offset along the z-axis (one having a slightly higher height than the other) such that a component of at least one of the ignition and plasma current is along the z-axis as well as in xy-plane. In an embodiment, the ignition particles may be force along a curved trajectory in a clockwise or counter clockwise direction with the origin at the ignition point of the electrodes. The curved path may at least one of (i) direct the particles to the wall opposite the location of the penetrations of the bus bars 9 and 10 (FIGURE 2I14) and electrodes 8 and (ii) transport the particles to the inlet of the pelletizer. The electrodes and any mirror surrounding them such as a parabolic dish may direct the emitted light to the PV converter 26a.

In an embodiment, the particles are prevented from impacting and adhering to the PV converter by at least one plasma and particle deflector such as a central cone in the exit of the channel with the tip of the cone facing the direction of the ignition electrodes. The deflector may comprise two cones joined at the base to facilitate return of particles to the pelletizer. The plasma may be directed to at least one additional plasma deflector that selectively deflects the plasma and light to the PV converter. The particles may collide with the plurality of deflectors to lose velocity and at least one of fall and flow into the inlet of the pelletizer. The plasma may follow about an S-shaped trajectory through the channel formed by the central and peripheral deflectors while the particles are stopped so that they may flow to the inlet of the pelletizer.

In an embodiment, the particles are prevented from impacting and adhering to the PV converter by at least one physical barrier that selectively transmits the plasma and light while at least partially blocking the ignition particles. The physical barrier may comprise a plurality of elements located along the z-axis, each comprising a partially open physical barrier wherein the line of site along the z-axis through an open portion of the nth element is at least partially blocked by another element of a series of n elements wherein n is an integer. The plurality of physical elements may comprise a plurality of horizontally staggered grids such as screens positioned along the direction from the point of ignition towards the PV converter. The elements may permit the physical transmission of plasma and light while blocking the particles. The plasma gas may flow around the staggered grid while the particles impact the blocking portion to lose momentum to facilitate the recovery of the particles into the inlet of the pelletizer.

In an embodiment, the electrode assembly may further comprise a source of magnetic fields such as permanent or electromagnets. Using magnetic fields, the plasma may be at least one of confined, focused, and directed to the region 81 (FIGURE 2I12) such that the light from the plasma is directed to the PV converter. The electrode magnets may force the plasma from the gap 8g to the cell region 81. The magnets may further provide confinement to the plasma to cause it to emit light in the direction of the PV converter. The confinement magnets may comprise a magnetic bottle. Magnets such as 8c of FIGURE 2I10 may further comprise an ignition product recovery system of the disclosure.

The SF-CIHT cell may further comprise electrodes such as grid electrodes of the disclosure that may be circumferential to the plasma and contain the plasma predominantly in a selected region such that it emits in a desired direction such as in the direction of the PV converter 26a. In an embodiment, the plasma and the particles from the ignition may be oppositely charged and migrate at different rates such that their respective migrations in the cell are separated in time. The plasma may be comprised of ions and electrons. The particles may be relatively massive. The plasma may be negatively charged due to the much higher mobility of the electrons. The particles may be positively charged. The plasma may migrate much faster that the particles such that it expands from the electrodes before the particles. Electrodes such as grid electrodes that are open to the flow of particles may be used to at least one of selectively direct and confine the plasma such that the light is directed to the PV converter 26a while the Lorentz force directs the particles to a desired region of the cell such as away from the PV converter 26a and back to the pelletizer. The electrodes may be at least one of floating, grounded, and charged to achieve at least one of selective transport and confinement of the plasma to a desired region of the cell such 81. The applied voltages and polarities may be controlled to achieved the at least one of selective transport and confinement of the plasma to a desired region of the cell such 81.

In an embodiment, the shot may be formed to have a small diameter such that the surface tension to maintain about a spherical shape is greater than electrode adhesion forces; so, the shot does not adhere to the electrodes. The shot size may be in at least one diameter range of about 0.01 mm to 10 mm, 0.1 mm to 5 mm, and 0.5 mm to 1.5 mm. The shot may be made with a smaller diameter by using at least one of a smaller nozzle 5q, a higher melt flow rate, a higher melt pressure, and a lower melt viscosity.

In another embodiment that is effective in preventing the shot form adhering to the electrodes, the electrodes comprise a shot splitter such as at least one thin wire such as a refractory wire across the gap where the shot ignition is desired. Exemplary wires comprise at least one of copper, nickel, nickel with silver chromate and zinc plating for corrosion resistance, iron, nickel-iron, chromium, noble metals, tungsten, molybdenum, yttrium, iridium, palladium, carbides such as SiC, TiC, WC, and nitrides such as titanium nitride. The at least one wire may divide the shot into a plurality of segments that are spread out over a larger area than the un-split shot. The electrode gap may be sufficiently large such as larger than the shot such that the shot passes through the gap without firing in the absence of the splitter. The splitter may spread the shot and cause the current to flow through the spread shot. The spreading of the shot may cause the ignition to be confined to the wide gap region such that adherence to the electrode is avoided by way of avoiding contact of the shot with other regions of the electrode where the shot may otherwise adhere. The electrodes may be beveled to form an upright V-shape such that the light is emitted in region 81 directed towards the PV converter. The shot splitter may be movable and the electrode gap adjustable such that the spreading may be used during startup and elevated electrode temperature used during long duration operation to prevent the shot from adhering to the electrodes.

In an embodiment, the ignition system further comprises an alignment mechanism such as a mechanical or piezoelectric one that adjusts the position of at least one of the electrodes 8 and the nozzle 5q such that the shots 5t travel from the nozzle to the desired position of the electrodes such as the center hole or gap 8g. The alignment may be sensed and controlled by a sensor and controller such as an optical or electrical sensor and a computer. The alignment mechanism may further serve to short the electrodes during startup wherein the shorting serves to heat the electrodes. In an embodiment, the nozzle 5q may be off center at an angle to prevent melt from dripping back and disrupting the stream wherein the adjustment mechanism may maintain that the shots 5t are injected into the gap 8g from underneath the electrodes 8.

Referring to FIGURES 2I14 to 2I31, the cell may be operated under evacuated conditions. The cell 26 may comprise a vacuum chamber such as a cylindrical chamber or conical cylindrical chamber that may have domed end caps. The cell may comprise a right cylinder with a conical base to the fuel recovery and injection systems such as the pelletizer. The electrodes may penetrate at anodized feed throughs that may be vacuum tight. Alternatively, as shown in FIGURES 2I24 to 2I27 the cell 26 may be housed in a chamber 5b3 and the electromagnetic pump 5k may be housed in lower vacuum-capable chamber 5b5. The inlet of the pelletizer and the outlet such as the nozzle may feed through the cell wall into the vacuum space of the cell maintained with seals for each inlet and outlet feed through. The inside of the cell 26 may comprise surface that resists adherence of silver such as at least one of an Al, W, WC, Mo, and graphite surface. At least one of the inside of the cell 26, the bus bars 9 and 10, and electrode components other than those that directly contact the melt to supply the ignition current may be coated with material that resists adherence of the melt. Exemplary coatings comprise aluminum such as polished anodized aluminum, W, Mo, WC, graphite, boron carbide, fluorocarbon polymer such as Teflon (PTFE), zirconia + 8% yttria, Mullite, or Mullite-YSZ. In another embodiment, the leads and electrode components may be covered with a housing such as a high-temperature stainless steel housing that may be coated with a material of the disclosure that resists adherence of the melt. The coatings may be sprayed, polished, or deposited by other means of the disclosure as well as others known in the art. The coating may be on a support such as a refractory metal such as zirconium, niobium, titanium, or tantalum, or a high temperature stainless steel such as Hastelloy X. The inside of the vacuum cell may comprise a conical liner having the anti-adhering surface. The liner may comprise the wall materials and coatings of the disclosure. The pelletizer may comprise at least a reducer from the first vessel 5b to the pump tube of first pump 5k, an expander from the pipe tube to the second vessel 5c, and straight reducer between the second vessel 5c and the pump rube of the second pump 5k. In an exemplary embodiment, the pump tube is about 3/8" OD and the vessels are each be about 1" ID. In an embodiment, the pelletizer inlet is at the bottom of the cell cone 26. The pelletizer outlet comprising the second vessel 5c and nozzle 5q may inject underneath the electrodes 8 (FIGURES 2I14 and 2I15) or at the top of the electrodes (FIGURES 2I17 and 2I18). At least one of the first electrode EM pump comprising magnets 8c and channel 8g and second electrode EM pump comprising magnets 8c1 and second electrode channel 8g1 may at least one of (i) facilitate injecting the shot and particles into the gap 8g to cause ignition, (ii) facilitate recovering the ignition product and un-ignited shot to the pelletizer, (iii) at least one of facilitate the directing and guiding of ignition particles away from PV converter 26a to avoid particle impact, and (iv) provide confinement to increase the yield of hydrinos. The confinement may create a pressure in at least one range of about 1 atm to 10,000 atm, 2 atm to 1000 atm, and 5 atm and 100 atm. The excess injected Ag shot and particles may be at least one of pumped, directed, and facilitated to the pelletizer inlet. The system may operate with a bottom wall temperature of about 1000 °C such that the silver remains molten. So, even if not all of shot participates in ignition, the energy loss may be mostly pump energy that may be very low. A minimum of heating in the first vessel may be necessary since some of the energy from ignition of the solid fuel may heat the silver.

In an embodiment, the cell floor comprising the cell wall in the region of the inlet to the pelletizer may be heated by at least one of the ignition product and the ignition process. The floor may be operated at a high temperature such as above the melting point of the metal of the fuel such as silver. The floor may heat at least a portion of the recovered product. The recovered product that is collected hot and the recovered product heated by the floor may flow into the pelletizer as preheated to consume less energy. The melted ignition product may flow from the floor to the pelletizer as a liquid. Shot 5t that does not ignite at the electrodes 8 fall to the floor and flow into the pelletizer as well. The flow may be as a liquid or a solid. In the case of appreciable power being absorbed by the ignition product before being cleared, the ignition product may become very hot such that the energy dissipated in the pelletizer may be consequently lowered.

In an embodiment shown in FIGURES 2I19-2I21, the bottom of the cell cone comprises a melt reservoir or cone reservoir 5b. The cell cone may comprise a material has at least one property of the group of silver adherence resistance, capable of high temperature, and non-magnetic. Exemplary materials for at least one component of the cell such as at least one of the cone reservoir and an upper cone comprising the cell walls are graphite, tungsten, molybdenum, tungsten carbide, boron nitride, boron carbide, silicon carbide, SiC coated graphite, and high temperature stainless steel. The material may be coated. Exemplary embodiments are SiC coated graphite, Mullite, and Mullite-YSZ coated stainless steel. At least one of the inside of the cell 26, the bus bars 9 and 10, and electrode components other than those that directly contact the melt to supply the ignition current such as the magnets 8c and 8c1, channel 8g1, connection of the electrodes 8 to the bus bars 9 and 10, nozzle 5q, and injector 5z1 may be coated with material that resists adherence of the melt. Exemplary coatings comprise aluminum such as polished anodized aluminum, W, Mo, WC, graphite, boron carbide, fluorocarbon polymer such as Teflon (PTFE), zirconia + 8% yttria, Mullite, or Mullite-YSZ. In another embodiment, the leads and electrode components may be covered with a housing such as a high-temperature stainless steel housing that may be coated with a material of the disclosure that resists adherence of the melt. The SF-CIHT cell may further comprise a means to at least one of monitor the integrity of the coating and apply more coating such as graphite. For performing routine maintenance, the SF-CIHT cell may further comprise a graphite coating applicator such as a sprayer. The sprayer may comprise at least one nozzle that directs the spray comprising graphite onto the cone surface and a source of graphite such as dry graphite lubricant known in the art. The material such as graphite may be polished. The polished may be performed with a fine abrasive such as one comprising at least aluminum oxide, silicon carbide, and diamond powder. In an embodiment, the cone reservoir comprising graphite may be fabricated by 3D printing. In an embodiment, the cell cone cut from graphite by a cutter. The cutter may comprise a laser or water jet. The cutter may comprise a mechanical saw. The cutter may be angled and rotated. Alternatively, the cone may be cut from a tilted and rotated graphite block. The cone may be made in a plurality of sections such as an upper cylinder, a middle cone such as one with 45° walls, and a bottom cone reservoir.

In an embodiment, the cone comprises segmented pieces such as triangular pieces that are assembled to form a cone. The pieces may be sheets. The sheets may be cut in triangular pieces and fitted together to form the cone. The pieces may comprise cladding of a support structure such as a stainless steel conical frame or cone. The pieces comprising male pieces in an assembly mechanism may be fitted into top and bottom rings comprising female slots to receive the male pieces. The top and bottom rings may be fastened to a frame directly or indirectly such as the vacuum chamber 26 wherein the fastening causes the pieces to be held together. The bottom ring may further comprise a flange that attaches to the cone reservoir 5b. The attachment points of cone elements comprised of graphite may comprise expansion joints.

Exemplary embodiments of at least one of the upper cone and the cone reservoir are at least one of graphite and SiC coated graphite formed into a cone, at least one of graphite and SiC coated graphite lining a support such as a stainless cone, at least one of segmented graphite and SiC coated graphite plates lining a stainless cone, at least one of segmented graphite and SiC coated graphite plates mechanically held together, W foil formed into a cone, W plated stainless steel cone, W foil lining a support such as a stainless steel cone, segmented W plates lining a stainless steel cone, segmented W plates mechanically held together, stainless steel having a steep angle such as about 60° and Mullite or Mullite-YSZ coated, Mo foil formed into a cone, Mo plated stainless steel cone, Mo foil lining a support such as a stainless steel cone, segmented Mo plates lining a stainless steel cone, segmented Mo plates mechanically held together, stainless steel having a steep grade such as 60° angles that is Mullite or Mullite-YSZ coated. A cone such as a stainless steel cone that is heated above the melting point of the melt such as the Ag or Ag-Cu alloy melt. The heating may be achieved by at least one of a heater such as an inductively coupled heater and a resistive heater and by the hydrino reaction. Other materials for at least one of the upper cone, windows such as PV windows, and housings to prevent ignition product adhesion comprise at least one of sapphire, alumina, boro-silica glass, $MgF_2$, and ceramic glass.

In an embodiment, the cell walls above the cone reservoir may comprise a material such as a metal such as aluminum that may have a lower melting point than the operating temperature of the cone reservoir. In this case, the corresponding upper cone such as one comprising segmented aluminum pieces or plates may end before the cone reservoir and may further extend over the otherwise connecting edge with the cone reservoir such that returning melt may flow over the edge into the cone reservoir. The upper cone may at least one of comprise a heat sink such as thick plates and may be cooled to prevent melting. The surface may comprise an oxide such as aluminum oxide to prevent adhesion of the melt.

At least one of the conical cell 26 and cone reservoir 5b may comprise or is coated with at least one of mica, wood, cellulose, lignin, carbon fiber, and carbon fiber-reinforced carbon wherein at least some of the surface may be carbonized to graphite. The heat from the hydrino process may cause the cone wall to overheat. The wood cone reservoir or cone cell may comprise a backing heat sink such as a metal sink that may be cooled. The cooling may comprise a heat exchanger that may be attached to the cone reservoir or cone cell wall. The heat exchanger may comprise a coolant that may be cooled by a chiller 31a. The heat exchanger may comprise pipes that are fastened to the cone wall wherein a gas such as air is followed through the pipes by an air mover such as a fan. The system may be open such that the wall is cooled by air-cooling.

The metal in the reservoir may be melted or maintained in a molten state by heating. The metal may be heated indirectly by heating the outside of the reservoir or heat directly. The reservoir may be heated with a heater such as at least one of a resistive heater and an external or internal inductively coupled heater 5m comprising leads 5p and coil 5f. Since silver has a high thermal conductivity, the internal heat should be rapidly and evenly transferred for an internal resistive heater. Suitable resistive heaters capable of high temperature are ones comprising Nichrome, graphite, tungsten, molybdenum, tantalum, SiC, or $MoSi_2$, precious metals, and refractory metal heating elements. The geometry may be such that there is rapid heat transfer with a minimization of space such as a pancake-shaped heater. The heater may be treated with the appropriate protective coating to interface with at least one of steam and hydrogen. Alternatively, the heating element may be protected from reaction with at least one of water and hydrogen by being wetted with the melt such as silver. The light from the ignition of the fuel propagates predominantly upward to the PV converter 26a; however, any light and heat that propagates downward may serve to heat the ignition products such as those in the cone reservoir 5b to limit the amount of heater power consumed. The reservoir may be maintained in the vacuum of the cell provided by lower vacuum-capable chamber 5b5 and vacuum connection 5b6 to decrease heat loss by means such as conduction and convection. The reservoir may further comprise radiation shields that may have passages for the return of the ignition product such as molten silver. As in the exemplary case of a fuel cell, the reservoir may comprise a thermos or vacuum jacketed walls such that heat loss is minimum. In an idle condition of the SF-CIHT cell, the reservoir may only need heating periodically to maintain the melt such that the cell is in a ready condition to operate. As an exemplary case, it is known in the art of fuel cells that heating need be performed on a time frame of about every twelve to twenty-four hours.

The reservoir may comprise at least one bubbler tube 5z to supply and incorporate at least one of water and hydrogen into the melt. The bubbler tubes 5z may comprise a serpentine gas flow field or diffuser such as one known in the art of fuel cells such as molten fuel cells. The bubbler tubes may comprise an inverted cup to trap the injected gases such as $H_2O$ and $H_2$ to be at least one of dissolved and mixed into the melt. The gas may be released inside the inverted cup-shaped diffuser. The diffuser may be submerged under the melt, and the melt may flow around the top of the diffuser to the underside to receive the gases. The trapped gas may provide pressure to facilitate the flow of the melt into the electromagnetic pump 5k. The bubbler tube 5z such as a flow field may comprise a material that silver does not wet such as at least one of graphite, W, and WC. The lack of wettability may prevent the silver from clogging the gas holes of the bubbler. The pipe bubbler 5z may comprise a hydrogen permeable membrane such as at least one comprising carbon such as wood, cellulose, or lignin wherein the surface may be carbonized, and graphite, carbon fiber-reinforced carbon, and Pd-Ag alloy, Ni, niobium, Pd, Pt, Ir, noble metal, and other hydrogen permeable membrane known in the art. The membrane may receive hydrogen gas such as from source 5u and facilitate its diffusion across the membrane to the melt such as at least one of Ag, Ag-Cu alloy, and Cu melt. The pipe bubbler 5z may further comprise a water-permeable membrane or frit such as a porous ceramic membrane or frit. The $H_2O$ permeable frit may comprise a material such as zirconia, Mullite, Mullite-YSZ, or porous graphite that is unreactive with $H_2O$ and is not wetted by the melt. The membrane may comprise a honeycomb. Other exemplary membranes and frits comprise yttria-stabilized zirconia, scandia stabilized zirconia, gadolinium doped ceria that may further comprise a cermet. Alternative membranes comprise cellulose, wood, carbonized wood, and carbon fiber-reinforced carbon. The pressure from the source such as 5u and 5v may control the rate that $H_2$ and $H_2O$ are supplied to the melt.

At least one of $H_2O$ and $H_2$ may be soluble in the melt in a manner dependent on the partial pressure of the corresponding applied gas. In an embodiment such as one shown in FIGURE 2I17, the generator may comprise a pelletizer to form shot that is injected into the electrodes 8. The pelletizer may comprise a molten metal pump 5k, a means to add gases such as at least one of steam and $H_2$ to the molten metal, and a nozzle to inject shot into the electrodes 8. In an embodiment, the pelletizer 5a comprising a molten metal fuel further comprises at least two values to selectively, alternatively seal the second vessel 5c and the gas from manifold 5y such that pressurized gas such as at least one of $H_2O$ and $H_2$ are applied to the melt in the second vessel 5c. First, a valve on the inlet of the second vessel 5c is closed to prevent backflow into the first EM pump 5k, and a manifold valve is opened to allow the melt to be treated with pressured gases supplied through manifold 5y. Next, at least one of the second pump 5k and the gas pressure may force the gas-treated melt out of the second vessel 5c and through the nozzle 5q. Then, the valve to the manifold 5y is closed and the value at the inlet to the second vessel 5c is opened to allow the first EM pump 5k to pump melt into the second vessel 5c to repeat a cycle of pressured gas treatment and ejection of the treated melt. Alternative valve, pump, and gas and melt lines and connections known to those skilled in the art are within the scope of the disclosure. The pelletizer may comprise a plurality if second chambers 5c with inlet and manifold values. The fuel hydration may be synchronized between the chambers to achieve about continuous injection with treated melt.

The plurality of bubblers may be fed off a manifold 5y. At least one of $H_2$ and $H_2O$ may be supplied a source of each gas such as 5u and 5v. In an exemplary embodiment, at least one of water, water vapor, and steam are provided from source 5v. At least one of water vapor and steam may be supplied by at least one of a water vapor generator and steam generator 5v. The water vapor generator may comprise a carrier gas and a water source wherein the carrier gas is bubbled through the water such as water reservoir 5v. Hydrogen may comprise the carrier gas bubbled through $H_2O$ to also serve as a reactant in the hydrino reaction. The SF-CIHT generator may further comprise a recovery and recirculation system of any unreacted $H_2$ that may be recycled. The recovery system may comprise a getter such as a metal that selectively binds hydrogen to provide it to the recirculation system such as a pump. The recovery system may comprise a selective filter for $H_2$ or other system known by those skilled in the art. In another embodiment, the carrier gas may comprise an inert gas such as a noble gas such as argon. The SF-CIHT generator may further comprise a recovery and recirculation system of the carrier gas that may be recycled. The recovery system may comprise a selective filter for the carrier gas or other system known by those skilled in the art. The fuel comprising melt that has absorbed at least one of $H_2O$ and $H_2$ may be transported out of the reservoir. The reservoir may outlet to an electromagnetic (EM) pump 5k. In embodiments shown in FIGURES 2I14-2I18, the EM pump may outlet into the second vessel 5c comprising an injection tube that may be trace heated with a heater such as an inductively coupled heater 5o. The tubing such as one of the disclosure may be very efficient at absorbing the inductively coupled heater radiation. The tube may have a low emissivity such as polished or electro-polished tubing that may be run in a vacuum chamber. Alternatively, the heater such as a resistive heater of the second vessel 5c may be inside of the second vessel wherein the second vessel has sufficient diameter or size to accommodate the internal heater.

For startup, the pump tube 5k6 may be filled with the fuel metal such as silver or silver-copper alloy to increase the heat transfer cross sectional area. The area may be increased to increase the rate that heat is conducted along the tubing from the heated cone reservoir 5b to the inlet to the pump 5k. Alternatively, the pump tubing may be heated with resistive trace heating, or the tubing may be insulated. In an embodiment, the tubing comprises insulation that is variable or adjustable to control the teat transfer between insulating and effect at heat transfer. The insulation may be made in a state of high insulation during pump startup, and the insulation may be made in a state that provides high heat transfer during operation to prevent the pump from overheating. In an embodiment, the variable, adjustable, or controllable insulation comprises a vacuum jacket the surrounds the pump tubing. The vacuum jacket may be evacuated during startup, and gas can be added to the jacket for rapid heat transfer after the pump is operating. The outside of manifold of the vacuum jacket may be cooled with water-cooling to provide addition heat removal capacity to prevent overheating. Alternatively, the pump tubing and bus bars may comprise a high temperature material such as Ta that is capable of operating at a temperature in excess of that achievable during operation of the pump. The high-temperature capable pump tube such a Ta pump tube may be coated with a high-temperature oxidation-resistant coating. The bus bars may comprise a more conductive metal than the pump tube metal. The bus bars may be capable of operating at high temperature. Radiative heat transfer may limit the maximum operating temperature. The pump tube may comprise elements such as fins that increase the surface area to increase the heat transfer. The high-temperature capable tube may comprise a coating to prevent oxidation. Alternatively, the pump tube may comprise a cooling system such a water coils in contact with its surface wherein the water is initially evacuated during startup. Once the pump is at operating at temperature, the water or other suitable coolant may be pumped through the cooling system to remove excess heat as needed in a controlled manner. The control may be achieved by controlling the coolant pump speed, the chiller heat rejection rate, and the coolant inlet and outlet temperatures. In another embodiment shown in FIGURE 2I19, the electromagnetic pump is housed in a lower chamber 5b5 that may be filled with a heat transfer gas such as an inert gas such as argon or helium. The inert gas may further comprise hydrogen such as noble gas-hydrogen mixture such as one comprising about 1 to 5% $H_2$ in order to prevent the oxidation of the pump tube. The lower chamber 5b5 may be sealed to the cell 26 with a flange and a gasket such as a graphite gasket. The pressure may be adjusted to control the pump tube temperature. The cooling system may comprise an inert gas tank, pump, pressure gauge, pressure controller, and temperature recorder to control the heat transfer rate from the pump tube.

In another embodiment, the second vessel 5c comprises a bend at its inlet end and an injection section that ends at the nozzle 5q wherein it receives melt from the pump 5k and serves as a conduit to transport it to the nozzle 5q to be injected into the electrodes 8. The cell cone reservoir may tapper into the inlet of the pump tube 5k. The pump tube may be oriented vertically. The second vessel may bend in in an arc in the range of about 90° to 300° so that the injection section of the second vessel is oriented towards the electrodes 8. The second vessel 5c may travel back through the cone reservoir in route to inject the melt into the electrodes. The diameter or size of the pelletizer components such as the second vessel may be selected such that the drag on the flow is not excessive. Additionally, the second vessel may be heated such as trace heated by a heater such as a resistive or inductively coupled heater. The heater such as the inductively coupled heater to heat the injection section may comprise a coil such as 5f that heats the inlet portion and may further comprise coil 5o that may penetrate the wall of cell 26 and heat the injection section. The inlet portion of the second vessel may comprise a tubular loop that is heated by an inductively coupled heater having a coil 5f that surrounds the tubular loop.

In an embodiment shown in FIGURES 2I19 and 2I20, the cell wall 26 comprises a material resistant to silver adherence such as at least one of graphite, graphite coated metal such as graphite coated high temperature stainless steel, tungsten, and tungsten carbide. The cell wall may taper into a conical bottom. The cell bottom may comprise a flange that may connect to a mating flange connecting to a cone reservoir 5b to contain melt such as silver melt. The cone reservoir 5b may be capable of high temperature operation and may comprise a material such as graphite, tantalum, niobium, titanium, nickel, molybdenum, tungsten or other high-temperature or refractory material or metal such as a high temperature stainless steel. The cone reservoir may be lined with material that resists adherence of the melt such as silver melt. An exemplary cone reservoir and liner comprise graphite or tantalum or niobium lined with graphite. The graphite liner may be connected to the cell. The connection may be by mating flanges that are fastened together by fasteners such as high-temperature screws such as Mo, Ta, or Nb screws. The fasteners may comprise anchors with mating bolt or screws that thread into the anchors. In an embodiment wherein the cone reservoir is in vacuum or an inert atmosphere, it may also comprise graphite with no liner. The vacuum or inert atmosphere may be provided by a vacuum-capable lower chamber 5b5. The cone reservoir may comprise a bottom flange that connects to a mating flange of the inlet of a pump tube of an electromagnetic pump 5k. An inductively coupled heater comprising surrounding coil 5f may heat the cone reservoir 5b and at least a portion of the inlet to the pump 5k to a temperature above the melting point of the melted metal such as at least one of silver, silver copper alloy, and copper metal. Defining the flange connection as the origin, the tube may initially point downward and then form a loop having a suitable radius of curvature to place the tube in a vertical direction to intersect the cone reservoir 5b. The inlet may transition into the straight pump tube 5k6 wherein the direction of pumping may be oriented vertically. The outlet tube of the pump may run vertically to intersect the cone reservoir wall. The intersection may be at the cones largest radius to provide the maximal distance of the pump yoke and magnets 5k4 and 5k5 (FIGURE 2I16) from the cone reservoir 5b to provide for operating these pump components at a suitably lower temperature than that of the cone reservoir. The pump magnetic circuit 5k4 and 5k5 may be oriented tangentially to the cone reservoir, and the bus bars 5k2 may be short and oriented perpendicularly to the cone reservoir with leads 5k3 to the current source at about 90° to the direction of the bus bars 5k2. The orientation of the magnetic circuit 5k4 and 5k5 may maximize the distance from the elevated temperature components. The high-operating-temperature components such as the cone reservoir and the inlet tube, pump tube 5k6, and outlet tube are required to be above the melting point of the melt, and the low-operating-temperature components such as the magnetic circuit 5k4 and 5k5 of the EM pump 5k are required to be at a much lower temperature such as less than about 300 °C. To maintain a temperature separation between the two types of components, the pelletizer may comprise insulation between the components. Additionally, the magnetic circuit may be cooled by a cooling system such as one comprising water-cooled heat transfer plates 5k1 and a chiller 31a. The water-cooled coils of the inductively coupled heater 5f may also serve to cool the magnetic circuit of the electromagnetic pump 5k and vice versa. The cone reservoir and the pump inlet may comprise the first vessel 5b. The electromagnetic (EM) pump 5k may pump the melt such as the silver melt from the cone reservoir to the electrodes through the second vessel 5c that may comprise pump outlet tube such as a tantalum or niobium tube of about 3/8 inch diameter and nozzle 5q. The loop of the pump inlet and outlet tubes may comprise a bend of at least about 180° back through the cone reservoir wall. The tube 5c may travel inside of the cone reservoir 5b in a region such as one below the silver melt level contained in the cone reservoir, and protrude above the melt level ending in nozzle 5q. The nozzle may be slightly above the melt level such that the melt remains molten while flowing in the tube without the need of a vessel heater. In other embodiments having the nozzle significantly distant from the melt level, heating is applied to the distal injection section of the second vessel by a heater such as an inductively coupled heater. In an embodiment such as the former case, the electrodes may be located very close to the level of the melt. In an embodiment, the separation distance of the melt and the electrodes is within at least one range of about 1 mm to 100 mm, 1 mm to 50 mm, and 1 mm to 10 mm. The cell may have a larger diameter vacuum housing flange at the bottom of the cell containing the inner cone reservoir flange and the inlet to the cone reservoir. A lower chamber 5b5 capable of maintaining a vacuum or an inert atmosphere may be connected to the vacuum housing flange. The interior vacuum of the vacuum housing may be connected to the interior vacuum of the cell by a vacuum connection line 5b6. Alternatively, the vacuum connection line 5b6 may connect to a common manifold to the cell vacuum pump 13a. The lower vacuum-capable chamber 5b5 may comprise a right cylinder that may have a domed end cap. The lower vacuum-capable chamber 5b5 may contain at least one of the cone reservoir 5b, at least a portion of the electromagnetic pump 5k comprising the pump tube 5k6 and its inlet and outlet, the EM pump bus bars 5k2 and at least a portion of the magnetic circuit 5k4 and 5k5, and the heating coil 5f. The electrical connection to bus bars of the EM pump 5k3, the leads to the inductively coupled heater coil 5p, and any sensor leads may penetrate the walls of the lower vacuum-capable chamber 5b5. A portion of the EM pump magnetic circuit 5k4 and 5k5 may penetrate or have flux penetrate the lower vacuum-capable chamber 5b5 wherein the magnets and optionally a portion of the magnetic circuit 5k4 and 5k5 may be outside of the lower vacuum-capable chamber 5b5. The vacuum may protect air sensitive materials such as graphite, Ta, and Nb from oxidation. In another embodiment, the lower chamber 5b5 capable of maintaining a vacuum or seal from atmosphere may not be connected to the vacuum of the cell. In this case, the lower chamber 5b5 may be filled with an inert gas such as nitrogen or a noble gas such as argon. Further protection may be achieved by coating atmospheric gas reactive materials with a protective coating such as an electroplated or physical coating such as ceramic.

In an embodiment, the inductively coupled heater coil leads penetrate into a sealed section of the generator such as at least one of the cell 26 or the lower chamber 5b5. The lead 5p penetration of the corresponding wall such as at least one of the cell, chamber 5b5, and a partition between the two such as a electromagnetic pump flange plate may be electrically isolated such that the leads 5p to not electrically short. The penetrations may occur at the wall or may occur at a location distant from the wall in order to provide a location wherein the temperature is lower than at the wall.

The wall may be connected to the distant location by a conduit that houses the lead without electrical contact. The conduit end that is opposite the sealed penetrations may be welded to the wall to be penetrated to form a seal at the wall location. In an embodiment wherein the leads penetrate a hot conducting element wherein the vacuum seal is at the distant location, the lead may pass through a hole in the element such as the electromagnetic pump flange plate without making electrical contact with the element. The leads may be polished to lower the emissivity and heat transfer to the leads. The conduit may be vacuum-sealed about the lead with an electrical insulator at the opposite end of the conduit from the hot conducting element where the temperature is much lower. The insulator may comprise a low temperature seal such as a Teflon seal such as a Teflon Swagelok or Utra-Torr with Kalrez O-ring. Alternatively, the vacuum tight lead penetrations may comprise commercially available high-temperature RF penetrations.

In an embodiment, the cone reservoir and chamber 5b are threaded and screwed together in the vacuum connector to a top plate of the vacuum housing. The pump tube may penetrate the top plate. Vessel 5b may be attached to the top plate by means such as welds. In an embodiment, the pump tube 5k6 may be heated independently by a heater such as an inductively coupled heater that maintains the tube at a desired temperature above that of the melting point of the melt. In an embodiment, one inductively coupled heater RF power unit may be multiplexed to a plurality of inductively coupled heater coils. The pump tube heater may comprise a heater coil that is intermittently driven by the RF generator for the cone reservoir heater at a duty cycle of the RF generator that is switched over timed between driving the cone reservoir heater coil and the pump tube heater coil. The duty cycle may be controlled to maintain the cone reservoir and the pump tube at desired temperatures. An exemplary duty cycle range is about 10 % to 90%. Alternatively, the EM pump tube may be heated by heat transferred from a hot section of the generator. The heat may be from a heater or from the hydrino reaction. In an embodiment, the heat transfer is from the heated cone reservoir 5b transferred by a conductive medium such as copper that may comprise heat transfer blocks 5k7 (FIGURE 2I26). The blocks may be machined or cast to contact the cone reservoir and the pump tube. To make better thermal contact between the pump tube 5k6 and the heat transfer blocks 5k7, the pump tube may be coated with a heat transfer compound such as Thermon T-99. In an embodiment, heat may be transferred from at least one of the cone reservoir 5b and the reservoir 5c to the pump tube by heat transfer blocks 5k7 and along the pump tube 5k6. The tube may be enlarged in the inlet region to increase the heat conduction through the metal melt such as silver of AgCu alloy melt.

Each bus bar 9 and 10 may comprise a connection to a capacitor bank. The capacitor bank may comprise a plurality (e.g. two) of parallel sets of two capacitors in series with one connected to the positive bus bar and one connected to the negative bus bar with the corresponding opposite polarity capacitor terminals connected by a bus bar. In an exemplary embodiment, higher current is achieved with two sets of a pair of parallel capacitors is series using higher voltage capacitors such as custom 3400 F Maxwell capacitors with a higher voltage than 5.7 V with two in series. The circuit may be completed with the arrival of shot between the electrodes. The capacitors may be connected to a source of electrical power to charge the capacitors and maintain their voltage during operation wherein the voltage is sensed at the capacitors. Each bus bar may vertically penetrate the cell wall and comprise a mount such as a copper block with threads to receive the threads of the terminal of the corresponding capacitor. A horizontal bus bar may screw into the threaded end of each vertical bus bar, and the electrodes may slide onto the ends of the horizontal sections. The electrodes may be secured by fasteners such as clamps with bolts or set screws.

The electrodes may comprise one of the disclosure such as a downward V-shape the forms a channel at the gap 8 towards the PV converter 26a and further comprises an electrode EM pump comprising channel 8 and magnets 8c and optionally a second electrode EM pump comprising magnets 8c1 and channel 8g1. To prevent excessive heating of the magnets of either electrode EM pump, the magnets such as 8c and 8c1 may be located outside of the cell 26. The magnetic field may be supplied to the channel such as 8g and 8g1 by a magnetic circuit 8c (FIGURES 2I29-2I31) such as ferromagnetic yolks that may operate at high temperature such as at least one of iron, cobalt, and Hiperco® 50 Alloy (49% Co, 49% Fe, 2% V) yokes. In another embodiment, the yokes may comprise one material such as Co or Hiperco® 50 Alloy at the gap where the temperature is greatest and another material such as iron at the lower-temperature portion interfacing the magnets. The magnets may comprise a material that has a high maximum operating temperature such as CoSm magnets. To further thermally isolate the CoSm, the magnetic circuit may comprise an inner magnet that may operate at higher temperature such as an AlNiCo magnet that may operate at a maximum temperature of up to 525 °C compared to 350 °C for CoSm. The electrode EM pump magnetic circuit may comprise the magnets and the yokes and each may penetrate the cell wall 26. Alternatively, the magnetic flux may penetrate the wall from a first outside magnetic circuit section to a second magnetic circuit section inside of the cell. An exemplary wall material that permits the flux penetration is a high temperature stainless steel. In an alternative embodiment, the nozzle 5q may be positioned in close proximity to the electrodes 8 such that the pressure from the EM pump 5k pumps the melt through the electrode gap 8g and optionally 8g1 wherein at least one of the first and second electrode EM pumps are optional. The nozzle 5q may comprise a non-conductor such as quartz or a low conductor such as graphite such that it may be in proximity to the gap 8g or may be in contact with the electrodes 8 to facilitate direct pumping of the melt through at least one electrode gap or channel 8g and 8g1. Alternatively, the nozzle may be tipped with a non-conductor such as a quartz or ceramic sleeve, coated with a nonconductor such as boron nitride, or comprise a conductor such as the material of the pump tube, but a minimum gap may be maintained between the nozzle and electrodes 8. The cell may electrically floated, rather than being grounded to prevent the flow of electricity through the nozzle to other components in the cell. The cell walls, bus bars 9 and 10, and any other elements in the cell may be covered with a sheath that resists adherence of the melt such as silver or silver-copper alloy such as Ag 72 wt%-Cu 28 wt%. An exemplary sheath material is graphite, boron carbide, fluorocarbon polymer such as Teflon (PTFE), zirconia + 8% yttria, Mullite, or Mullite-YSZ. The shot ignited by the electrodes may comprise molten metal such as molten Ag that may further comprise at least one of gas of the group of $H_2O$ and hydrogen. The cone reservoir 5b may comprise at least one gas or water line such as a line from a manifold 5y connected to a source of at least one of $H_2O$ and $H_2$ 5u and 5v and a pipe bubbler or gas flow field 5z to add the gases to the melt. The line may penetrate the wall of the cone reservoir 5b to connect to the pipe bubbler 5z or gas flow field.

Alternatively, at least one of $H_2O$ and $H_2$ may be added by injection by an injector 5z1 regulated by injector regulator and valve 5z2 at the electrodes 8. The injector 5z1 may inject at least one of $H_2O$ and $H_2$ into at least one of a portion of the ignition plasma, the center of the ignition plasma, into the a portion of the melt and substantially into the middle of the stream of the melt to maximize the incorporation of the at least one of $H_2O$ and $H_2$ into at least one of the melt and the plasma. An exemplary injector 5z1 comprises a tube having a 50 um hole at the end that injects $H_2O$ directly into the plasma. The tube may comprise a material resistant to water reaction such as a nickel tube. The injector may comprise a nozzle comprising at least one pinhole such as each having a diameter in the range of about 0.001 um to 5 mm. The gas may directionally flow from the injector 5z1. The gas may comprise a gas jet or molecular beam such as at least one of a $H_2O$ and $H_2$ jet or beam. The nozzle may be located close to the point of ignition such as within 0.1 to 5 mm of the electrode gap 8g to efficiently supply the gases to the ignition while avoiding excess gas to be pumped from the cell. The injection may occur above of below the electrode gap 8g. The tip of the injector 5z1 may comprise a material that is resistant to heat damage such as a refractory metal such as one of the disclosure such as W or Mo. In another embodiment, the nozzle of the injector 5z1 may comprise a plurality or array of pinholes such as ones aligned along the length of the electrodes to inject gases into the molten metal. In an exemplary embodiment, the pinholes are about 25 um in diameter. The injection may be at high velocity. The high velocity may assist in impregnation of the metal with the gases so that the gases may be introduced to the reaction mixture with a greater yield. The molecular beam may facilitate the formation of HOH catalyst. In an embodiment, the tip of the injector 5z1 may comprise a diffuser to form a fine mist of the water injected into the plasma or fuel to be ignited.

In an embodiment, the injector 5z1 is designed to limit the heat transfer rate from the plasma to the injector such that the water at its flow rate to sustain a desired power from the hydrino process does not boil while within the injector. The injector 5z1 may comprise i.) a minimum surface area, ii.) material of low heat transfer rate, iii.) surface insulation, and iv.) radiation shields to limit the heat transfer to the flowing water. In an exemplary embodiment wherein the hydrino reaction is $H_2O$ to $H_2(1/4) + 1/2O_2 + 50$ MJ, the minimum water flow rate to generate X watts of power is given by

$$\text{Flow Rate} = (X \text{ watts}/50 \text{ MJ/mole } H_2O) \text{ X } (1 \text{ liter } H_2O /55 \text{ moles}) \tag{33}$$

In the exemplary case wherein X = 500 kW, the flow rate is 0.18 ml/s. The power to cause 0.18 ml per second of water to boil from an initial temperature of 0 °C is 490 W. Thus, the injector 5z1 is designed such that its maximum rate of acceptance of heat from the cell such as from the plasma corresponds to a power of less than 490 W. Using the relation:

$$P = \frac{1}{2}\rho v^2 \tag{34}$$

wherein P is the pressure, $\rho$ is the density of water, and v is the velocity, a water injection pressure of 3 atm corresponds to a nozzle 5q flow rate of 25 m/s. The size of the orifice of the nozzle 5q to deliver 0.18 ml/s (0.18 X $10^{-6}$ $m^3$) at this flow rate is 7.2 X $10^{-9}$ $m^2$ (95 um diameter disk). Given a tube of twice this diameter with 3 cm immersed in the plasma, the plasma contract area of the tube is 1 X $10^{-5}$ $m^2$ which requires that the heat transfer rate be less than 490 W/1 X $10^{-5}$ $m^2$ or 4.9 X $10^7$ $W/m^2$. Exemplary heat resistant nozzles with a low heat acceptance rate comprise alumina or zirconia that may be stabilized with calcia or yttria. The nozzle 5q such as one comprising a pinhole may have a shape to cause the water stream to spread into a volume that disperses the water throughout a desired portion of the plasma. The spread may comprise an even dispersion of the water in the plasma. The water source 5v may comprise a water reservoir and a pump to supply the water to the injector 5z1. The valve, flow meter, and regulator 5z2 may control the rate of water flow to be injected through nozzle 5q.

The injector 5z1 may comprise a humidifier that may maintain a desired partial $H_2O$ pressure in the region of the electrodes such as one in at least one range of about 0.01 Torr to 1000 Torr, 0.1 Torr to 100 Torr, 0.1 Torr to 50 Torr, and 1 Torr to 25 Torr.

The molecular beam may be cooled to form ice crystals that may increase the rate of the hydrino reaction. The cooling may be provided by chiller 31a. The cooling may be achieved by cooling a carrier gas such as hydrogen or a noble gas. The water may be cooled to the limit of freezing. The freezing point may be lowered by dissolving carrier gas such as hydrogen in the water to form super-cooled water. The super-cooled water may be aerosolized by bubbling the carrier gas such as hydrogen. In an embodiment, micro-water droplets such as in the range of 0.1 to 100 um diameter may be formed by an aerosolizer such as an ultrasonic aerosolizer. The ultrasonic frequency may be high such as in a range of about 1 kHz to 100 kHz. The aerosolization may result in the formation of ice crystals. The water may be injected into vacuum. The expansion into vacuum may cool the water to form ice. The evaporation of the water injected into vacuum may form the ice. The evaporation may cool the tip of the injector 5z1 that may cause the injected water to form ice. At least one of the injected water and tip may be cooled by chiller 31a. The cooling may be to a temperature that results in ice crystal formation of the injected water while preventing the tip from icing up and clogging. The formation of ice crystals may be further facilitated by bubbling cooled carrier gas. The super-cooling may also be achieved by at least one of reducing the pressure and elimination of nucleation sites in the water reservoir such as the bubbler. In an embodiment, an additive may be added to the water to lower the freezing point. Exemplary additives are salts, inorganic compounds, and organic compounds. In the later case, the organic compound may be consumed and replaced during operation of the cell. Gas such as hydrogen gas may be bubbled through the water to form ice crystals that may be injected into the melt to serve as a source of at least one of H and HOH catalyst for the hydrino reaction. In an embodiment, ice may be sublimated and directed to the electrodes. The vaporized ice may be flowed through a manifold. The ice may nucleate or undergo deposition to larger crystals by physical contact with a suitable surface wherein the larger particles may be flowed into the ignition site. The flow may be through the manifold having a plurality of pinholes. In an embodiment, the injector may be located in the walls of the electrodes such as in the channel 8g. In another embodiment, the injector 5z1 is on the opposite side of the nozzle 5q. In an exemplary embodiment, the nozzle 5q injects melt into the electrodes 8, and the injector 5z1 injects at least one of $H_2O$ and $H_2$ from the top, on the other side of the electrodes such as in the channel 8g. The water may be in the form of at least one of fine ice crystals, vapor, and liquid water. In an embodiment, input gas from a source such as 5u and 5v is injected into the cell that is maintained under a vacuum. Controlling the input pressure that may be less atmospheric may control the flow rate of the gas through the injector 5z1. At least one of the input gas pressures for injection and flow rate may be controlled by valve, pump, flow controller, and pressure monitor and controller 5z2. The cell vacuum may be maintained with a water vapor condenser such as at least one of a chiller, cryopump, and vacuum pump 13a. The cell vacuum may be maintained with a water trap and a pump such as a vacuum pump such as a Scroll pump. The water condenser may comprise at least one of a chiller and a cryotrap. In an embodiment, the pump may comprise a high-temperature pump that maintains the cell gas at an elevated temperature while pumping such that the water vapor component essentially behaves as an ideal gas. Any injected or formed water may be removed as steam that may serve as a means to cool the cell.

In another embodiment, the cell comprises a chemical getter for removing the water vapor from the cell gas to maintain vacuum. The getter may comprise a compound that reacts with water such as a metal that may form an oxide. The water reaction product may be reversible by heating. The getter may comprise a hydroscopic compound such as a desiccant such as at least one of a molecular sieve, silica gel, clay such as Montmorillonite clay, a dehydrated base such as an alkaline earth oxide such as CaO, a dehydrated hydrate compound such as an alkaline earth compound comprising an oxyanion such as a sulfate such as $CaSO_4$, and an alkali halide that forms a hydrate such as LiBr to absorb the water vapor in the cell. The compound may be regenerated by heating. The heat may be from the excess heat produced by the cell.

The compound may be cyclically removed from contact with cell gases, regenerated, and returned. The compound may remain in a sealed chamber when heated such that a steam pressure above atmospheric is generated. The steam at an initial high pressure may be vented through a valve that is opened. The valve may be closed at a reduced pressure relative to the initial pressure that is still greater than atmospheric such that air does not flow into the chamber. The chamber may be cooled and the compound exposed to cell gases to absorb water in a repeat cycle. In an embodiment wherein the compound is transported to achieve exposure to the cell gases to absorb water in one phase of the cycle and exposure to atmosphere to release the absorbed water in another, the transport of the compound may be by a means of the disclosure such as by mechanical means such as by an auger or by using a pump. Alternatively, the transport may be by using a pneumatic means such as one of the disclosure. In an embodiment comprising a reciprocating two-valve desiccant chamber water removal system wherein the compound is not transported to achieve exposure to the cell gases to absorb water in one phase of the cycle and exposure to atmosphere to release the absorbed water in another, the compound is in a chamber with at least two valves. A first absorption valve controls the connection with the cell gases and a second exhaust valve controls the connection to the water exhaust region such as the ambient atmosphere. During the water absorption phase, the absorption valve is opened and the exhaust valve is closed. During the water exhaust phase, the absorption valve is closed and the exhaust valve is open. The valves may alternately open and close to achieve the water absorption and exhaust. The absorption valve may comprise a large valve such as a gate valve to increase the gas flow exposed to the compound. The exhaust valve may comprise a smaller pressure-regulated valve such as a blow-off valve that opens at a desired pressure and closes at a lower desired pressure. The chamber may be in proximity to the cell such that the cell ordinarily heats it. During the absorption phase, the chiller such as 31a may cool the chamber. The cooling may be suspended to allow the cell to heat up during the exhaust phase. The suspension may be achieved by stopping the coolant flow. The coolant may have a boiling point that is higher than the highest operating temperature of the chamber. In another embodiment, heat may be removed or supplied to the chamber by a heat exchanger such as a heat pipe. In an embodiment, water may be removed continuously by a plurality of reciprocating two-valve desiccant chamber water removal systems wherein at least one system operates in the absorption phase while another operates in the exhaust phase.

In an embodiment, the ultraviolet and extreme ultraviolet light from the hydrino reaction causes the water vapor in the cell to dissociate into hydrogen and oxygen. The hydrogen and oxygen are separated by means of the disclosure to provide a supply of these valuable industrial gases. The hydrogen and oxygen product mixture of the photon dissociated water may be separated by at least one method known in the art such as one or more from the group of separation of $H_2$ by a micro-porous membrane, separation of $O_2$ by an electro-diffusion membrane such as a refractory oxide such as CaO, $CeO_2$, $Y_2O_3$, and $ZrO_2$, separation of $H_2$ by a nonporous metallic membrane such as a palladium or Pd-Ag membrane, gas separation by creating a high-speed jet using an orifice and a beam skimmer, gas separation by centrifugation, and gas separation by cryo-distillation. The gases may be converted into electricity by supplying the hydrogen and oxygen to a fuel cell such as at least one of a proton-exchange-membrane fuel cell, a molten carbonate fuel cell and other fuel cells known in the art. Alternatively, the hydrogen and the oxygen or atmospheric oxygen may be combusted in a heat engine such as at least one of an internal combustion engine, a Brayton cycle engine, a gas turbine, and other heat engines known in the art.

In an embodiment, the injector 5z1 may comprise a manifold having a plurality of pinholes to deliver at least one of $H_2$ and $H_2O$ wherein the $H_2O$ may comprise ice crystals. The injector further comprises a pump 5z2. The water reservoir 5v may be cooled to at least the freezing point of water. The reservoir may be operated under a pressure less than atmospheric by pump 5z2. The low pressure may cause ice to sublime in a super cooled state wherein the vapor has a temperature below the freezing point of water at atmospheric pressure. The surface area of ice may be increased to increase the sublimation rate. The pump 5z2 may compress the super cooled water vapor to cause it to freeze. The pump may change the pressure to cause a phase change form liquid to solid. The pump may comprise a peristaltic pump. Bubble chambers use a pressure change to cause a phase change as well as given in https://en.wikipedia.org/wiki/Bubble_chamber. This principle may be applied to cause the formation of fine ice crystal for injection into the ignition plasma, the plasma formed by igniting the hydrino reactants. The pump parts that contact the super cooled water vapor and the formed ice crystals may be cooled with a chiller such as 31a. The ice crystals may be pumped into the injector 5z1 such as the manifold having a plurality of pinholes by the pump 5z2, and the crystals may be injected into the fuel ignition site.

In an embodiment, the hydrogen injector 5z1 may comprise a hydrogen permeable membrane such as a nickel, graphite or palladium-silver alloy membrane wherein the hydrogen permeates the membrane and is delivered to the melt that is maintained under low pressure. The hydrogen permeable membrane may decrease the hydrogen flow rate to a desirable one wherein the hydrogen is injected into a low-pressure region such as in the cell at the electrodes. The flow rate may be one that does not contributed to a corresponding significant consumption of power. The flow rate may be manageable for the vacuum pump 13a to maintain the cell pressure. The hydrogen flow rate may be in at least one range of about 0.1 standard cubic centimeters per minute (sccm) to 10 standard liters per minute (slm), 1 sccm to 1 slm, and 10 sccm to 100 sccm per a cell that produces about 100 kW of light. Electrolysis of $H_2O$ may comprise the source of hydrogen 5u. In an embodiment, the membrane such as a palladium or Pd-Ag membrane, may perform at least one function of separating hydrogen from oxygen of an aqueous electrolysis gas mixture, injecting $H_2$ into the hydrino plasma such as at the electrodes in a controlled manner, and dissociating molecular hydrogen into atomic hydrogen. The permeation rate and selectively for hydrogen permeation may be controlled by controlling the membrane temperature such as in the range of about 100 °C to 500 °C. The hydrino plasma may provide the membrane heating. In other embodiments, hydrogen and oxygen of an electrolysis product mixture may be separated by at least one method known in the art such as one or more form the group of separation of $H_2$ by a microporous membrane, separation of $O_2$ by an electro-diffusion membrane such as a refractory oxide such as CaO, $CeO_2$, $Y_2O_3$, and $ZrO_2$, separation of $H_2$ by a nonporous metallic membrane such as a palladium or Pd-Ag membrane, gas separation by creating a high-speed jet using an orifice and a beam skimmer, gas separation by centrifugation, and gas separation by cryo-distillation.

In an embodiment, the injector supplies a jet of ice crystals into the molten metal wherein the ice crystals may be impregnated into the melt due to their high velocity. In the case that the jet comprises a carrier gas such as hydrogen or a noble gas such as argon for transporting water vapor, substitution of ice crystal for water vapor may significantly increase the amount and concentration of water delivered to the ignition per carrier gas volume. The ice crystals may also be formed mechanically by means known in the art such as by an ice shaver or chipper. The mechanical ice crystal machine may comprise at least one rotating blade that breaks solid ice into small ice particles of a desired size. The ice may be supplied to the electrodes by at least one machine tool such as a high-speed grinder such as a Dremel tool or a high-speed drill or grinder such as a dentist drill or grinder. The tool or drill may be rastered over an ice surface that may be advanced as it is consumed. The rastering may be produced by a raster mechanism. A column of ice with the surface at the top may be advanced by a corresponding mechanism with replenishment from a freezing front at the base. A chiller such as 31a may be used to achieve the freezing. The mechanical frequency may be in the range of about 1000 RPM to 50,000 RPM. The ice may be supplied chilling water in a reservoir such as 5u by a chiller such as 31a. In an embodiment, low temperature may limit the $H_2O$ vapor pressure to favor HOH formation. The Type I ice structure may also enhance the hydrino reaction rate. In an embodiment, the solid fuel reaction mixture to form hydrinos comprises ice as a source of at least one of H and HOH. The ice may be in a physical form to provide a high surface area such as ice crystals that may be injected by injector 5z1. The ice may be formed in an ice supply 5v that may further comprise a means to form fine powdered ice or small ice crystals such as a chiller such as 31a to freeze water and a grinder. Alternatively, the ice supply may comprise an ice crystal maker such as one comprising a source of chilled expanding or aerosolized $H_2O$.

In an embodiment, the injector 5z1 comprises an injection nozzle. The nozzle of the injector may comprise a gas manifold such as one aligned with the trough of the electrodes 8. The nozzle may further comprise a plurality of pinholes from the manifold that deliver a plurality of gas jets of at least one of $H_2O$ and $H_2$. In an embodiment, $H_2$ is bubbled through a reservoir of $H_2O$ such as 5v at a pressure greater than that of the cell, and the $H_2O$ is entrained in the $H_2$ carrier gas. The elevated pressure gas mixture flows through the pinholes into the melt to maintain the gas jets. The flow may be regulated by pressure controller or flow controller 5z2 that is supplied at an elevated pressure greater than that of the cell such as in at least one range of about 1 mTorr to 10,000 Torr, 1 mTorr to 1000 Torr, and 1 mTorr to 100 Torr. At the electrodes, the gas, that may be a mixture, may be combined with the conductive matrix, the metal melt. With the application of a high current, the corresponding fuel mixture may ignite to form hydrinos.

The pinholes may be laser, water jet, or mechanically drilled. The gases in the injector may be pressurized to facilitate the formation of a plurality of high velocity gas injection jets or molecular beams. Gas that is not consumed in formation of hydrinos may be collected by means such as the pump 13a and recycled. Water may be condensed and recycled. The condensation may be achieved using a cryopump. Hydrogen may be recycled wherein it may be separated from other gases before recycling. The separation may be achieved with a selective filter.

The timing of injection may be such that the creation of plasma in the shot and gases are simultaneous. The injection may be about continuous. The continuous gas flow rate may be adjusted to at least one of the ignition frequency and fuel flow rate. The fuel injection may be intermittent and synchronized with the ignition of the shot. The timing may be achieved by the mechanical resonances in the injector and the pressure wave of the nth ignition delaying and compressing the injection gases for the n + 1th ignition, wherein n is an integer. Alternatively, a valve such as a solenoid valve 5z2 of the injector 5z1 may control the injection. The valve 5z2 may be activated by the ignition current. An exemplary valve is a mechanical feedback servo valve. The valve may comprise a pressure control valve such as one at the injector outlet wherein an excess pressure may be maintained in the supply side of the valve. The water may be at least one of supplied and injected as at least one of liquid or gas. The gas supplies may be from sources 5u and 5v.

In an embodiment, at least one of very high power and energy may be achieved by the hydrogen undergoing transitions to hydrinos of high p values in Eq. (18) in a process herein referred to as disproportionation as given in Mills GUT Chp. 5 which is incorporated by reference. Hydrogen atoms $H(1/p)$ $p$ = 1,2,3,...137 can undergo further transitions to lower-energy states given by Eqs. (10) and (12) wherein the transition of one atom is catalyzed by a second that resonantly and nonradiatively accepts $m \cdot 27.2$ $eV$ with a concomitant opposite change in its potential energy. The overall general equation for the transition of $H(1/p)$ to $H(1/(p+m))$ induced by a resonance transfer of $m \cdot 27.2$ $eV$ to $H(1/p')$ given by Eq. (35) is represented by

$$H\left(1/p'\right)+H\left(1/p\right)\rightarrow H+H\left(1/(p+m)\right)+\left[2pm+m^2-p'^2+1\right]\cdot 13.6\,eV \qquad (35)$$

The EUV light from the hydrino process may dissociate the dihydrino molecules and the resulting hydrino atoms may serve as catalysts to transition to lower energy states. An exemplary reaction comprises the catalysis H to H(1/17) by H(1/4) wherein H(1/4) may be a reaction product of the catalysis of another H by HOH. Disproportionation reactions of hydrinos are predicted to given rise to features in the X-ray region. As shown by Eqs. (5-8) the reaction product of HOH catalyst is $H\left[\dfrac{a_H}{4}\right]$. Consider a likely transition reaction in hydrogen clouds containing $H_2O$ gas wherein the

first hydrogen-type atom $H\left[\dfrac{a_H}{p}\right]$ is an H atom and the second acceptor hydrogen-type atom $H\left[\dfrac{a_H}{p'}\right]$ serving as a catalyst is $H\left[\dfrac{a_H}{4}\right]$. Since the potential energy of $H\left[\dfrac{a_H}{4}\right]$ is $4^2 \cdot 272$ eV = $16 \cdot 27.2$ eV = 435.2 eV, the transition reaction is represented by

$$16 \cdot 27.2 \; eV + H\left[\frac{a_H}{4}\right] + H\left[\frac{a_H}{1}\right] \rightarrow H^+_{fast} + e^- + H*\left[\frac{a_H}{17}\right] + 16 \cdot 27.2 \; eV \tag{36}$$

$$H*\left[\frac{a_H}{17}\right] \rightarrow H\left[\frac{a_H}{17}\right] + 3481.6 \; eV \tag{37}$$

$$H^+_{fast} + e^- \rightarrow H\left[\frac{a_H}{1}\right] + 231.2 \; eV \tag{38}$$

And, the overall reaction is

$$H\left[\frac{a_H}{4}\right] + H\left[\frac{a_H}{1}\right] \rightarrow H\left[\frac{a_H}{1}\right] + H\left[\frac{a_H}{17}\right] + 3712.8 \; eV \tag{39}$$

The extreme-ultraviolet continuum radiation band due to the $H*\left[\dfrac{a_H}{p+m}\right]$ intermediate (e.g. Eq. (16) and Eq. (37)) is predicted to have a short wavelength cutoff and energy $E_{\left(H \rightarrow H\left[\frac{a_H}{p+m}\right]\right)}$ given by

$$E_{\left(H \rightarrow H\left[\frac{a_H}{p+m}\right]\right)} = \left[(p+m)^2 - p^2\right] \cdot 13.6 \; eV - m \cdot 27.2 \; eV$$

$$\lambda_{\left(H \rightarrow H\left[\frac{a_H}{p+m}\right]\right)} = \frac{91.2}{\left[(p+m)^2 - p^2\right] \cdot 13.6 \; eV - m \cdot 27.2 \; eV} \; nm \tag{40}$$

and extending to longer wavelengths than the corresponding cutoff. Here the extreme-ultraviolet continuum radiation band due to the decay of the $H*\left[\dfrac{a_H}{17}\right]$ intermediate is predicted to have a short wavelength cutoff at E = 3481.6 eV; 0.35625 nm and extending to longer wavelengths. A broad X-ray peak with a 3.48 keV cutoff was recently observed in the Perseus Cluster by NASA's Chandra X-ray Observatory and by the XMM-Newton [E. Bulbul, M. Markevitch, A. Foster, R. K. Smith, M. Loewenstein, S. W. Randall, "Detection of an unidentified emission line in the stacked X-Ray spectrum of galaxy clusters," The Astrophysical Journal, Volume 789, Number 1, (2014); A. Boyarsky, O. Ruchayskiy, D. Iakubovskyi, J. Franse, "An unidentified line in X-ray spectra of the Andromeda galaxy and Perseus galaxy cluster," (2014),arXiv:1402.4119 [astro-ph.CO]] that has no match to any known atomic transition. The 3.48 keV feature assigned

$$H\left[\frac{a_H}{4}\right] + H\left[\frac{a_H}{1}\right] \rightarrow H\left[\frac{a_H}{17}\right]$$

to dark matter of unknown identity by BulBul et al. matches the transition and further confirms hydrinos as the identity of dark matter.

In an embodiment, the generator may produce high power and energy with a low pressure of $H_2O$. The water vapor pressure may be in at least one range of about 0.001 Torr to 100 Torr, 0.1 mTorr to 50 Torr, 1 mTorr and 5 Torr, 10 mTorr to 1 Torr, and 100 mTorr to 800 Torr. The low $H_2O$ vapor pressure may be at least one of supplied and maintained by a source of water vapor and a means to control at least one of the flow rate and pressure. The water supply may be sufficient to maintain a desired ignition rate. The water vapor pressure may be controlled by at least one of steady state or dynamic control and equilibrium control. Low-pressure water may be added to the plasma by humidifying the atmosphere in the region of the ignition such as the inter-electrode and electrode EM pump channel region 8g. The generator may comprise a pump 13a that maintains a lower water vapor pressure in a desired region such as one outside of the electrode region. The water may be removed by differential pumping such that the regions of the cell outside of the electrode region may have a lower pressure such as a lower partial pressure of water. The lower pressure may be maintained to decrease the attenuation of light such as EUV light that may be made incident to PV converter 26a.

The cell water vapor pressure may be maintained by a water reservoir/trap in connection with the cell. The cell water vapor pressure may be in at least one of steady state or equilibrium with the water vapor pressure above the water surface of the water reservoir/trap. The water reservoir/trap may comprise a means to lower the vapor pressure such as at least one of a chiller to maintain a reduced temperature such as a cryo-temperature, a $H_2O$ absorbing material such as activated charcoal or a desiccant, and a solute. The water vapor pressure may be a low pressure established in equilibrium or steady state with ice that may be super-cooled. The cooling may comprise a cryo-chiller or bath such as a carbon dioxide, liquid nitrogen, or liquid helium bath. A solute may be added to the water reservoir/trap to lower the water vapor pressure. The vapor pressure may be lowered according to Raoult's Law. The solute many be highly soluble and in high concentration. Exemplary solutes are sugar and an ionic compound such as at let one of alkali, alkaline earth, and ammonium halides, hydroxides, nitrates, sulphates, dichromates, carbonates, and acetates such as $K_2SO_4$, $KNO_3$, $KCl$, $NH_4SO_4$, $NaCl$, $NaNO_2$, $Na_2Cr_2O_7$, $Mg(NO_3)_2$, $K_2CO_3$, $MgCl_2$, $KC_2H_3O_2$, $LiCl$, and $KOH$. The trap desiccant may comprise a molecular sieve such as exemplary molecular sieve 13X, 4-8 mesh pellets.

In an embodiment to remove excess water, the trap can be sealed and heated; then the liquid water can be pumped off or it can be vented as steam. The trap can be re-cooled and rerun. In an embodiment, $H_2$ is added to the cell 26 such in a region such as at the electrodes to react with $O_2$ reaction product to convert it to water that is controlled with the water reservoir/trap. The $H_2$ may be provided by electrolysis at a hydrogen permeable cathode such as a PdAg cathode. The hydrogen pressure may be monitored with a sensor that provides feedback signals to a hydrogen supply controller such an electrolysis controller.

In an exemplary embodiment, the water partial pressure is maintained at a desired pressure such as one in the range of about 50 mTorr to 500 mTorr by a hydrated molecular sieve such as 13X. Any water released from the molecular sieve may be replaced with a water supply such as one from tank 5v supplied by manifold and lines 5x. The area of the molecular sieves may be sufficient to supply water at a rate of at least that required to maintain the desired partial pressure. The off gas rate of the molecular sieve may match the sum of the consumption rate of the hydrino process and the pump off rate. At least one of the rate of release and the partial pressure may be controlled by controlling the temperature of the molecular sieves. The cell may comprise a controller of the molecular sieves with a connection to the cell 26. The container may further comprise a means to maintain the temperature of the molecular sieve such as a heater and a chiller and a temperature controller.

In an alternative steady state embodiment, the water vapor pressure is maintained by a flow controller such as one that controls at least one of the mass flow and the water vapor pressure in the cell. The water supply rate may be adjusted to match that consumed in the hydrino and any other cell reactions and that removed by means such as pumping. The pump may comprise at least one of the water reservoir/trap, a cryopump, a vacuum pump, a mechanical vacuum pump, a scroll pump, and a turbo pump. At least one of the supply and removal rates may be adjusted to achieve the desired cell water vapor pressure. Additionally, a desired partial pressure of hydrogen may be added. At least one of the $H_2O$ and $H_2$ pressures may be sensed and controlled by sensors and controllers such as pressure gauges such as Baratron gauges and mass flow controllers. The gas may be supplied by a syringe pump. As an alternative to a mass flow controller, the water vapor pressure may be maintained by a high precision electronically controllable valve such as at least one of a needle valve, proportional electronic valve, and stepper motor valve. The valve may be controlled by a water vapor pressure sensor and a computer to maintain the cell water vapor pressure at a desired value such as in the range of about 0.5 Torr to 2 Torr wherein the control may be to a small tolerance such as within 20%. The valve may have a fast response to maintain the tolerance with rapid changes in water vapor pressure in the cell. The dynamic range of the flow through the valve may be adjusted to accommodate different minimum and maximum ranges by changing the water vapor pressure on the supply side of the valve. The supply side pressure may be increased or decreased by increasing or decreasing the temperature, respectively, of a water reservoir 5v.

In another embodiment, the pump 5k comprises a submersible pump such as an electromagnetic pump that is submerged in the melt contained in the cone reservoir and pumps the melt vertically to the electrodes through a conduit such as a vessel such as a tube attached to the outlet of the pump 5k. An exemplary pump containing single-phase electromagnetic windings is given in US Patent No. 5,277,551, Jan. 11, 1994. The pump materials are capable of high temperature. In an embodiment, the submersible electromagnetic pump may comprise a vertically (z-axis) oriented pump tube having its inlet submerged in the melt. The pump may comprise a DC electromagnetic pump that may be oriented such that the current is along the x-axis and the magnetic field is applied along the y-axis. The y-axis aligned magnetic circuit of the EM pump to apply the magnetic field of the Lorentz force may comprise mirror image sets of an optional peripheral magnet cooling system such as a water cooled heat sink, a magnetic circuit comprising peripheral magnets such neodymium magnets, a magnetic yoke that may further comprise a thermal barrier or insulation in contact with the hot pump tube, and an optional cold plate that abuts the pump tube. In an embodiment, the thermal barrier comprises at least one of a gas gap or vacuum gap. The thermal barrier may further comprise a means to reduce the thermal radiation across the gap such as at least one of a radiation reflector or shield and a reduced emissivity of the hot parts of the pump such as the magnetic circuit parts such as the yokes, bus bars and the pump tube. The emissivity may be decreased by means such as forming a smooth surface such as a polished, electroplated, or electro-polished surface. In an exemplary embodiment, the Fe or Co yokes are electroplated with a material such as chromium that renders it to have low emissivity. A layer of copper may be first applied and then chromium. An exemplary EM pump design comprises wide, highly conductive bus bars attached to the short side wall of the rectangular pump tube, and the perpendicular magnetic circuit having the layout: magnets such as neodymium or SmCo magnets (cooled)/yoke such as ferrite, iron, or cobalt (cooled)/ vacuum or gas gap/pump tube/vacuum or gas gap/ yoke such as ferrite, iron, or cobalt (cooled)/ neodymium or SmCo magnets (cooled). The y-axis aligned pair of mirror-image current bus bars may be connected to a source of high current at the peripheral end and abutted to the side of the pump tube on the opposite end. The xy-plane of the pump comprising the magnetic circuit and the current bus bars may be elevated outside of at least one of the melt and the hottest zone of the cone reservoir. Alternatively, the pump may be placed in a protective housing at or below the melt level to maintain a gravity feed of melt to the pump, or the pump may be maintained in a primed state with metal in the pump current carrying section. At least one of the bus bar and magnetic circuit may be at least partially located outside of the cell with penetrations through the cell walls. The magnetic circuit may comprise magnets outside of the cell that provide flux through a nonmagnetic wall such as a stainless steel wall wherein the magnetic flux is concentrated in internal yolks of the magnetic circuit and guided across the pump tube. The bus bar penetrations may each comprise a flange with a ceramic insulated conductor penetrating through the flange or other high-temperature-capable electrical feed-through known to those skilled in the art. The materials of the EM pump such as the pump tube, magnets, and magnetic yolk may be capable of operating at high temperature. Alternatively, the EM pump may comprise insulation, cold plates, heat exchangers, and other heat removal systems known in the art to cool the materials. Exemplary ferromagnetic materials having a high Curie temperature suitable for the magnets and magnetic circuit are Co (1400K), Fe (1043K), neodymium magnets (583-673K), and AlNiCo (973-1133K). In an embodiment, the magnets such as neodymium, AlNiCo, SmCo, and iron magnets have a high maximum operating temperature. In the case of magnets that are sensitive to demagnetization such as AlNiCo magnets, the magnets comprise a wrapper such as mu metal that will shield DC fields and a metal screen (Faraday cage) will screen RF fields. These aspects apply to other embodiments of the EM pump of the disclosure. The components of the pump such as the magnetic circuits and bus bars may each be covered with a housing that allows returning ignition products to flow over the housing and into the cone reservoir. The housing may comprise or may be coated with a material that is resistant to the ignition products adhering. Exemplary non-adhering materials for silver are graphite, WC, W, and Al. The outlet of the pump tube may connect to an injection section of the pelletizer comprising a conduit or vessel such as a tube to the nozzle 5q that injects the molten fuel such as molten silver comprising at least one of $H_2O$ and $H_2$ into the electrodes 8. A heater such as the inductively coupled heater to heat the injection section may comprise a coil such as 5o that may penetrate the wall of cell 26 and heat the injection section.

In an embodiment, the cell cone reservoir can serve to store the metal that is pumped backwards by the EM pump with a reversal of the pump electrical current to evacuate the vessels and EM pump. The metal may be allowed to solidify by removing heating power. Then during startup, first the heaters and then the EM pump may be activated with the pump action in the forward direction to return the SF-CIHT generator to operation.

In an embodiment, water may be sprayed into the plasma using a sprayer wherein the pressure may be maintained low to avoid attenuation of short wavelength light such as UV light by the water vapor. The water vapor pressure may be maintained less than 10 Torr. In another embodiment, the at least one of water such as steam and hydrogen may be simultaneously injected with the molten metal shot such as silver shot. The at least one of water, steam, and hydrogen injector may comprise a delivery tube that is terminated in a fast solenoid valve. The solenoid vale may be electrically connected in at least one of series and parallel to the electrodes such that current flows through the valve when current flows though the electrodes. In this case, the at least one of water such as steam and hydrogen may be simultaneously injected with the molten metal shot such as silver shot. In another embodiment, the injector system comprises an optical sensor and a controller to cause the injections. The controller may open and close a fast valve such as a solenoid valve when the shot is sensed. In an embodiment, lines for the injection of at least two of the melt such as silver melt, water such as steam, and hydrogen may be coincident. The coincidence may be through a common line. In an embodiment, the injector comprises an injection nozzle. The nozzle of the injector may comprise a gas manifold such as one aligned with the trough of the electrodes 8. The nozzle may further comprise a plurality of pinholes from the manifold that deliver a plurality of gas jets of at least one of $H_2O$ and $H_2$. In an embodiment, $H_2$ in bubbled through a reservoir of $H_2O$ at a pressure greater than that of the cell, and the $H_2O$ is entrained in the $H_2$ carrier gas. The elevated pressure gas mixture flows through the pinholes into the melt to maintain the gas jets. At the electrodes, the gas, that may be a mixture, may be combined with the conductive matrix, the metal melt. With the application of a high current, the corresponding fuel mixture may ignite to form hydrinos.

The cross section of the pelletizer having a pipe bubbler in the second vessel to introduce the gasses such as $H_2$ and steam to the melt, two electromagnetic pumps, and a nozzle to injection shot on the top of the electrodes is shown in FIGURE 2I17, details of the electrodes is shown in FIGURE 2I18. In an embodiment shown in FIGURE 2I17, the pelletizer 5a inlet at the first vessel 5b may be solely located at the bottom of the cell 26. The cell may be shaped in cone or funnel that causes the ignition product to flow into the inlet of the pelletizer. The first vessel 5b, second vessel 5c, and nozzle 5q may form at least a portion of a loop with the first vessel 5b at the bottom of the cell 26 to receive ignition products and the second vessel 5c and nozzle 5q in a separate location to deliver shot to the electrodes 8. The second vessel 5c may penetrate the side of the cell 26. In an embodiment, the second vessel 5c and nozzle 5q may elevate the ejection point of the fuel above the electrodes 8. The nozzle may deliver the fuel to the second electrode section 8j (FIGURES 2I12 and 2I18) such that the ignition expansion and light emission occurs in the second cell region 8l. The ejection may be facilitated by at least one of gravity and pressure from the pump. In an embodiment, the first electrode section may comprise the electrode gap only or may be closed by an insulator such that the plasma only expands in the direction of the photovoltaic converter 26a.

In an embodiment, the electrodes may comprise a bilayer set of electrodes comprising a top conductive layer upon which ignition occurs and a bottom plate of an insulator to form a floor in the gap 8g. The conducting top layer may comprise at least one of copper, Mo, Ta, TaW, tungsten, tungsten carbide (WC), or graphite coated conductor such as graphite coated Cu or W, and the bottom non-conducting bottom layer may comprise a ceramic such as alumina, zirconia, MgO, and firebrick. The top conduction layer may comprise or may be covered with a material to which silver does not stick such as aluminum that may be cooled, molybdenum, tungsten, Ta, TaW, tungsten carbide (WC), and graphite coated conductor such as graphite coated Cu or W electrodes 8. Materials that are wetted by silver such as copper, silver, and CuAg alloy may each be covered with a material to which the shot such as silver shot does not adhere.

The electrode may comprise a plurality of layers such as a covering layer, an ignition layer, and a bottom non-conducting plate. The non-adhering cover layer may comprise at least one of an insulator, a conductor of low conductivity relative to the portion of the electrode that causes the fuel ignition, and a conductor. In the case that the non-adhering layer is conductive, it may be electrically isolated from the ignition portion of the electrode. The electrode may comprise a top shot non-adhering layer, a thin insulating spacer layer, and a highly conductive ignition portion layer that is exclusively connected to the source of electricity 2. An exemplary top layer of low conductivity relative to the ignition portion of the electrode such as a silver or copper portion comprises graphite. In an exemplary embodiment, graphite or zirconia serve as a layer to which the shot such as silver shot does not adhere. The non-adhering layer may be electrically isolated from the ignition portion such as a copper portion by an insulating layer such as a ceramic layer. The non-adhering layer may comprise a funnel to guide shot into the gap 8g of the ignition portion of the electrodes.

In an embodiment, the electrode may comprise a bilayer electrode such as one comprising an upward V-shaped top layer such as graphite or zirconia top layer. The top layer may guide the shot to a bottom ignition layer. The bottom layer comprising a conductor may have vertical walls or near vertical walls towards the gap 8g. Exemplary materials of the bottom or ignition layer are W, WC, and Mo. The open circuit is closed by injection of the melt shot causing contact across the conductive parts of the gap 8g only in the bottom layer. In an embodiment, the shot may be delivered along the y-axis. The nozzle 5q may deliver the shot horizontally along the y-axis to the top of the electrodes (FIGURES 2I17 and 2I18). The light may constrained to predominantly propagate upward due to an electrode design that permits the plasma from the ignited top-loaded shot to expand predominantly in the positive z-direction along the z-axis towards the PV converter 26a.

In an embodiment, the electrode may comprise a trilayer electrode such as one comprising a top layer comprising a upward V-shape, a middle current delivery layer such as a flat plate with the plate edge slightly extended into the gap 8g, and an downward V-shaped electrode layer that is recessed away from the gap 8g. The top layer may comprise a material that resists adhesion of the shot melt such as silver shot melt. Suitable exemplary materials are at least one of a nonconductor or poor conductor such as anodized aluminum, graphite, and zirconia or a conductor such as aluminum, molybdenum, tungsten, Ta, TaW, tungsten carbide (WC), and graphite coated conductor such as graphite coated Cu or W. Low melting point electrodes such as aluminum electrodes may be cooled to prevent melting. The top layer may be electrically insulated for the middle layer. The middle current delivery layer may comprise a conductor with a high melting point and high hardness such as flat W, WC, or Mo plate. In an embodiment, the source of electricity 2 is may be connected to at least one of the middle layer and the bottom layer that may serve as a lead layer. The bottom electrode lead layer may comprise a high conductor that may also be highly thermal conductive to aid in heat transfer. Suitable exemplary materials are copper, silver, copper-silver alloy, and aluminum. In an embodiment, the bottom lead electrode layer also comprises a material that resists adhesion of the shot melt such as silver. Suitable exemplary non-adhering lead electrodes are WC and W. Alternatively, the lead electrode such as a copper electrode may be coated or clad with a surface that is resistant for the adherence of the shot melt. Suitable coatings or claddings are WC, W, carbon or graphite, boron carbide, fluorocarbon polymer such as Teflon (PTFE), zirconia + 8% yttria, Mullite, Mullite-YSZ, and zirconia. The coating or cladding may be applied over the surface regions that are exposed to the shot melt during ignition. The open circuit may be closed by injection of the melt shot causing contact across the conductive parts of the gap 8g only in the middle layer. The bottom layer may be cooled by a coolant flow system such one comprising electrode internal conduits. The contact between the middle and bottom cooled layer may heat sink and cool the middle layer. The contact between the top and middle cooled layer may heat sink and cool the top layer. In a tested embodiment, the shot injection rate was 1000 Hz, the voltage drop across the electrodes was less than 0.5 V, and the ignition current was in the range of about 100 A to 10 kA.

Magnets such as 8c of FIGURES 2I17 and 2I18 may cause plasma particles such as those from the shot ignition to be directed away from the region 8k (FIGURE 2I12). In an exemplary embodiment wherein the Lorentz force is directed in the negative z-axis direction, the magnets and channel 8g comprises an electromagnetic pump that performs at least one function of (i) injecting shot in region 8j into the gap 8g to be ignited, (ii) pumping shot that has adhered to the upper part of the electrodes such as at region 8j into the gap 8g to be ignited, (iii) ejecting un-ignited shot and particles from the region 8i and the gap 8g and (iv) recovering the ignition product and un-ignited shot to the pelletizer. The ejection and recovery may be by the Lorentz force formed by a crossed applied magnetic field such as that from magnets 8c and ignition current through at least one of the plasma particles and shot such as silver shot adhering to the electrode surfaces such as 8i, 8g, and 8j. The ignition current may be from the source of electrical power 2 (FIGURE 2I10).

Consider the Cartesian coordinates with the z-axis from region 8k to 8l of FIGURE 2I12. In an embodiment, the electrodes may comprise an upward (positive z-axis oriented) V-shape with a gap at the 8g at the bottom of the V (FIGURES 2I17 and 2I18). The open circuit may be closed by injection of the melt shot 5t from nozzle 5q causing contact across the conductive parts of the gap 8g at the bottom of the V. The V may be formed by flat plate electrodes mounted on opposite faces of supports that form a V with a gap at the bottom. Exemplary electrode materials comprising a conductor that operates a high temperature and resists adhesion of Ag are W, WC, and Mo. The supports may be water-cooled. The supports may be a least partially hollow. The hollow portions may each comprise a conduit for coolant that flows through the conduits and cools the electrodes.

In an embodiment, the electrodes may further comprise a lower section having vertical walls or near vertical walls at the gap 8g. The walls may form a channel. In an embodiment, the electrodes further comprise a source of magnetic field such as a set of magnets at opposite ends of the channel of the electrodes. The magnets may produce a magnetic field parallel to the electrodes or channel axis and perpendicular to the ignition current. The channel with crossed current and magnetic field may comprise an electromagnetic (EM) pump. The EM pump may pump adhering shot into the electrodes to be ignited. In an embodiment, the Lorentz force due to the crossed magnetic field and ignition current may at least one of pump the shot adhering to the walls of the upper portion of the electrode downward to be ignited and pump ignition particles downward away from the PV converter to be recovered in the inlet to the pelletizer.

In an exemplary embodiment, the shot 5t may be injected horizontally long the y-axis, on top of the V-shaped electrodes 8 (FIGURES 2I17 and 2I18). In an embodiment, magnets 8c are positioned to apply a magnetic field along the y-axis, along the trough of the V-shaped electrodes 8. The circuit is closed and x-axis-directed ignition current flows by shot providing a current path across the gap 8g wherein the magnetic field is transverse to the current. The crossed current and magnetic field create a Lorentz force according to Eq. (32) to push out any metal shot adhering to the electrodes. The Lorentz force may further push the ignition particles downward to region 8k (FIGURE 2I12) to recover un-ignited shot and to recover ignition particles. The Lorentz force causes the flow of the adhering shot into the ignition section of the electrodes at the gap 8g and causes the ignition plasma to be directed and flow into a collection region such as inlet of the fuel regeneration system such as the pelletizer. In other embodiments of the disclosure, the electrodes and magnets may be designed to direct the plasma in an upward arch to perform at least one function of (i) injecting shot in region 8i into the gap 8g to be ignited, (ii) ejecting shot that has adhered to the upper part of the electrodes such as at region 8j, (iii) ejecting un-ignited shot and particles from the regions 8i, 8j, and the gap 8g and (iv) recovering the ignition product and un-ignited shot to the pelletizer, while avoiding guiding ignition particles to the PV converter 26a.

In an embodiment, the shot is delivered along the y-axis (FIGURES 2I17 and 2I18). The nozzle 5q may deliver the shot horizontally along the y-axis to the top of the electrodes. The solid fuel may be delivered as a stream of shots, a continuous stream, or a combination of shot and a stream. The light may constrained to predominantly propagate upward due to an electrode design that permits the plasma from the ignited top-loaded shot to expand predominantly in the positive z-direction along the z-axis towards the PV converter 26a. The electrodes may further comprise at least one magnet such as a set of magnets 8c separated at opposite ends of the electrodes to produce a magnetic field in a direction perpendicular to the ignition current. The Lorentz force due to the crossed current and magnetic field may cause the ejection of adhering shot and the flow of the plasma particles to the regeneration system such as the pelletizer. The Lorentz force may be in the negative z-direction. In the case that the Lorentz force is in the negative z-direction, a region, section, or layer such as the ignition layer of the electrodes 8 may comprise a channel that may act as an electromagnetic pump for the ejection of ignition particles and shot that is not ejected as particles and plasma. The size of the channel may be selected to provide flow restriction to the high pressure expanding ignition plasma that forces the plasma and light to expand towards the region 81 of the electrodes (FIGURE 2I12). The ignition portion of the electrodes may form a shallow channel comprising a short electromagnetic pump tube such that the particles and adhering shot fills the pump tube and restricts the path for the emitted light to be only along the positive z-axis. The strength of the crossed current and magnetic field and well as the dimensions of the channel provide the pump pressure through the channel comprising the electromagnetic pump tube. The width of the pump tube and any splay are selected to distribute the current from the source of electrical power 2 for ignition and pumping to achieve optimization of both.

In the case that the shot is injected on the same side as that desired for the expansion of the plasma such as side 81, the source of electrical power may deliver the ignition current without substantial time delay. The injection may be timed to avoid the n +1 th injection from being disrupted by the pressure wave from the ignition blast of the nth injection wherein n is an integer. The timing may be achieved with blast and injection sensors such as at least one of optical, current, voltage, and pressure sensors and a controller. The controller may control at least one of the electromagnetic pump pressure, the nozzle valve, and the ignition current.

In an embodiment, the SF-CIHT generator may comprise a plurality of electrodes wherein each set may utilize at least one of (i) a common or separate, dedicated injection system, (ii) a common or separate, dedicated source of electrical power to cause ignition, and (iii) a common or separate, dedicated PV conversion system. The ignition system may further comprise a cooling system of the ignition system as shown in FIGURE 2I22. In an embodiment, the cooling system may comprise conduits through the bus bars 9 and 10 (FIGURE 2I14) and electrodes 8 or inlet 31f and outlet coolant lines 31g and a coolant pump and chiller 31a to cool the coolant that is pumped through the conduits or lines. The electrode coolant system may comprise one pair of coolant lines 31f and 31g that serve both electrodes (FIGURE 2I23), or each electrode may have an independent inlet line 31f an outlet line 31g (FIGURE 2I22). In case of shared lines, the area of contact of the line with the electrode may be adjusted depending on the average local coolant temperature to achieve efficient heat transfer from the electrode to the coolant. In another embodiment shown in FIGURE 2I23, the electrodes and bus bars of the ignition system may be cooled by a passive cooling system 31h comprising a heat exchanger such as one comprising air fins and optionally heat pipes to the air fins. In an embodiment shown in FIGURE 2I23, the photovoltaic conversion system may also be cooled by a passive cooling system 31i comprising a heat exchanger such as one comprising air fins and optionally heat pipes to the air fins. In an embodiment shown in FIGURE 2I22, the photovoltaic (PV) cells or panels 15 of the photovoltaic converter 26a are cooled with heat exchanger 87 wherein the hot coolant flows into the photovoltaic converter cooling system 31 through inlet 31b and chilled coolant exits through outlet 31c. The PV cells may be operated at elevated temperature such as 30 °C to 450 °C and may be operated under reduced cell pressure to prevent water vapor from condensing on the PV cells.

In an embodiment to improve the energy balance of the generator, the chiller such as at least one of 31 and 31a may be driven by thermal power that may comprise heat produced by the cell. The heat power may be from internal dissipation and from the hydrino reaction. The chiller may comprise an absorption chiller known by those skilled in the art. In an embodiment, heat to be rejected is absorbed by a coolant or refrigerant such as water that may vaporize. The adsorption chiller may use heat to condense the refrigerant. In an embodiment, the water vapor is absorbed in an absorbing material (sorbent) such as Silicagel, Zeolith, or a nanostructure material such as that of P. McGrail of Pacific Northwest Laboratory. The absorbed water is heated to cause its release in a chamber wherein the pressure increases sufficiently to cause the water to condense.

In an embodiment, at least one of the velocity of the fuel, the shot size, the melt shot viscosity, the width of the gap 8g between the electrodes, and the shape of the electrodes 8 is selected to cause the ignition to occur predominantly in a region on the opposite side of the electrodes 81 relative to the injection side or region 8k. In an embodiment, the second section of the electrodes 8j serves as the inlet to the second region of the cell 81 wherein the plasma and light are preferentially directed toward the PV converter 26a (FIGURE 2I2). The velocity of the fuel such as the molten fuel may be in at least one range of about 0.01 m/s to 1000 m/s, 0.1 m/s to 100 m/s, and 0.1 m/s to 10 m/s. At least one of pressure at the nozzle 5q and the viscosity of the fuel may be used to control the fuel velocity. The size of the nozzle orifice, the melt pressure, the melt flow rate, the melt viscosity, and the melt temperature may be used to control the melt shot size. The heat balance may be controlled to control the temperature of the melt that in turn controls the melt viscosity. The power of the electromagnetic pump 5k and nozzle orifice size may be controlled to control the pressure at the nozzle 5q. At least one of the heating power, insulation, cooling, and melt flow rate may be use to control the heat balance. The electromagnetic pump power may be used to control the melt flow rate. The melt temperature may be used to control the melt surface tension. The electrode gap 5g may be selected manually. Alternatively, an adjustable or deformable electrode gap may be adjusted be means such as mechanically, hydraulically, or piezoelectrically. The electrode shape may be selected manually. Alternatively, an adjustable or deformable electrode may be adjusted be mean such as mechanically, hydraulically, or piezoelectrically. In an embodiment, a control system such as a computer, electromagnetic pump, nozzle valve, and heater control parameters such as the pressure, nozzle size, and melt temperature and viscosity to control the ejection velocity as well as the ejection rate. The ejection velocity may be controlled to compensate for the deceleration of gravity to maintain a desire injection rate. The height of the nozzle 5q may be adjusted to support a maximum injection rate. The maximum height may be based on the rate a stream of fuel melt forms isolated spheres or melt shot. In an embodiment, the SF-CIHT generator comprises a user interface such as a touch-screen display of a computer to control the generator further comprising a computer with sensors and control systems of the injection system, the ignition system, the fuel recovery system, the fuel regeneration system such as the pelletizer, and the converter system such as at least one of the photovoltaic and photoelectron converter system. The a computer with sensors and control systems may sense and control the electromagnetic pump, inductively coupled heaters, injector flow, nozzle, ignition system current and pulse rate, product recovery system such as applied magnets and currents and electrostatic precipitator (ESP), photovoltaic (PV) converter system, cooling systems, power conditioning and other system monitoring and controls to operate the generator known by those skilled in the art. The sensors may provide input to controller protect systems such as ones for melt flow and volume in the heated vessel sections and melt flow and volume input to the EM pump wherein the controllers shut off the heaters and EM pump when the flow or volume is below a tolerable limit. The control system may further comprise programmable logic controllers and other such devices known by those skilled in the art in order to achieve control.

The SF-CIHT generator comprises the components having the parameters such as those of the disclosure that are sensed and controlled. In embodiments the computer with sensors and control systems may sense and control, (i) the inlet and outlet temperatures and coolant pressure and flow rate of each chiller of each cooled system such as at least one of the PV converter, the electrodes, the inductively coupled heater, and the nozzle chiller, (ii) the ignition system voltage, current, power, frequency, and duty cycle, (iii) the shot trajectory using a sensor such as an optical sensor and controller, and the EM pump injection flow rate using a sensor such as an optical, Doppler, or electrode resistance sensor and controller, (iv) the voltages, currents, and powers of the inductively coupled heater, the augmented plasma railgun, the electromagnetic pump 5k, the electrode electromagnetic pump, and electrostatic precipitator recovery systems, (v) the pressure in the cell, (vi) the wall temperature of the cell, (vii) the consumption state of any getter, (viii) the heater power in each section, (ix) current and magnetic flux of the electromagnetic pump, (x) the silver melt temperature, flow rate, and pressure in the vessels and at key locations such as at the manifolds and nozzle, (xi) the pressure, temperature, and flow rate of each injected gas such as $H_2$ and $H_2O$ and mixtures formed by the regulator in case of a common gas injection manifold, (xii) the intensity of incident light to the PV converter, (xiii) the voltage, current, and power output of the PV converter, (xiv) the voltage, current, power, and other parameters of any power conditioning equipment, and (xv) the SF-CIHT generator output voltage, current, and power to at least one of the parasitic loads and the external loads, (xvi) the voltage, current, and power input to any parasitic load such as at least one of the inductively coupled heater, the electromagnetic pump, the chillers, and the sensors and controls, and (xii) the voltage, current, and charge state of the starter circuit with energy storage. In an embodiment, a parameter to be measured may be separated from a region of the system that has an elevated temperature that would damage the sensor during its measurement. For example, the pressure of a gas such as at least one of $H_2$ and $H_2O$ may be measured by using a connecting gas line such as a cooling tower that connects to the cell such as 5b or 5c and cools the gas before entering a pressure transducer such as a Baratron capacitance manometer.

The cell may comprise few to no or moving parts. In an embodiment, the cooling may comprise heat rejection to an air-cooled heat exchanger. Exemplary, air-cooled systems for the electrodes 31h and PV conversion system 31i are shown in FIGURE 2I23. In this case, the cell may comprise no or very few moving parts. The only moving part may comprise a mechanical pump to circulate coolant, and it may be replaced with one with no moving parts. In the case that the coolant is a liquid metal such as an alkali metal such as sodium, the pump may comprise an electromagnetic pump that may have no moving parts. In an embodiment, the electromagnetic pump coolant may be nonflammable. Alternatively, heat pipes and air fins or Peltier chillers may be used to remove the heat as a means of non-mechanical heat rejection. Exemplary heat pipes are a copper heat pipe with soldered longitudinal copper fins using water or acetone as the working fluid and an aluminum heat pipe with soldered longitudinal aluminum fins using ammonia as the working fluid. The source of heat may be the ignition electrodes wherein the heat may be rapidly conducted away from the electrode surface to the cooling system by large cross section thermal bus bars 9 and 10 comprising highly thermal conductive material such as copper, silver, or a silver-copper alloy. The source of heat may also comprise the PV converter.

The mechanical vacuum pump may also be replaced to eliminate it as a system with moving parts. In an embodiment, the vacuum in the cell may be maintained by at least one getter 13b (FIGURE 2I23) such as at least one for oxygen, hydrogen, and water. An oxygen getter such an oxygen reactive material such as carbon or a metal that may be finely divided may scavenge any oxygen formed in the cell. In the case of carbon, the product carbon dioxide may be tapped with a $CO_2$ scrubber that may be reversible. Carbon dioxide scrubbers are known in the art such as organic compounds such as amines such as monoethanolamine, minerals and zeolites, sodium hydroxide, lithium hydroxide, and metal-oxide based systems. The finely divided carbon getter may also serve the purpose of scavenging oxygen to protect oxygen sensitive materials in the cell such as vessels or pump tube comprising oxygen sensitive materials such as Mo, W, graphite, and Ta. In this case, the carbon dioxide may be removed with a $CO_2$ scrubber or may be pumped off with the vacuum pump where fine-divided carbon is used solely for component protection.

The metal getter may selectively react with oxygen over $H_2O$ such that it can be regenerated with hydrogen. Exemplary metals having low water reactivity comprise those of the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, and Zn. The getter or oxygen scrubber may be removed from the SF-CIHT cell and regenerated. The removal may be periodic or intermittent. The regeneration may be achieved by hydrogen reduction. The regeneration may occur in situ. The in situ regeneration may be intermittent or continuous. Other oxygen getters and their regeneration such as zeolites and compounds that form reversible ligand bonds comprising oxygen such as salts of such as nitrate salts of the 2-aminoterephthalato-linked deoxy system, $[\{(bpbp)Co_2^{II}(NO_3)\}_2(NH_2bdc)](NO_3)_2.2H_2O$ (bpbp$^-$ = 2,6-bis(N,N-bis(2-pyridylmethyl)aminomethyl)-4-tert-butylphenolato, $NH_2bdc^{2-}$ = 2-amino-1,4-benzenedicarboxylato) are known to those skilled in the art. Highly combustible metals may also be used as the oxygen getter such as exemplary metals: alkali, alkaline earth, aluminum, and rare earth metals. The highly combustible metals may also be used as a water scavenger. Hydrogen storage materials may be used to scavenge hydrogen. Exemplary hydrogen storage materials comprise a metal hydride, a mischmetal such as M1: La-rich mischmetal such as $M1Ni_{3.65}Al_{0.3}Mn_{0.3}$ or $M1(NiCoMnCu)_5$, Ni, R-Ni, R-Ni + about 8 wt% Vulcan XC-72, $LaNi_5$, Cu, or Ni-Al, Ni-Cr such as about 10% Cr, Ce-Ni-Cr such as about 3/90/7 wt%, Cu-Al, or Cu-Ni-Al alloy, a species of a M-N-H system such as $LiNH_2$, $Li_2NH$, or $Li_3N$, and a alkali metal hydride further comprising boron such as borohydrides or aluminum such as aluminohydides. Further suitable hydrogen storage materials are metal hydrides such as alkaline earth metal hydrides such as $MgH_2$, metal alloy hydrides such as $BaReH_9$, $LaNi_5H_6$, $FeTiH_{1.7}$, and $MgNiH_4$, metal borohydrides such as $Be(BH_4)_2$, $Mg(BH_4)_2$, $Ca(BH_4)_2$, $Zn(BH_4)_2$, $Sc(BH_4)_3$, $Ti(BH_4)_3$, $Mn(BH_4)_2$, $Zr(BH_4)_4$, $NaBH_4$, $LiBH_4$, $KBH_4$, and $Al(BH_4)_3$, $AlH_3$, $NaAlH_4$, $Na_3AlH_6$, $LiAlH_4$, $Li_3AlH_6$, LiH, $LaNi_5H_6$, $La_2Co_1Ni_9H_6$, and $TiFeH_2$, $NH_3BH_3$, polyaminoborane, amine borane complexes such as amine borane, boron hydride ammoniates, hydrazine-borane complexes, diborane diammoniate, borazine, and ammonium octahydrotriborates or tetrahydroborates, imidazolium ionic liquids such as alkyl(aryl)-3-methylimidazolium N-bis(trifluoromethanesulfonyl)imidate salts, phosphonium borate, and carbonite substances. Further exemplary compounds are ammonia borane, alkali ammonia borane such as lithium ammonia borane, and borane alkyl amine complex such as borane dimethylamine complex, borane trimethylamine complex, and amino boranes and borane amines such as aminodiborane, n-dimethylaminodiborane, tris(dimethylamino)borane, di-n-butylboronamine, dimethylaminoborane, trimethylaminoborane, ammonia-trimethylborane, and triethylaminoborane. Further suitable hydrogen storage materials are organic liquids with absorbed hydrogen such as carbazole and derivatives such as 9-(2-ethylhexyl)carbazole, 9-ethylcarbazole, 9-phenylcarbazole, 9-methylcarbazole, and 4,4'-bis(N-carbazolyl)-1,1'-biphenyl. The getter may comprise an alloy capable of storing hydrogen, such as one of the $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn). Additional suitable hydrogen getters are those used in metal hydride batteries such as nickel-metal hydride batteries that are known to those skilled in the Art. Exemplary suitable getter material of hydride anodes comprise the hydrides of the group of R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, and other alloys capable of storing hydrogen, such as one of the $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn). In other embodiments, the hydride anode getter material comprises at least one of $MmNi_5$ (Mm = misch metal) such as $MmNi_{3.5}Co_{0.7}Al_{0.8}$, the $AB_5$-type: $MmNi_{3.2}Co_{1.0}Mn_{0.6}Al_{0.11}Mo_{0.09}$ (Mm = misch metal: 25 wt% La, 50 wt% Ce, 7 wt% Pr, 18 wt% Nd), $La_{1-y}R_yNi_{5-x}M_x$, $AB_2$-type: $Ti_{0.51}Zr_{0.49}V_{0.70}Ni_{1.18}Cr_{0.12}$ alloys, magnesium-based alloys such as $Mg_{1.9}Al_{0.1}Ni_{0.8}Co_{0.1}Mn_{0.1}$ alloy, $Mg_{0.72}Sc_{0.28}(Pd_{0.012} + Rh_{0.012})$, and $Mg_{80}Ti_{20}$, $Mg_{80}V_{20}$, $La_{0.8}Nd_{0.2}Ni_{2.4}Co_{2.5}Si_{0.1}$, $LaNi_{5-x}M_x$ (M= Mn, Al), (M= Al, Si, Cu), (M= Sn), (M= Al, Mn, Cu) and $LaNi_4Co$, $MmNi_{3.55}Mn_{0.44}Al_{0.3}Co_{0.75}$, $LaNi_{3.55}Mn_{0.44}Al_{0.3}Co_{0.75}$, $MgCu_2$, $MgZn_2$, $MgNi_2$, AB compounds such as TiFe, TiCo, and TiNi, $AB_n$ compounds (n = 5, 2, or 1), $AB_{3.4}$ compounds, and $AB_x$ (A = La, Ce, Mn, Mg; B = Ni, Mn, Co, Al). Other suitable hydride getters are $ZrFe_2$, $Zr_{0.5}Cs_{0.5}Fe_2$, $Zr_{0.8}Sc_{0.2}Fe_2$, $YNi_5$, $LaNi_5$, $LaNi_{4.5}Co_{0.5}$, $(Ce, La, Nd, Pr)Ni_5$, Mischmetal-nickel alloy, $Ti_{0.98}Zr_{0.02}V_{0.43}Fe_{0.09}Cr_{0.05}Mn_{1.5}$, $La_2Co_1Ni_9$, FeNi, and $TiMn_2$. Getters of the disclosure and others known to those skilled in the art may comprise a getter of more than one species of cell gas. Additional getters may be those known by ones skilled in the art. An exemplary multi-gas getter comprises an alkali or alkaline earth metal such as lithium that may getter at least two of $O_2$, $H_2O$, and $H_2$. The getter may be regenerated by methods known in the art such as by reduction, decomposition, and electrolysis. In an embodiment, the getter may comprise a cryotrap that at least one of condenses the gas such as at least one of water vapor, oxygen, and hydrogen and traps the gas in an absorbing material in a cooled state. The gas may be released form the absorbing material at a higher temperature such that with heating and pumping the off-gas, the getter may be regenerated. Exemplary materials that absorb at least one of water vapor, oxygen, and hydrogen that can be regenerated by heating and pumping is carbon such as activated charcoal and zeolites. The timing of the oxygen, hydrogen, and water scrubber regeneration may be determined when the corresponding gas level increases to a non-tolerable level as sensed by a sensor of the corresponding cell gas content. In an embodiment, at least one of the cell generated hydrogen and oxygen may be collected and sold as a commercial gas by systems and methods known by those skilled in the art. Alternatively, the collected hydrogen gas may be used in the SunCell.

The hydrogen and water that is incorporated into the melt may flow from the tanks 5u and 5v through manifolds and feed lines 5w and 5x under pressure produced by corresponding pumps such as mechanical pumps. Alternatively, the water pump may be replaced by creating steam pressure by heating the water tank, and the hydrogen pump may be replaced by generating the pressure to flow hydrogen by electrolysis. Alternatively, $H_2O$ is provided as steam by $H_2O$ tank, steam generator, and steam line 5v. Hydrogen may permeate through a hollow cathode connected with the hydrogen tank that is pressurized by the electrolysis. These replacement systems may eliminate the corresponding systems having moving parts.

In an embodiment, the SF-CIHT generator may comprise a valve and reservoir and optionally a reservoir pump such as one of the disclosure such as a mechanical pump. The fuel metal such as silver may be pumped by at least the electromagnetic pump 5k into the reservoir for storage. The transfer of the metal may be for shutdown. The reservoir may comprise a heater such as an inductively coupled heater to melt the fuel metal such as silver to restart the generator. The metal may flow back into at least one of the first vessel 5b, the second vessel 5c, and the electromagnetic pump 5k by at least one of gravity and pumping. The pumping may be by the reservoir pump. The power for at least one of the heating and flow such as by pumping may be supplied by the energy storage of the disclosure such as by a battery or capacitor. In another embodiment, the electromagnetic pump 5k may comprise an electromagnetic pump heater such as a resistive or an inductively coupled heater. The resistive heater may at least partially comprise the current source of the pump that generates the Lorentz force. In an embodiment, the electromagnetic pump and the heaters are stopped for shutdown. Startup is achieved by melting the fuel metal such as silver using the inductively coupled heaters such as those of 5f and 5o as well as the electromagnetic pump heater. The power may be from the energy storage of the disclosure. In another embodiment, the generator is not shutdown, but remains operating at a minimum power level to maintain the flow of the fuel metal.

In an embodiment, the SF-CIHT comprises a switch on at least one of the electromagnetic pumps such as 5k that reverses the polarity of the pump current to reverse the Lorentz force and the pumping direction. In another embodiment comprising electromagnetic (EM) pumps comprising electromagnets, the direction of the magnetic field may be reversed to reverse the pumping direction. The direction of pumping of the melt may be reversed to transport the metal to storage. The storage may comprise at least one of a portion of the cell at its base such as the base cone at the inlet to the first vessel 5b, the first vessel 5b, and the inlet of the first EM pump 5k. The melt may solidify in storage by removal of heating power. Startup may be achieved by applying heat to the first vessel 5b with the first inductively coupled heater 5f and applying heat to the EM pump 5k by the EM pump heater wherein the pump current flowing though the metal in the pump tube may serve as the pump heater. The resulting melt may be pumped into the other sections of the pelletizer such as the second vessel 5c and nozzle 5q with heating by the other heaters such as the inductively coupled heater 5o that heats the second vessel 5c. The power for at least one of the heating and flow such as by pumping may be supplied by the energy storage of the disclosure such as by a battery or capacitor.

In an embodiment, the SF-CIHT cell components and system are at least one of combined, miniaturized, and otherwise optimized to at least one of reduce weight and size, reduce cost, and reduce maintenance. In an embodiment, the SF-CIHT cell comprises a common compressor for the chiller and the cell vacuum pump. The chiller for heat rejection may also serve as a cryopump to maintain the vacuum in the cell. $H_2O$ and $O_2$ may be condensed by the cryopump to maintain the desired level of vacuum. In an embodiment, the ignition system comprising a bank of capacitors is miniaturized by using a reduced number of capacitors such as an exemplary single 2.75 V, 3400 F Maxwell super-capacitor as near to the electrodes as possible. In an embodiment, at least one capacitor may have its positive terminal directly connected to the positive bus bar or positive electrode and at least one capacitor may have its negative terminal directly connected to the negative bus bar or negative electrode wherein the other terminals of the capacitors of opposite polarity may be connected by a bus bar such that current flows through the circuit comprising the capacitors when shot closes the circuit by bridging the electrodes. In an embodiment, threaded capacitor terminals may be screwed directly into threaded electrodes, electrode mounts, or bus bars. The set of capacitors connected across the electrodes in series may be replicated by an integer multiple to provide about the integer multiple times more current, if desirable. In an embodiment, the voltage on the capacitors may be maintained within a desired range by charging with power from the PV converter. Since the voltage drop on the charging bus bars is a function of the variable charging current, the voltage to control the charging current may be sensed at the capacitors. This remotely sensed voltage may be used by a controller such as a computer to control the charging current. The capacitors and connecting bus bar or bars may be located such the nozzle 5q may have a clear path for shot injection and the ignition plasma is not unduly impeded to emit light to the PV converter.

The proximity of the source of electrical power 2 eliminates the extra voltage required to drive the high peak ignition current through extensive bus bars. The reduced capacitance ignition system may be mounted at the electrodes and charged continuously with a steady current that may be significantly less that the pulsed high ignition current such as that given by the peak pulse current times the duty cycle. The circuit that carries the high current to the electrodes may comprise circuit elements having desired characteristics such as inductance, capacitance, and resistance to permit impedance matching of the capacitor to the ignition load.

The power conditioning of the SF-CIHT generator may be simplified by using all DC power for intrinsic loads wherein the Dc power is supplied by the PV converter. In an embodiment, DC power from the PV converter may supply at least one of the (i) the DC charging power of the capacitors of the ignition system comprising the source of electrical power 2 to the electrodes 8, (ii) the DC current of the at least one electromagnetic pump, (iii) the DC power of the resistive or inductively coupled heaters, (iv) the DC power of the chiller comprising a DC electric motor, (v) the DC power of the vacuum pump comprising a DC electric motor, and (vi) the DC power to the computer and sensors. The output power conditioning may comprise DC power from the PV converter or AC power from the conversion of DC power from the PV converter to AC using an inverter.

In an embodiment, the light to electricity converter comprises the photovoltaic converter of the disclosure comprising photovoltaic (PV) cells that are responsive to a substantial wavelength region of the light emitted from the cell such as that corresponding to at least 10% of the optical power output. In an embodiment, the PV cells are concentrator cells that can accept high intensity light, greater than that of sunlight such as in the intensity range of at least one of about 1.5 suns to 75,000 suns, 10 suns to 10,000 suns, and 100 suns to 2000 suns. The concentrator PV cells may comprise c-Si that may be operated in the range of about 1 to 1000 suns. The PV cells may comprise a plurality of junctions such as triple junctions. The concentrator PV cells may comprise a plurality of layers such as those of Group III/V semiconductors such as at least one of the group of InGaP/InGaAs/Ge; InAlGaP/AlGaAs/GaInNAsSb/Ge; GaInP/GaAsP/SiGe; GaInP/GaAsP/Si; GaInP/GaAsP/Ge; GaInP/GaAsP/Si/SiGe; GaInP/GaAs/InGaAs; GaInP/GaAs/GaInNAs; GaInP/GaAs/InGaAs/InGaAs; GaInP/Ga(In)As/InGaAs; GaInP-GaAs-wafer-InGaAs; GaInP-Ga(In)As-Ge; and GaInP-GaInAs-Ge. The plurality of junctions such as triple or double junctions may be connected in series. In another embodiment, the junctions may be connected in parallel. The junctions may be mechanically stacked. The junctions may be wafer bonded. In an embodiment, tunnel diodes between junctions may be replaced by wafer bonds. The wafer bond may be electrically isolating and transparent for the wavelength region that is converted by subsequent or deeper junctions. Each junction may be connected to an independent electrical connection or bus bar. The independent bus bars may be connected in series or parallel. The electrical contact for each electrically independent junction may comprise grid wires. The wire shadow area may be minimized due to the distribution of current over multiple parallel circuits or interconnects for the independent junctions or groups of junctions. The current may be removed laterally. The wafer bond layer may comprise a transparent conductive layer. An exemplary transparent conductor is a transparent conductive oxide (TCO) such as indium tin oxide (ITO), fluorine doped tin oxide (FTO), and doped zinc oxide and conductive polymers, graphene, and carbon nanotubes and others known to those skilled in the art. Benzocyclobutene (BCB) may comprise an intermediate bonding layer. The bonding may be between a transparent material such a glass such as borosilicate glass and a PV semiconductor material. An exemplary two-junction cell is one comprising a top layer of GaInP wafer bonded to a bottom layer of GaAs (GaInP//GaAs). An exemplary four-junction cell comprises GaInP/GaAs/GaInAsP/GaInAs on InP substrate wherein each junction may be individually separated by a tunnel diode (/) or an isolating transparent wafer bond layer (//) such as a cell given by GaInP//GaAs//GaInAsP//GaInAs on InP. The substrate may be GaAs or Ge. The PV cell may comprise Si-Ge-Sn and alloys. All combinations of diode and wafer bonds are within the scope of the disclosure. An exemplary four-junction cell having 44.7% conversion efficacy at 297-times concentration of the AM1.5d spectrum is made by SOITEC, France. The PV cell may comprise a single junction. An exemplary single junction PV cell may comprise a monocrystalline silicon cell such as one of those given in Sater et al. (B. L. Sater, N. D. Sater, "High voltage silicon VMJ solar cells for up to 1000 suns intensities", Photovoltaic Specialists Conference, 2002. Conference Record of the Twenty-Ninth IEEE, 19-24 May 2002, pp. 1019 - 1022.) which is herein incorporated by reference in its entirety. Alternatively, the single junction cell may comprise GaAs or GaAs doped with other elements such as those from Groups III and V. In an exemplary embodiment, the PV cells comprise triple junction concentrator PV cells or GaAs PV cells operated at about 1000 suns. In another exemplary embodiment, the PV cells comprise c-Si operated at 250 suns. In an exemplary embodiment, the PV may comprise GaAs that may be selectively responsive for wavelengths less than 900 nm and InGaAs on at least one of InP, GaAs, and Ge that may be selectively responsive to wavelengths in the region between 900 nm and 1800 nm. The two types of PV cells comprising GaAs and InGaAs on InP may be used in combination to increase the efficiency. Two such single junction types cells may be used to have the effect of a double junction cell. The combination may implemented by using at least one of dichroic mirrors, dichroic filters, and an architecture of the cells alone or in combination with mirrors to achieve multiple bounces or reflections of the light as given in the disclosure. In an embodiment, each PV cell comprises a polychromat layer that separates and sorts incoming light, redirecting it to strike particular layers in a multi-junction cell. In an exemplary embodiment, the cell comprises an indium gallium phosphide layer for visible light and gallium arsenide layer for infrared light where the corresponding light is directed.

The PV cell may comprise perovskite cells. An exemplary perovskite cell comprises the layers from the top to bottom of Au, Ni, Al, Ti, GaN, $CH_3NH_3SnI_3$, monolayer h-BN, $CH_3NH_3PbI_{3-x}Br_x$, HTM/GA, bottom contact (Au).

The cell may comprise a multi p-n junction cell such as a cell comprising an AlN top layer and GaN bottom layer to converter EUV and UV, respectively. In an embodiment, the photovoltaic cell may comprise a GaN p-layer cell with heavy p-doping near the surface to avoid excessive attenuation of short wavelength light such as UV and EUV. The n-type bottom layer may comprise AlGaN or AlN. In an embodiment, the PV cell comprises GaN and $Al_xGa_{1-x}N$ that is heavily p-doped in the top layer of the p-n junction wherein the p-doped layer comprises a two-dimensional-hole gas. In an embodiment, the PV cell may comprise at least one of GaN, AlGaN, and AlN with a semiconductor junction. In an embodiment, the PV cell may comprise n-type AlGaN or AlN with a metal junction. In an embodiment, the PV cell responds to high-energy light above the band gap of the PV material with multiple electron-hole pairs. The light intensity may be sufficient to saturate recombination mechanisms to improve the efficiency.

The converter may comprise a plurality of at least one of (i) GaN, (ii) AlGaN or AlN p-n junction, and (iii) shallow ultra-thin p-n heterojunction photovoltaics cells each comprising a p-type two-dimensional hole gas in GaN on an n-type AlGaN or AlN base region. Each may comprise a lead to a metal film layer such as an Al thin film layer, an n-type layer, a depletion layer, a p-type layer and a lead to a metal film layer such as an Al thin film layer with no passivation layer due to the short wavelength light and vacuum operation. In an embodiment of the photovoltaic cell comprising an AlGaN or AlN n-type layer, a metal of the appropriate work function may replace the p-layer to comprise a Schottky rectification barrier to comprise a Schottky barrier metal/semiconductor photovoltaic cell.

In another embodiment, the converter may comprise at least one of photovoltaic (PV) cells, photoelectric (PE) cells, and a hybrid of PV cells and PE cells. The PE cell may comprise a solid-state cell such as a GaN PE cell. The PE cells may each comprise a photocathode, a gap layer, and an anode. An exemplary PE cell comprises GaN (cathode) cessiated /AlN (separator or gap)/ Al, Yb, or Eu (anode) that may be cessiated. The PV cells may each comprise at least one of the GaN, AlGaN, and AlN PV cells of the disclosure. The PE cell may be the top layer and the PV cell may be the bottom layer of the hybrid. The PE cell may convert the shortest wavelength light. In an embodiment, at least one of the cathode and anode layer of the PE cell and the p-layer and the n-layer of a PV cell may be turned upside down. The architecture may be changed to improve current collection. In an embodiment, the light emission from the ignition of the fuel is polarized and the converter is optimized to use light polarization selective materials to optimize the penetration of the light into the active layers of the cell. The light may be polarized by application of a field such as an electric field or a magnetic field by corresponding electrodes or magnets such as magnets 8c.

In an embodiment, the fuel may comprise silver, copper, or Ag-Cu alloy shot or melt having at least one of trapped hydrogen and trapped $H_2O$. The light emission may comprise predominantly ultraviolet light and extreme ultraviolet such as light in the wavelength region of about 10 nm to 300 nm. The PV cell may be response to at least a portion of the wavelength region of about 10 nm to 300 nm. The PV cells may comprise concentrator UV cells. The incident light intensity may be in at least one range of about 2 to 100,000 suns and 10 to 10,000 suns. The cell may be operated in a temperature range known in the art such as at least one temperature range of about less than 300 °C and less than 150 °C. The PV cell may comprise a group III nitride such as at least one of InGaN, GaN, and AlGaN. In an embodiment, the PV cell may comprise a plurality of junctions. The junctions may be layered in series. In another embodiment, the junctions are independent or electrically parallel. The independent junctions may be mechanically stacked or wafer bonded. An exemplary multi-junction PV cell comprises at least two junctions comprising n-p doped semiconductor such as a plurality from the group of InGaN, GaN, and AlGaN. The n dopant of GaN may comprise oxygen, and the p dopant may comprise Mg. An exemplary triple junction cell may comprise InGaN//GaN//AlGaN wherein // may refer to an isolating transparent wafer bond layer or mechanical stacking. The PV may be run at high light intensity equivalent to that of concentrator photovoltaic (CPV). The substrate may be at least one of sapphire, Si, SiC, and GaN wherein the latter two provide the best lattice matching for CPV applications. Layers may be deposited using metalorganic vapor phase epitaxy (MOVPE) methods known in the art. The cells may be cooled by cold plates such as those used in CPV or diode lasers such as commercial GaN diode lasers. The grid contacts may be mounted on the front and back surfaces of the cells as in the case of CPV cells. In an embodiment, the surface of the PV cell such as one comprising at least one of GaN, AlN, and GaAlN may be terminated. The termination layer may comprise at least one of H and F. The termination may decrease the carrier recombination effects of defects. The surface may be terminated with a window such as AlN.

In an embodiment, at least one of the photovoltaic (PV) and photoelectric (PE) converter may have a protective window that is substantially transparent to the light to which it is responsive. The window may be at least 10% transparent to the responsive light. The window may be transparent to UV light. The window may comprise a coating such as a UV transparent coating on the PV or PE cells. The coating may be applied by deposition such as vapor deposition. The coating may comprise the material of UV windows of the disclosure such as a sapphire or $MgF_2$ window. Other suitable

windows comprise LiF and CaF$_2$. Any window such as a MgF$_2$ window may be made thin to limit the EUV attenuation. In an embodiment, the PV or PE material such as one that is hard, glass-like such as GaN serves as a cleanable surface. The PV material such as GaN may serve as the window. In an embodiment, the surface electrodes of the PV or PE cells may comprise the window. The electrodes and window may comprise aluminum. The window may comprise at least one of aluminum, carbon, graphite, zirconia, graphene, MgF$_2$, an alkaline earth fluoride, an alkaline earth halide, Al$_2$O$_3$, and sapphire. The window may be very thin such as about 1 Å to 100 Å thick such that it is transparent to the UV and EUV emission from the cell. Exemplary thin transparent thin films are Al, Yb, and Eu thin films. The film may be applied by MOCVD, vapor deposition, sputtering and other methods known in the art. In an embodiment, at least one of the gravity recovery system, the plasma confinement system, the augmented plasma railgun recovery system, and the electrostatic precipitation recovery system may ameliorate the contact and impact of the ignition product with PV or its window. The SF-CIHT generator may comprise a means to remove ignition product from the surface such as a mechanical scraper or an ion-sputtering beam. The scraper may comprise carbon that is not wetted by silver and also is non-abrasive.

In an embodiment, the cell may covert the incident light to electricity by at least one mechanism such as at least one mechanism from the group of the photovoltaic effect, the photoelectric effect, the thermionic effect, and the thermoelectric effect. The converter may comprise bilayer cells each having a photoelectric layer on top of a photovoltaic layer. The higher energy light such as extreme ultraviolet light may be selectively absorbed and converted by the top layer. A layer of a plurality of layers may comprise a UV window such as the MgF$_2$ window. The UV window may protect ultraviolet UV) PV from damage by ionizing radiation such as damage by soft X-ray radiation. In an embodiment, low-pressure cell gas may be added to selectively attenuate radiation that would damage the UV PV. Alternatively, this radiation may be at least partially converted to electricity and at least partially blocked from the UV PV by the photoelectronic converter top layer. In another embodiment, the UV PV material such as GaN may also convert at least a portion of the extreme ultraviolet emission from the cell into electricity using at least one of the photovoltaic effect and the photoelectric effect.

The photovoltaic converter may comprise PV cells that convert ultraviolet light into electricity. Exemplary ultraviolet PV cells comprise at least one of p-type semiconducting polymer PEDOT-PSS: poly(3,4-ethylenedioxythiophene) doped by poly(4-styrenesulfonate) film deposited on a Nb-doped titanium oxide (SrTiO3:Nb) (PEDOT-PSS/SrTiO3:Nb heterostructure), GaN, GaN doped with a transition metal such as manganese, SiC, diamond, Si, and TiO$_2$. Other exemplary PV photovoltaic cells comprise n-ZnO/p-GaN heterojunction cells.

To convert the high intensity light into electricity, the generator may comprise an optical distribution system and photovoltaic converter 26a such as that shown in FIGURE 2I55. The optical distribution system may comprise a plurality of semitransparent mirrors arranged in a louvered stack along the axis of propagation of light emitted from the cell wherein at each mirror member 23 of the stack, light is at least partially reflected onto a PC cell 15 such as one aligned parallel with the direction of light propagation to receive transversely reflected light. The light to electricity panels 15 may comprise at least one of PE, PV, and thermionic cells. The window to the converter may be transparent to the cell emitted light such as short wavelength light. The window to the PV converter may comprise at least one of sapphire, LiF, MgF$_2$, and CaF$_2$, other alkaline earth halides such as fluorides such as BaF$_2$, CdF$_2$, quartz, fused quartz, UV glass, borosilicate, and Infrasil (ThorLabs). The semitransparent mirrors 23 may be transparent to short wavelength light. The material may be the same as that of the PV converter window with a partial coverage of reflective material such as mirror such as UV mirror. The semitransparent mirror 23 may comprise a checkered pattern of reflective material such as UV mirror such as at least one of MgF$_2$-coated Al and thin fluoride films such as MgF$_2$ or LiF films or SiC films on aluminum.

In an embodiment, the hydrino power converter may comprise a thermophotovoltaic (TPV) power converter. The electrodes such as Mo or W electrodes may be maintained at elevated temperature to produce radiation such as blackbody radiation that may convert into electricity using photovoltaic cells. In an embodiment, the melt such as Ag or AgCu melt is heated by the hot electrodes and is vaporized such that the region around the electrode becomes optically thick to the short wavelength light such as EUV and UV. The vaporized metal may participate in the ignition plasma. The power from the ignition of the fuel to form hydrinos may heat the plasma to a high blackbody temperature. The temperature of the blackbody may be controlled by controlling the rate of the hydrino reaction by means such as by controlling the fuel flow rate, the firing rate, the water vapor pressure and other means of the disclosure. In an embodiment, the electrode spacing or gap 8 and current are adjusted to achieve a plasma that emits predominantly blackbody radiation over UV and EUV emission. The electrode gap 8 may be adjusted by means of the disclosure. In an embodiment, the current may be constant with superimposed pulses. The constant current may be in at least one range of about 50 A to 30,000 A, 100 A to 10,000 A, and 200 A to 2000 A. The peak current pulses may be in at least one range of about 50 A to 30,000 A, 500 A to 10,000 A, and 1000 A to 5000 A. The frequency of the current pulses may be in at least one range of about 1 Hz to 20,000 Hz, 100 Hz to 10,000 Hz, and 500 Hz to 5000 Hz.

In an embodiment, the generator further comprises a switch such as an IGBT or another switch of the disclosure or known in the art to turn off the ignition current in the event that the hydrino reaction self propagates by thermolysis. The reaction may self sustain at least one of an elevated cell and plasma temperature such as one that supports thermolysis at a sufficient rate to maintain the temperature and the hydrino reaction rate. The plasma may comprise optically thick plasma. The plasma may comprise a blackbody. The optically thick plasma may be achieved by maintaining a high gas pressure. In an exemplary embodiment, thermolysis occurred with injection of each of molten silver and molten silver-copper (28 wt%) alloy at tungsten electrodes with a continuous ignition current in the range of 100 A to 1000 A with superimposed pulses in the range of about 2 kA to 10 kA, a plasma blackbody temperature of 5000 K and an electrode temperature in the range of about 3000K to 3700K. The thermolysis may occur at high temperature of at least one of the plasma and cell component in contact with the plasma. The temperature may be in at least one range of about 500K to 10,000K, 1000K to 7000K, and 1000K to 5000K. The cell component may be at least one of the electrodes 8, cone reservoir 5b, cone 5b2, and top cover 5b4. In another embodiment, at least one of the cell components such as the cone reservoir 5b2 may serve as a cooling agent to cool the thermolysis H to present it from reverting back to $H_2O$. At least one of the bus bars and cone reservoir may be cooled to serve as the cooling agent.

The maintained blackbody temperature may be one that emits radiation that may be converted into electricity with a photovoltaic cell. In an exemplary embodiment, the blackbody temperature may be maintained in at least one range of about 1000 K to 3690 K. The photovoltaic cell may comprise a thermophotovoltaic (TPV) cell. Exemplary photovoltaic cells for thermophotovoltaic conversion comprise crystalline silicon, germanium, gallium arsenide (GaAs), gallium antimonide (GaSb), indium gallium arsenide (InGaAs), indium gallium arsenide antimonide (InGaAsSb), and indium phosphide arsenide antimonide (InPAsSb) cells. The converter may comprise mirrors to at least one of direct and redirect radiation onto the thermophotovoltaic converter. In an embodiment, back mirrors reflect unconverted radiation back to the source to contribute to the power that is re-radiated to the converter. Exemplary mirrors comprise at least one of the cone material such as aluminum and anodized aluminum, $MgF_2$-coated Al and thin fluoride films such as $MgF_2$ or LiF films or SiC films on aluminum and sapphire, alumina such as alpha alumina that may be sputter coated on a substrate such as stainless steel, $MgF_2$ coated sapphire, boro-silica glass, alkali-aluminosilicate glass such as Gorilla Glass, LiF, $MgF_2$, and $CaF_2$, other alkaline earth halides such as fluorides such as $BaF_2$, $CdF_2$, quartz, fused quartz, UV glass, borosilicate, Infrasil (ThorLabs), and ceramic glass that may be mirrored on the outer surface when transparent. The mirror such as the anodized aluminum mirror may diffuse the light to uniformly irradiate the PV converter. Transparent materials such as at least one of sapphire, alumina, boro-silica glass, LiF, $MgF_2$, and $CaF_2$, other alkaline earth halides such as fluorides such as $BaF_2$, $CdF_2$, quartz, fused quartz, UV glass, borosilicate, Infrasil (ThorLabs), and ceramic glass may serve as the window for the TPV converter. Another embodiment of the TPV converter comprises blackbody emitter filters to pass wavelengths matched to the bandgap of the PV and reflect mismatched wavelengths back to the emitter wherein the emitter may comprise a hot cell component such as the electrodes. The band gaps of the cells are selected to optimize the electrical output efficiency for a given blackbody operating temperature and corresponding spectrum. In an exemplary embodiment operated at about 3000K or 3500K the band gaps of the TPV cell junctions are given in TABLE 1.

TABLE 1. Optimal band gap combinations for cell having n =1,2.3, or 4 junctions (J).

|  | 1J | 2J | 3J | 4J |
|---|---|---|---|---|
| 3000K | 0.75 eV | 0.62 eV, 0.96 eV | 0.61 eV, 0.82 eV, eV 1.13 | 0.61 eV, 0.76 eV, 0.95 eV, 1.24 eV |
| 3500K | 0.86 eV | 0.62 eV, 1.04 eV | 0.62 eV, 0.87 eV, 1.24 eV | 0.62 eV, 0.8 eV, 1.03 eV, 1.37 eV |

To optimize the performance of a thermophotovoltaic converter comprising a multi-junction cells, the blackbody temperature of the light emitted from the cell may bemaintained about constant such as within 10%. Then, the power output may be controlled with power conditioning equipment with excess power stored in a device such as a battery or capacitor or rejected such as rejected as heat. In another embodiment, the power from the plasma may be maintained by reducing the reaction rate by means of the disclosure such as by changing the firing frequency and current, the metal injection rate, and the rate of injection of at least one of $H_2O$ and $H_2$ wherein the blackbody temperature may be maintained by controlling the emissivity of the plasma. The emissivity of the plasma may be changed by changing the cell atmosphere such as one initially comprising metal vapor by the addition of a cell gas such as a noble gas.

In an embodiment, the cell gases such as the pressure of water vapor, hydrogen, and oxygen, and the total pressure are sensed with corresponding sensors or gauges. In an embodiment, at least one gas pressure such as at least one of the water and hydrogen pressure are sensed by monitoring at least one parameter of the cell that changes in response to changes in the pressure of at least one of these cell gases. At least one of a desirable water and hydrogen pressure may be achieved by changing one or more pressures while monitoring the effect of changes with the supply of the gases. Exemplary monitored parameters that are changed by the gases comprise the electrical behavior of the ignition circuit and the light output of the cell. At least one of the ignition-current and light-output may be maximized at a desired pressure of at least one of the hydrogen and water vapor pressure. At least one of a light detector such as a diode and the output of the PV converter may measure the light output of the cell. At least one of a voltage and current meter may monitor the electrical behavior of the ignition circuit. The generator may comprise a pressure control system such as one comprising software, a processor such as a computer, and a controller that receives input data from the monitoring of the parameter and adjusts the gas pressure to achieve the optimization of the desired power output of the generator. In an embodiment comprising a fuel metal comprising copper, the hydrogen may be maintained at a pressure to achieve reduction of the copper oxide from the reaction of the copper with oxygen from the reaction of $H_2O$ to hydrino and oxygen wherein the water vapor pressure is adjusted to optimize the generator output by monitoring the parameter. In an embodiment, the hydrogen pressure may be controlled at about a constant pressure by supplying $H_2$ by electrolysis. The electrolysis current may be maintained at about a constant current. The hydrogen may be supplied at a rate to react with about all hydrino reaction oxygen product. Excess hydrogen may diffuse through the cell walls to maintain a constant pressure over that consumed by the hydrino reaction and reaction with oxygen product. The hydrogen may permeate through a hollow cathode to the reaction cell chamber 5b31. In an embodiment, the pressure control system controls the $H_2$ and $H_2O$ pressure in response to the ignition current and frequency and the light output to optimize at least one. The light may be monitored with a diode, power meter, or spectrometer. The ignition current may be monitored with a multi-meter or digital oscilloscope. The injector rate of the molten metal of the electromagnetic pump 5k may also be controlled to optimize at least one the electrical behavior of the ignition circuit and the light output of the cell.

In another embodiment, the sensor may measure multiple components. In an exemplary embodiment, the cell gases and the total pressure are measured with a mass spectrometer such as a quadrupole mass spectrometer such as a residual gas analyzer. The mass spectrometer may sense in batch or in trend mode. The water or humidity sensor may comprise at least one of an absolute, a capacitive, and a resistive humidity sensor. The sensor capable of analyzing a plurality of gases comprises a plasma source such as a microwave chamber and generator wherein the plasma excited cell gases emit light such as visible and infrared light. The gases and concentrations are determined by the spectral emission such as the characteristic lines and intensities of the gaseous components. The gases may be cooled before sampling. The metal vapor may be removed from the cell gas before the cell gas is analyzed for gas composition. The metal vapor in the cell such as one comprising at least one of silver and copper may be cooled to condense the metal vapor such that the cell gases may flow into the sensor in the absence of the metal vapor. The SF-CIHT cell also herein also referred to as the SF-CIHT generator or generator may comprise a channel such as a tube for the flow of gas from the cell wherein the tube comprises an inlet from the cell and an outlet for the flow of condensed metal vapor and an outlet of the non-condensable gas to at least one gas sensor. The tube may be cooled. The cooling may be achieved by conduction wherein the tube is heat sunk to a cooled cell component such as at least one of the cone reservoir and its metal content, the electrodes, the bus bar, and the magnets of the electrode electromagnetic pump such as 8c. The tube may be actively cooled by means such as water-cooling and passive means such as a heat pipe. The cell gas comprising metal vapor may enter the tube wherein the metal vapor condenses due to the tube's lower temperature. The condensed metal may flow to the cone reservoir by means such as at least one of gravity flow and pumping such that the gases to be sensed flow into the sensors in the absence of metal vapor.

In an embodiment, the generator comprises a blackbody radiator that may serve as a vessel comprising a reaction cell chamber 5b31. In an embodiment, the PV converter 26a comprises PV cells 15 on the interior of a metal enclosure comprising a cell chamber 5b3 that contains the blackbody radiator 5b4. The PV cooling plates may be on the outside of the cell chamber. At least one of the chambers 5b3 and 5b31 are capable of maintaining a pressure of at least one of below atmospheric, atmospheric, and above atmospheric pressure. The PV converter may further comprise at least one set of electrical feed-throughs to deliver electrical power from the PV cells inside the inner surface of the cell chamber to outside of the cell chamber. The feed-through may be at least one of airtight and vacuum capable.

In an embodiment, the oxygen may be sensed indirectly by means such as by measuring a parameter of an oxidation product or due to an oxidation product. In an exemplary embodiment, the generator may comprise a melt conductivity sensor. The decrease in conductivity of the Ag-Cu alloy melt in the cone reservoir due to CuO on the top of the alloy melt may serve as an indication to add a higher $H_2$ flow rate. In another exemplary embodiment, the generator comprises a scale and material that reversibly absorbs oxygen based on its concentration or presence. The oxygen sensor may comprise an oxidizable metal having a $H_2$ reducible metal oxide wherein the presence of oxygen is determined by a weight change. In an embodiment, the pressure of a highly permeable gas such as hydrogen gas in reaction cell chamber 5b31 is controlled by supplying gas to the cell chamber 5b3. The gas pressure may be measured with a corresponding gas sensor in cell chamber 5b3. The cell chamber gas pressure may be used to control the flow of hydrogen into the cell chamber 5b3 that subsequently flows or permeates into the reaction cell chamber 5b31. In an embodiment, the gas such as hydrogen flows or permeates through at least one wall of the cell 26 such as that of the cone 5b2 or top cover 5b4 from the cell chamber 5b3 to the reaction cell chamber 5b31. In an embodiment, the $H_2$ in the reaction chamber 5b31 is maintained at a pressure that consumes the oxygen in the reaction chamber 5b31 to a desired pressure. In an exemplary embodiment, the hydrogen pressure is maintained at a sufficient concentration to consume the oxygen formed in the reaction cell chamber 5b31. In an embodiment shown in FIGURES 2I24-2I43, the lower chamber 5b5 is in continuity with the cell chamber 5b3 wherein the diameter of the plate at the base of the reservoir 5c provides a gap between the chambers. Both chambers may be filled with the same gas such as hydrogen that may also permeate into the reaction cell chamber 5b31. In an embodiment, a non-permeable gas is supplied directly to reaction chamber 5b31 in a manner such that metal vapor does not fowl the supply outlet. In an embodiment, the water supply injector 5z1 comprises a sufficiently small diameter nozzle such that the water vapor flow rate is sufficient to present the metal vapor from flowing into the injector such as into the nozzle and $H_2O$ vapor injection tube of the injector 5z1.

In an embodiment shown in FIGURE 2I24 to 2I28, the cone 5b may comprise a plurality of materials that may be operated at different temperatures. For example, the bottom section may comprise a heat resistant metal such as a high temperature stainless steel such as Hastelloy that may have an oxide coat, and the top portion may comprise anodized aluminum. The anodized aluminum may be coated on another material such as stainless steel. The oxide coat of the material may be maintained by controlling the temperature and atmosphere in the reaction cell chamber 5b31 such as the partial pressure of at least one of oxygen and water. In an embodiment, the walls of the cell 26 such as those of the cone 5b2 may comprise sapphire. The sapphire may comprise segments or panels. Each panel may be backed by a reflector such as a silver sheet to reflect incident from the cell back into the cell and towards the PV converter. The reflectors may be separated from the sapphire by a gap that may be maintained under reduced pressure such as vacuum to maintain the reflectors at a lower temperature that the sapphire panels. The low-pressure condition may be achieved by having the gap in continuity with the evacuated cell. The cell may further comprise a sapphire window to the PV converter 26a.

In an embodiment, the walls of the cell 26 may comprise a cone 5b2 and at top cover 5b4 that form a reaction cell chamber 5b31 that may comprise a dome. The dome may be resistant to wetting by the fuel melt such as Ag or Ag-Cu alloy melt. The dome may be maintained at elevated temperature to prevent wetting by the melt. The temperature may be maintained in the range of about 100 °C to 1800 °C. The dome may be transparent. The transparent dome may comprise at least one of sapphire, quartz, $MgF_2$, and alkali-aluminosilicate glass such as Gorilla Glass. The dome may be inverted such that the open ½ sphere is oriented towards the PV converter 26a. The bottom of the inverted dome may be sectioned to form a circular connection to the circular cone reservoir 5b. The inverted dome may comprise penetrations, cutouts, or feed throughs of at least one of the bus bars 9 and 10, the electrodes 8, and the gas injector such as the water injector 5z1. The inverted dome may comprise at least one of a metal ring at the top edge and an outer metal mirror coating such as a refractory metal coating such as a W or Mo mirroring. The mirroring may be applied by vapor deposition such as by organic metal chemical vapor phase deposition (MOCVD). An exemplary chemical for the deposition is molybdenum or tungsten hexa-carbonyl. Alternatively, the inverted dome may comprise a matching outer circumferential, mirrored dome reflector that may have a separating gap. The reflector partial dome may be separated from the sapphire dome by a gap that may be maintained under reduced pressure such as vacuum to maintain the reflectors at a lower temperature than the sapphire dome. The low-pressure condition may be achieved by having the gap in continuity with the evacuated cell. The cell may further comprise a window 5b4 such as a sapphire window to the PV converter 26a. The inverted dome may comprise the cone 5b2 and the open top of the cone 5b2 may be covered by a window 5b4 that may comprise sapphire. The window may have a desired shape for transmitting light to the PV converter. The shape may be a match to the geometry of the PV converter such as planar or dome shaped. At least one of the cone reservoir 5b, the window 5b4, the bus bars 9 and 10, or electrodes 8 may be joined to the cone 5b2 comprising an inverted dome with a gasket such a graphite gasket such as a Graphoil gasket. In other embodiments, the inverted dome may comprise other geometries or shapes. Exemplary alternative shapes of the inverted dome comprise a fraction of a cover such as a portion of a covering in the range of 90% to 10% of the surface of the corresponding sphere, parabola, trapezoid, or cube.

In an embodiment, the dome may serve as the cone 5b2 and the window 5b4. The dome may comprise a circular section of a sphere with an open portion. The dome may be non-inverted with the open portion in connection with the cone reservoir 5b. In other embodiments, the non-inverted dome may comprise other geometries or shapes. Exemplary alternative shapes of the non-inverted dome comprise a fraction of a cover of the cone reservoir such as a portion of a covering in the range of 90% to 10% of the surface of the corresponding sphere, parabola, trapezoid, cube, or other enclosure of the cone reservoir. The lower portion of the dome closest to the cone reservoir 5b may be mirrored or comprise circumferential reflectors to comprise the cone 5b2, and the top portion may be transparent to comprise the window 5b4 to the PV converter 26a.

The cone 5b2 may comprise a single dome or segmented geodesic structure (FIGURES 2I35-2I43), and the window 5b4 may be separate or a portion of the dome. At least one of the cone 5b2 and window 5b4 may be maintained at a temperature above that which prevents the fuel melt such as Ag or Ag-Cu melt from adhering. The temperature may be maintained in at least one range of about 200 °C to 2000 °C, 300 °C to 1500 °C, and 400 °C to 1100 °C. The temperature may be maintained by a heater such as an inductively coupled heater such as during startup. The combination of the cone 5b2 such as a sapphire dome and window 5b4 may comprise a high-temperature blackbody light source emitting predominantly through the window 5b4 that may be may small enough to be conveniently heated in startup mode by an inductively coupled heater. The cone segments may be held in place by fasteners such as clamps or brackets that may comprise a refractory metal such as Mo. The brackets may be supported by a frame. The backing reflector panels such as silver panels may also be fastened to the frame with clamps or brackets. Alternatively, the panels may be bolted, screwed, or welded to the frame. The segments and any feed-throughs such as one for the electrodes may be joined or lined with a joint material such as one that accommodates expansion and contraction and is heat resistant. An exemplary joint material comprises graphite such as Graphoil. Parts such as bus bars such as those to the electrodes and the electromagnetic pump may be insulating at the contact points such as ones at feed-throughs of the cell chamber 5b3 or lower vacuum chamber 5b5 by electrical insulating means such as insulating coatings such as Mullite or boron nitride at the contact points.

In an embodiment, the electrodes 8 comprise a plurality of parts that may comprise different materials. The electrodes may comprise a plasma contact layer that operates at high temperature. Suitable plasma contact layer materials are a refractory metal such as W, Ta, or Mo. The plasma contact layer may be mounted on another mount layer that may comprise the bus bar 9 and 10. The mount layer may be recessed such that only a portion such as portion at the ends of the plasma contact layer contact the mount layer to provide electrical connectivity. The recess may create a gap between the plasma contact layer and the mount layer to permit the plasma contact layer to operate at a higher temperature than the mount layer. The attachments at the contact regions may be made by welds, brackets, clamps, or fasteners such as screws or bolts that may be recessed such as counter-sunk screws or recessed hex-bolts such as cap-head bolts. Any parts that screw together may be coated with a lubricant such a graphite to prevent silver sticking to the treads. The electrodes may comprise blades (FIGURES 2I29-2I43) that may be attached to the bus bars 9 and 10 by means such as fasteners at the bus bar ends of the blades. The blades may be oriented to form a V to accept injected metal into the widest part of the V. In an embodiment, the electrodes comprise only a refractory metal such as W or Mo. The electrodes may be scaled in electrical cross section to compensate for the about 3.5 times lower conductivity relative to copper wherein exemplary bus bar comprise copper. The refractory metal electrode may be attached to the bus bars by a weld or by a fastener such as bolts or screws. At least one of the electrode emissivity, surface area, conductive heat sinking, and passive and active cooling may be selected to maintain the electrode within a desired operational temperature range such as in a range that vaporizes the metal of the melt such as Ag or Ag-Cu alloy and below the melting point of the refractory metal of the electrode. The losses may be predominantly by blackbody radiation. The electrode may be maintained in the temperature range of about 1000 °C to 3400 °C.

To permit an adjustment of the electrode gap 8g, the electrodes and bus bar assembly may comprise an articulating jointed bus bar to electrode connector. The articulating arms may be offset along the bus bars so that any fasteners on the ends to electrodes such as tungsten blade electrodes are staggered to permit close spacing of the electrodes without close contact of any protruding fasteners. To achieve further close approach the electrodes may be bent towards the end connections and straight in the ignition region. To support high temperature operation, the feed-throughs such as at least one of those to the bus bars of the ignition system 10a (FIGURE 2I24) and those to the bus bars to the EM pump may comprise electrically insulated ceramic feed-throughs such as those known in the art. The ceramic feed-throughs may be cooled by means such as gas or water-cooling. The feed-throughs may comprise a micromanipulation system to control at least one of the spacing and tilt angle of the attached electrodes such as blade electrodes. The feed-throughs may comprise bellows feed-throughs to permit movement of the bus bars to effect the positioning of the electrodes by the micromanipulation system such one known by those skilled in the art. In another embodiment, the adjustment mechanism of the electrode gap 8g comprises threaded bolts connected to the bus bars 9 and 10 wherein a movement of the electrodes 8 may be effected by moving the bus bars. The electrode gap 8g may be adjusted by the threaded bolts that push against the bus bars 9 and 10 to deflect them with applied pressure, and the bus bars undergo spring restoration when the bolts are loosened. In another embodiment, the threaded bolts may pull on the bus bars.

In an embodiment, the generator may comprise an automated control system to adjust the electrode gap 8g such as one of the disclosure or another known by tghose skilled in the art. The automated gap control system may comprise a computer, at least one sensor, and at least one of a mechanical mechanism such as a servomechanism and motor, and a solenoidal, an electromagnetic, and a piezoelectric positioner or micromanipulator that may be controlled by the computer with input from at least one sensor such as a position or a current sensor. The electrode separation comprising the gap may effect the current density and reaction confinement wherein both may be increased with a smaller gap. The hydrino reaction rate may be increased by increasing the current density. In an embodiment, the molten metal injection rate may be controlled to localize the metal to increase the current density. The electrode width may be increased to increase the confinement wherein the electrode length may be reduced to maintain a high current density. The shortened length may also increase the operating temperature that is optimized to increase the hydrino reaction rate. In an embodiment, the injection is controlled to cause the ignition current to pulse to increase the current density by the skin effect. In an embodiment, the reaction confinement may increase the rate of the hydrino reaction. In an embodiment, the electrodes vibrate to enhance the hydrino reaction rate. The vibration may be caused by the Lorentz force due to the currents in at least one of the electrodes and bus bars. At least one of the electrode spacing, electrode dimensions such as width, length, thickness, geometry, mass, operating temperature, spring tension, and material, and the voltage, current, and EM pumping rate may be adjusted to change the vibrational frequency to one desired. Alternatively, the generator may comprise a vibrator that vibrates the electrodes. Exemplary vibrators are those of the disclosure such as an electromagnetic or piezoelectric vibrator. The vibration rate may be in at least one range of about 1 Hz to 100 MHz, 100 Hz to 10 MHz, and 100 Hz to 1 MHz. At least one of the electrode current, mass, spring constant, length, and damping fixtures may be selected to achieve at least one of a desired vibration frequency and amplitude. The vibration may further serve to pump melt through the electrodes.

In an embodiment shown in FIGURE 2I24 to 2I28, the electrodes 8 may be electrically connected to the source of electrical power 2 by feed-throughs 10a mounted in separate or a single vacuum flange. The wall of the cone 5b2 may comprise a single aperture for the passage of the electrodes 8. The aperture may comprise a cover plate around at least one of the bus bars 9 and 10 and electrodes to seal the cone 5b2 or dome to loss of melt such as Ag or Ag-Cu melt. In an embodiment, a sapphire cover plate covers a penetration or aperture for the electrodes through the cone or dome such as the sapphire dome. The cell 26 may be housed in a chamber 5b3. The chamber may be capable of maintaining a pressure of less than equal to or greater than atmospheric. The cell walls may comprise the cone 5b2 or dome. The bus bars and electrodes may pass through a circular conduit through the cell chamber wall and the dome wall. A flange with electrode feed-throughs may seal the chamber, and a sapphire cover plate or plates with bus bar cutouts may seal the dome.

In an embodiment shown in FIGURE 2I24 to 2I28, at least one of the cone 5b2, the inner cone surface, and the outer cone surface may be comprised of a material such as a metal with a low reactivity to water. Exemplary metals having low water reactivity comprise those of the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, and Zn. In an embodiment, at least one of the cone 5b2, the inner cone surface, and the outer cone surface may be comprised of a material such as a metal with a higher melting point than that of the fuel melt such as Ag (M. P. = 962 °C) or Ag-Cu alloy (M. P. = 779 °C) and may further have a low emissivity. Exemplary cone and cone surface materials comprise polished metal surfaces such as those comprising steel, steel type PH-15-7 MO, Ni, Fe, Mo, Ta, galvanized metal such as steel or iron, and Pt or Au plated or clad metals such as Ni or Ti. The cell components such as the cone reservoir 5b and cone 5b2 may comprise a high melting point, high emissivity material on at least one of the inner and outer walls to radiate high power back into the cell wherein the thermal power can be preferentially radiated into the cell by using circumferential radiation shields to the cell component such as the cone 5b2.

In an embodiment shown in FIGURE 2I24 to 2I28, the cone 5b2 comprises a high-melting-point metal that has a low emissivity on the inner surface to reflect the blackbody radiation to the PV converter 26a. In exemplary embodiments, the cone 5b2 comprises Mo or W that is operated at a temperature of about that of the melting point of the fuel melt such as about 1000 °C to 1100 °C in the case of Ag or Ag-Cu alloy fuel melt. The high reflectivity may be maintained by preventing the oxidation of the reflective surface. A partial hydrogen atmosphere may be maintained in the reaction cell chamber 5b31 to reduce any metal oxide to metal or to react with any oxygen created to form $H_2O$. Alternatively, the cell 26 may comprise a counter electrode in contact with the cell atmosphere and a power supply that maintains a negative potential on the inner cone surface that serves as the cathode with an applied voltage to prevent oxidation of the reflective cathode surface. The cone metal such as those of the disclosure may be selected to have a low reactivity with water. Cell oxygen may be maintained at a low partial pressure by at least one of the vacuum pump 13a and the hydrogen supply 5u and 5w wherein the $H_2$ consumes oxygen.

The blackbody radiation power at 1300 K with an emissivity of 1 is 162 kW/m². In order to heat the cone to a temperature such as 1000 °C during startup at a fraction of this power, the emissivity may be maintained low. The outer cone surface may comprise a material with a low emissivity. In exemplary embodiments, the outer cone surface comprises polished Mo or electrolytic Ni wherein the emissivities at 1000 °C are 0.18 and 0.16 respectively. Polished W has an emissivity of 0.04 at room temperature. Polished silver (M.P. = 962 °C) has an emissivity of 0.03 at 1093 °C wherein the lower temperature melting Ag-Cu alloy (M.P. 28% Cu = 779 °C) may be used as the fuel metal. The surface may be heated with a heater such as an inductively coupled heater during startup. The window may be heated with a heater such as an inductively coupled heater during startup. In an embodiment comprising a closed reaction cell chamber 5b31 comprising a sufficiently thick inner wall of the insulated cone 5b2 shown in FIGURES 2I24-2I27 to conduct heat along the wall, a single inductively coupled heater coil 5f and inductively coupled heater 5m may be sufficient during startup to heat the entire reaction cell chamber 5b31 to a desired temperature such as one that prevents the fuel melt from solidifying and adhering to the surfaces of the chamber. An exemplary wall thickness is about ¼ inches. The blackbody radiation created in the cell may be directed to the window of the PV converter wherein the metal of the ignition product may be prevented for adhering by maintaining the temperature of the window such as the temperature of the top cover 5b4 above the melting point of the fuel melt.

In an embodiment wherein the plasma becomes optionally thick due to vaporization of the fuel such as one comprising Ag or Ag-Cu alloy, the vapor is contained in the cell 26. At least one of cell components shown in FIGURE 2I24 to 2I28 such as the pump tube 5k6, pump bus bars 5k2, heat transfer blocks 5k7, cone reservoir 5b, reservoir 5c, and cone 5b2 may be comprised of a refractory material such as at least one of Mo, Ta, and W. In an embodiment, at least one cell component comprises a crucible material such as SiC, graphite, MgO, or other ceramic type material known by those skilled in the art.

In an embodiment, a cell component such as the cone comprised of refractory metal may be welded using a thermite reaction having the refractory metal as a product. For example, tungsten may be welded using the thermite reactants comprising WO + Al thermite. In an embodiment comprising an MgO cone, alumina or calcium aluminate may serve as the binder of MgO.

A cell component such as the cone 5b2 may be surrounded by radiation shields. At least one of the cone 5b2 and shields may comprise an inverted metal dome (open end up towards the PV converter 26a). The dome may be fabricated by metal spinning. In an embodiment, the cone 5b2 of the cell 26 comprises a plurality of radiation shields such as heat shields. The shields may comprise a refractory metal such as those of the disclosure such as Mo, Ta, or W. The shields may comprise a design such as that of a high temperature vacuum furnace such as one known in the art. The heat shields may comprise sheet or foil that may be rolled and fastened. The sheets or foils may overlap at the ends with a raised end bends or a tongue and grove. The shields may be conical and concentric to direct the plasma power to the PV converter 26a. The cone may comprise a large emission aperture or aspect angle to the PV converter 26a. The cone 5b2 may comprise outer heat shields that provide an outer seal at the base of the cone 5b2. Alternatively, the cone 5b2 may comprise a sealed vessel such as reaction cell chamber 5b31 comprising inner heat shields. The cone 5b2 such as one comprising heat shields may be sealed to the cone reservoir 5b to contain cell gas or vapor such as at least one of water vapor, hydrogen, and fuel metal vapor. The seal may comprise a wet seal such as one of the molten fuel metal. In an embodiment, at least one of the base of the wall of the cone 5b2 and one of inner or outer heat shields are immersed in a molten reservoir of the fuel metal such as molten Ag or Ag-Cu alloy to form a wet seal. In another embodiment, the wet seal may comprise a trough such as one circumferential to the cone reservoir 5b that contains molten fuel metal, and at least one of the base of the wall of the cone 5b2 and the base of at least one heat shield are immersed in the molten metal. Alternatively, the wet seal may comprise at least one of the base of the wall of the cone 5b2 and the base of at least one heat shield and the recycled molten metal of the cone reservoir 5b wherein the former are immersed in the latter. The heat shields may comprise submerged legs to set on the bottom of the cone reservoir 5b to permit flow of the melt under the shields while maintaining the wet seal. At least one of the wall of the cone 5b2 and the heat shields that are sealed at the base may have sufficient vertical height towards the PV converter 26a such that the metal vapor does not exceed the height of the reaction cell chamber 5b31 formed by the cell components as shown in FIGURE 2I25. The reaction cell chamber 5b31 may be operated under vacuum. The temperature of the plasma may determine the height of the vapor in the reaction cell chamber 5b31 against gravity. Controlling the power generated by the SF-CIHT generator may control the temperature of the plasma. In an embodiment, the power from the hydrino process is controlled to control the height of the metal vapor in the reaction cell chamber 5b31. The cell power may be controlled by control means of the disclosure. Exemplary means comprise controlling the ignition parameters such as frequency, current, and voltage, the pump rate by controlling the pump current, and the water vapor pressure.

In an embodiment, the metal vapor may become charged during operation. The charging may decease or inhibit the hydrino reaction rate until the particles discharge. The particles may discharge by spontaneous discharge on the walls of the cell 26. The generator may comprise a means to facilitate the charged particle discharge. The generator may comprise a means to discharge the static charge on the metal vapor particles. The generator may comprise a set of electrodes. One of the electrodes may comprise a conductive wall of the cell 26. One electrode may be immersed in the metal vapor gas that may comprise plasma. The charge may be discharged by application of a field such as an electric field between the electrodes 88 and 26 (FIGURE 2I23) by a voltage source. The generator may comprise at least one of electrodes and an electric field source to discharge charged metal vapor to propagate and maintain the hydrino reaction. The generator may comprise an electrostatic precipitator (ESP) (FIGURE 2I23) such as one of the disclosure. In an embodiment, an ESP system may be installed to discharge the metal vapor particles to maintain a constant hydrino reaction rate.

In an embodiment, the plasma directly irradiates the PV converter 26a. In an embodiment, the metal vapor is confined to the reaction cell chamber 5b31 to avoid metal vapor deposition on the PV converter window. The metal vapor may be confined by electrostatic precipitation wherein the electrodes may comprise a refractory metal. In another embodiment, the metal vapor may be confined with a radio frequency field. The RF confinement of the silver vapor may be effective with high vapor densities under pressure. In an embodiment, the reaction cell chamber may comprise a gas such as helium to cause silver to settle to the bottom of the cell. In an embodiment, the cell may comprise a baffle such as a refractory metal mesh to avoid gas mixing due to turbulence. The reaction cell chamber gas may comprise a nucleating agent to cause the formation of larger metal vapor particles that will settle to the bottom of the cell due to gravity. The metal vapor pressure may be maintained at an elevated pressure to cause the nucleation of the silver to larger particles that settle to the bottom of the cell under gravity.

In an embodiment, the generator is operated to create at least a partial metal vapor atmosphere in the cell 26 such as in the reaction chamber 5b31. The cell atmosphere comprising metal vapor such as silver or silver-copper alloy vapor may be formed by vaporization at the electrodes. The vaporization power may be supplied by at least one of the ignition power and the hydrino reaction power. The hydrino reaction rate and corresponding power may be controlled by means of the disclosure to achieve a suitable or desirable hydrino power contribution to achieve the suitable or desirable metal vapor pressure. The metal vapor pressure may be controlled by controlling at least one of the molten metal injection rate and the temperature of the molten metal but means such as those of the disclosure such as controlling the pumping rate and the rate of heating or removing heat. In an embodiment, the pumping rate and subsequent metal vaporization may control the rate of heat removal form the electrodes to maintain the electrodes at a desired temperature. The metal vapor pressure may be in at least one range of about 0.01 Torr to 100 atm, 0.1 Torr to 20 atm, and 1 Torr to 10 atm. The metal vapor may enhance the hydrino reaction rate. Plasma may form in the metal vapor atmosphere that further comprises at least one of water vapor and hydrogen. The plasma may support at least one of H and catalyst formation. The temperature may be high such that thermolysis may support at least one of H and catalyst formation. The catalyst may comprise nascent water (HOH). The metal vapor may serve as a conductive matrix. The conductive matrix may serve as a replacement to a high current to remove electrons formed by the ionization of the catalyst. The removal of the ionized electrons may prevent space charge build up that may inhibit the hydrino reaction rate. The ignition current and pulsing frequency applied to the electrodes may be within the range of the disclosure. In an embodiment, the current may have at least one of a pulsing and constant current component in the range of about 100 A to 15,000A. In an exemplary mode of operation wherein the hydrino reaction produces blackbody radiation the current is constant and is in the at least one range of about 100 A to 20 kA, 1 kA to 10 kA, and 1 kA to 5 kA. The blackbody condition may depend on the metal vapor atmosphere. The atmosphere may be optically thick to the high-energy emission of the hydrino reaction.

The injector nozzle 5q may be at the end of the electrodes 8 such as blade electrodes (FIGURES 2I29-2I34) wherein the blade electrodes may be fastened at the opposite end to the bus bars 9 and 10. The nozzle pump tube may be end capped, and the nozzle 5q may be in the tube sidewall to inject shot into the side of the electrode at their end. Alternatively, the shot may be injected from on top of the electrodes as shown in FIGURES 2I17 and 2I18. In the case the pump tube and nozzle 5q are further from the molten metal of the cone reservoir, heat may be transferred from the molten metal in the cone reservoir 5b to the end of the nozzle 5q to heat it during startup. The nozzle end of the pump tube may comprise a heat transfer sleeve or block such as one comprising a refractory metal such as Mo or W to cause the heat transfer. Alternatively, a nozzle startup heater may comprise a connector such as a solenoid driven connector between the nozzle 5q and one electrode 8 to form a high current connection to serve as a resistive heater. The connector may comprise a high melting point material such as Mo or W.

In another embodiment, the window may be at a sufficient vertical distance from the electrodes such that ignition products do not reach the window due to gravity. The particles may also be prevented from being incident the window by the electrode EM pump. The EM pump may further reduce at least one of the quantities of ignition products ejected on the upper section of the cone walls and on the cone walls. In an embodiment, such as one shown in FIGURES 2I19 and 2I20, the shot is injected vertically and the EM pump comprising magnets 8c pumps the ignition products downward. The nozzle 5q may be positioned and oriented to cause the shot to have a transverse as well as vertical component of its injection trajectory. The nozzle position and offset to cause the shot trajectory along an axis with an angle to the vertical may be selected to reduce or prevent the downwardly pumped ignition products from colliding with the injected shot.

The ignition product may be prevented from reaching the PV converter by an electromagnetic pump on the electrodes. The electrode EM pump may force the ignition products downward. In an embodiment shown in FIGURES 2I24 and 2I27, the magnets may be cooled through the bus bars 8 and 9 such as tungsten or thermally insulated copper bus bars. The electrode EM pump magnetic field may be provided by a single magnet such as the one on the bus bar cell penetration side wherein the cooling may be provided through the bus bars. At least one of the bus bars, electrodes 8, and electrode EM pump magnets such as 8c and 8c1 may be cooled by a coolant such as water that may be at atmospheric pressure or high pressure that flows through the bus bars. The bus bar cooling system such as a water-cooling system may comprise an inlet pipe through a center-bored channel of each bus bar with a return flow in the annulus between the center pipe and the channel. Alternatively, the cooling system may comprise an inlet center-bored coolant channel in one bus bar with a return center-bored coolant channel in the other bus bar. The coolant line connection between bus bars may comprise an electrical insulator. The ends of the bus bars 9 and 10 at the electrode-fastened end may comprise a hollow section to serve as a thermal barrier to the main section of the bus bars. The magnet may comprise insulation such as a high temperature insulation of the disclosure such as AETB, Zicar, ZAL-45, or SiC-carbon aerogel (AFSiC). The insulation may be between the bus bar such as 8 and 9 the magnets such as 8c and 8c1 and covering the magnets while permitting sufficient thermal contact of the through-bus-bar cooling system such as coolant loops with the magnets. The magnets may be capable of operating at a high temperature such as CoSm (350 °C) or AlNiCo (525 °C).

The magnet cooling may also be supplied through cooling loops that run peripherally from the magnets such as 8c and 8c1 to outside of the cell such as those of the EM pump cooling system given in the disclosure. Alternatively, the electrode EM pump magnets may be external to the cell 26 to prevent them from overheating. The external electrode electromagnetic pump magnets may be located outside of the cell with a gap between the magnets and the cell wall to maintain the temperature of the magnets below their Curie point. The magnets may comprise individual isolated magnets that provide flux across the axis of the electrodes. The magnets may comprise a single magnet or a magnetic circuit (FIGURES 2I29-2I34) that comprises at least one magnet wherein each may run circumferentially to the cone or cone reservoir and extend from the region of one end of the electrodes to the other end. The magnetic circuit may comprise at least one magnet and yolk material having a high permeability comprising the remaining portion of the circuit. The magnets may comprise a single magnet or magnetic circuit that provides flux along the electrode axis at a gap in the magnet or circuit. The electrodes may comprise blade electrodes having the single magnet or a magnetic circuit spanning a half loop or semicircle from one end to the other and providing flux along the electrode axis and across the gap at the electrodes. The magnetic circuit may be in the shape of a C. The magnet or magnetic circuit section in between the electrodes may be designed to avoid shorting the electrodes. The short may be avoided with electrical insulators or by avoiding an electrical contact between the electrodes. In an exemplary embodiment, the magnets comprise CoSm or neodymium magnets each having about 10 to 30 cm$^2$ cross section in a C-shaped magnetic circuit having a yolk comprising at least one of cobalt of high purity iron wherein the gap is about 6 to 10 cm. The magnets may be cooled by means of the disclosure. The magnets may be placed on the floor of the chamber housing the cell at a position outside of the cell wall. The magnets may be at least one of heat sunk to the chamber floor and cooled by means of the disclosure. For example, the magnets comprise at least one cooling coil with a circulating coolant that transfers heat to a chiller such as 31 or 31a that rejects heat and cools at least one of the magnets(s) and magnetic circuit.

In an embodiment, the magnet(s) may be housed in a separate chamber off of the cell chamber. The magnets of the electrode electromagnetic (EM) pump may be cooled in an electrode magnet chamber. The electrode electromagnetic (EM) pump assembly may comprise that of the EM pump 5ka shown in FIGURE 2I28. The electrode electromagnetic (EM) pump cooling system assembly may comprise one of the cooling system 5k1 of the EM pump (FIGURE 2I28). The electrode EM may comprise an electromagnetic pump coolant lines feed-through assembly 5kb, EM pump coolant line 5k11, EM pump cold plate 5k12, magnets 5k4, magnetic yolks and optionally thermal barrier 5k5 that may comprise a gas or vacuum gap having optional radiation shielding, pump tube 5k6, bus bars 5k2, and bus bar current source connections 5k3 that may be supplied by current from the PV converter. The magnets may produce a field that is parallel to the bus bars. The magnet at the bus bar end may comprise a notch for passage of at least one of the bus bars and electrodes. The electrode EM pump may comprise a single magnet having a geometry that produces a field predominantly parallel to the bus bars. The single magnet may be located close to the ignition site such as near the ends of the electrodes. The at least one EM pump magnet may comprise an electromagnet that may be activated in startup. Once the cell walls are hot such that the ignition products flow to the cone reservoir, the magnetic field may be terminated. In another embodiment, the magnetic field may be terminated by removing or retracting the magnet(s) such as a permanent magnet(s). The magnet may be retracted by a moving means such as a mechanical system or electromagnetic system. Exemplary magnet retracting systems comprise a servomotor and a screw driven table on rail guides or a solenoidal driven table on rail guides. Other moving means are known to those skilled in the art. Alternatively, the magnetic field may be removed by the insertion of a magnetic shield such as a mu metal shield in between the magnet and the electrodes. The shield may be applied using a moving means such as a mechanical system or electromagnetic system such as those of the magnet retracting system. In an embodiment, once the cell is at temperature the direction of the magnetic field or the polarity of the ignition current may be switched to reverse the Lorentz force and the pumping direction to pump the injected metal upwards rather than downwards to increase the flow rate through the electrodes and thus the power output. The polarity of the DC ignition current may be reversed with a switch such as an IGBT or another switch of the disclosure or known in the art. Reversing the current of an electromagnet or by mechanically reversing the orientation of permanent magnets may reverse the magnetic field polarity. The cell 26 components such as the cone 5b2 may comprise a ceramic such as MgO, ZrB$_2$, BN, or others of the disclosure that is thermally insulating such the inner wall temperature rises quickly.

In an embodiment, the height of the cell may be sufficient that ignition products do not reach the PV converter against gravity or are blocked by a window such as a sapphire window. The window may be maintained sufficiently hot to prevent the ignition products from adhering. In another embodiment, the magnetic field from a magnet such as the permanent magnet or electromagnet to cause a downward Lorentz force on the ignition products may not be terminated. In another embodiment, the cell may comprise a baffle 8d to retard or stop the ignition particles from being incident the PV window. The baffle may be opaque and capable of secondarily emitting blackbody radiation. The baffle may comprise a grid or plate that may comprise a refractory material such as W or Mo. Alternatively, the baffle may be transparent to the blackbody light. Exemplary transparent baffles comprise at least one of sapphire, quartz, and alkali and alkaline earth crystals such as LiF and MgF$_2$.

Embodiments comprising at least one of a thermophotovoltaic, photovoltaic, photoelectric, thermionic, and thermoelectric SF-CIHT cell power generator showing a capacitor bank ignition system 2 are in FIGURES 2I24 to 2I43. In an embodiment, the cell 26 comprises a cone 5b2 comprising a reaction vessel wall, a cone reservoir 5b and reservoir 5c that forms the floor of a reaction cell chamber 5b31 and serves as a reservoir for the fuel melt, and a top cover 5b4 that comprises the top of the reaction cell chamber 5b31. In an embodiment, the cell is contained in a cell chamber 5b3. The cell chamber 5b3 and the reaction cell chamber 5b31 may be evacuated by pump 13a through vacuum connection 13b. The chambers may be selectively evacuated using at least one or both of reaction cell vacuum pump line and flange 13c and cell chamber vacuum pump line and flange 13d with the selective opening and closing of at least one of cell chamber vacuum pump line valve 13e and reaction cell vacuum pump line valve 13f.

In an embodiment, the cone 5b2 comprises a parabolic reflector dish with one or more heat shields about the electrodes 8. It is understood that the heat shields may also comprise others forms of thermal insulation 5e such as ceramic insulation materials such as MgO, fire brick, $Al_2O_3$, zirconium oxide such as Zicar, alumina enhanced thermal barrier (AETB) such as AETB 12 insulation, ZAL-45, and SiC-carbon aerogel (AFSiC). An exemplary AETB 12 insulation thickness is about 0.5 to 5 cm. The insulation may be encapsulated between two layers such as an inner refractory metal wall that may comprise the reflector such as that of cone 5b2 and an outer insulation wall that may comprise the same or a different metal such as stainless steel. The reflector assembly comprising the cone 5b2, insulation, and outer insulation encapsulation wall may be cooled. The outer insulation encapsulation wall may comprise a cooling system such as one that transfers heat to a chiller such as 31 or 31a.

In an embodiment, the chiller may comprise a radiator 31 and may further comprise at least one fan 31j and at least one coolant pump 31k to cool the radiator and circulate the coolant. The radiator may be air-cooled. An exemplary radiator comprises a car or truck radiator. The chiller may further comprise a coolant reservoir or tank 311. The tank 311 may serve as a buffer of the flow. The cooling system may comprise a bypass valve 31n to return flow from the tank to the radiator. In an embodiment, the cooling system comprises at least one of a bypass loop to recirculate coolant between the tank and the radiator when the radiator inlet line pressure is low due to lowering or cessation of pumping in the cooling lines, and a radiator overpressure or overflow line between the radiator and the tank. The cooling system may further comprise at least one check valve in the bypass loop (31n and 31s). The cooling system may further comprise a radiator overflow valve 31o such as a check valve and an overflow line 31p from the radiator to the overflow tank 311 (FIGURES 2I32-2I34). The radiator may serve as the tank. The chiller such as the radiator 31 and fan 31j may have a flow to and from the tank 311. The cooling system may comprise a tank inlet line 31q from the radiator to the tank 311 to deliver cooled coolant. The coolant may be pumped from the tank 311 to a common tank outlet manifold 31r that may supply cool coolant to each component to be cooled. The radiator 31 may serve as the tank wherein the radiator outlet 31r provides cool coolant. Alternatively, each component to be cooled such as the inductively coupled heater, electrodes, cell 26, and PV converter 26a may have a separate coolant flow loop with the tank that is cooled by the chiller such as the radiator and fan. Each loop may comprise a separate pump of a plurality of pumps 31k (FIGURES 2I32-2I34) or a pump and a valve of a plurality of valves 31m. Each loop may receive flow from a separate pump 31k that regulates the flow in the loop. Alternatively, (FIGURES 2I35-2I43) each loop may receive flow from a pump 31k that provides flow to a plurality of loops wherein each loop comprises a valve 31m such as a solenoid valve that regulates the flow in the loop. The flow through each loop may be independently controlled by its controller such as a heat sensor such as at least one of a thermocouple, a flow meter, a controllable value, pump controller, and a computer.

In another embodiment, the coolant loops of a plurality of cooled cell components may be combined. A heat exchanger or heat conductor such as heat transfer blocks or a heat pipe may cool from the outer wall of the cone 5b2 or the outer insulation encapsulation wall. In an embodiment, graphite is a direction heat conductor that may be used as a high temperature insulator along the radial path and a heat conductor along the axial path parallel to the cone wall. It is also understood that the reflector such as the cone 5b2 may comprise other geometric and structural forms than a parabolic dish to reflect the light from the hydrino reaction such as blackbody radiation to the PV converter 26a. Exemplary other forms are a triangular prism, spherical dish, hyperbolic dish, and parabolic trough. At least one of the parabolic reflector dish and heat shields may comprise a refractory metal such as Mo, Ta, or W. In an exemplary embodiment, the cone reservoir 5b may be comprise a high temperature material such as Mo, Ta, or W, the reservoir 5c and the EM pump tube 5k6 may comprise a high temperature stainless steel, and the EM pump bus bars 5k2 may comprise nickel or stainless steel. In an embodiment wherein the pump tube comprises a magnetic or ferromagnetic material such as nickel, the pump tube may be operated at a temperature above the Curie temperature such that the magnetic flux from the magnets and yokes of the EM pump permeate directly through the tube. The parabolic reflector dish such as cone 5b2 with one or more heat shields or insulation 5e may be sealed to the cone reservoir. The cell comprising the cone 5b2 and cone reservoir 5b may be housed in a vacuum chamber 5b3 that may be sealed. At least one of the parabolic reflector dish and heat shields or insulation may be sealed to the cone reservoir 5b. The seal may comprise at least one of a wet seal, a weld, threads, and one comprising fasteners. At least one of the parabolic reflector dish and heat shields or insulation may comprise penetrations for the electrodes. The penetrations may be sealed. The seal may comprise a high temperature electrical insulator such as a ceramic.

In an embodiment, such as a thermophotovoltaic one, the hydrino reaction heats the fuel melt to cause it to become vaporized. The vapor causes the cell gas to become optically thick to the radiation produced by the hydrino reaction. The absorbed radiation creates intense, high temperature blackbody emission. The cone 5b2 comprising a parabolic reflector dish with one or more heat shields or insulation may reflect the blackbody emission to the PV converter 26a. At least one of the parabolic reflector dish with one or more heat shields or insulation that are heated by the plasma may operate at a lower temperature than the plasma and a higher temperature than least one component of the cone 5b2, the cone reservoir 5b, the reservoir of the melt such as molten Ag or Ag-Cu 5c, and the EM pump. An exemplary range of blackbody temperatures of the plasma is about 1000 °C to 8000 °C. The parabolic reflector dish with one or more heat shields or insulation may be operated below their melting points such as below about 2623 °C in the case on Mo and below about 3422 °C in the case of W. At least one component of the cell 26 such as the cone 5b2, the cone reservoir 5, the reservoir of the melt such as molten Ag or Ag-Cu 5c, and the EM pump such as 5k4 may be cooled. At least one component of the cell 26 such as the cone 5b2, the cone reservoir 5b, the reservoir of the melt 5c, and the EM pump may be operated below the failure temperature of their materials such as below about 1100 °C in the case of high temperature stainless steel cell components. In an embodiment, at least one component of the cell 26 such as the cone 5b2, the cone reservoir 5b, the reservoir of the melt 5c, and the EM pump may be operated at a temperature below the boiling point of the fuel melt. The vapors of the vaporized fuel melt may condense in cone reservoir 5b due to its temperature being below the boiling point. An exemplary temperature range for silver fuel melt is about 962 °C to 2162 °C. In an embodiment, the generator may comprise a counter current recirculator of heat from condensing vapor at the cone reservoir to at least one of the injected metal and the ignition plasma. The generator may comprise an injection system preheater or after heater wherein the heat released in the metal vapor condensation may heat the molten metal to increase its temperature. The preheater may comprise a heat exchanger that may transfer the heat to the nozzle 5q. The preheater may comprise heat shields. The heat released by condensation may be made incident on the top cover 5b4 and transferred to the PV converter 26a. In an embodiment, the widow 5b4 to the PV converter 26a such as a quartz, alkali-aluminosilicate glass, or sapphire window may be operated at a temperature range above the melting point of the ignition products and below the failure temperature of the material comprising the window such as in the range of about 800 °C to 2000 °C in the case of Ag-Cu (28 wt%) as the ignition product and sapphire as the window material. In an embodiment, the generator comprises at least one sensor such as a thermocouple to sense a component to the system such as the temperature. The sensed parameter may be input to a computer to control the parameter to be within a desired range. In the event that the parameter exceeds at desire range such as an excessive temperature is experienced, the generator may comprise a safety shut off mechanism such as one know in the art. The shut off mechanism may comprise a computer and a switch that provides power to at least one component of the generator that may be opened to cause the shut off. An exemplary thermocouple with its feed-through 5k8 such as a ceramic feed-through is shown in FIGURES 2I24 and 2I43.

In an embodiment, at least one of the cell components such as the cone 5b2, the inner cone surface, and the outer cone surface may be comprised of a material such as a metal with at least one of a low reactivity to water, a high melting point, and a high emissivity. In the case that the emissivity is high, the cell component may become elevated in temperature from thermal power from the hydrino reaction and secondarily radiate blackbody radiation to the PV converter 26a to be converted into electricity. Suitable materials are refractory metals such as those of the disclosure such as Mo, Ta, and W and graphite. The surface of the material such as a metal may be at least one of oxidized and roughened to increase the emissivity. The cell component may comprise a large emission aperture or aspect angle to the PV converter 26a.

In an embodiment, the cell 26 comprising the cone 5b2, the cone reservoir 5b, the reservoir of the melt 5c, and the EM pump comprise a vessel that is closed by an opaque top cover 5b4 that replaces the transparent window. Cell components may be sealed at connections or joints by welds or with gaskets wherein the joints held by fasteners. An exemplary gasket material is graphite such as Graphoil. The reaction cell chamber is sealed to confine at least one of the fuel gas such as at least one of water vapor and hydrogen and the metal vapor of the fuel melt such as Ag or Ag-Cu alloy vapor. The top cover 5b4 may comprise a material capable of operating at a very high temperature such as in the range of about 1000 °C to 4000 °C that can serve as a blackbody. In an embodiment, the top cover 5b4 is not transparent to radiation such that it heats up to become a high temperature blackbody radiator. The top cover may comprise a refractory metal such as Mo. Ta, or W. Alternatively, the top cover may comprise graphite or a ceramic such as SiC, MgO, alumina, Hf-Ta-C, or other high temperature material known in the art that can serve as a blackbody. The top cover absorbs blackbody radiation from the plasma and secondary blackbody radiation from the cone and other components of the cell to heat up to its high operating temperature. The top cover may have a high emissivity such as one close to one. In an embodiment, the emissivity may be adjusted to cause blackbody power that match the capability of the PV converter. In exemplary embodiments, the emissivity may be increased or decreased by means of the disclosure. In an exemplary case of a metal top cover 5b4, the surface may be at least one of oxidized and roughened to increase the emissivity. The emissivity of the may be non-linear with wavelength such as inversely proportional to the wavelength such that short wavelength emission is favored from its outer surface. In a thermophotovoltaic embodiment, the top cover 5b4 comprises a blackbody radiator that provides light incident to the PV converter 26a. At least one of lenses and mirrors in the gap between the top cover blackbody radiator 5b4 and the PV converter 26a may be selective for passing short wavelength light to the PV converter while returning infrared light to the radiator 5b4. In an exemplary embodiment, the operating temperature of a W top cover 5b4 is the operating temperature of a W incandescent light bulb such as up to 3700 K. With an emissivity of 1, the blackbody radiator power is up to 10.6 MW/m$^2$ according to the Stefan Boltzmann equation. In an embodiment, the blackbody radiation is made incident the PV converter 26a comprising concentrator photovoltaic cells 15 such as those of the disclosure that are responsive to the corresponding radiation such as one responsive to visible and near infrared light. The cells may comprise multi-junction cells such as double or triple junction cells comprising III/V semiconductors such as those of the disclosure. The SF-CIHT generator may further comprise a blackbody temperature sensor and a blackbody temperature controller. The blackbody temperature of the top cover 5b4 may be maintained and adjusted to optimize the conversion of the blackbody light to electricity. The blackbody temperature of the top cover 5b4 may be sensed with a sensor such as at least one of a spectrometer, an optical pyrometer, the PV converter 26a, and a power meter that uses the emissivity to determine the blackbody temperature. A controller such as one comprising a computer and hydrino reaction parameter sensors and controllers may control the power from the hydrino reaction by means of the disclosure. In exemplary embodiments to control the temperature and the stability of the blackbody temperature, the hydrino reaction rate is controlled by controlling at least one of the water vapor pressure, fuel injection rate, ignition frequency, and ignition current. For a given hydrino reaction power from the reaction cell chamber 5b31 heating the top cover 5b4, a desired operating blackbody temperature of the top cover 5b4 comprising a blackbody radiator may be achieved by at least one of selecting and controlling the emissivity of at least one of the inner and outer surface of the top cover 5b4. In an embodiment, the radiated power from the top cover 5b4 is about a spectral and power match to the PV converter 26a. In an embodiment, the emissivity of the outer surface is selected, such as one in the range of about 0.1 to 1, in order that the top cover 5b4 radiates a power to the PV converter that does not exceed its maximum acceptable incident power at a desired blackbody temperature. The blackbody temperature may be selected to better match the photovoltaic conversion responsiveness of the PV cell so that the conversion efficiency may be maximized. The emissivity may be changed by modification of the top cover 5b4 outer surface. The emissivity may be increased or decreased by applying a coating of increased or decreased emissivity. In an exemplary embodiment, a SiC coating may be applied to the top cover 5b4 to increase its emissivity. The emissivity may also be increased by at least one of oxidizing and roughening the surface, and the emissivity may be decreased by at least one of reducing an oxidized surface and polishing a rough surface. The generator may comprise a source of oxidizing gas such as at least one of oxygen and $H_2O$ and a source of reducing gas such as hydrogen and a means to control the composition and pressure of the atmosphere in the cell chamber. The generator may comprise gas sensors such as a pressure gauge, a pump, gas supplies, and gas supply controllers to control the gas the composition and pressure to control the emissivity of the top cover 5b4.

The top cover 5b4 and the PV converter 26a may be separated by a gap such as a gas or vacuum gap to prevent the PV converter from overheating due to heat conduction to the PV converter. The top cover 5b4 may comprise a number of suitable shapes such as a flat plate or a dome. The shape may be selected for at least one of structural integrity and optimization of transmitting light to the PV area. To enhance the cell electrical output and efficiency, the area of the blackbody emitter 5b4 and receiving PV converter 26a may be maximized to limit the area of the cone 5b2 that does not emit light. In an embodiment, other cell component may comprise a material such as a refractory metal such as W to serve as a blackbody radiator to the PV converter that is arranged circumferentially to the component to receive the blackbody radiation. At least one of the cell 26 components such as the top cover 54b and the cone 5b2 may comprise a geometry that optimizes the stacking of the PV cells 15 to accept light from the component. In an exemplary embodiment, the cell component may comprise faceted surfaces such as polygons such as at least one of triangles, pentagons, hexagons, squares, and rectangles with a matching geometry of the PV cells 15. The cells may be arranged in arrays having the matching geometry.

In an embodiment, the blackbody radiator comprises a spherical dome 5b4 (also comprising the cone 5b2) that may be connected to the cone reservoir 5b. In an embodiment, the emissivity of the inner cell 26 walls such as those comprising the cone is determined by the metal vapor that deposits on the walls. In this case, the cone may comprise a material selected for parameter other than a desired emissivity such as at least one of easy of fabrication, cost, durability, and high temperature operation. At least one cell component such as at least one of the cone 5b2, the cone reservoir 5b, and the top cover or dome 5b4 may comprise at least one of graphite (sublimation point = 3642 °C), a refractory metal such as tungsten (M.P. = 3422 °C) or tantalum (M.P. = 3020 °C), a ceramic, a ultra-high-temperature ceramic, and a ceramic matrix composite such as at least one of borides, carbides, nitrides, and oxides such as those of early transition metals such as hafnium boride ($HfB_2$), zirconium diboride ($ZrB_2$), hafnium nitride (HfN), zirconium nitride (ZrN), titanium carbide (TiC), titanium nitride (TiN), thorium dioxide ($ThO_2$), niobium boride ($NbB_2$), and tantalum carbide (TaC) and their associated composites. Exemplary ceramics having a derived high melting point are magnesium oxide (MgO) (M.P. = 2852 °C), zirconium oxide (ZrO) (M.P. = 2715 °C), boron nitride (BN) (M.P. = 2973 °C), zirconium dioxide ($ZrO_2$) (M.P. = 2715 °C), hafnium boride ($HfB_2$) (M.P. = 3380 °C), hafnium carbide (HfC) (M.P. = 3900 °C), hafnium nitride (HfN) (M.P. = 3385 °C), zirconium diboride ($ZrB_2$) (M.P. = 3246 °C), zirconium carbide (ZrC) (M.P. = 3400 °C), zirconium nitride (ZrN) (M.P. = 2950 °C), titanium boride ($TiB_2$) (M.P. = 3225 °C), titanium carbide (TiC) (M.P. = 3100 °C), titanium nitride (TiN) (M.P. = 2950 °C), silicon carbide (SiC) (M.P. = 2820 °C), tantalum boride ($TaB_2$) (M.P. = 3040 °C), tantalum carbide (TaC) (M.P. = 3800 °C), tantalum nitride (TaN) (M.P. = 2700 °C), niobium carbide (NbC) (M.P. = 3490 °C), niobium nitride (NbN) (M.P. = 2573 °C), vanadium carbide (VC) (M.P. = 2810 °C), and vanadium nitride (VN) (M.P. = 2050 °C), and a turbine blade material such as one or more from the group of a superalloy, nickel-based superalloy comprising chromium, cobalt, and rhenium, one comprising ceramic matrix composites, U-500, Rene 77, Rene N5, Rene N6, PWA 1484, CMSX-4, CMSX-10, Inconel, IN-738, GTD-111, EPM-102, and PWA 1497. The ceramic such as MgO and ZrO may be resistant to reaction with $H_2$. An exemplary cell component such as the cone 5b2 comprises MgO, ZrO, $ZrB_2$, or BN. The cell component material such as graphite may be coated with another high temperature or refractory material such as a refractory metal such as tungsten or a ceramic such as $ZrB_2$ or another one of the disclosure or known in the art. Another graphite surface coating comprises diamond-like carbon that may be formed on the surface by plasma treatment of the cone. The treatment method may comprise one known in the art for depositing diamond-like carbon on substrates. In an embodiment, silver vapor may deposit on the surface by pre-coating or during operation to protect the cone surface from erosion. In an embodiment, the reaction cell chamber 5b31 may comprise reaction products of carbon and cell gas such as at least one of $H_2O$, $H_2$, and $O_2$ to suppress further reaction of the carbon. In an embodiment at least one component such as the cone reservoir 5b, the reservoir 5c, and the pump tube 5k6 may comprise high temperature steel such as Haynes 230. In an embodiment, the noble gas-$H_2$ plasma such as argon-$H_2$ (3 to 5%) maintained by the hydrino reaction may convert graphitic form of carbon to at least one of diamond-like form or diamond.

The cell component such as the cone 5b2 or dome 5b4 may be cast, milled, hot pressed, sintered, plasma sintered, infiltrated, spark plasma sintered, 3D printed by powder bed laser melting, and formed by other methods known to those in the art. A refractory metal cone such as a W cone may be formed as a wire wrapping or weave. The cone 5b2 may comprise flanges to mate with the cone reservoir 5b and the top cover 5b4 wherein the flanges are bound permanently to the cone and may be incorporated during fabrication of the cone. Alternativley, the cone may be fastened to adjoining cell components such as the top cover 5b4 and the cone reservoir 5b by compression using a corresponding mechanism such as clamps, brackets, or springs. The top cover 5b4 and cone reservoir 5b may be clamped to the cone 5b2. The joints may each be sealed with a gasket such as a Graphoil gasket. The mating components may be grooved or have faceted to latch together to form a seal capable of containing the metal vapor. The inner surface of the cone may be smooth and may be covered with the fuel melt such as silver during operation. The cone may be pre-coated with the metal of the fuel melt before operation to lower the emissivity during start-up. In an embodiment at least one of the cone reservoir, reservoir, EM pump tube, EM pump bus bars, and heat transfer block may comprise Mo. In another embodiment wherein the fuel melt is silver the heat transfer blocks may comprise a material such as iron, aluminum nitride, titanium, or silicon carbide that has a higher melting point than that of the metal of the fuel melt. In the case that the blocks are magnetic, they may be operated above their Curie temperature. In an embodiment, at least one component such as the lower chamber and mating pieces may be fabricated by stamping or stamp pressing the component material such as metal.

In an embodiment, the atmosphere of reaction cell chamber 5b31 may comprise a noble gas atmosphere such as helium atmosphere having a sufficient difference in density to cause the metal vapor such as Ag or Ag-Cu metal vapor to settle to bottom of the cone 5b and cone reservoir 5b. In an embodiment, the density difference is controlled by controlling the cell gas and pressure to cause the plasma to focus in more proximity to the focus of a parabolic cone 5b2. The focus may cause more direct illumination of the top cover 5b4 to subsequently illuminate the thermophotovoltaic converter 26a. In other embodiments, the thermophotovoltaic converter is replaced by a at least one of a photovoltaic, photoelectric, thermionic, and thermoelectric converter to receive the emission or heat flow from the top cover 5b4 comprising a blackbody radiator. In the case of thermionic and thermoelectric embodiments, the thermionic or thermoelectric converter may be in direct contact with the hot top cover 5b4. The hot top cover 5b4 may also transfer heat to a heat engine such as a Rankine, Brayton, or Stirling heat engine or heater that may server as the heat-to-electricity converter. In an embodiment, a medium other than standard ones such as water or air may be used as the working medium of the heat engine. In exemplary embodiments, a hydrocarbon may replace water in a Rankine cycle of a turbine-generator, and supercritical carbon dioxide may be used as the working medium of Brayton cycle of a turbine-generator. Alternatively, the hot cover 5b4 may serve as a heat source or a heater or a light source. The heat flow to the heat engine or heater may be direct or indirect wherein the SF-CIHT generator may further comprise a heat exchanger or heat transfer means such as one of the disclosure.

At least one of the cell chamber 5b3 and the reaction cell chamber comprising the chamber formed by the cone 5b2 and top cover 5b4 may be evacuated with pump 13a through pump lines 13b and 13c, respectively. Corresponding pump line valves 13d and 13e may be used to select the pumped vessel. The cell may further comprise a high temperature capable sensor or sensors for at least one of oxygen, hydrogen, water vapor, metal vapor, and total pressure. The water and hydrogen pressure may be controlled to a desired pressure such as one of the disclosure such as a water vapor pressure in the range of 0.1 Torr to 1 Torr by means of the disclosure. In an exemplary embodiment, the desired gas pressure is maintained by a valve and a gas supply wherein the valve opening is controlled to supply a flow to maintain the desired pressure of the gas with feedback using the measured pressure of the gas. The $H_2O$ and $H_2$ may be supplied by hydrogen tank and line 5u that may comprise an electrolysis system to provide $H_2$, $H_2O$/steam tank and line 5v, hydrogen manifold and feed line 5w, $H_2O$/steam manifold and feed line 5x, H2/steam manifold 5y, direct $H_2O/H_2$ injector 5z1, and direct $H_2O/H_2$ injector valve 5z2. Oxygen produced in the cell may be reacted with supplied hydrogen to form water as an alternative to pumping off or gettering the oxygen. Hydrino gas may diffuse through the walls and joints of the cell or flow out a selective gas valve.

The metal vapor in the sealed reaction cell chamber 5b31 may coat the cell walls to suppress vaporization and migration of the wall material. In an embodiment, a surface such as an inner cell surface may be initially coated with a material such as a coating of the disclosure, a metal, or another metal having a lower vapor pressure than the material of the surface. For example, a Mo cone may be internally coated with W to lower the internal Mo vapor pressure. The coating may further protect the surface from at least one of oxidation and evaporation of the material of the surface. A composition of matter such as a gas may be added to the reaction cell chamber 5b31 atmosphere to stabilize or regenerate at least one surface in the cell. For example, in the case that at least one of the cone 5b2 and the top cover 5b4 comprise tungsten, a halogen-source gas such as iodine or bromine gas or a hydrocarbon bromine compound such as at least one of HBr, $CH_3Br$, and $CH_2Br_2$ and optionally trace oxygen may be added to the reaction cell chamber 5b31 atmosphere to cause W to redeposit on at least one of the W cone 5b2 and W top cover 5b4 surfaces. The atmosphere in the cell chamber may comprise gases of a halogen-type incandescent light bulb. The window coating on the PV cells 15 of the PV converter 26a may comprise the material of a halogen lamp, tungsten halogen, quartz halogen, or quartz iodine lamp such as quartz, fused silica, or glass such as aluminosilicate glass. The external surfaces of the cone 5b2 and top cover 5b4 may similar be regenerated. The cone reservoir 5b may be operated at a lower temperature than at least one of the top cover 5b4 and cone 5b2 to cause the metal vapor of the fuel melt to condense in the cone reservoir 5b to supply the regeneration of the fuel such as one comprising injected molten fuel metal and at least one of $H_2O$ and $H_2$. At least one of the reaction cell chamber 5b31 and the cell chamber 5b3 housing the cell 26 may be operated under vacuum to prevent oxidation of the cell components such as the cone 5b2 and top cover 5b4. Alternatively, at least one of the reaction cell chamber 5b31 and the cell chamber 5b3 may be filled with an inert gas to prevent at least one of oxidation and evaporation of the cone 5b2 and the top cover 5b4. In an embodiment, the metal vapor from the fuel melt coats the inner surfaces of the reaction cell chamber 5b31 and protects them from oxidation by the $H_2O$ fuel. As given in the disclosure the addition of $H_2$ gas or the application of a negative voltage to the cell components such as the cone 5b2 and top cover 5b4 may reduce or avoid their oxidation. The top cover 5b4 may comprise the material of an incandescent light bulb such as tungsten or tungsten-rhenium alloy. The inert gas may be one used in an incandescent light bulb as known by those skilled in the art. The inert gas may comprise at least one of a noble gas such as argon, krypton, or xenon, and nitrogen, and hydrogen. The inert gas may be at reduced pressure such as a pressure used in an incandescent bulb. The inert gas pressure may be in the range of about 0.01 atm to 0.95 atm. In an embodiment wherein the metal of the top cover 5b4 such as Mo or W is transferred by evaporation and deposition to another cell component such as the outer wall of the cone 5b2, the cell chamber that houses the cell, and a component of the PV converter 26a, the metal such as a metal coating maybe be removed and recycled by exposing the coating to oxygen and collecting the metal oxide. The oxygen exposure may be at an elevated temperature. A metal coating on the PV panels 15 may be cleaned by exposing the panel surface to oxygen and cleaning off the metal oxide. In an embodiment, the blackbody radiator 54b may be regenerated or refurbished. The refurbishment may be achieved by deposition of the blackbody radiator material. For example, a tungsten dome 5b4 may be refurbished by deposition such as by chemical deposition such as using tungsten hexacarbonyl, cold spray, or vapor deposition, and other methods of the disclosure. In an embodiment a coating such as a refractory metal such as W, Mo, Ta, or Nb may be applied by electroplating such as from a molten salt electrolyte as known by those skilled in the art.

All particles independent of size and density experience the same gravitational acceleration. In an embodiment, the reaction cell chamber 5b31 is operated under vacuum or the absence of cell gas other than fuel such as water vapor such that metal vapor particles may be confined to a desired region of the reaction cell chamber 5b31 by the effect of gravity. The region may comprise the electrode region. In another embodiment, the reaction cell chamber 5b31 is operated under a partial vacuum with a heat transfer gas present to cause the metal vapor to form particles that fall under the force of gravity to cause confinement of the metal vapor. The confinement may be to the electrode region. The heat transfer gas may comprise hydrogen or an inert gas such as a noble gas such as helium that comprises a high heat transfer agent. The pressure of the heat transfer gas may be adjusted to achieve the desired confinement. The desired confinement condition may comprise a balance of the effects of aerosolization by the gas and gravity.

In another embodiment, the reaction cell chamber 5b31 is operated under an inert atmosphere. The inert gas may have a lower density than the metal vapor of the solid fuel melt such as the vapor from molten Ag or Ag-Cu. Exemplary lower density inert gases are at least one of hydrogen and a noble gas such as at least one of helium or argon. The metal vapor may be confined to the electrode region of the parabolic reflector dish 5b2 due to the presence of the more buoyant inert gas. The difference in densities of the metal vapor and the inert gas may be exploited to control the extent of the confinement such as the volumetric displacement of the metal vapor. At least one of the selections of the inert gas based on its density and the pressure of the inert gas may be controlled to control the confinement of the metal vapor. The SF-CIHT generator may comprise a source of inert gas such as a tank, and at least one of a pressure gauge, a pressure regulator, a flow regulator, at least one valve, a pump, and a computer to read the pressure and control the pressure. The inert gas pressure may be in the range of about 1 Torr to 10 atm. In an embodiment, any atmospheric convection currents due to temperature gradients in the atmosphere of the reaction cell chamber 5b31 may be formed to favor a desired confinement of the metal vapor. The cone reservoir 5b may be cooler than the metal vapor and other proximal cell components in contact with the metal vapor such as the parabolic reflector dish 5b2. The gas convection current may be towards the cone reservoir 5b due to its lower operating temperature. The metal vapor may condense in the cone reservoir 5b to enhance the vapor flow direction towards the cone reservoir 5b and increase the metal vapor confinement. The cone reservoir 5b2 may be cooled. The coolant coil comprising the antenna of the inductively coupled heater 5f may be used to cool the cone reservoir 5b, or it may be cooled by a separate cooling coil or heat exchanger. In the case that heat is removed through the reservoir 5c, the corresponding thermal power may be controlled by controlling the heat gradient along the reservoir 5c and its cross sectional area. A schematic of the inductively coupled heater feed through assembly 5mc is shown in FIGURES 2I24-2I26. The inductively coupled heater comprises leads 5p that also serve as coolant lines connect to a chiller 31 through inductively coupled heater coolant system inlet 5ma and inductively coupled heater coolant system outlet 5mb. In an embodiment, the inductively coupled heater coil leads penetrate into a sealed section of the generator such as at least one of the cell 26 or the lower chamber 5b5. The lead 5p penetrations of a wall to the cell component that is heated such as at least one of the penetrations of the flange of the inductively coupled heater feed through assembly 5mc and the penetrations of the lower vacuum chamber 5b5 may be electrically isolated such that the leads 5p do not electrically short.

In an embodiment, the confinement of the metal vapor may be controlled by forced gas flow using at least one blower as given in the disclosure for metal powder. In another embodiment, the metal vapor may be confined by flowing a current through the vapor using a current source and by the application of magnetic flux to cause a Lorentz force towards the cone reservoir 5b as given in the disclosure. In another embodiment, the metal vapor may be confined with an electrostatic precipitator as given in the disclosure.

In an embodiment, following startup the heater may be disengaged, and cooling may be engaged to maintain the cell components such as the cone reservoir 5b, EM pump, electrodes 8, cone 5b2, window 5b4, and PV converter 26a at their operating temperatures such as those given in the disclosure.

In embodiment, the SF-CIHT cell or generator also referred to as the SunCell® shown in FIGURES 2I10 to 2I103 comprises six fundamental low-maintenance systems, some having no moving parts and capable of operating for long duration: (i) a start-up inductively coupled heater comprising a power supply 5m, leads 5p, and antenna coils 5f and 5o to first melt silver or silver-copper alloy to comprise the molten metal or melt and optionally an electrode electromagnetic pump comprising magnets 8c to initially direct the ignition plasma stream; (ii) a fuel injector such as one comprising a hydrogen supply such as a hydrogen permeation supply through the blackbody radiator wherein the hydrogen may be derived from water by electrolysis, and an injection system comprising an electromagnetic pump 5k to inject molten silver or molten silver-copper alloy and a source of oxygen such as an oxide such as $LiVO_3$ or another oxide of the disclosure, and alternatively a gas injector 5z1 to inject at least one of water vapor and hydrogen gas; (iii) an ignition system to produce a low-voltage, high current flow across a pair of electrodes 8 into which the molten metal, hydrogen, and oxide, or molten metal and at least one of $H_2O$ and hydrogen gases are injected to form a brilliant light-emitting plasma; (iv) a blackbody radiator heated to incandescent temperature by the plasma; (v) a light to electricity converter 26a comprising so-called concentrator photovoltaic cells 15 that receive light from the blackbody radiator and operate at a high light intensity such as over one thousand Suns; and (vi) a fuel recovery and a thermal management system 31 that causes the molten metal to return to the injection system following ignition. In another, embodiment, the light from the ignition plasma may directly irradiate the PV converter 26a to be converted to electricity.

In an embodiment, the blackbody radiator to the PV converter 26a may comprise the cone 5b2 and the top cover 5b4. Both may comprise a high temperature material such as carbon, a refractory metal such as W, Re, or a ceramic such as borides, carbides, and nitrides of transition elements such as hafnium, zirconium, tantalum, and titanium, $Ta_4HfC_5$ (M.P. = 4000 °C), $TaB_2$, HfC, BN, $HfB_2$, HfN, ZrC, TaC, $ZrB_2$, TiC, TaN, NbC, $ThO_2$, oxides such as MgO, $MoSi_2$, W-Re-Hf-C alloys and others of the disclosure. The blackbody radiator may comprise a geometry that efficiently transfers light to the PV and optimizes the PV cell packing wherein the power for the light flows from the reaction cell chamber 5b31. The blackbody radiator may comprise a flat top cover or a semi-spherical dome top cover 5b4 as shown in FIGURES 2I10-2I43 and the cone 5b2 that may be conical. In this case, the cone 5b2 is also separated from the PV converter 26a by a gas or vacuum gap with PV cells position to receive blackbody light from the outer cone surface as well as the outer top cover surface. Alternatively, the blackbody radiator may be spherical. The generator may further comprise a peripheral chamber capable of being sealed to the atmosphere and further capable of maintaining at least one of a pressure less than, equal to, and greater than atmospheric. The generator may comprise a spherical pressure or vacuum vessel peripherally to the dome comprising the cell chamber 5b3. The cell chamber may be comprised of suitable materials known to one skilled in the art that provide structure strength, sealing, and heat transfer. In an exemplary embodiment, the cell chamber comprises at least one of stainless steel and copper. The PV cells may cover the inside of the cell chamber, and the PV cooling system such as the heat exchanger 87 may cover the outer surface of the cell chamber. In a thermophotovoltaic embodiment, the PV converter 26a may comprise a selective filter for visible wavelengths to the PV converter 26a such as a photonic crystal. The dome 5b4 may be joined to cone reservoir 5b by a joint 5b1. The joint may at least partially thermally insulate the dome from the cone reservoir 5b. The joint may comprise a thermally insulating gasket such as one comprising an insulator of the disclosure such as SiC.

In an embodiment, the blackbody radiator comprises a spherical dome 5b4 (also comprising the cone 5b2) that may be connected to the cone reservoir 5b. The connections may be joined by compression wherein the seals may comprise a gasket such as a carbon gasket such as a Graphoil gasket. In an embodiment, the inner surface of the graphite cone or sphere is coated with high-temperature-capable carbide such as $Ta_4Hfc_5$ (M.P. = 4000 °C), tungsten carbide, niobium carbide, tantalum carbide, zirconium carbide, titanium carbide, or hafnium carbide. The corresponding metal may be reacted with the carbon of the graphite surface to form a corresponding metal carbide surface. The dome 5b4 may be separated from the PV converter 26a by a gas or vacuum gap. In an embodiment to reduce the light intensity incident on the PV cells, the PV cells may be positioned further from the blackbody radiator. For example, the radius of the peripheral spherical chamber may be increased to decrease the intensity of the light emitted from the inner spherical blackbody radiator wherein the PV cells are mounted on the inner surface of the peripheral spherical chamber. The PV converter may comprise a dense receiver array (DRA) comprised of a plurality of PV cells. The DRA may comprise a parquet shape. The individual PV cells may comprise at least one of triangles, pentagons, hexagons, and other polygons. The cells to form a dome or spherical shape may be organized in a geodesic pattern (FIGURES 2I35-2I43). In an exemplary embodiment of a secondary blackbody radiator that is operated at an elevated temperature such as 3500 K, the radiant emissivity is about 8.5 MW/m2 times the emissivity, which is greater than the maximum acceptable by the PV cells. In this case, the emissivity of a carbon dome 5b4 having an emissivity of about 1 may be decreased to about 0.35 by applying a tungsten carbide coat. In another embodiment, the PV cells such as those comprising an outer geodesic dome may be at least one of angled and comprise a reflective coating to reduce the light that is absorbed by the PV cells to a level that is within the intensity capacity of the PV cells. At least one PV circuit element such as at least one of the group of the PV cell electrodes, interconnections, and bus bars may comprise a material having a high emissivity such as a polished conductor such as polished aluminum, silver, gold, or copper. The PV circuit element may reflect radiation from the blackbody radiator 5b4 back to the blackbody radiator 5b4 such that the PV circuit element does not significantly contribute to shadowing PV power conversion loss.

In an embodiment, the dome 5b4 may comprise a plurality of sections that may be separable such as separable top and bottom hemispheres. The two hemispheres may join at a flange. The W done may be fabricated by techniques known in the art such as sintering W powder, spark plasma sintering, casting, and 3D printing by powder bed laser melting. The lower chamber 5b5 may join at the hemisphere flange. The cell chamber may attach to the lower chamber by a flange capable of at least one of vacuum, atmospheric pressure, and pressure above vacuum. The lower chamber may be sealed from at least one of the cell chamber and reaction cell chamber. Gas may permeate between the cell chamber and the reaction cell chamber. The gas exchange may balance the pressure in the two chambers. Gas such as at least one of hydrogen and a noble gas such as argon may be added to the cell chamber to supply gas to the cell reaction chamber by permeation or flow. The permeation and flow may be selective for the desired gas such as argon-$H_2$. The metal vapor such as silver metal vapor may be impermeable or be flow restricted such that it selectively remains only in the cell reaction chamber. The metal vapor pressure may be controlled by maintaining the cone reservoir at a temperature that condenses the metal vapor and maintains it vapor pressure at a desired level. The generator may be started with a gas pressure such as an argon-$H_2$ gas pressure below the operating pressure such as atmospheric such that excess pressure does not develop as the cell heats up and the gases expand. The gas pressure may be controlled with a controller such as a computer, pressure sensors, valves, flow meters, and a vacuum pump of the disclosure.

In an embodiment, the hydrino reaction is maintained by silver vapor that serves as the conductive matrix. At least one of continuous injection wherein at least a portion becomes vapor and direct boiling of the silver from the reservoir may provide the silver vapor. The electrodes may provide high current to the reaction to remove electrons and initiate the hydrino reaction. The heat from the hydrino reaction may assist in providing metal vapor such as silver metal vapor to the reaction cell chamber. In an embodiment, the current through the electrodes may be at least partially diverted to alternative or supplementary electrodes in contact with the plasma. The current diversion may occur after the pressure of the silver vapor becomes sufficiently high such that the silver vapor at least partially serves as the conductive matrix. The alternative or supplementary electrodes in contact with the plasma may comprise one or more center electrodes and counter electrodes about the perimeter of the reaction cell chamber. The cell wall may serve as an electrode.

In an embodiment, the silver vapor pressure is measured by the compression on a movable component of the cell. In an embodiment, the bus bars are held in place at the cell wall penetrations by compression wherein the displacement due to the silver pressure is recorded with a strain gauge. The cell may comprise a strain gauge to measure the outward compression force on the bus bars due to internal pressure as a means to measure the silver vapor pressure. In an embodiment, a movable or deformable component of the cell in contact with the reaction cell chamber may be mechanically linked to a strain gauge to measure the reaction cell chamber pressure. In an embodiment, the silver vapor pressure is measured from a cell component's temperature such as at least one of the reaction cell chamber 5b31 temperature and the dome 5b4 temperature wherein the cell component temperature may be determined from the blackbody radiation spectrum and the relationship between the component temperature and the silver vapor pressure may be known. In another embodiment, the silver vapor pressure may be measured by two electrodes in contract with the silver vapor capable of measuring the conductivity of the silver vapor and there from determine the silver vapor pressure from the determined relationship of the conductivity to pressure. The electrical connections for the pressure-sensing electrodes may be passed through conduits along the bus bars.

In an embodiment, the at least at portion of the PV converter such as at least one hemisphere of the geodesic PV converter is enclosed in an outer chamber capable of at least one of a pressure less than, equal to, or greater than atmospheric. In an embodiment, the lower chamber 5b5 may join to at least one of the geodesic PV converter and the dome at a separable flange. The bottom hemisphere may comprise a neck at the bottom. The reservoir 5c may attach to the neck. The attachment may comprise threads. The neck may connect to a reservoir of a desired size and shape to at least one of accommodate a desired volume of melt, facilitate heating during startup up, and facilitate a desired rate of heater transfer during operation. At least one of the bus bars 9 and 10 and the electrodes 8 may penetrate the neck such as the cone reservoir 5b or reservoir 5c (FIGURES 38-43). In an embodiment, the bus bars and electrodes may be parallel, and neck width may be minimized such that the distance from at least one magnet placed outside of the wall of the neck to the point of ignition and current is minimized. The minimized distance may optimize the magnetic field strength at the point of ignition to optimize the performance of the electrode EM pump.

The neck penetrations may comprise electrical feed throughs. The feed-throughs 10a may comprise an insulating layer on the electrodes that tightly penetrate the wall such as the reservoir wall. The layer may comprise a tungsten oxide layer on tungsten electrodes. The feed-throughs may comprise a coating of a high-temperature insulating material such as a ceramic such as Mullite or SiC on the electrodes. In an embodiment, the ignition component such as the bus bars or electrodes may be electroplated with a material such as a metal that may be oxidized to form an insulating layer. The metal may comprise aluminum that may be oxidized by anodization. In an exemplary embodiment, aluminum is electroplated on to at least one of the bus bars and electrodes and anodize it to make the aluminum layer nonconductive aluminum oxide. The perforations in the reservoir wall may be made to form a tight fit for the penetrating component such as one of the bus bars and electrodes at the position of the non-conducting section.

In an embodiment, the bus bars may comprise and elbow at the electrode end to raise the attached electrodes closer to the dome or cone. In an embodiment, the electrodes comprise cams to raise the ignition point higher in the reaction cell chamber 5b31. The cam electrodes may attach to the bus bars by a fastener such as threads, screws, or welds. Rotation of the bus bar with attached cam electrodes may cause the electrode gap 8g to change. The neck may further comprise at least one penetration for a magnet of an electrode electromagnetic pump. In an embodiment, the magnets of the electromagnetic pump such as the electrode electromagnetic pump comprise electromagnets that further comprise a ferromagnetic core such as an iron or cobalt core. The magnet field may be coaxial with the electrodes.

The bus bars and electrodes may be angled relative to each other to accommodate the magnet 8c (FIGURES 41-43). The current for the electromagnet 8c may be provided by at least one of the source of electrical power to the electrodes 2 and an alternative power supply. In the former case, the current to the electromagnet may be parallel to the ignition current. The ferromagnetic core may be in close proximity to the electrodes and may be further cooled. In another embodiment, the bus bars 9 and 10 and attached electrodes 8 may have any desired orientation relative to each other. The orientation may facilitate the placement of electrode magnets 8c close to the point of ignition to optimize the magnetic field strength at the position of the crossed magnetic field and current and thereby maximize the Lorentz force of the EM pump. In an exemplary embodiment shown in FIGURES 2I44-2I47, at least one of the bus bars and electrodes may be oriented about 180° relative to each other. The electrodes ends may form the gap 8g, or the electrodes may overlap side-to-side to form the gap 8g. The feed-throughs for at least one of the bus bars and electrodes may be on opposed walls of the neck. The feed-through may comprise a refractory insulator of the disclosure such as ceramic plates comprising slots through which the electrodes penetrate. The magnets may be placed transverse to the inter-electrode axis. Inserting or withdrawing each bus bar-electrode set relative to the other of a pair of bus bar-electrode sets may adjust the inter-electrode gap 8g. The source of magnetic field for the electrode EM pump may comprise at least one of permanent magnets, electromagnets, and yokes. The electrodes may be positioned at the top of the cone reservoir 5b at level of the perimeter of the dome 5b4 such that the emitted light enters the dome as shown in FIGURES 2I48-2I54. Each electrode 8 may comprise an extension from the bus bar 9 or 10 to position the ignition point at the level of the entrance of the dome. An exemplary extension may comprise an L-shaped electrode such as shown in FIGURES 2I48-2I54. In an embodiment, the magnets may be cooled by electrode electromagnetic pump cooling lines 8c2 (FIGURE 2I54) that may circulate coolant between the magnets 8c and a chiller such as radiator 31. In an embodiment, the magnets may be cooled by a heat sink such as the PV converter heat exchanger 87. A cold plate of the PV heat exchanger may contact each magnet to cool it. Each magnet 8c may comprise an extension from a larger body such as a horseshoe shape extending from the body of the magnet located lower in the lower chamber 5b5. Or the magnet may be located between the dome and the enclosure of the cell chamber 5b3. The dome may comprise indentations to accommodate the magnets. In another embodiment, the ejected ignition product may be at least partially contained to a reaction cell chamber region near the ignition site by at least one a baffle 8d such as refractory one such as a W baffle. In an embodiment, the electrode electromagnetic pump, pumps the molten metal such as silver upward from the nozzle injection to increase the flow rate and prevent backpressure or backflow of the injected stream. The upward flow of material that does not form plasma may impact the top of the reaction cell chamber or a lower baffle 8d to cause the melt to return to the reservoir 5c. In an embodiment, the ignition circuit may comprise at least one reactive circuit element such as at least one of capacitors and inductors to comprise a reactive circuit. The melt between the electrodes may serve as a resistive load. The reactance may be selected to maintain a desired ignition frequency such as one in the range of about one to 10,000 Hz. The ignition circuit may comprise an LRC circuit. The source of electrical power 2 may comprise at least one of capacitors and inductors. The ignition circuit may comprise a transformer. The transformer may output high current. The generator may comprise an inverter that receives DC power from the PV converter and outputs AC. The generator may comprise DC to DC voltage and current conditioners to change the voltage and current from the PV converter that may be input to the inverter. The AC input to the transformer may be from the inverter. The inverter may operate at a desired frequency such as one in the range of about one to 10,000 Hz. In an embodiment, the PV converter 26a outputs DC power that may feed directly into the inverter or may be conditioned before being input to the inverter. The inverted power such as 60 Hz AC may directly power the electrodes or may be input to a transformer to increase the current. In an embodiment, the source of electrical power 2 provides continuous DC or AC current to the electrodes. The electrodes and electromagnetic pump may support continuous ignition of the injected melt such as molten Ag comprising a source of oxygen.

The electrodes such as the L-shaped electrodes may have any suitable shape such as bars or rods or may be attached to bar or rod feed-throughs. In an embodiment, a rod bus bar or electrodes penetrates the cell component such as the reservoir or cone reservoir. The penetration may be electrically insulated. The insulation may comprise a ceramic collar such as an MgO, Mullite, zirconia oxide, silicon carbide, or alumina collar. The collar may be pressed fit into the cell component. The press fitting may be achieved by heating and expanding the component, inserting the bus bar or electrode having the covering collar, and allowing the component to cool to cause a tight fit. The collar may be sealed to at least one of the bus bar or electrode and cell component by at least one O-ring such as a metal O-ring such as a refractory metal O-ring. The penetration may comprise a conduit with the O-ring seal between the inner wall of the conduit and the outer surface of the collar. An O-ring may also seal the bus bar or electrode-collar union. The bus bar may comprise a rod wherein an electrode such as a tungsten electrode may be attached. The electrode may comprise a rod section and a flat section. The rod section may be abutted to the rod bus bar. The terminal portion of the rod bus may be cut away to from a mount for the corresponding electrode. The rod electrode may have the terminal portion cutaway to form a flat face. The bus bars and electrodes may be oriented on opposite sides of the cell such as on opposite sides of the cone reservoir. The flat portion of each electrode may be at the end opposite the connection to the bus bar. At least a portion of the flat section of each electrode may overlap in a side-by-side orientation. The electrodes may vibrate during operation at a frequency such as one in the range of about 1 Hz to 10,000 Hz. The frequency may be a natural frequency maintained by the pressure of the reaction and the mass and spring constant of the electrode system, or the vibration may be externally driven at the frequency. The mechanical vibration frequency may cause the ignition of the injected molten metal and hydrino reactants at the frequency.

Load following may be achieved by means of the disclosure. In an embodiment, the top cover or dome 5b4 comprising a blackbody radiator to the PV converter 26a may radiate away its stored energy very quickly when the power from the reaction cell chamber 5b31 is adjusted downward. In an embodiment, the radiator behaves as an incandescent filament having a similar light cessation time with interruption of power flow from the reaction cell chamber 5b31 to the radiator 5b4. In another embodiment, electrical load following may be achieved by operating the radiator at about a constant power flow corresponding to about a constant operating temperature wherein unwanted power to the load is dissipated or dumped into a resistive element such as a resistor such as a SiC resistor or other heating elements of the disclosure.

In an embodiment, the generator may comprise a smart control system that intelligently activates and deactivates loads of a plurality of loads to control the peak aggregate load. The generator may comprise a plurality of generators that may be ganged for at least one of reliability and providing peak power. At least one of smart metering and control may be achieved by telemetry such as by using a cell phone or personal computer with WiFi.

In an embodiment, the carbide coating may be applied by methods known in the art such as vapor deposition or chemical deposition. In an exemplary embodiment, carbonyl decomposition serves as the means to at least one of metal and metal carbide coat the carbon cone or dome. $W(CO)_6$ decomposes to W at 170 °C when used as a means to form tungsten or tungsten carbide by chemical deposition.

In an embodiment, the blackbody light from the dome or top cover 5b4 is randomly directed. The light may be at least one of reflected, absorbed, and reradiated back and forth between the radiator dome 5b4 and PV cells 15. The PV cells may be optimally angled to achieve the desired PV absorption and light to electricity conversion. The reflectivity of the PV cover glass may be varied as a function of position. The variation of reflectivity may be achieved with a PV window of spatially variable reflectivity. The variability may be achieved with a coating. An exemplary coating is a $MgF_2$-ZnS anti-reflective coating. The PV cells may be geometrically arranged to achieve the desired PV cell absorption and refection involving power flow interactions between at least two of the dome and the PV cells, between a plurality of PV cells, and between a plurality of PV cells and the dome. In an embodiment, the PC cells may be arranged into a surface that has a variable radius as a function of surface angle such as a puckered surface such as puckered geodesic dome. In an embodiment, the top cover or dome 5b4 may have elements at angles relative to each other to at least one of directionally emit, absorb, and reflect radiation to or from the PV cells. In an embodiment, the dome or top cover may comprise element emitter plates on the blackbody radiator surface to match the PV orientation to achieve a desired transfer of power to the PV cells. At least one of the blackbody radiator, reflector, or absorber surfaces may have at least one of an emissivity, reflectivity, absorption coefficient, and surface area that is selected to achieve the desired power flow to the PV converter involving the radiator and the PV cells. The power flow may involve radiation bouncing between the PV cells and the dome. In an embodiment, at least one of the emissivity and surface area of the inner versus outer surface of the blackbody radiator dome or top cover 5b4 are selected to achieve a desired power flow to the PV cells versus power flow back into the reaction cell chamber 5b31. In an embodiment, the hydrino-process-emitted light has shorter wavelengths than the blackbody radiation of the dome or top cover. The inner surface of the dome or top cover may absorb and thermalize the high-energy light. The inner surface of the dome or top cover 5b4 may comprise at least one of a relatively low emissivity and surface area compared to the outer surface such that the blackbody radiation primarily flows to the PV cells from the outer surface rather than flow from the inner surface into the reaction cell chamber 5b31.

In an embodiment, the generator may be operated under conditions wherein the vapor pressure of the metal vapor is low and the top cover 5b4 is at least partially directly irradiated by the ignition plasma light such as UV and EUV light. At least a portion of the primary electrode emission and secondary emission of the top cover may be reflected to the top cover by a cone of suitable geometry and emissivity. The inner surface of the top cover 5b4 may have a high emissivity; whereas, the cone may comprise a low emissivity to preferentially heat the top cover 5b4 to a higher temperature than the cone. With a differential in cone-top cover temperature, the cone may comprise a material with a lower melting point than the material of the top cover. In an embodiment, the light from the hydrino reaction irradiates the top cover directly to selectively heat it to serve as a blackbody radiator to the PV converter 26a. Internal emission from the blackbody radiator 5b4 may be reflected form the cell components such as the cone 5b2 to the top cover 5b4. The cell components such as the cone may be in a geometric form to facilitate the reflection to the to the cover blackbody radiator 5b4.

In an embodiment, the high-energy light such as at least one of UV and EUV may dissociate at least one of $H_2O$ and $H_2$ in the reaction cell chamber 5b31 to increase the rate of the hydrino reaction. The dissociation may be an alternative to the effect of thermolysis. In an embodiment, the temperature is maintained low to avoid vaporization of the molten metal such as silver. In an embodiment, the electrodes are cooled to lower the amount of silver vaporization. In this case, the metal vapor condensation in the cone reservoir may be lowered to decrease that heat loss and thermal cooling load. In an embodiment, the electrodes may be maintained at a lower temperature while decreasing the ignition power by reducing the electrode resistance. The electrode resistance may be lowered by at least one of welding, alloying, forming a mixture, fusing, and tightly fastening the bus bar metal to the electrode metal. In an exemplary embodiment, the attachment comprises as at least one of a Mo-Cu or W-Cu alloy, mixture, or weld. In an embodiment, UV dissociation may serve as a means to produce the gas or plasma phase hydrino reaction. In this case, the vaporization of molten metal such as silver may be minimized. The vaporization may be suppressed by cooling the electrodes. Decreasing the electrode resistance may also lower the electrode temperature. The lower resistance may lower the ignition power and serve to lower the electrode resistive heating. Fusing the metals of the bus bars and the electrodes where they connect may lower the electrode resistance. In an embodiment, the electrical resistance of the ignition circuit may be lowered. The resistance for fast electrical transients such as occurs during pulsing may be lowered by using cable connections from the source of electrical power 2 to the bus bars 9 and 10 such as braided cables, such as Litz cables. In an embodiment, the electrode assembly comprises outer electrode in contact with an inner bus bar. The bus bars may be cooled. The contact of the electrode with the bus bar may cool at least a portion of the electrode. The bus bar contact of the electrode along its entire length may cool the entire electrode. Each electrode may comprise a tube that is concentric to its bus bar that may be cooled. The outer electrode tube may comprise a refractory metal such as W, Ta, or Mo. The bus bar may comprise a high conductor such as copper. The outer electrode tube may comprise a desired shape such as one of circular tubular, square tubular, rectangular tubular, and triangular tubular. The inner bus bar may have the same shape. The bus bar may comprise a centerline inlet coolant tube with a concentric outer channel for coolant return flow. The coolant may comprise water. The water may be cooled with a chiller such as a radiator.

In an embodiment, the concentric tube such as a W tube may comprise a semicircle to minimize the surface area for molten, metal solidification and adherence. In an embodiment, the bus bar and the electrical connection to the electrode such as the concentric tubes may be cooled only to the bus bar attachment end. The electrodes may be solid to improve the conductivity at a higher operating temperature. The operating temperature may be greater than the melting point of the melt such as silver melt. In an embodiment, the bus bars are cooled to just before the W tube electrode. In an exemplary embodiment, the electrode comprises a tip on the end of the bus bar comprising a W rod electrode with a larger cross section than a concentric tube in order to lower the resistance due to the higher operating temperature. In an embodiment, the cooled bus bars are covered with a shield to prevent the metal melt from adhering. The shield may comprise a material to which the metal does not adhere such as graphite. The shield may have a gap between it and the cooled bus bar and may be maintained at a temperature above the melting point of the metal melt to prevent the molten metal from adhering. In an embodiment the electrodes may penetrate the cone reservoir 5b such that only the electrodes are exposed to the molten metal to avoid the melt from adhering to the cooled bus bars to which the electrodes are attached.

In another embodiment, the generator is operated to maintain a high metal vapor pressure in the reaction cell chamber 5b31. The high metal vapor pressure may at least one of create an optically thick plasma to convert the UV and EUV emission from the hydrino reaction into blackbody radiation and serve as a reactant such as a conductive matrix for the hydrino reaction to increase its rate of reaction. The hydrino reaction may propagate in the reaction cell chamber supported by thermolysis of water. At least one of the metal vapor and blackbody temperatures may be high such as in the range of 1000K to 10,000K to support the thermolysis of water to increase the hydrino reaction rate. The hydrino reaction may occur in at least one of the gas phase and plasma phase. The metal may be injected into the electrodes by the electromagnetic pump and vaporized by at least one of the ignition current and heat from the hydrino reaction. The reaction conditions, current, and electrode spacing may be adjusted to achieve the desired metal vapor pressure. In an embodiment, the electrodes are mechanically agitated such as vibrated to aerosolize the metal vapor. The mechanical agitation may comprise a means of the disclosure such as a piezoelectric, pneumatic, or electromagnetic vibrator for aerosolizing metal such as silver. The electrode electromagnetic pump may also be oriented to pump the super heated metal vapor formed in the ignition from the electrode gap into the reaction cell chamber to increase the metal vapor pressure. In an embodiment, the injection system further comprises a manipulator of the nozzle to adjust its position relative to the electrodes. The manipulator may comprise at least one of a servomotor, mechanical such as a screw mechanism, electromagnetic, pneumatic and other manipulators known to those skilled in the art. The screw mechanism may compare two threaded bolts that are 180° relative to each other, screwed into the circular perimeter of the reservoir and contacting the nozzle on opposite sides wherein the opposite rotation of one bolts relative to the other moves the nozzle by deflecting it.

The operation of the generator at a temperature over the boiling point of metal source of the metal vapor may result in a reaction cell chamber pressure that is greater than atmospheric. At operating temperatures over the corresponding metal boiling point, at least one of metal vapor leakage from the seals of the cell such as the seals at the top cover and cone joint, and structural failure of a cell component such as the cone may be avoided by controlling the pressure of the metal vapor in the reaction cell chamber. The metal vapor pressure may be controlled by at least one of the controlling the amount of metal vapor supplied to the chamber by the electromagnetic (EM) pump and by controlling the temperature of a cell component such as the cell reservoir. The EM pump may be controlled to stop the pumping when the desired metal vapor pressure is achieved. In an embodiment, the condensation of the metal vapor is reduced or minimized to avoid excessive heat transfer to a cell component other than the blackbody radiator to the PV converter 26a such as the top cover 5b4. The active cooling may be applied to control the temperature of the cell component. The cooling may be achieved by water-cooling. In an example, water-cooling may be achieved with the inductively coupled heater coil. Alternatively, the pressure of the cell chamber may be matched to that of the reaction cell chamber such that there is an absence of a pressure gradient across chambers. The chamber pressures may be equalized or equilibrated by adding gas such as a noble gas to the cell chamber from a gas supply controlled by a valve, regulator, controller, and pressure sensor. In an embodiment, at least one of the cell component joints, at least one cell component such as the cone 5b2, and a valve are permeable or leaky to gas between the cell chamber 5b3 and the reaction cell chamber 5b31. The chamber gas, but not the metal vapor, may move and equilibrate the pressure of the two chambers. Both chambers may be pressurized with a gas such as a noble gas to an elevated pressure. The pressure may be higher than the highest operating partial pressure of the metal vapor. The highest metal vapor partial pressure may correspond to the highest operating temperature. During operation, the metal vapor pressure may increase the reaction cell pressure such that the gas selectively flows from the reaction cell chamber 5b3 to the cell chamber 5b31 until the pressures equilibrate and vice versa. In an embodiment, the gas pressures between the two chambers automatically equilibrate. The equilibration may be achieved by the selective mobility of the gas between chambers. In an embodiment, excursions in pressure are avoided so that large pressure differentials are avoided.

The pressure in the cell chamber may be maintained greater that that in the reaction cell chamber. The greater pressure in the external cell chamber may serve to mechanically hold the cell components such as the top cover, cone, and cone reservoir together.

In an embodiment, the metal vapor is maintained at a steady state pressure wherein condensation of the vapor is minimized. The electromagnetic pump may be stopped at a desired metal vapor pressure. The EM pump may be intermittently activated to pump to maintain the desired steady state pressure. The metal vapor pressure may be maintained in the at least one range of 0.01 Torr to 200 atm, 0.1 Torr to 100 atm, and 1 Torr to 50 atm.

In an embodiment to achieve a high hydrino power, the electrode electromagnetic pumping action is controlled to control the ignition current parameters such as waveform, peak current, peak voltage, constant current, and constant voltage. In an embodiment, the waveform may be any desired that optimizes the desire power output and efficiency. The waveform maybe constant current, constant voltage, constant power, saw tooth, square wave, sinusoidal, trapezoid, triangular, ramp up with cutoff, ramp up-ramp down, and other waveforms know in the art. In cases wherein the waveform has a portion having about zero voltage or current, the duty cycle may be in the range of about 1% to 99%. The frequency may be any desired such as in at least one range of about 0.001 Hz to 1 MHz, 0.01 Hz to 100 kHz, and 0.1 Hz to 10 kHz. The peak current of the waveform may be in at least one range of about 10 A to 1 MA, 100 A to 100 kA, and 1 kA to 20 kA. The voltage may be given by the product of the resistance and current. In an exemplary embodiment, the waveform is a saw tooth with a frequency between 1 and 2 Hz, a peak current between 2 kA and 3 kA, and a voltage given by the product of the current and the resistance of the injected molten metal at the electrodes wherein the voltage during the open circuit condition following ignition and ejection of the molten metal as plasma may be higher such as in the range of about 2 V to 15 V. An alternative exemplary waveform may comprise an alteration between a saw tooth and high frequency current pulses such as a 1 Hz to 2 Hz saw tooth and 0.1 kHz to 2 kHz pulses wherein the saw tooth to pulses duty cycle is about 20% to 60%. In an embodiment, power is applied to the ignition system intermittently wherein the off period permits the electrodes to cool. The off period of the duty cycle may be adjusted to any desirable to optimize the reaction and performance of the generator. In an embodiment, the source of electrical power 2, may comprise a capacitor bank. In an embodiment, the capacitor current is ramped from a lower to higher current to power a continuous current and ignition mode. The current ramp may sustain a constant current over a pulsed current mode to eliminate reactive voltage spikes of the pulsed mode. In an embodiment, the source of electrical power 2 such as the capacitor bank may be cooled. The cooling system may comprise one of the disclosure such as a radiator.

In an embodiment, the source of electrical power 2 comprises a capacitor bank with different numbers of series and parallel capacitors to provide the optimal electrode voltage and current. The PV converter may charge the capacitor bank to the desired optimal voltage and maintain the optimal current. The ignition voltage may be increased by increasing the resistance across the electrodes. The electrode resistance may be increased by operating the electrodes at a more elevated temperature such as in the temperature range of about 1000K to 3700K. The electrode temperature may be controlled to maintain a desired temperature by controlling the ignition process and the electrode cooling. The voltage may be in at least one range of about 1 V to 500 V, 1 V to 100 V, 1 V to 50 V, and 1 V to 20 V. The current may be in at least one range of about 10 A to 100 kA, 100 A to 10 kA, and 100 A to 5 kA. In an exemplary embodiment, the voltage is about 16 V at a constant current between 150 A and 250 A. In an embodiment, the power due to the hydrino reaction is higher at the positive electrode due to a higher hydrino reaction rate. The higher rate may be due to the more effective removal of electrons from the reaction plasma by the positive electrode. In an embodiment, the hydrino reaction is dependent on the removal of electrons that is favored at higher applied electrode voltage. The removal of electrons may also be enhanced by grounding the cell components in contact with the reaction plasma. The generator may comprise additional grounded or positively biased electrodes. The capacitor may be contained in a capacitor housing 90 (FIGURE 2I66).

In an embodiment, an elevated electrode temperature is maintained to vaporize the injected molten metal such as molten silver. The electrode temperature may be in a temperature range that is above the vaporization temperature of the injected molten metal and below the melting point of the electrodes. The electrode temperature may be above the temperature of the vaporization of the melt by at least one range of about 10 °C to 1000 °C, 10 °C to 700 °C, and 10 °C to 500 °C. The electrode temperature may be below the temperature of the melting point of the electrodes by at least one range of about 10 °C to 1000 °C, 10 °C to 700 °C, and 10 °C to 500 °C. The electrode temperature may be maintained by the electrode cooling system of the disclosure such as the bus bar water-cooling system to which the electrodes may be heat sunk. The electrodes may be center cooled by a coolant such as water. The vaporization of the melt such as silver may increase the electrode voltage drop. The voltage may be elevated such as in at least one range of about 1 V to 100 V, 1 V to 50 V, and 1 V to 25 V. The current may be pulsed or continuous. The current may in at least one range of about 50 A to 100 kA, 100 A to 10 kA, and 300 A to 5 kA. The vaporized melt may provide a conductive path to remove electrons from the hydrino catalysis reaction to increase the reaction rate. In an exemplary embodiment, the silver vapor pressure is elevated such as in the range of about 0.5 atm to 100 atm due to vaporization at tungsten electrodes in the temperature range of about 2162 °C to 3422 °C, the voltage may be about 10 V to 16 V, and the current may be continuous at about 200 A to 500 A. Some current pulses may be superimposed on the continuous current.

As shown in FIGURE 2I72, the electrode assembly may comprise an inner cannula 91a for inlet coolant flow wherein the coolant may comprise water, an electrode coolant inlet 91b, an electrode coolant outlet 91c, bus bars 9 and 10, bus bar connectors 9a to the source of electrical power 2, electrode feed throughs 10a of the pressure chamber, a dual threaded electrode to bus bar connector 91c, a set of threaded electrodes 8 that may each thread into the reservoir 5c, and a locking O-ring 8a and lock nut 8a1 to tighten each electrode on the outside of the reservoir wall.

In an embodiment, the ignition system comprises a source of electrical power 2 across the electrodes 8 and a source of electrical power 2 through the ignited plasma. The ignition system may comprise a plurality of sources of electrical power 2 of independent voltages and currents such as those voltage and current ranges given in the disclosure. The source of electrical power 2 may provide power to the electrodes and plasma in at least one of series and parallel. A single source of electrical power 2 may ramp current through the injected melt with a corresponding voltage ramp to a voltage that causes breakdown of the injected melt to form plasma. The source of electrical power 2 may then output an increased voltage to cause current to flow through both the injected melt and the plasma. The current may flow through multiple paths such as between the electrodes and between at least one additional electrode in contact with the plasma. The at least one addition electrode may be in the reaction chamber at a desired distance from the electrodes 8 such as in the range of 0.001 m to 1 m. The distance may be such that the voltage is in the range of about 0.1 V to 1000 kV and the corresponding current is in the range of about 100 A to 10,000 A.

In an embodiment, the voltage applied by at least one source of electrical power is high relative to the voltage given by the current times the typical resistance of the injected melt such as molten silver. In an embodiment, the resistance of the melt is in a range of about 100 micro-ohms to 600 micro-ohms. In an embodiment, the high voltage disrupts the injection of the melt by the EM pump to increase the resistance. The impedance may be increased. The injection may be disrupted by the pressure from the ignition plasma. The high voltage may increase the hydrino reaction rate. The hydrino reaction rate may be increased by creating a higher concentration of at least one of the HOH catalyst and atomic H. An exemplary voltage is about 16 V, and exemplary corresponding current is about 1 kA.

In an embodiment, at least one cell component such as the grounded electrode and a cell component such as the reservoir 5c, the cone reservoir 5b, and the dome 5b4 may be electrically grounded.

In an embodiment, the SunCell may comprise liquid electrodes. The electrodes may comprise liquid metal. The liquid metal may comprise the molten metal of the fuel. The injection system may comprise at least two reservoirs 5c and at least two electromagnetic pumps that may be substantially electrically isolated from each other. The nozzles 5q of each of the plurality of injections system may be oriented to cause the plurality of molten metal streams to intersect. Each stream may have a connection to a terminal of a source of electricity 2 to provide voltage and current to the intersecting streams. The current may flow from one nozzle 5q through its molten metal stream to the other stream and nozzle 5q and back to the corresponding terminal of the source of electricity 2. The cell comprises a molten metal return system to facilitate the return on the injected molten metal to the plurality of reservoirs. In an embodiment, the molten metal return system minimizes the shorting of at least one of the ignition current and the injection current through the molten metal. The reaction cell chamber 5b31 may comprise a floor that directs the return flow of the injected molten metal into the separate reservoirs 5c such that the silver is substantially isolated in the separate reservoirs 5c to minimize the electrical shortage through silver connecting the reservoirs. The resistance for electrical conduction may be substantially higher through the return flow of silver between reservoirs than through the intersecting silver such that the majority of the current flows through the intersecting streams. The cell may comprise a reservoir electrical isolator or separator that may comprise an electrical insulator such as a ceramic or a refractory material of low conductivity such as graphite.

The hydrino reaction may cause the production of a high concentration of electrons that may slow further hydrino production and thereby inhibit the hydrino reaction rate. A current at the ignition electrodes 8 may remove the electrons. In an embodiment, a solid electrode such as a solid refractory metal electrode is prone to melting when it is the positive electrode or anode due to the preference of electrons to be removed at the anode causing a high hydrino reaction rate and local heating. In an embodiment, the electrodes comprise a hybrid of liquid and solid electrodes. The anode may comprise a liquid metal electrode and the cathode may comprise a solid electrode such as a W electrode and vice versa. The liquid metal anode may comprise at least one EM pump and nozzle wherein the liquid metal is injected to make contact with the cathode to complete the ignition electrical circuit.

The molten metal pumping may be adjusted to achieve ignition current pulsing. The adjustment may comprise at least one of a time varying pump pressure and rate. The pulsing may be maintained superimposed on a continuous current. The current pulsing may be maintained in at least one case that the plasma emission is blackbody emission in the visible and UV region and the plasma emission is UV and EUV emission. In an embodiment, the electrode EM pump pumps excess molten metal from the electrode gap to intermittently create an open circuit. The open circuit may be achieved following an ignition event to intermittently create an open circuit with each current pulse from ignition. In an embodiment to improve the electrical power balance, the magnets of the electrode electromagnetic pump 8c and the current flow corresponding to the pumped ignition products form a crossed current and magnetic field wherein the current experiences a Lorentz force along the inter-electrode axis. The Lorentz force on the current generates a voltage across the electrodes. The voltage may cause current flow through the ignition circuit to recharge the source of electrical power 2 such as the capacitors. The ignition system may comprise a magnetohydrodynamic (MHD) generator comprising the electrode electromagnetic pump magnets, the moving ignition products, and the ignition electrodes 8. The MHD electrical power may recharge the source of electrical power 2 such as the bank of capacitors.

In an embodiment, the ignition power is terminated when the hydrino reaction propagates in the absence of electrical power input. The hydrino reaction may propagate in the reaction cell chamber supported by thermolysis of water. The ignition-power independent reaction may be self propagates under suitable reaction conditions. The reaction conditions may comprise at least one of an elevated temperature and suitable reactant concentrations. At least one of the hydrino reaction conditions and current may be controlled to achieve a high temperature on at least a potion of the electrodes to achieve thermolysis. At least one of the reaction temperature and the temperature of a portion of the electrodes may be high such as in at least one range of about 1000 °C to 20,000 °C, 1000 °C to 15,000 °C, and 1000 °C to 10,000 °C. Suitable reaction concentrations may comprise a water vapor pressure in at least one range of about 0.1 Torr to 10,000 Torr, 0.2 Torr to 1000 Torr, 0.5 Torr to 100 Torr, and 0.5 Torr to 10 Torr. Suitable reaction concentrations may comprise a hydrogen pressure in at least one range of about 0.1 Torr to 10,000 Torr, 0.2 Torr to 1000 Torr, 0.5 Torr to 100 Torr, and 0.5 Torr to 10 Torr. Suitable reaction concentrations may comprise a metal vapor pressure in at least one range of about 1 Torr to 100,000 Torr, 10 Torr to 10,000 Torr, and 1 Torr to 760 Torr. The reaction cell chamber may be maintained at a temperature that maintains a metal vapor pressure that optimizes the hydrino reaction rate.

In an embodiment, solid fuels propagate the hydrino reaction. HOH catalyst and H may be formed in a reaction of the reactants of the solid fuel. The heat from the reaction may be sufficient to create H by thermolysis. Exemplary solid fuels comprise Ag + CuO + A1 + ice, Cu + CuO + A1 + ice, tungsten oxide + A1 + ice, tungsten hydroxide + A1 + ice, tungsten hydroxide + Al, hydrated tungsten oxide + A1 + ice, and hydrated tungsten oxide + Al.

In an embodiment, the source of HOH catalyst and source of H comprises water that is injected into the electrodes. At least one of the bus bars and electrodes may comprise a water injector. The water injection may be through the water-cooled bus bars that may be extended to the electrodes. The injector may comprise a cannula. The water may be directly injected into the molten metal stream form the EM pump using a fine cannula that limits the flow to control the amount of water vapor delivered to molten metal flow. The cannula may be water-cooled. The water-cooling may be achieved by heat sinking the cannula to a water-cooled cell component. The cannula may be water-cooled by being heat sunk to the water-cooled bus bars. Alternatively, at least one of the bus bars and electrodes may comprise a small cannula extension from the water-cooling system to inject water. In an embodiment, silver is prevented from solidifying on the end of the cannula. The cannula may be at a distance from the ignition plasma and inject at high pressure across the plasma region. In an embodiment, the electrode electromagnetic pump may clear the excess molten metal from the cannula region to prevent the metal from solidifying on the cannula. The cannula may be inserted into at least one of the ignition plasma and the molten metal such as molten silver. The cannula may enter the pump tube. The cannula may penetrate the pump tube. The cannula may enter the pump tube through the pump tube inlet through a suitable path such as through the reservoir. The cannula may be under steam pressure to prevent silver from entering. Alternatively, the cannula may comprise an electromagnetic pump. In an embodiment, the steam injection may pump the molten metal such as the molten silver or AgCu alloy. The steam may be delivered using a carrier gas such as a noble gas such as argon. The carrier gas may flow through a steam source such as a blubber or steam generator. The carrier gas may be recirculated by a recirculator of the disclosure. The pressure and flow rate of the injected gas may be controlled with a controller of at least one of the rate of water injection and the pneumatic pumping rate of the molten metal. The partial pressure of the water vapor in the gas flow may be controlled by a means of the disclosure such as by the bubbler temperature controller of the disclosure.

In an embodiment, the injector comprises a mixer for the water injections into the molten metal. The mixer may be housed in at least one of the pump tube and a chamber of the pump tube. The mixer may comprise a source of turbulence in the pump tube. The melt may be at least one of mixed, stirred, and agitated as water is applied to increase at least one of the efficiency, rate, and extent of water incorporation into the melt. The water droplets in steam may be removed with a steam-water separator such as at least one of a cyclone or centrifugal separator, a mechanical coalescing separator, and a baffle or vane type separator. In an embodiment, the water vapor injector comprises a closed tube comprised of a reversible hydrating crystal such as bayerite or gibbsite tube that is permeable to water. In an embodiment, water is injected by flowing hydrogen over a recombiner comprising a source of oxygen such as CuO recombiner. The water vapor from the hydrogen combustion maybe flowed into the molten metal such as at the outlet or nozzle portion of the pump tube. The recombiner such as CuO may be regenerated by reaction with oxygen. The oxygen may be supplied from air.

In an embodiment, a compound may be added to the molten metal such as molten Ag or AgCu alloy to at least one of lower its melting point and viscosity. The compound may comprise a fluxing agent such as borax. In an embodiment, a solid fuel such as one of the disclosure may be added to the molten metal. In an embodiment, the molten metal such as molten silver, copper, or AgCu alloy comprise a composition of matter to bind or disperse water in the melt such as fluxing agent that may be hydrated such as borax that may be hydrated to various extents such as borax dehydrate, pentahydrate, and decahydrate. The melt may comprise a fluxing agent to remove oxide from the inside of the pump tube. The removal may maintain a good electrical contact between the molten metal and the pump tube 5k6 at region of the electromagnetic pump bus bar 5k2.

In an embodiment, a compound comprising a source of oxygen may be added to the molten metal such as molten silver, copper, or AgCu alloy. In an embodiment, the metal melt comprises a metal that does not adhere to cell components such as the cone reservoir and cone or dome. The metal may comprise an alloy such as Ag-Cu such as AgCu (28wt%) or Ag-Cu-Ni alloy. The compound may be melted at the operating temperature of the reservoir 5c and the electromagnetic pump such that it at least one of dissolves and mixes with the molten metal. The compound may at least one of dissolve and mixes in the molten metal at a temperature below its melting point. Exemplary compounds comprising a source of oxygen comprise oxides such as metal oxides or Group 13, 14, 15, 16, or 17 oxides. Exemplary metals of the metal oxide are at least one of metals having low water reactivity such as those of the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, and Zn. The corresponding oxide may react thermodynamically favorably with hydrogen to form HOH catalyst. Exemplary metal oxides and their corresponding melting points are sodium tetraborate decahydrate (M.P. = 743 °C, anhydrate), CuO (M.P. = 1326 °C), NiO (M.P. = 1955 °C), PbO (M.P. = 888 °C), $Sb_2O_3$ (M.P. = 656 °C), $Bi_2O_3$ (M.P. = 817 °C), $Co_2O_3$ (M.P. = 1900 °C), CdO (M.P. = 900-1000 °C), $GeO_2$ (M.P. = 1115 °C), $Fe_2O_3$ (M.P. = 1539-1565 °C), $MoO_3$ (M.P. = 795 °C), $TeO_2$ (M.P. = 732 °C), $SnO_2$ (M.P. = 1630 °C), $WO_3$ (M.P. = 1473 °C), $WO_2$ (M.P. = 1700 °C), ZnO (M.P. = 1975 °C), $TiO_2$ (M.P. = 1843 °C), $Al_2O_3$ (M.P. = 2072 °C), an alkaline earth oxide, a rare earth oxide, a transition metal oxide, an inner transition metal oxide, an alkali oxide such as $Li_2O$ (M.P. = 1438 °C), $Na_2O$ (M.P. = 1132 °C), $K_2O$ (M.P. = 740 °C), $Rb_2O$ (M.P. = >500 °C), $Cs_2O$ (M.P. = 490 °C), a boron oxide such as $B_2O_3$ (M.P. = 450 °C), $V_2O_5$ (M.P. = 690 °C), VO (M.P. = 1789 °C), $Nb_2O_5$ (M.P. = 1512 °C), $NbO_2$ (M.P. = 1915 °C), $SiO_2$ (M.P. = 1713 °C), $Ga_2O_3$ (M.P. = 1900 °C), $In_2O_5$ (M.P. = 1910 °C), $Li_2WO_4$ (M.P. = 740 °C), $Li_2B_4O_7$ (M.P. = 917 °C), $Na_2MoO_4$ (M.P. = 687 °C), $LiVO_3$ (M.P. = 605 °C), $Li_2VO_3$, $Mn_2O_5$ (M.P. = 1567 °C), and $Ag_2WO_4$ (M.P. = 620 °C). Further exemplary oxides comprise mixtures of oxides such as a mixture comprising at least two of an alkali oxide such as $Li_2O$ and $Na_2O$ and $Al_2O_3$, $B_2O_3$, and $VO_2$. The mixture may result in a more desirable physical property such as a lower melting point or higher boiling point. The oxide may be dried. In an exemplary embodiment of the source of oxygen such as $Bi_2O_3$ or, $Li_2WO_4$, the hydrogen reduction reaction of the source of oxygen is thermodynamically favorable, and the reaction of the reduction product with water to form the source of oxygen may occur under operating conditions such as at red heat conditions. In an exemplary embodiment, at red heat, bismuth reacts with water to form the trioxide bismuth(III) oxide $(2Bi(s) + 3H2O(g) \rightarrow Bi2O3(s) + 3H2(g))$. In an embodiment, the oxide is vaporized into the gas phase or plasma. The moles of oxide in the reaction cell chamber 5b31 may limit its vapor pressure. In an embodiment, the source of oxygen to form HOH catalyst may comprise multiple oxides. Each of a plurality of oxides may be volatile to serve as a source of HOH catalyst within certain temperature ranges. For example $LiVO_3$ may serve as the main oxygen source above its melting point and below the melting point of a second source of oxygen such as a second oxide. The second oxide may serve as an oxygen source at a higher temperature such as above its melting point. Exemplary second oxides are $Al_2O_3$, ZrO, MgO, alkaline earth oxides, and rare earth oxides. The oxide may be essentially all gaseous at the operating temperature such as 3000K. The pressure may be adjusted by the moles added to the reaction cell chamber 5b31. The ratio of the oxide and silver vapor pressures may be adjusted to optimize the hydrino reaction conditions and rate.

In an embodiment, the source of oxygen may comprise an inorganic compound such as CO, $CO_2$, $N_2O$, NO, $NO_2$, $N_2O_3$, $N_2O_4$, $N_2O_5$, SO, $SO_2$, $SO_3$, PO, $PO_2$, $P_2O_3$, $P_2O_5$. The source of oxygen such as $CO_2$ may be a gas at room temperature. The oxygen source such as a gas may be in the outer pressure vessel chamber Sb31a. The oxygen source may comprise a gas. The gas may diffuse or permeate from the outer pressure vessel chamber Sb31a to the reaction cell chamber 5b31. The oxygen source gas concentration inside of the reaction cell chamber 5b31 may be controlled by controlling its pressure in the outer pressure vessel chamber 5b31a. The oxygen source gas may be added to the reaction cell chamber as a gas inside of the reaction cell chamber by a supply line. The supply line may enter in a colder region such as in the EM pump tube at the bottom of a reservoir. The oxygen source gas may be supplied by the decomposition or vaporization of a solid or liquid such as frozen $CO_2$, a carbonate, or carbonic acid. The pressure in at least one of the outer pressure vessel chamber 5b31a and the reaction cell chamber 5b31 may be measured with a pressure gauge such as one of the disclosure. The gas pressure may be controlled with a controller and a gas source.

The source of oxygen may comprise a compound comprising an oxyanion. The compound may comprise a metal. The compound may be chosen from one of oxides, hydroxides, carbonate, hydrogen carbonate, sulfates, hydrogen sulfates, phosphates, hydrogen phosphates, dihydrogen phosphates, nitrates, nitrites, permanganates, chlorates, perchlorates, chlorites, perchlorites, hypochlorites, bromates, perbromates, bromites, perbromites, iodates, periodates, iodites, periodites, chromates, dichromates, tellurates, selenates, arsenates, silicates, borates, cobalt oxides, tellurium oxides, and other oxyanions such as those of halogens, P, B, Si, N, As, S, Te, Sb, C, S, P, Mn, Cr, Co, and Te wherein the metal may comprise one or more of an alkali, alkaline earth, transition, inner transition, or rare earth, Al, Ga, In, Ge, Sn, Pb, Sb, Bi, Se, and Te. The source of oxygen may comprise at least one of $MNO_3$, $MClO_4$, $MO_x$, $M_xO$, and $M_xO_y$ wherein M is a metal such as a transition metal, inner transition metal, rare earth metal, Sn, Ga, In, lead, germanium, alkali metal or alkaline earth metal and x and y are integers. The source of oxygen may comprise at least one of $SO_2$, $SO_3$, $S_2O_5Cl_2$, $F_5SOF$, $M_2S_2O_8$, $SO_xX_y$ such as $SOCl_2$, $SOF_2$, $SO_2F_2$, or $SOBr_2$, $X_xX'_yO_z$ wherein X and X' are halogen such as $ClO_2F$, $ClO_2F_2$, $ClOF_3$, $ClO_3F$, and $ClO_2F_3$, tellurium oxide such as $TeO_x$ such as $TeO_2$ or $TeO_3$, $Te(OH)_6$, $SeO_x$ such as $SeO_2$ or $SeO_3$, a selenium oxide such as $SeO_2$, $SeO_3$, $SeOBr_2$, $SeOCl_2$, $SeOF_2$, or $SeO_2F_2$, $P_2O_5$, $PO_xX_y$ wherein X is halogen such as $POBr_3$, $POI_3$, $POCl_3$ or $POF_3$, an arsenic oxide such as $As_2O_3$ or $As_2O_5$, an antimony oxide such as $Sb_2O_3$, $Sb_2O_4$, or $Sb_2O_5$, or SbOCl, $Sb_2(SO4)_3$, a bismuth oxide, another bismuth compound such as $BiAsO4$, $Bi(OH)_3$, $Bi_2O_3$, BiOBr, BiOCl, BiOI, $Bi_2O_4$, a metal oxide or hydroxide such as $Y_2O_3$, GeO, FeO, $Fe_2O_3$, or NbO, NiO, $Ni_2O_3$, SnO, $SnO_2$, $Ag_2O$, AgO, $Ga_2O$, $As_2O_3$, $SeO_2$, $TeO_2$, $In(OH)_3$, $Sn(OH)_2$, $In(OH)_3$, $Ga(OH)_3$, or $Bi(OH)_3$, $CO_2$, a permanganate such as $KMnO_4$ and $NaMnO_4$, $P_2O_5$, a nitrate such as $LiNO_3$, $NaNO_3$ and $KNO_3$, a transition metal oxide or hydroxide (Sc, Ti, V, Cr, Mn, Fe, Co, Ni, Cu, or Zn with at least one O and OH), an oxyhydroxide such as FeOOH, a second or third transition series oxide or hydroxide such as those of Y, Zr, Nb, Mo, Tc, Ag, Cd, Hf, Ta, W, Os, a noble metal oxide such as PdO or PtO, a metal and an oxyanion such as $Na_2TeO_4$ or $Na_2TeO_3$, CoO, a compound containing at least two atoms from the group of oxygen and different halogen atoms such as $F_2O$, $Cl_2O$, $ClO_2$, $Cl_2O_6$, $Cl_2O_7$, $ClOF_3$, $ClO_2F$, $ClO_2F_3$, $ClO_3F$, $I_2O_5$, a compound that can form a metal upon reduction. The source of oxygen may comprise a gas comprising oxygen such as at least one $O_2$, $N_2O$, and $NO_2$.

In an embodiment, the melt comprises at least one additive. The additive may comprise one of a source of oxygen and a source of hydrogen. The at least one of a source of oxygen and a source of hydrogen source may comprise one or more of the group of:

H2, NH3, MNH2, M2NH, MOH, MAlH4, M3AlH6, and MBH4, MH, MNO3, MNO, MNO2, M2NH, MNH2, NH3, MBH4, MAlH4, M3AlH6, MHS, M2CO3, MHCO3, M2SO4, MHSO4, M3PO4, M2HPO4, MH2PO4, M2MoO4, M2MoO3, MNbO3, M2B4O7, MBO2, M2WO4, M2CrO4, M2Cr2O7, M2TiO3, MZrO3, MAlO2, M2Al2O2, MCoO2, MGaO2, M2GeO3, MMnO4, M2MnO4, M4SiO4, M2SiO3, MTaO3, MVO3, MIO3, MFeO2, MIO4, MOCl, MClO2, MClO3, MClO4, MClO4, MScO3, MScOn, MTiOn, MVOn, MCrOn, MCr2On, MMn2On, MFeOn, MxCoOn (x is an integer or fraction), MNiOn, MNi2On, MCuOn, MZnOn, wherein n=1, 2,3, or 4 and M is metal such as an alkali metal, Mg3(BO3)2, and M2S2O8;

a mixed metal oxide or an intercalation oxide such as a lithium ion battery intercalation compound such as at least one of the group of LiCoO2, LiFePO4, LiNixMnyCozO2, LiMn2O4, LiFeO2, Li2MnO3, Li2MnO4, LiNiO2, LiFeO2, LiTaO3, LiVO3, Li2VO3, Li2NbO3, Li2SeO3, Li2SeO4, Li2TeO3, Li2TeO4, Li2WO4, Li2CrO4, Li2Cr2O7, Li2HfO3, Li2MoO3 or Li2MoO4, Li2TiO3, Li2ZrO3, and LiAlO2;

a fluxing agent such as sodium tetraborate (M.P. = 743 °C, anhydrate), K2SO4 (M.P. = 1069 °C), Na2CO3 (M.P. = 851 °C), K2CO3 (M.P. = 891 °C), KOH (M.P. = 360 °C), MgO, (M.P. = 2852 °C), CaO, (M.P. = 2613 °C), SrO, (M.P. = 2531 °C), BaO, (M.P. = 1923 °C), CaCO3 (M.P. = 1339 °C);

a molecular oxidant that may comprise a gas such as CO2, SO2, SO3, S2O5Cl2, F5SOF, SOxXy such as SOCl2, SOF2, SO2F2, SOBr2, PO2, P2O3, P2O5, POxXy such as POBr3, POI3, POCl3 or POF3, 1205, Re2O7, 1204, 1205, 1209, SO2, CO2, $N_2O$, NO, NO2, N2O3, N2O4, N2O5, Cl2O, ClO2, Cl2O3, Cl2O6, Cl2O7, NH4X wherein X is a nitrate or other suitable anion known to those skilled in the art such as one of the group comprising NO3-, NO2-, SO42-, HSO4-, CoO2-, IO3-, IO4-, TiO3-, CrO4-, FeO2-, PO43-, HPO42-, H2PO4-, VO3-, ClO4- and Cr2O72;

an oxyanion such as one of the group of NO3-, NO2-, SO42-, HSO4-, CoO2-, IO3-, IO4-, TiO3-, CrO4-, FeO2-, PO43-, HPO42-, H2PO4-, VO3-, ClO4- and Cr2O72-;

an oxyanion of a strong acid, an oxidant, a molecular oxidant such as one of the group of V2O3, 1205, MnO2, Re2O7, CrO3, RuO2, AgO, PdO, PdO2, PtO, PtO2, and NH4X wherein X is a nitrate or other suitable anion known by those skilled in the art;

a hydroxide such as one of the group of Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W, MOH, MOH, M'(OH)2 wherein M is an alkali metal and M' is alkaline earth metal, a transition metal hydroxide, Co(OH)2, Zn(OH)2, Ni(OH)2, other transition metal hydroxides, a rare earth hydroxide, Al(OH)3, Cd(OH)2, Sn(OH)2, Pb(OH), In(OH)3, Ga(OH)3, Bi(OH)3, compounds

comprising $Zn(OH)_4^{2-}$, $Sn(OH)_4^{2-}$, $Sn(OH)_6^{2-}$, $Sb(OH)_4^{-}$, $Pb(OH)_4^{2-}$, $Cr(OH)_4^{-}$, and

$Al(OH)_4^{-}$, complex ion hydroxides such as Li2Zn(OH)4, Na2Zn(OH)4, Li2Sn(OH)4, Na2Sn(OH)4, Li2Pb(OH)4, Na2Pb(OH)4, LiSb(OH)4, NaSb(OH)4, LiAl(OH)4, NaAl(OH)4, LiCr(OH)4, NaCr(OH)4, Li2Sn(OH)6, and Na2Sn(OH)6;

an acid such as H2SO3, H2SO4, H3PO3, H3PO4, HClO4, HNO3, HNO, HNO2, H2CO3, H2MoO4, HNbO3, H2B4O7, HBO2, H2WO4, H2CrO4, H2Cr2O7, H2TiO3, HZrO3, MAlO2, HMn2O4, HIO3, HIO4, HClO4, or a source of an acid such as an anhydrous acid such as at least one of the group of SO2, SO3, CO2, NO2, N2O3, N2O5, Cl2O7, PO2, P2O3, and P2O5;

a solid acid such as one of the group of MHSO4, MHCO3, M2HPO4, and MH2PO4 wherein M is metal such as an alkali metal;

an oxyhydroxide such as one of the group of WO2(OH), WO2(OH)2, VO(OH), VO(OH)2, VO(OH)3, V2O2(OH)2, V2O2(OH)4, V2O2(OH)6, V2O3(OH)2, V2O3(OH)4,V2O4(OH)2, FeO(OH), ($\alpha$ -MnO(OH) groutite and Y -MnO(OH) manganite), MnO(OH), MnO(OH)2, Mn2O3(OH), Mn2O2(OH)3, Mn2O(OH)5, MnO3(OH), MnO2(OH)3, MnO(OH)5, Mn2O2(OH)2, Mn2O6(OH)2, Mn2O4(OH)6, NiO(OH), TiO(OH), TiO(OH)2, Ti2O3(OH), Ti2O3(OH)2, Ti2O2(OH)3, Ti2O2(OH)4, and NiO(OH), bracewellite (CrO(OH)), diaspore (AlO(OH)), ScO(OH), YO(OH), VO(OH), goethite ($\alpha$ -Fe3+O(OH)), groutite (Mn3+O(OH)), guyanaite (CrO(OH)), montroseite ((V,Fe)O(OH)), CoO(OH), NiO(OH), Ni1/2Co1/2O(OH), and Ni1/3Co1/3Mn1/3O(OH), RhO(OH), InO(OH), tsumgallite (GaO(OH)), manganite (Mn3+O(OH)), yttrotungstite-(Y) YW2O6(OH)3, yttrotungstite-(Ce) ((Ce, Nd, Y)W2O6(OH)3, unnamed (Nd-analogue of yttrotungstite-(Ce)) ((Nd, Ce, 2+ La)W2O6(OH)3, frankhawthorneite (Cu2[(OH)2[TeO4]), khinite (Pb2+Cu 3 2+ (TeO6)(OH)2), parakhinite (Pb2+Cu 3 TeO6(OH)2), and MxOyHz wherein x, y, and z are integers and M is a metal such as a transition, inner transition, or rare earth metal such as metal oxyhydroxides;

an oxide such as one of the group of oxyanion compounds, aluminate, tungstate, zirconate, titanate, sulfate, phosphate, carbonate, nitrate, chromate, and manganate, oxides, nitrites, borates, boron oxide such as $B_2O_3$, metal oxides, nonmetal oxides, oxides of alkali, alkaline earth, transition, inner transition, and rare earth metals, and Al, Ga, In, Sn, Pb, S, Te, Se, N, P, As, Sb, Bi, C, Si, Ge, and B, and other elements that form oxides or oxyanions, an oxide comprising at least one cation from the group of alkaline, alkaline earth, transition, inner transition, and rare earth metal, and Al, Ga, In, Sn, and Pb cations, a metal oxide anion and a cation such as an alkali, alkaline earth, transition, inner transition and rare earth metal cation, and those of other metals and metalloids such as those of Al, Ga, In, Si, Ge, Sn, Pb, As, Sb, Bi, Se, and Te such as MM'2xO3x+1 or MM'2xO4 (M = alkaline earth, M' = transition metal such as Fe or Ni or Mn, x = integer) and M2M'2xO3x+1 or M2M'2xO4 (M = alkali, M' = transition metal such as Fe or Ni or Mn, x = integer), M2O and MO where in M is metal such as an alkali metal such as Li2O, Na2O, and K2O, and alkaline earth metal such as MgO, CaO, SrO, and BaO, MCoO2 wherein M is metal such as an alkali metal, CoO2, MnO2, Mn2O3, Mn3O4, PbO2, Ag2O2, AgO, RuO2, compounds comprising silver and oxygen, oxides of transition metals such as NiO and CoO, those of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W transition metals and Sn such as SnO, those of alkali metals such as Li2O,Na2O, and K2O, and alkaline earth metal such as MgO, CaO, SrO, and BaO, MoO2, TiO2, ZrO2, SiO2, Al2O3, NiO, Ni2O3, FeO, Fe2O3, TaO2, Ta2O5, VO, VO2, V2O3, V2O5, B2O3, NbO, NbO2, Nb2O5, SeO2, SeO3, TeO2, TeO3, WO2, WO3, Cr3O4, Cr2O3, CrO2, CrO3, MnO, Mn2O7, HfO2, Co2O3, CoO, Co3O4, PdO, PtO2, BaZrO3, Ce2O3, LiCoO2, Sb2O3, BaWO4, BaCrO$_4$, BaSi$_2$O$_5$, Ba(BO2)2, Ba(PO3)2, BaSiO3, BaMoO4, Ba(NbO3)2, BaTiO$_3$, BaTi2O5, BaWO4, CoMoO$_4$, Co2SiO4, CoSO4, CoTiO3, CoWO4, Co2TiO4, Nb2O5, Li2MoO4, LiNbO3, LiSiO4, Li3PO4, Li2SO4, LiTaO3, Li2B4O7, Li2TiO3, Li2WO4, LiVO3, Li$_2$VO$_3$, Li2ZrO3, LiFeO2, LiMnO$_4$, LiMn2O4, LiGaO2, Li2GeO3, LiGaO2;

a hydrate such as one of the disclosure such as borax or sodium tetraborate hexahydrate;

a peroxide such as H2O2, M2O2 where M is an alkali metal, such as Li2O2, Na2O2, K2O2, other ionic peroxides such as those of alkaline earth peroxides such as Ca, Sr, or Ba peroxides, those of other electropositive metals such as those of lanthanides, and covalent metal peroxides such as those of Zn, Cd, and Hg;

a superoxide such as MO2 where M is an alkali metal, such as NaO2, KO2, RbO2, and CsO2, and alkaline earth metal superoxides;

a compound comprising at least one of an oxygen species such as at least one of O2, O3, $O_3^+$, $O_3^-$, O, O+, H2O, H3O+, OH, OH+, OH-, HOOH, OOH-, O-, O2-, $O_2^-$, and $O_2^{2-}$ and a H species such as at least one of H2, H, H+, H2O, H3O+, OH, OH+, OH-, HOOH, and OOH-;

an anhydride or oxide capable of undergo a hydration reaction comprising an element, metal, alloy, or mixture such as one from the group of Mo, Ti, Zr, Si, Al, Ni, Fe, Ta, V, B, Nb, Se, Te, W, Cr, Mn, Hf, Co, and Mg, Li2MoO3, Li2MoO4, Li2TiO3, Li2ZrO3, Li2SiO3, LiAlO2, LiNiO2, LiFeO2, LiTaO3, LiVO3, Li$_2$VO$_3$, Li2B4O7, Li2NbO3, Li2SeO3, Li2SeO4, Li2TeO3, Li2TeO4, Li2WO4, Li2CrO4, Li2Cr2O7, Li2MnO4, Li2HfO3, LiCoO2, and MO wherein M is metal such as an alkaline earth metal such as Mg of MgO, As2O3, As2O5, Sb2O3, Sb2O4, Sb2O5, Bi2O3, SO2, SO3, CO2, NO2, N2O3, N2O5, Cl2O7, PO2, P2O3, and P2O5;

a hydride such as one from the group of R-Ni, La2Co1Ni9H6, La2Co1Ni9H6, ZrCr2H3.8, LaNi3.55Mn0.4Al0.3Co0.75, ZrMn0.5Cr0.2V0.1Ni1.2, and other alloys capable of storing hydrogen such as one chosen from MmNi5 (Mm = misch metal) such as MmNi3.5Co0.7Al0.8, AB5 (LaCePrNdNiCoMnAl) or AB2 (VTiZrNiCrCoMnAlSn) type, where the "ABx" designation refers to the ratio of the A type elements (LaCePrNd or TiZr) to that of the B type elements (VNiCrCoMnAlSn), AB5-type, MmNi3.2Co1.0Mn0.6Al0.11Mo0.09 (Mm = misch metal: 25 wt% La, 50 wt% Ce, 7 wt% Pr, 18 wt% Nd), La1-yRyNi5-xMx, AB2-type: Ti0.51Zr0.49V0.70Ni1.18Cr0.12 alloys, magnesium-based alloys, Mg1.9Al0.1Ni0.8Co0.1Mn0.1 alloy, Mg0.72Sc0.28(Pd0.012 + Rh0.012), and Mg80Ti20, Mg80V20, La0.8Nd0.2Ni2.4Co2.5Si0.1, LaNi5-xMx (M= Mn, Al), (M= Al, Si, Cu), (M= Sn), (M= Al, Mn, Cu) and LaNi4Co, MmNi3.55Mn0.44A10.3Co0.75, LaNi3.55Mn0.44A10.3Co0.75, MgCu2, MgZn2, MgNi2, AB compounds, TiFe, TiCo, and TiNi, ABn compounds (n = 5, 2, or 1), AB3-4 compounds, ABx (A = La, Ce, Mn, Mg; B = Ni, Mn, Co, Al), ZrFe2, Zr0.5Cs0.5Fe2, Zr0.8Sc0.2Fe2, YNi5, LaNi5, LaNi4.5Co0.5, (Ce, La, Nd, Pr)Ni5, Mischmetal-nickel alloy, Ti0.98Zr0.02V0.43Fe0.09Cr0.05Mn1.5, La2Co1Ni9, FeNi, TiMn2, TiFeH2, a species of a M-N-H system such as LiNH2, Li2NH, or Li3N, and a alkali metal hydride further comprising boron such as borohydrides or aluminum such as aluminohydides, alkaline earth metal hydrides such as MgH2, metal alloy hydrides such as BaReH9, LaNi5H6, FeTiH1.7, and MgNiH4, metal borohydrides such as Be(BH4)2, Mg(BH4)2, Ca(BH4)2, Zn(BH4)2, Sc(BH4)3, Ti(BH4)3, Mn(BH4)2, Zr(BH4)4, NaBH4, LiBH4, KBH4, and Al(BH4)3, AlH3, NaAlH4, Na3AlH6, LiAlH4, Li3AlH6, LiH, LaNi5H6, La2Co1Ni9H6, and TiFeH2, NH3BH3, hydride metals or semi-metals comprising alkali metals (Na, K, Rb, Cs), alkaline earth metals (Mg, Ca, Ba, Sr), elements from the Group IIIA such as B, Al, Ga, Sb, from the Group IVA such as C, Si, Ge, Sn, and from the Group VA such as N, P, As, transition metal alloys and intermetallic compounds ABn, in which A represents one or more element(s) capable of forming a stable hydride and B is an element that forms an unstable hydride, intermetallic compounds given in TABLE 2, intermetallic compounds wherein part of sites A and/or sites B are substituted with another element such as for M representing LaNi5, the intermetallic alloy may be represented by LaNi5-xAx, where A is, for example, Al, Cu, Fe, Mn, and/or Co, and La may be substituted with Mischmetal, a mixture of rare earth metals containing 30% to 70% of cerium, neodymium and very small amounts of elements from the same series, the remainder being lanthanum, an alloy such as Li3Mg, K3Mg, Na3Mg that forms a mixed hydride such as MMgH3 (M=alkali metal), polyaminoborane, amine borane complexes such as amine borane, boron hydride ammoniates, hydrazine-borane complexes, diborane diammoniate, borazine, and ammonium octahydrotriborates or tetrahydroborates, imidazolium ionic liquids such as alkyl(aryl)-3-methylimidazolium N-bis(trifluoromethanesulfonyl)imidate salts, phosphonium borate, and carbonite substances. Further exemplary compounds are ammonia borane, alkali ammonia borane such as lithium ammonia borane, and borane alkyl amine complex such as borane dimethylamine complex, borane trimethylamine complex, and amino boranes and borane amines such as aminodiborane, n-dimethylaminodiborane, tris(dimethylamino)borane, di-n-butylboronamine, dimethylaminoborane, trimethylaminoborane, ammonia-trimethylborane, and triethylaminoborane. Further suitable hydrogen storage materials are organic liquids with absorbed hydrogen such as carbazole and derivatives such as 9-(2-ethylhexyl)carbazole, 9-ethylcarbazole, 9-phenylcarbazole, 9-methylcarbazole, and 4,4'-bis(N-carbazolyl)-1,1'-biphenyl;

TABLE 2. Elements and combinations that form hydrides.

| A | B | | ABn |
|---|---|---|---|
| Mg, Zr | Ni, Fe, Co | /2 | Mg2Ni, Mg2Co, Zr2Fe |
| Ti, Zr | Ni, Fe | | TiNi, TiFe, ZrNi |
| La, Zr, Ti, Y, Ln | V, Cr, Mn, Fe, Ni | | LaNi2, YNi2, YMn2, ZrCr2, ZrMn2, ZrV2, TiMn2 |
| La, Ln, Y, Mg | Ni, Co | | LnCo3, YNi3, LaMg2Ni9 |
| La, rare earths | Ni, Cu, Co, Pt | | LaNi5, LaCo5, LaCu5, LaPt5 |

a hydrogen permeable membrane such as Ni(H2), V(H2), Ti(H2), Fe(H2), or Nb(H2);

a compound comprising at least one of oxygen and hydrogen such as one of the disclosure wherein other metals may replaced the metals of the disclosure, M may also be another cation such as an alkaline earth, transition, inner transition, or rare earth metal cation, or a Group 13 to 16 cation such as Al, Ga, In, Sn, Pb, Bi, and Te, and the metal may be one of the molten metal such as at least one of silver and copper,

and other such sources of at least one of hydrogen and oxygen such as ones known by those skilled in the art. In an embodiment, at least one of the energy released by the hydrino reaction and the voltage applied across the electrodes is sufficient to break the oxygen bonding of the source of oxygen to release oxygen. The voltage may be in at least one range of about 0.1 V to 8V, 0.5 V to 4V, and 0.5 V to 2V. In an embodiment, the source of oxygen is more stable than the hydrogen reduction products such as water and the source of oxygen that comprises less oxygen. The hydrogen reduction products may react with water to form the source of oxygen. The reduced source of oxygen may react at least one of water and oxygen to maintain a low concentration of these oxidants in the reaction cell chamber 5b31. The reduced source of oxygen may maintain the dome 5b4. In an exemplary embodiment comprising a W dome and a highly stable oxide such as Na2O, the reduced source of oxygen is Na metal vapor that reacts with both $H_2O$ and $O_2$ to scavenge these gases from the reaction cell chamber. The Na may also reduce W oxide on the dome to W to maintain it from corrosion.

Exemplary sources of oxygen such as one with a suitable melting and boiling point capable of being dissolved or mixed into the melt such as molten silver ate at least one selected from the group of NaReO4, NaOH, NaBrO3, B2O3, PtO2, MnO2, Na5P3O10, NaVO3, Sb2O3, Na2MoO4, V2O5, Na2WO4, Li2MoO4, Li2CO3, TeO2, Li2WO4, Na2B4O7, Na2CrO4, Bi2O3, LiBO2, Li2SO4, Na2CO3, Na2SO4, K2CO3, K2MoO4, K2WO4, Li2B4O7, KBO2, NaBO2, Na4P2O7, CoMoO4, SrMoO4, Bi4Ge3O12, K2SO4, Mn2O3, GeO2, Na2SiO3, Na2O, Li3PO4, SrNb2O6, Cu2O, LiSiO4, LiNbO3, CuO, Co2SiO4, BaCrO4, BaSi2O5, NaNbO3, Li2O, BaMoO4, BaNbO3, WO3, BaWO4, SrCO3, CoTiO3, CoWO4, LiVO3, $Li_2VO_3$, Li2ZrO3, LiMn2O4, LiGaO2, Mn3O4, Ba(BO2)2 *H2O, Na3VO4, LiMnO4, K2B4O7*4H2O, and NaO2.

In an embodiment, the source of oxygen such as peroxide such as $Na_2O_2$, the source of hydrogen such as a hydride or hydrogen gas such as argon/$H_2$ (3% to 5%), and a conductive matrix such molten silver may serve as a solid fuel to form hydrinos. The reaction may be run in an inert vessel such as an alkaline earth oxide vessel such as an MgO vessel.

The additive may further comprise the compound or element formed by hydrogen reduction of the source of oxygen. The reduced source of oxygen may form the source of oxygen such as the oxide by reaction with at least one of excess oxygen and water in the reaction cell chamber 5b31. At least one of the source of oxygen and reduced source of oxygen may comprise a weight percentage of the injected melt comprising at least two of the molten metal such as silver, the source of oxygen such as borax, and the reduced source of oxygen that maximizes the hydrino reaction rate. The weight percentage of at least one of the source of oxygen and the reduced source of oxygen may be in at least one weight percentage range of about 0.01 wt% to 50 wt%, 0.1 wt% to 40 wt%, 0.1 wt% to 30 wt%, 0.1 wt% to 20 wt%, 0.1 wt% to 10 wt%, 1 wt% to 10 wt%, and 1 wt% to 5 wt%. The reaction cell chamber gas may comprise a mixture of gases. The mixture may comprise a noble gas such as argon and hydrogen. The reaction cell chamber 5b31 may be maintained under an atmosphere comprising a partial pressure of hydrogen. The hydrogen pressure may be in at least one range of about 0.01 Torr to 10,000 Torr, 0.1 Torr to 1000 Torr, 1 Torr to 100 Torr, and 1 Torr to 10 Torr. The noble gas such as argon pressure may be in at least one range of about 0.1 Torr to 100,000 Torr, 1 Torr to 10,00 Torr, and 10 Torr to 1000 Torr. The source of oxygen may undergo reaction with the hydrogen to form $H_2O$. The $H_2O$ may serve as HOH catalyst to form hydrinos. The source of oxygen may be thermodynamically unfavorable to hydrogen reduction. The HOH may form during ignition such as in the plasma. The reduced product may react with water formed during ignition. The water reaction may maintain the water in the reaction cell chamber 5b31 at low levels. The low water levels may be in at least one range of about less than 40 Torr, less than 30 Torr, less than 20 Torr, less than 10 Torr, less than 5 Torr, and less than 1 Torr. The low water vapor pressure in the reaction cell chamber may protect at least one cell component such as the dome 5b4 such as a W or graphite dome from undergoing corrosion. The tungsten oxide as the source of oxygen could participate in a tungsten cycle to maintain a tungsten dome 5b4 against corrosion. The balance of the oxygen and tungsten inventory may stay near constant. Any tungsten oxide corrosion product by reaction of the oxygen from the tungsten oxide with tungsten metal may be replaced by tungsten metal from tungsten oxide that was reduced to provide the oxygen reactant.

The additive may comprise a compound to enhance the solubility of another additive such as the source of oxygen. The compound may comprise a dispersant. The compound may comprise a flux. The generator may further comprise a stirrer to mix the molten metal such as silver with the additive such as the source of oxygen. The stirrer may comprise at least one of a mechanical, pneumatic, magnetic, electromagnetic such as one that uses a Lorentz force, piezoelectric, and other stirrers known in the art. The stirrer may comprise a sonicator such as an ultrasonic sonicator. The stirrer may comprise an electromagnetic pump. The stirrer may comprise at least one of the electrode electromagnetic pump and the injection electromagnetic pump 5k. The stirring may occur in a cell component that holds the melt such as at least one of the cone reservoir, reservoir, and EM pump. The melt composition may be adjusted to increase the solubility of the additive. The melt may comprise at least one of silver, silver-copper alloy, and copper wherein the melt composition may be adjusted to increase the solubility of the additive. The compound that increases the solubility may comprise a gas. The gas may have a reversible reaction with the additive such as the source of oxygen. The reversible reaction may enhance the solubility of the source of oxygen. In an exemplary embodiment, the gas comprises $CO_2$. An exemplary reversible reaction is the reaction of $CO_2$ and an oxide such as an alkali oxide such as $Li_2O$ to form the carbonate. In another embodiment, the reaction comprises the reaction of the reduction products of the source of oxygen such as the metal and water of a metal oxide such as an alkali oxide such as $Li_2O$ or $Na_2O$, a transition metal oxide such as CuO, and bismuth oxide.

In an exemplary embodiment, the shot comprises silver and at least one of $LiVO_3$ and $M_2O$ (M = Li or Na) in at least one concentration range of about 0.1 to 5 mol%, 1 to 3 mol%, and 1.5 to 2.5 mol%. The reaction cell chamber 5b31 gas comprises an inert gas such as argon with hydrogen gas maintained in at least one range of about 1 to 10%, 2 to 5%, and 3 to 5%. The consumed hydrogen may be replaced by supplying hydrogen to the cell chamber 5b3 while monitoring at least one of the hydrogen partial pressure and the total pressure such as in the cell chamber wherein the hydrogen pressure may be inferred from the total pressure due to the inert nature and constancy of the argon gas inventory. The hydrogen add back rate may be in at least one range of about 0.00001 moles/s to 0.01 moles/s, 0.00005 moles/s to 0.001 moles/s, and 0.0001 moles/s to 0.001 moles/s. The cell dome 5b4 may comprise W or carbon. The dome 5b4 may comprise cloth or weave such as one comprising tungsten comprising fine tungsten filaments wherein the weave density is permeable to gases, but prevents silver vapor from permeating from inside the reaction cell chamber to the cell chamber. At least one of the cone reservoir 5b, reservoir 5c, and EM pump components such as the pump tube 5k6 may comprise at least one of niobium, molybdenum, tantalum, tungsten, rhenium, titanium, vanadium, chromium, zirconium, hafnium, ruthenium, rhodium, osmium and iridium. The components may be joined by at least one joining or fabrication technique of the group of sintering powder welds, laser welds, electron beam welding, electric discharge machining, casting, using treaded joints, using Swageloks comprising refractory materials, using alloying agents such as rhenium, titanium and zirconium (TZM) for Mo, and electroplating joining. In an embodiment comprising a refractory metal, the section of the pump tube 5k6 at the EM pump bus bars 5k2 may be machined from a solid piece or cast by means such as power sintering cast. The section may comprise an inlet and outlet tube for adjoining the corresponding inlet and nozzle portion of the pump tube. The joining may be by means of the disclosure. The adjoined pipe sections may be electron beam welded as straight sections and then bent to form the pump loop. The pump tube inlet portion from the reservoir and the nozzle portion may be abutted to the bottom of the reservoir and passed through the bottom, respectively. The tube may be welded at each penetration of the bottom of the reservoir by electron beam welding.

In an embodiment, threaded refractory metal cell component pieces are sealed together using O-rings such as refractory metal or material O-rings (FIGURES 2I56-2I64). The threaded connecting pieces may join at a flat and knife-edge pairs wherein the knife-edge compresses the O-ring. Exemplary refractory metals or materials are those of the disclosure such as W, Ta, Nb, Mo, and WC. In an embodiment, parts of the cell such as parts of the EM pump such as at least one of the pump tube nozzle 5q, the pump tube 5k6 inlet and outlet of the reservoir 5c, and the reservoir 5c, the cone reservoir 5b, and the dome 5b4 may be connected to the contiguous part by at least one of threads, O-rings, VCR-type fittings, flare and compression fittings, and Swagelok fittings or Swagelok-type fittings. At least one of the fittings and O-rings may comprise a refractory material such as W. At least one of the O-rings, compression ring of the VCR-type fittings, Swagelok fittings, or Swagelok-type fittings may comprise a softer refractory material such as Ta or graphite. At least one of the cell parts and fittings may comprise at least one of Ta, W, Mo, W-La$_2$O$_3$ alloy, Mo, TZM, and niobium (Nb). The part such as the dome 5b4 may be machined from solid W or W-lanthanum oxide alloy. The part such as the dome 5b4 such as a W dome may be formed by selective laser melting (SLM).

In an embodiment, a cell component such as at least one of the cone 5b2, cone reservoir 5b, reservoir 5c, and dome 5b4 comprises a high temperature substrate material such as carbon such as graphite that is coated with a refractory material. The refractory material may comprise at least one of a refractory metal and a carbide such as a refractory metal carbide. The coating may comprise one that serves at least one function of reducing the vapor pressure of graphite, preventing carbon sublimation, and reducing the wear of the graphite surface. The coating may comprise a plurality of coatings. The coatings may enable bounding of a desired outer coating such as W. The plurality of coatings may comprise a first graphite bonding layer, a transition layer, and an outer layer. The first layer may comprise carbide such as at least one of WC, TaC, and HfC. The transition layer may comprise a refractory metal such as at least one of Ta and Hf. The outer layer may comprise a refractory material such as a refractory metal such as W. In an exemplary embodiment, graphite having at thermal coefficient of expansion similar to that of Hf or Ta may be coated with Ta or Hf, and this layer may be coated with W. In an embodiment, the top surface coating such as a rhenium (Re) or tungsten (W) surface may be patterned or textured to increase the emissivity. The patterning or texturing may be achieved by vapor deposition. Alternatively, the surface may be polished to decrease the emissivity.

In an embodiment, a cell component such as at least one of the cone 5b2, cone reservoir 5b, reservoir 5c, and dome 5b4 comprises a high temperature substrate material such as carbon such as graphite that is clad with a refractory material. The refractory material may comprise at least one of a refractory metal and a carbide such as a refractory metal carbide. The cladding may comprise one that serves at least one function of reducing the vapor pressure of graphite, preventing carbon sublimation, and reducing the wear of the graphite surface. The cladding may comprise a plurality of claddings. The cell body component such as at least one of the cone 5b2, cone reservoir 5b, reservoir 5c, and dome 5b4 may comprise any desired shape. The shape of the cell body comprising a cell component or components may be closed to form a closed reaction cell chamber 5b31 and may have an outer surface that performs the function of the irradiation of the surrounding PV converter 26a. The cell body may comprise a cylinder or faceted cylinder. The body may be comprised of a structural material such as graphite that is lined on at least one surface. The body may comprise at least one of an inner and outer body surface liner or covering such as a refractory liner or covering such as one comprising tungsten. In an embodiment, the inner and outer claddings, liners, or surface coverings may be connected through the middle layer by fasteners such as bolts, rivets, or screws. The cell body component or components may comprise a sealed reaction cell chamber 5b31. The sealing may contain the vapor of the fuel melt such as one comprising molten silver. The seal may comprise at least one of a weld, threads, VCR-type fittings, flare and compression-type fittings, and a Swagelok-type seal. In an embodiment, the outer body surface liner or covering may be sealed to contain the sublimation vapor pressure of graphite such as about 43 Torr at 3500K. The cell operating temperature may be below a temperature that avoids a metal vapor pressure that causes failure of the cell. In an exemplary embodiment, the cell body comprises a thick graphite cylinder with an inner W liner, and an outer W cover cylinder wherein at least one of the graphite, inner W, and outer W cylinders are sealed to the components that connect to the EM pump by means such as threads. The operating temperature may be about 3000 K or below to maintain the pressure at or below 10 atm Ag vapor pressure. In another embodiment, the Ag may be condensed on a cooled surface to maintain the metal vapor pressure below the cell failure limit wherein the cell may be operated at a higher temperature than in the absence of the condensation by cooling. An exemplary higher temperature is 3500K.

In an embodiment, the cell may be cooled with cold plates such as microchannel cold plates that may be water-cooled. At least one cell component such as the cone 5b2, the cone reservoir 5b, the reservoir 5c, the PV converter 26a, the electrodes 8, the bus bars 9 and 10, and the EM pump may be cooled with cold plates. At least one of the cell and at least one cell component may be water cooled by the cooling coil 5o of the inductively coupled heater.

In an exemplary embodiment (FIGURES 2I56-2I79), the cell comprises (i) a dome 5b4 such as a tungsten dome 5b4 comprising a sphere with a threaded neck connected to the sphere at the top and comprising a knife edge at the bottom; the dome 5b4 neck may comprise two threaded penetrations oriented 180° relative to each other to attach matching threaded-in electrodes; each electrode may be sealed against the outside of the dome collar wall with an O-ring such as a Ta O-ring and a locking nut 8a1 threaded on the electrode; the corresponding bus bar may be threaded onto the electrode on the end outside of the reaction cell chamber 5b31; each electrode may comprise a cylindrical body and a plate discharge end, the electrode threads could have opposite handedness such that the electrodes can both be rotated to screw in simultaneously, (ii) a dome separator plate 5b81 that may comprise a threaded penetration for the neck of the dome that has matching threads to form a seal with the plate; alternatively, the dome separator plate may be machined or cast as part of at least one of the dome neck and dome and dome neck; a thermal insulator 5b82 such as a disk comprising fire brick may insert into the dome separator plate 5b81 as shown in FIGURE 2I76, (iii) a tungsten right circular cylindrical reservoir 5c with the open top comprising mating threads to the threaded dome neck, an O-ring 5b7 such as a Ta O-ring, and a seat for the O-ring such that the neck knife edge seals with the O-ring when the threads are tightened; the reservoir 5c further comprising a base plate 5b8 such as a tungsten base plate that may be fabricated as part of the cylindrical reservoir 5c as shown in FIGURES 2I56-2I64 and the base plate further comprises penetrations for the inlet and outlet of the tungsten electromagnetic pump tube 5k6; alternatively, the base plate comprising EM pump penetrations may further comprise a recessed threaded female part of a joint, a seat for an O-ring, and an O-ring such as a Ta or graphite O-ring; the right cylindrical reservoir 5c may further comprise a knife edge at the bottom and mating threads on the outside bottom section comprising a male part of a joint; and the male and female portions may screw together and seal at the knife edge on the cylinder against the O-ring on the base plate 5b8, (iv) tungsten Swagelok-type or VCR-type fittings 5k9 (FIGURES 2I58 and 2I62) that may comprise at least one O-ring 5k10 to seal the pump tube penetrations at the reservoir base plate 5b8, (v) a tungsten pump tube 5k6 and comprising a tungsten nozzle 5q wherein the tube and nozzle may comprise one piece or may comprise two that may be joined by a fitting such as a VCR fitting 5k9 such as one at the penetration of the reservoir base plate, (vi) tungsten electromagnetic pump bus bars 5k2 that may be permanently or dynamically mechanically pressed onto the pump tube wall that may comprise indentation to facilitate good electrical contacts between the each bus bar at opposing sides of the pump tube wall, and (vii) tungsten heat transfer blocks 5k7. The electromagnetic pump may be mounted on blocks or EM pump mount 5kc (FIGURE 2I75) that may comprise an insulator such as one comprised of silicon carbide.

In an embodiment, the EM pump tube may comprise at least three pieces, an inlet, an outlet, a bus bar, and a nozzle section 5k61. Additionally, a separate nozzle may thread onto the nozzle section of the pump tube. The nozzle may comprise at least two flat external surfaces to facilitate tightening with a wrench or similar tool. At least one of the inlet, outlet, and nozzle sections may connect to the base plate of the reservoir 5c by a threaded joint. The union between the threaded base plate and the threaded tube section may further comprise an O-ring such as a Ta O-ring that may further seal the section to the base plate. In an exemplary embodiment, the tube section may comprise a raised collar that compresses the O-ring to the outside of the base plate as the threads are tightened. The bus bar section may be connected to at least one of the inlet and outlet tube sections by threads. The threads of at least one joint may be in excess of that needed for joining or over threaded such that the bus bar section may be excessively screwed into one of the inlet or outlet sections such that the opposite end of the bus bar section can be fitted to the starting threads of opposing piece comprising the outlet or inlet section, respectively. Then, the bus bar section can be screwed into the opposing piece such that both the inlet and outlet sections are screwed into the bus bar section. In another embodiment, at least one of the bus bar, inlet, and outlet, and nozzle sections are joined by flare and compression fittings. The joints may be sealed with a thread sealant such as graphite. At least one joint may be sealed with a weld such as an electron beam weld. In addition to flare and compression, threaded, VCR-type fittings, welded, O-rings, knife-end, and Swagelok-type, other joints know in the art may be used to join at least two pieces of the EM pump tube sections and the reservoir.

In an embodiment, the dome, cone reservoir, or reservoir may comprise sealed electrode penetrations. The electrode penetration may be sealed with a means of the disclosure such as a refractory O-ring to an insulating feed-through. Alternatively, the seal may comprise a non-conducting surface such as an anodized surface on the bus bars such as anodized aluminum, anodized titanium, or anodized zirconium wherein the seal may comprise a compression seal. The seal may be by differential thermal expansion. The seal may be maintained below the failure temperature by cooling the seal. Heat at the seals may be at least partially removed by the cooled bus bars such as the water-cooled bus bars. The seal may be made by heating the cell component such as the reservoir or cone reservoir comprising electrode penetrations to high temperature, inserting the cold bus bars or electrodes having an insulating coating such as an anodized coating, and then allowing the component to cool to form the seal. Alternatively, at least one of the bus bar and electrode may be cooled to cause the part to shrink before insertion into the penetration. The part may be allowed to warm to form the shrink or compression seal. The cooling may be with liquid nitrogen or other cryogen. The insulating surface may comprise a coating such as one of the disclosure such as at least one of zirconia + 8% yttria, Mullite, or Mullite-YSZ, silicon carbide. The seal may be maintained under high-temperature cell operating conditions since the penetration being in contact with the cooled bus bar or electrodes remains at a lower temperature than that at which the component was originally heated before inserting the bus bars or electrodes. The parts comprising the seal such as the reservoir and the bus bars may have flanges, grooves, O-rings, mating pieces, and other geometries of fasteners to improve the strength of the thermal compression seal known to those skilled in the art. Other feed-throughs of the generator such as those of the electromagnetic pump bus bars may comprise thermal compression seals wherein the surface of the penetrating parts may comprise electrical insulating materials. The insulating surface may comprise an anodized metal such as at least one of aluminum, titanium, and zirconium. The insulating surface may comprise a coating such as one of the disclosure such as at least one of zirconia + 8% yttria, Mullite, or Mullite-YSZ, silicon carbide. In an embodiment, at least one of the housing wall and the penetrations may be electrically insulating by means such as anodization to provide thermal compression seals for the inductively coupled heater antennae coil leads. The insulating layer may be at least the skin depth of the inductively coupled heater frequency such as RF frequency.

In an embodiment, the electrode bus bars may comprise an electrified conductor inside of a water-cooled housing. The inner electrified conductor may comprise the bus bar cannula of the disclosure that is in the center of a hollow tube wherein water flows in the cannula to cool the electrodes attached at the end and flows back inside the housing along the outside of the cannula. The electrified cannula may be electrically connected to a plate at the end of the bus bar that connects to the electrode. The end plate may be electrically insulated from the housing. In another embodiment, the end plate is in electrical connection with the cell wall wherein the parasitic current through the cell wall is low compared to the current through the electrodes. The inner electrified conductor may enter the bus bar through an electrically insulated penetration at the end opposite the electrode connection end. Since the temperature is low at the penetration end, the penetration may be a Swagelok type that may comprise a polymer insulator such as Teflon or other suitable electrical insulator known in the art.

In an embodiment (FIGURES 2I56-2I64), the electrodes 8 may comprise rods such as tungsten rods that are threaded at the penetrations with the cell wall such as the reservoir 5c or cone reservoir cell wall 5b that has matching threads. Each threaded tungsten rod electrode may screw into a matching threaded W cell wall. Each electrode may comprise a center channel for water-cooling. The electrode end opposite the ignition gap 8g may be fastened to the water-cooled bus bar 9 and 10 that may further connect bus bar current connectors 9a. The fastening may comprise solder such as silver solder. The electrode may be electrically insulated from the cell wall at the threaded penetration by a covering on the threads such as an insulating wrapping or tape such as at least one of Teflon, Kalrez, or Viton tape. The covering may further provide at least one function of sealing the cell to pressure such as a pressure in the range of about 1 atm to 50 atm and provide stress relief from the differential expansion of the electrode and the cell wall. In an embodiment, the bus bar or electrode that penetrates the cell wall comprises a material having a thermal expansion that is matched to that of the cell wall to prevent excessive wall stress due to differential thermal expansion during operation. In an embodiment, at least one of the electrode threads and electrodes may be electrically isolated from the cell by a coating such as yttrium oxide.

In another embodiment (FIGURES 2I56-2I64), the electrodes 8 penetrate the cell wall such as the reservoir 5c or cone reservoir 5b wall and are fasted at the penetrations. The fastening may comprise a weld or a threaded joint. In an exemplary embodiment, the electrodes may comprise rods such as tungsten rods or shafts that are threaded at the penetrations with the cell wall such as the reservoir or cone reservoir cell wall that has matching threads. Each threaded tungsten rod electrode may screw into a matching threaded W cell wall. The union between the threaded wall and the threaded electrode may further comprise an O-ring 8a such as a Ta O-ring that may further seal the electrode and the wall. In an exemplary embodiment, the electrode may comprise a raised collar that compresses the O-ring 8a to the outside of the wall as the threads are tightened. Alternatively, each electrode may comprise a lock nut 8a1 threaded on the shaft and may be tightened against the O-ring and the wall. In an embodiment the nut 8a1 may comprise a compound threaded fastener. The fastening may provide an electrical connection between the electrode and the cell wall wherein the resistance to current flow through the cell wall is minimized relative to that which flows between the electrodes with injection of the molten metal such as silver. The parasitic current through the cell wall may be low compared to the current through the electrodes. The electrode current may be increased relative to the parasitic wall current by lowering the resistance of the electrode current and increasing the resistance of the parasitic current. The resistance of the electrode current may be decreased by at least one of increasing the electrode cross-section such as by increasing the diameter of rod electrodes, decreasing the electrode length, decreasing the inter-electrode gap 8g, increasing the conductivity of the melt, and cooling the electrodes wherein the temperature may be maintained above the melting point of the injected melt such a silver melt. The resistance of the parasitic wall current may be increased by at least one of increasing the wall circumferential path, using more resistive wall material, oxidizing the wall such as at electrical contact points, decreasing the thickness of the wall, and increasing the temperature of the wall. In an embodiment, the threads can be at least partially oxidized by exposure to a source of oxygen or may be anodized to decrease the electrical contact between the electrodes and wall to lower the parasitic current. In an embodiment, the electrical contact points between the electrodes and wall may be coated with a tungsten bronze such as $M_n^I WO_3$ (0<n<1) wherein n maybe less than about 0.3 such that the bronze is a semiconductor rather than a conductor. The bronze may be formed by reacting a $WO_3$ coating with an alkali metal or by hydrogen reduction of sodium tungstate coating at red heat. Alternatively, the W surface may be coated with boronitride or tungsten nitride, boride, silicide, or carbide by methods known in the art. At least one of the threads and proximal region about the electrodes may be coated wherein the proximal region may be the region where the melt may short the electrodes to the wall. The proximal region may be cooled such that the coating does not rapidly thermally degrade. In an embodiment, the electrode O-ring such as the Ta O-ring, the locking nut, and the threads at the locking nut may be coated to lower the conductivity between the electrode shaft and the wall through which the electrode penetrates such as the dome collar wall.

Each electrode may comprise a center channel for water-cooling. The electrode end opposite the ignition gap 8g may be fastened to the water-cooled bus bar 9 and 10. The fastening may comprise threads, or solder such as silver solder. The corresponding bus bar may be threaded onto the electrode on the end outside of the reaction cell chamber 5b31. The cooling may lower the electrode resistance relative to the wall resistance to lower the parasitic wall current.

In an embodiment, the refractory material electrodes such as tungsten electrodes comprise a cooling channel or cannula. The cooling channel may be centerline. The cooling channel may be plated or coated with a material that does not react with water such as silver, nickel, or copper, or a coating of the disclosure. The channel may be clad with a material such as metal, graphite, or a coating that is non-reactive with water.

In an embodiment, parallel plate electrodes are connected to opposing bus bars. The electrodes may comprise a cylindrical threaded section that threads into matching threads in the cell wall such as the reservoir 5c wall. The threads may be tightened with a nut on the outside of the cell wall that may comprise an O-ring such as a Ta O-ring. The electrodes such as W electrodes may each be fabricated as a single piece comprising a cylindrical threaded portion and a plate section wherein the plate may be offset from the center of the cylindrical section to permit the two opposing electrodes to parallel overlap. The electrodes may be screwed in by rotating both simultaneously in the same direction with opposing electrodes and walls having oppositely handed threads. Alternatively, each electrode may comprise a cylindrical piece and a plate. Each cylindrical piece may be screwed in independently, and the plate and cylindrical sections may be joined by fasteners such as welds, rivets, or screws.

In an embodiment to prevent the capacitor from discharging when the generator is not in operation comprising a storage source of electrical power 2 or ignition source such as a capacitor bank or battery and further comprising electrodes having a parasitic current, the generator may comprise a switch to electrify the electrodes with the initiation of the delivery of melt to the electrode gap 8g by the EM pump. The current may be constant or pulsed. The constant current may be ramped from a lower to a higher level. In an embodiment, the voltage may be raised to initiate breakdown and then reduced.

In an embodiment, the generator further comprises a cell chamber capable of pressures below atmospheric, atmospheric, and above atmospheric that houses the dome 5b4 and corresponding reaction cell chamber 5b31. The cell chamber 5b3 housing and the lower chamber 5b5 housing may be in continuity. Alternatively, the lower chamber 5b5 may be separate having its own pressure control system that may be operated at a different pressure than the cell chamber such as atmospheric pressure or vacuum. The separator of the cell chamber 5b3 and the lower chamber 5b5 may comprise a plate at the top 5b81 or bottom 5b8 of the reservoir 5c. The plate 5b8 may be fastened to the reservoir by threads between the plate 5b81 or 5b8 and the reservoir 5c. At least one of the threaded dome and neck, and the reservoir with a base plate may be machine as single pieces from forged tungsten. The pressed tungsten electromagnetic pump bus bars 5k2 may be sinter welded to the pump tube wall indentation by applying tungsten powder that forms a sinter weld during operation at high temperature. The use of a refractory material such as tungsten for the cell components may avoid the necessity of having a thermal barrier such as a thermal insulator such as SiC between the dome and the reservoir or between the cone reservoir and the reservoir.

In an embodiment, the reaction cell chamber 5b31 may comprise a silver boiler. In an embodiment, the vapor pressure of the molten metal such as silver is allowed to about reach equilibrium at the operating temperature such that the process of metal evaporation about ceases and power loss to silver vaporization and condensation with heat rejection is about eliminated. Exemplary silver vapor pressures at operating temperatures of 3000K and 3500K are 10 atm and 46 atm, respectively. The maintenance of the equilibrium silver vapor pressure at the cell operating temperature comprises a stable means to maintain the cell pressure with refluxing liquid silver during cell power generation operation. Since the dome 5b4 may rupture at the high pressure and temperature, in an embodiment, the pressure in the cell chamber 5b3 is matched to the pressure in the reaction cell chamber 5b31 such that essentially no net pressure differential exists across the dome 5b4. In an embodiment, a slight excess pressure such as in the range of about 1 mTorr to 100 Torr may be maintained in the reaction cell chamber 5b31 to prevent creep of the tungsten dome 5b4 such as creep against the force of gravity. In an embodiment creep may be suppressed by the addition of a stabilizing additive to the metal of the blackbody radiator 5b4. In an embodiment, tungsten is doped with an additive such as small amounts of at least one of K, Re, $CeO_2$, HfC, $Y_2O_3$, $HfO_2$, $La_2O_3$, $ZrO_2$, $Al_2O_3$, $SiO_2$, and $K_2O$ to reduce creep. The additive may be in any desirable amount such as in a range of 1 ppm to 10 wt%.

In an embodiment of the reaction cell chamber 5b31 operated as a silver boiler, the cell components such as the dome 5b4 and reservoir 5c comprise a refractory material such as tungsten. In a startup mode, the reservoir 5c may be heated to sufficient temperature with a heater such as the inductively coupled heater 5m and 5o to cause metal vapor pressure such as silver metal vapor pressure to heat the dome 5b4. The temperature may be above the melting point of silver when the EM pump and electrodes are activated to cause pumping and ignition. In an embodiment, a source of oxygen such as an oxide such as $LiVO_3$ may be coated on the dome 5b4 wall to be incorporated into the melt as the metal vapor refluxes during warm up during the startup.

In an embodiment, the hydrino reaction is maintained by silver vapor that serves as the conductive matrix. At least one of continuous injection wherein at least a portion becomes vapor and direct boiling of the silver from the reservoir may provide the silver vapor. The electrodes may provide high current to the reaction to remove electrons and initiate the hydrino reaction. The heat from the hydrino reaction may assist in providing metal vapor such as silver metal vapor to the reaction cell chamber. In an embodiment, the current through the electrodes may be at least partially diverted to alternative or supplementary electrodes in contact with the plasma. The current diversion may occur after the pressure of the silver vapor becomes sufficiently high such that the silver vapor at least partially serves as the conductive matrix. The alternative or supplementary electrodes in contact with the plasma may comprise one or more center electrodes and counter electrodes about the perimeter of the reaction cell chamber. The cell wall may serve as an electrode.

In an embodiment, the PV converter 26a is contained in an outer pressure vessel 5b3a having an outer chamber 5b3a1 (FIGURE 2I65). The outer pressure vessel may have any desirable geometrical shape that contains the PV converter and inner cell components comprising the source of light to illuminate the PV converter. The outer chamber may comprise a cylindrical body with at least one domed end cap. The outer pressure vessel may comprise a dome or spherical geometry or other suitable geometry capable of containing the PV converter and dome 5b4 and capable of maintaining a pressure of at least one of less than, equal to, or greater than vacuum. In an embodiment, the PV converter 26a comprising PV cells, cold plates, and cooling system are located inside of the outer pressure vessel wherein electrical and coolant lines penetrate the vessel through sealed penetrations and feed-throughs such as one of those of the disclosure. In an embodiment, the outer pressure vessel may comprise a cylindrical body that may comprise at least one dome top. In an embodiment, the generator may comprise a cylindrical chamber that may have a domed cap to house the blackbody radiator 5b4 and the PV converter 26a. The generator may comprise a top chamber to house the PV converter and a bottom chamber to house to the electromagnetic pump. The chambers may be operated at the same or different pressures.

In an embodiment, the outer pressure vessel comprises the PV converter support such as the PV dome that forms the cell chamber 5b3 that contains the dome 5b4 that encloses the reaction cell chamber 5b3. The outer pressure vessel may comprise a dome or spherical geometry or other suitable geometry capable of containing the dome 5b4 and capable of maintaining a pressure of at least one of less than, equal to, or greater than vacuum. In an embodiment, the PV cells 15 are on the inside of the outer pressure vessel wall such as a spherical dome wall, and the cold plates and cooling system are on the outside of the wall. Electrical connections may penetrate the vessel through sealed penetrations and feed-throughs such as one of those of the disclosure. Heat transfer may occur across the wall that may be thermally conductive. A suitable wall material comprises a metal such as copper, stainless steel, or aluminum. The PV window on the inside of the PV cells may comprise transparent sections that may be joined by an adhesive such as silicon adhesive to form a gas tight transparent window. The window may protect the PV cell from gases that redeposit metal vaporized from the dome 5b4 back to the dome. The gases may comprise those of the halogen cycle. The pressure vessel PV vessel such as a domed vessel may seal to a separator plate 5b81 or 5b8 between an upper and lower chamber or other chamber by a ConFlat or other such flange seal. The upper chamber may contain the blackbody radiator 5b4 and PV cells 15, and the lower chamber may contain the EM pump. The lower chamber may further comprise lower chamber cold plates or cooling lines 5b6a (FIGURES 2I66 and 2I67).

As shown in FIGURES 2I65-2I76, the generator may comprise a transparent vessel or transparent-walled vessel 5b4a comprising a chamber that houses the blackbody radiator 5b4. The transparent vessel may contain a source of at least one of trace oxygen and halogen such as at least one of a hydrocarbon bromine compound such as at least one of HBr, $CH_3Br$, and $CH_2Br_2$ and iodine that preforms the function of transporting tungsten vaporized from the surface of the blackbody radiator 5b4 back to the radiator 5b4 and redepositing the tungsten. The transporting systems and conditions such as wall temperature and halogen and tungsten-halogen complex or halide or oxyhalide vapor pressures may be about the same as those of a tungsten-halogen light bulb that are known to those skilled in the art. The wall temperature of the transparent vessel may be above about 250 °C. The halogen cycle may initiate in the 200-250 °C range. The transparent vessel may comprise a bulb or a dome that may surround the dome 5b4. The transparent bulb or dome 5b4a surrounding the blackbody radiator 5b4 such as one comprising quartz or fused silica quartz glass may operate in the temperature range of about 400 °C to 1000 °C. Tungsten vaporized from the dome 5b4 may redeposit by the halogen cycle known to those skilled in the art. The wall of the transparent vessel may comprise the wall material of a tungsten halogen light bulb such as at least one of fused silica, quartz and high melting point glass such as aluminosilicate glass. The transparent vessel may comprise an atmosphere comprising at least one of an inert gas, hydrogen gas, and a halogen gas source such as a hydrocarbon bromine compound or iodine. The wall may be maintained at a temperature suitable for vaporizing tungsten halogen complex. Tungsten that evaporates from the dome 5b4 may form a tungsten-halogen complex that vaporizes on the hot transparent wall, diffuses to the dome 5b4, and decomposes to redeposit W on the dome 5b4.

The transparent vessel 5b4a may be capable of pressures in excess of atmospheric pressure. The transparent vessel may be pressurized to a pressure about equal to the pressure of the reaction cell chamber during operation such as one in the pressure range of about 1 to 50 atm. The transparent vessel may maintain a temperature greater that that required to support the halogen cycle. The transparent vessel may comprise a seal to a base plate capable of maintaining the high pressure inside the transparent vessel. The transparent vessel may be pressurized with a gas such as an inert gas such as xenon by gas systems such as a tank, valves, a pump, pressure sensors, and a controller of the disclosure. The pumping may be consolidated by using a system of a pump and valves such as gas solenoid valves 31ma (FIGURE 2I67) to control which chamber is pumped or pressurized. Hydrogen may also be added to the transparent vessel gases. The gas used to equalize the pressure may be supplied through a selective membrane or value. The selective membrane or valve may block the transport of halogen-source gas. Hydrogen gas may diffuse through the reaction cell chamber walls to supply hydrogen to the hydrino reaction. The PV converter 26a may be circumferential to the transparent vessel.

Tungsten's melting point of 3422 °C is the highest of all metals and second only to carbon (3550 °C) among the elements. Refractory ceramics and alloys have higher melting points, notably $Ta_4HfC_5TaX_4HfCX_5$ with a melting point of 4215 °C, hafnium carbide at 3900 °C, and tantalum carbide at 3800 C. In embodiment cell components such as the blackbody radiator 5b4 and reservoir 5c may comprise a refractory material such as at least one of W, C, and a refractory ceramic or alloy. In an embodiment wherein the blackbody radiator comprises graphite, the cell chamber 5b3 contains a high-pressure gas such as a high-pressure inert gas atmosphere that suppress the sublimation of graphic. In an embodiment, the inner wall of the transparent dome 5b4a facing the blackbody radiator 5b4 comprises a material, coating, or surface that has anti-stick properties towards carbon. The surface may comprise a thin layer that does not substantially attenuate the light to be converted to electricity by the PV converter 26a. In an embodiment wherein the blackbody radiator comprises graphite, the sublimation of graphite to the PV cells or transparent vessel wall may be suppressed by maintaining a high pressure in the PV pressure vessel or the transparent vessel, respectively.

In an embodiment, the blackbody radiator may comprise carbon. The carbon sublimed from a graphite blackbody radiator such as a spherical graphite blackbody radiator may be removed from the cell chamber 5b3 by electrostatic precipitation (ESP). The ESP system may comprise an anode, a cathode, a power supply, and a controller. The particles may be charged by one electrode and collected by another counter electrode. The collected soot may be dislodged from the collection electrode and caused to drop into a collection bin. The dislodging may be achieved by a mechanical system. In an embodiment, the inner wall of the transparent vessel may be charged negative and the dome may be charged positive with an applied source of voltage. Negatively charged carbon particles that sublime form the graphite dome 5b4 may migrate back to the dome under the influence of the field between the wall and the dome 5b4. In an embodiment, the carbon may be removed by active transport such a by flowing gas through the cell chamber 53b and then a carbon particle filter.

In an embodiment, the blackbody radiator comprises a coating that will not react with hydrogen. The cell may comprise a liner for the reaction cell chamber and reservoir to reduce the reaction of plasma hydrogen with the cell walls such as carbon walls. The reaction cell chamber gas may comprise a hydrocarbon product of the reaction of hydrogen with carbon. The hydrocarbon may suppress the reaction of hydrogen with the cell walls that comprise carbon.

In an embodiment, the dome 5b4 may comprise graphite, and the reservoir may comprise a refractory material such as tungsten. The graphite may comprise isotropic graphite. The reservoir may comprise penetrations for the electrodes at the top section. The graphite dome may thread onto the reservoir. In an embodiment, the graphite blackbody radiator such as a spherical dome may comprise a liner to prevent the molten metal inside of the reaction cell chamber 5b31 from eroding the graphite. The liner may comprise a refractory material such as tungsten. The liner may comprise a mesh or sheet that is formed to the inside of the graphite dome. The liner may prevent shear forces of flowing molten metal from eroding the inner surface of the reaction cell chamber.

In an embodiment, the outer pressure vessel may contain PV converter 26a and the transparent vessel or transparent-walled vessel 5b4a that is concentric to the blackbody radiator wherein the blackbody radiator is contained inside of the transparent-walled vessel. The pressure of at least two of the outer pressure chamber, the transparent-walled chamber, and the reaction cell chamber 5b31 may be about equalized. In an embodiment, the PV converter comprising a dense receiver array of PV cells comprises a window comprising the transparent vessel. The transparent vessel may comprise a liner of the dense receiver array. At least one of the PV converter and the transparent vessel may comprise a plurality of sections such as two hemispherical domes that join at the equator of a sphere having an opening to the reservoir 5c. The seal may comprise at least one of a flange and a gasket such as an O-ring. In an embodiment, the blackbody radiator 5b4 may comprise a plurality of sections such as two hemispherical domes that join at the equator of a sphere having an opening to the reservoir 5c. The seal may comprise at least one of a flange and a gasket such as an O-ring. The order of assembly of the generator may be (i) reservoir 5c assembled to separator plate 5b8, (ii) electromagnetic pump assembled into reservoir 5c, (iii) bottom hemisphere of transparent vessel and PV converter assembled onto dome separator plate 5b81, (iv) threading of blackbody radiator 5b4 into reservoir 5c, (v) assembly of top hemisphere of transparent vessel and PV converter onto bottom hemisphere of transparent vessel and PV converter, (vi) threading of electrodes into neck of blackbody radiator wherein the later may be achieved by using a precision machine to achieve proper electrode alignment. In addition or alternatively, the electrode position may be observed for adjustment using X-ray imaging. In another embodiment, the transparent vessel may be molded over the blackbody radiator sphere to eliminate the transparent hemispheres and associated joint between the hemispheres. In this case, the blackbody radiator may be threaded into the reservoir. The mechanical connection to apply the torque to tighten may be achieved by using the threaded electrode opening of the reservoir.

Alternatively, the PV converter support structure such as the PV dome may comprise the outer pressure vessel comprising a cell chamber 5b3 concentric to the transparent-walled vessel that is concentric to the blackbody radiator. The pressure of at least two of the cell chamber 5b3, the transparent-walled chamber, and the reaction cell chamber 5b31 may be about equalized. The pressures may be equalized by addition of a gas such as at least one of an inert gas and hydrogen. The gas pressures may be maintained by sensors, controller, valves, pumps, gas sources, and tanks for gas recirculation such as those of the disclosure. The gas used to equalize the pressure may be supplied through a selective membrane or value. The selective membrane or valve may block the transport of halogen-source gas. Hydrogen gas may diffuse through at least one of the transparent-chamber walls and the reaction cell chamber walls.

The outer surface of the transparent wall of the transparent vessel may comprise at least one thermophotovoltaic filter such as an infrared filter. The filter may preferentially reflect light having wavelengths that are not converted to electricity by the PV converter. The cells of the PV converter may be mirrored on the backside to reflect light that passed through the cells back to the blackbody radiator. The mirror may be selective for infrared light that is not converted to electricity by the PV cells. The infrared mirror may comprise a metal. The back of the cells may be metalized. The metal may comprise an infrared reflector such as gold. The metal may be attached to the semiconductor substrate of the PV cell by contract points. The contract points may be distributed over the back of the cells. The points may comprise a bonding material such as Ti-Au alloy or Cr-Au alloy. The PV cells may comprise at least one junction. Representative cells to operate at 3500 K comprise GaAs on GaAs substrate or InAlGaAs on InP or GaAs substrate as a single junction cell and InAlGaAs on InP or GaAs substrate as a double junction cell. Representative cells to operate at 3000 K comprise GaAs on GaAs substrate or InAlGaAs on InP or GaAs substrate as a single junction cell and InAlGaAs on InP or GaAs substrate as a double junction cell.

In an embodiment, the wall of the transparent vessel comprises the window of the PV cells such that the transparent vessel is eliminated. The window of the PV converter may be thick to provide thermal insulation between the surface closest to the blackbody radiator 5b4 and the PV cells 15 cooled by the cooling system such as cold plates and heat exchanger 87 such as a water-cooling system. In a representative embodiment, the inner surface of the PV window closest to the blackbody radiator is maintained at a temperature above that which supports the halogen cycle such as above 250 °C, and the outer surface that interfaces the PV cells may be maintained at a temperature desirable and suitable for operation of the PV cells such as in the range of 25 °C to 150 °C. The window may comprise at least one reflector of the light not converted to electricity by the PV cells 15 such as an infrared reflector. In an embodiment, the reflector may be embedded in the window or coat the back of the window. The PV window may comprise a plurality of layers wherein a light filter or infrared reflector may be coated on at least one surface in between layers. The pressures of the corresponding cell chamber and reaction cell chamber may be about balanced.

In an embodiment, a chamber that comprises an atmosphere that support the halogen cycle is in contact with at least one halogen-cycle reactive component such as the EM pump. Components of the cell that may react with the source of halogen may be coated with a chemically resistant coat such as one of the disclosure such as Mullite.

In an embodiment, the geodesic PV converter 26 of the blackbody radiator 5b4 may comprise and optical distribution system 23 such as one of the disclosure (FIGURE 2I55). The optical distribution system 23 may split the light into different wavelength regions. The splitting may be achieved by at least one of mirrors and filters such as those of the disclosure. The slit light may be incident corresponding PV cell 15 selective to the split and incident light. The optical distribution system 23 may be arranged as columns projecting outward from the geodesic sphere surrounding the spherical blackbody radiator 5b4.

In an embodiment, the generator may comprise an upper and lower cell chamber. A lower chamber wall or separator plate 5b81 or 5b8 may separate the upper from the lower chamber. The wall may comprise a plate such as a tungsten plate or SiC plate that extends from the reservoir or cone reservoir to the PV converter. The plate may be attached to the reservoir by a threaded joint. The cell chamber may comprise a seal at the PV converter to seal the PV window to the separator plate such as 5b81. The seal may comprise an O-ring seal. In the case that the seal is at a low temperature portion of the window, the O-ring may comprise a polymer such as a Teflon or Viton O-ring or graphite. In the case the seal is at a high temperature portion of the window, the seal may comprise a compressible metallic O-ring wherein the joining parts may comprise a knife-edge and a seating plate. The window may serve as a pressure vessel. At least one of the window pressure vessel and the transparent vessel may comprise a segmented window or vessel comprising a plurality of transparent window elements. The window elements may be joined together in a frame such as a metal or graphite frame. The frame may comprise a geodesic frame or other suitable geometry. The frame structural components that shadow the PV cells may comprise a high emissivity to reflect the blackbody radiation back to the blackbody radiator. The components may be at least one of silvered and polished. The window elements may comprise triangles or other suitable geometric elements such as square or rectangular elements. The transparent window elements may comprise sapphire, quartz, fused silica, glass, $MgF_2$, and other widow materials known in the art. The window material may support the halogen cycle on the surface facing the blackbody radiator. The segmented window or vessel may be cooled. The cooling may be on the backside towards the PV cells. A suitable cooling system is one comprising a water stream between the window or vessel wall and the PV cells. The segmented window or vessel may be sealed to the separator plate such as 5b81 at the frame by a seal known in the art such as a ConFlat or other flange seal known in the art. The pressure in at least two of the upper cell chamber, the lower chamber, and the reaction cell chamber may be about balanced.

The generator may comprise a precise gas pressure sensing and control system for at least one of the cell chamber and reaction cell chamber pressures. The system of the disclosure may comprise gas tanks and lines such as at least one of noble gas and hydrogen tanks and lines such as 5u and 5v. The gas system may further comprise pressure sensors, a manifold such as 5y, inlet lines such as 5g and 5h, feed-throughs such as 5g1 and 5h1, an injector such as 5z1, an injector valve such as 5z2, a vacuum pump such as 13a, a vacuum pump line such as 13b, control valves such as 13e and 13f, and lines and feed-throughs such as 13d and 13c. A noble gas such as argon or xenon may be added to the cell chamber 5b3 to match the pressure in the reaction cell chamber 5b31. In an embodiment, at least one of the reaction cell chamber and the cell chamber pressures are measured by the compression on a movable component of the cell as given in the disclosure. In an embodiment, the silver vapor pressure is measured from a cell component's temperature such as at least one of the reaction cell chamber 5b31 temperature and the dome 5b4 temperature wherein the cell component temperature may be determined from the blackbody radiation spectrum and the relationship between the component temperature and the silver vapor pressure may be known. In another embodiment, the pressure such as that of the reaction cell chamber is measured by gas conductivity. The conductivity may be dominated the metal vapor pressure such as the silver vapor pressure such that the silver vapor pressure can be measured by the conductivity. The conductivity may be measured across electrodes in contact with the gas inside the reaction cell chamber. Conduits in the bus bars 9 and 10 may provide a passage to connect the electrodes to conductivity measurement instrumentation outside of the reaction cell chamber. The temperature of the dome may be measured with a photocell. The photocell may comprise at least one cell of the PV converter 26a. The temperature of the dome may be measured using its blackbody spectral emission. The temperature may be measured using an optical pyrometer that may use an optical fiber to collect and transport the light to the sensor. The temperature may be measured by a plurality of diodes that may have filters selective to sample portions of the blackbody curve to determine the temperature.

In addition to a noble gas, the gas in at least one of the outer pressure vessel chamber, the cell chamber 5b3, and the transparent vessel chamber may also comprise hydrogen. The hydrogen supplied to the at least one chamber by tank, lines, valves, and injector may diffuse through a cell component that is hydrogen permeable at the cell operating temperature to replace that consumed to form hydrinos. The hydrogen may permeate the dome 5b4. The hydrino gas product may diffuse out of the chambers such as 5b3 and 5b31 to ambient atmosphere or to a collection system. Alternatively, hydrino gas product may be selectively pumped out of at least one chamber. In another embodiment, the hydrino gas may be collected in getter that may be periodically replaced or regenerated. The gas of the chamber enclosing the blackbody radiator may further comprise a halogen source such as $I_2$ or $Br_2$ or a hydrocarbon bromine compound that forms a complex with subliming tungsten. The complex may decompose on the hot tungsten dome surface to redeposit the tungsten on the dome 5b4. Some dome refractory metal such as W may be added to the molten metal such as silver to be vaporized and deposited on the inner dome surface to replace evaporated or sublimed metal.

In an embodiment, the cell further comprises a hydrogen supply to the reaction cell chamber. The supply may penetrate the cell through at least one of the EM pump tube, the reservoir, and the blackbody radiator. The supply may comprise a refractory material such as at least one of W and Ta. The supply may comprise a hydrogen permeable membrane such as one comprising a refractory material. The hydrogen supply may penetrate a region of the cell that is lower in temperature than that of the blackbody radiator. The supply may penetrate the cell at the EM pump tube or reservoir. The supply may comprise a hydrogen permeable membrane that is stable at the operating temperature of the molten silver in the EM pump tube or reservoir. The hydrogen permeable membrane may comprise Ta, Pt, Ir, Pd, Nb, Ni, Ti or other suitable hydrogen permeable metal with suitable melting point know to those skilled in the art.

In an embodiment, at least one outer chamber or chamber external to the reaction cell chamber 5b31 is pressurized to an external pressure of about the inside pressure of the reaction cell chamber at the operating temperature of the reaction cell chamber and blackbody radiator. The external pressure may match the inside pressure to within a range of about plus of minus 0.01% to plus minus 500%. In an exemplary embodiment, the external pressure of at least one chamber of one vessel external the blackbody radiator and the reaction cell chamber is about 10 atm to match the 10 atm silver vapor pressure of the reaction cell chamber at an operating temperature of about 3000K. Exemplary chambers pre-pressurized at an elevated pressure such as 10 atm are the outer pressure vessel that contains the PV converter and the transparent pressure vessel. The blackbody radiator is capable of supporting the external pressure differential decreases as the blackbody radiator temperature increase to the operating temperature.

In an embodiment shown in FIGURES 2I77-2I103, the SunCell comprises an outer pressure vessel 5b3a having a chamber 5b3a1 that contains the PV converter 26a, the blackbody radiator 5b4, the reservoir 5c, and the EM pump. The walls of the outer pressure vessel 5b3a may be water-cooled by coolant lines, cold plates, or heat exchanger 5b6a. SunCell components such as the walls of the outer pressure vessel 5b3a may comprise a heat or radiation shield to assist with cooling. The shield may have a low emissivity to reflect heat. The outer pressure vessel 5b3a may comprise heat exchanger fins on the outside. The fins may comprise a high thermal conductor such as copper or aluminum. The generator may further comprise a means to provide forced convection heat transfer from the heat fins. The means may comprise a fan or blower that may be located in the housing under the pressure vessel. The fan or blower may force air upwards over the fins. The outer pressure vessel may comprise a section such as a cylindrical section to contain and mount cell components such as the PV converter 26a, the blackbody radiator 5b4, the reservoir 5c, and the EM pump assembly 5ka. The connections to mount and support cell components comprise means to accommodate different rates or amounts of thermal expansion between the components and the mounts and supports such that expansion damage is avoided. The mounts and supports may comprise at least one of expansion joints and expandable connectors or fasteners such as washers and bushings. The connectors and fasteners may comprise compressible carbon such as Graphoil or Perma-Foil (Toyo Tanso). In an embodiment, the electrical, gas, sensor, control, and cooling lines may penetrate the bottom of the outer pressure vessel 5b3a. The outer pressure vessel may comprise a cylindrical and dome housing and a baseplate 5b3b to which the housing seals. The housing may comprise carbon fiber, or stainless steel or steel that is coated. The coating may comprise nickel plating. The housing may be removable for easy access to the internal SunCell components. The baseplate 5b3b may comprise the feed throughs of the at least one of the electrical, gas, sensor, control, and cooling lines. The feed through may be pressure tight and electrically isolating in the case that the lines can electrically short to the housing. In an embodiment, the PV converter cooling system comprises a manifold with branches to the cold plates of the elements such as triangular elements of the dense receiver array. The baseplate feed throughs may comprise i.) ignition bus bar connectors 10a2 connected to the source of electrical power 2 such as one comprising a capacitor bank in housing 90 that may further comprise DC to DC converters powered by the PV converter 26a output, and 10a2 further connected to feed throughs 10a for the ignition bus bars 9 and 10 that penetrate the baseplate at ignition bus bar feed through assembly 10a1 (exemplary ignition voltage and current are about 50 V DC and 50 to 100 A), ii.) EM pump bus bar connectors 5k33 connected to EM power supplies 5k13 and further connected to EM pump feed throughs 5k31 that penetrate the baseplate at EM pump bus bar feed through flange 5k33; the power supplies 5k13 may comprise DC to DC converters powered by the PV converter 26a output (exemplary EM pump voltage and current are about 0.5 to 1 V DC and 100 to 500 A), iii.) inductively coupled heater antenna feed through assemblies 5mc wherein the antenna are powered by inductively couple heater power supply 5m that may comprise DC to DC converters powered by the PV converter 26a output, a transformer, at least one IGBT, and a radio frequency transmitter (exemplary inductively coupled heater frequency, voltage, and current are about 15 kHz, 250 V AC or DC equivalent, and 100 to 300 A), iv.) penetrations 5h1 and 5h3 for the hydrogen gas line 5ua and argon gas line 5ua1, connected to the hydrogen tank 5u and argon tank 5u1, respectively, v.) penetrations for the EM pump coolant lines 31d and 31e connected to heat exchanger coolant line 5k11 wherein the coolant line 5k11 and EM pump cold plate 5k12 of the EM pump heat exchangers 5k1 may each comprise one piece that spans the two heat exchangers 5k1, vi.) penetrations for the PV coolant lines 31b and 31c, and vii.) penetrations for the power flow from the PV converter 26a to the power conditioner 110. The inlet coolant lines such as 31e are connected to the radiator inlet line 31t and outlet coolant lines such as 31d are connected to water pump outlet 31u. In addition to the radiator 31, the generator is cooled by air fan 31j1.

In an embodiment, the PV converter 26a comprises a lower 26a1 and an upper 26a2 hemispherical pieces that fasten together to fit around the blackbody radiator 5b4. The PV cells may each comprise a window on the PV cell. The PV converter may rest on a PV converter support plate 5b81. The support plate may be suspended to avoid a contact with the blackbody radiator or reservoir and may be perforated to allow for gas exchange between the entire outer pressure vessel. The hemisphere such as the lower hemisphere 26a1 may comprise mirrors about a portion of the area such as the bottom portion to reflect light to PV cells of the PV converter. The mirrors may accommodate any mismatch between an ideal geodesic dome to receive light from the blackbody radiator and that which may be formed of the PV elements. The non-ideality may be due to space limitations of fitting PV elements about the blackbody radiator due to the geometry of the PV elements that comprise the geodesic dome.

An exemplary PV converter may comprise a geodesic dome comprised of an array modular triangular elements each comprising a plurality of concentrator PC cells and backing cold plates. The elements may snap together. The exemplary array may comprise a pentakis dodecahedron. The exemplary array may comprise six pentagons and 16 triangles. In an embodiment, the base of the PV converter 26a may comprise reflectors in locations where triangular PV elements of the geodesic PV converter array do not fit. The reflectors may reflect incident light to at least one of another portion of the PV converter and back to the blackbody radiator. In an embodiment, the power from the base of the lower hemisphere 5b41 is at least partially recovered as at least one of light and heat. In an embodiment, the PV converter 26a comprises a collar of PV cells around the base of the lower hemisphere 5b41. In an embodiment, the power is collected as heat by a heat exchanger such as a heat pipe. The heat may be used for cooling. The heat may be supplied to an absorption chiller known by those skilled in the art to achieve the cooling. In an embodiment, the footprint of the cooling system such as at least one of a chiller and a radiator may be reduced by allowing the coolant such as water such as pool-filtered water to undergo a phase change. The phase change may comprise liquid to gas. The phase change may occur within the cold plates that remove heat from the PV cells. The phase change of liquid to gas may occur in microchannels of the microchannel cold plates. The coolant system may comprise a vacuum pump to reduce the pressure in at least one location in the cooling system. The phase change may be assisted by maintaining a reduced pressure in the coolant system. The reduced pressure may be maintained in the condenser section of the cooling system. At least one of the PV converter, the cold plates and the PV cells may be immersed in a coolant that undergoes a phase change such as boiling to increase the heat removal. The coolant may comprise one known in the art such as an inert coolant such as 3M Fluorinert.

The PV cell may be mounted to cold plates. The heat may be removed from the cold plates by coolant conduits or coolant pipes to a cooling manifold. The manifold may comprise a plurality of toroidal pipes circumferential around the PV converter that may be spaced along the vertical or z-axis of the PV converter and comprise the coolant conduits or coolant pipes coming off of it.

The outer pressure vessel may further comprise a cap such as a dome that seals to the section such as the cylindrical section to which the cell components mount. The seal may comprise at least one of a flange, at least one gasket, and fasteners such as clamps and bolts. The cylindrical section may comprise penetrations or feed throughs for lines and cables through the cell wall such as coolant lines and electrical, sensor, and control cables such as electromagnetic pump and inductively coupled heater coolant lines feed through assembly 5kb1 and electromagnetic pump and pressure vessel wall coolant lines feed through assembly 5kb2. The connections inside of the pressure vessel chamber 5b3a1 may comprise flexible connections such as wires and flexible tubing or pipes. The blackbody radiator may comprise a plurality of pieces that seal together to comprise a reaction cell chamber 5b31. The plurality of pieces may comprise a lower hemisphere 5b41and an upper hemisphere 5b42. Other shapes are within the scope of the present disclosure. The two hemispheres may faster together at a seal 5b71. The seal may comprise at least one of a flange, at least one gasket 5b71, and fasteners such as clamps and bolts. The seal may comprise a graphite gasket such as Perma-Foil (Toyo Tanso) and refractory bolts such as graphite or W bolts and nuts wherein the metal bolts and nuts such as W bolts and nuts may further comprise a graphite or Perma-Foil gasket or washer to compensate for the different coefficients of thermal expansion between carbon and the bolt and nut metal such as W. The lower hemisphere of the blackbody radiator 5b41 and the reservoir 5c may be joined. The joining may comprise a sealed flange, threaded joint, welded joint, glued joint, or another joint such as ones of the disclosure or known to those skilled in the art. In an embodiment, the lower hemisphere 5b41 and the reservoir 5c may comprise a single piece. The reservoir may comprise a bottom plate that is attached by a joint such as one of the disclosure or known to those skilled in the art. Alternatively, the bottom plate and the reservoir body may comprise one piece that may further comprise one piece with the lower hemisphere. The reservoir bottom plate may connect to a reservoir support plate 5b8 that provides a connection to the outer pressure vessel 5b3a wall to support the reservoir 5c. The EM pump tube 5k6 and nozzle 5q may penetrate and connect to the reservoir 5c bottom plate with joints such as mechanical fittings such as at least one of Swagelok-type and VCR-type fittings 5k9 and Swagelok-type joint O-ring 5k10. In an embodiment, at least one of the top hemisphere 5b42, the bottom hemisphere 5b42, the reservoir 5c, the bottom plate of the reservoir 5c, and the EM pump tube 5k6, nozzle 5q and connectors 5k9 comprise at least one of W, Mo, and carbon. The carbon tube components such as ones having a bend such as a carbon riser or injector tube and nozzle may be formed by casting. In an embodiment, the top hemisphere 5b42, the bottom hemisphere 5b41, the reservoir 5c, and the bottom plate of the reservoir 5c comprise carbon. In an embodiment, the carbon cell parts such as the reservoir and blackbody radiator may comprise a liner 5b4b. The liner may prevent the underlying surface such as a carbon surface from eroding. The liner may comprise at least one of a refractory material sheet or mesh. The liner may comprise W foil or mesh or WC sheet. The foil may be annealed. In an embodiment, the liner of a graphite cell component such as the inside of the blackbody radiator, the reservoir, and VCR-type fittings may comprise a coating such as pyrolytic graphite, silicon carbide or another coating of the disclosure or known in the art that prevents carbon erosion. The coating may be stabilized at high temperature by applying and maintaining a high gas pressure on the coating.

In embodiments comprising cell component coatings, at least one of the coating and the substrate such as carbon may be selected such that the thermal expansion coefficients match.

In an embodiment, a liquid electrode replaces a solid electrode 8. The electrodes may comprise a liquid and a solid electrode. The liquid electrode may comprise the molten metal stream of the electromagnetic pump injector. The ignition system may comprise an electromagnetic pump that injects molten metal onto the solid electrode to complete the circuit. The completion of the ignition circuit may cause ignition due to current flow from the source of electricity 2. The solid electrode may be electrically isolated from the molten electrode. The electrical isolation may be provided by an electrically insulating coating of the solid electrode at its penetration such as at the reservoir 5c sidewall. The solid electrode may comprise the negative electrode, and the liquid electrode may comprise the positive electrode. The liquid positive electrode may eliminate the possibility of the positive electrode melting due to high heat from the high kinetics at the positive electrode. The solid electrode may comprise wrought W. The electrode may comprise a conductive ceramic such as at least one of WC, HfC, ZrC, and TaC. The conductive ceramic electrode may comprise a coating or covering such as a sleeve or collar.

In an embodiment, a liquid electrode replaces a solid electrode 8. The electrodes may comprise a liquid and a solid electrode. The liquid electrode may comprise the molten metal stream of the electromagnetic pump injector. The ignition system may comprise an electromagnetic pump that injects molten metal onto the solid electrode to complete the circuit. The solid electrode may comprise a refractory material such as one of the disclosure such as W or carbon. The solid electrode may comprise a rod. The solid electrode may be electrically isolated from the penetration into the cell such as the penetration through the top of the reservoir 5c. The electrical isolation may comprise an insulator such as an insulating cover or coating such as one of the disclosure. The insulator may comprise SiC. The electrode may comprise a W or carbon rod that is threaded into a silicon carbide collar that is threaded into the wall of the cell to comprise the cell penetration. The threaded joints may further comprise gaskets such as carbon gaskets to further seal the joint. The gasket may be held tight by at least one threaded nut on the shaft on the electrode assembly comprising the rod electrode and collar. In an embodiment, the solid electrode may penetrate the cell at a lower temperature location such as through the bottom of the reaction cell chamber 5b31. The penetration may comprise a cell collar to move the electrode penetration to a cooler region. The cell collar may be an extension of the wall of the reaction cell chamber 5b31. The electrode may extend from the penetration to a desired region of the reaction cell chamber to cause ignition in that region. The electrode may comprise an electrically insulating sleeve or collar to electrically isolate the electrode except at the end where ignition is desired.

In an embodiment, the SunCell comprises at least two EM pump injectors that produce at least two molten metal streams that intersect to comprise at least dual liquid electrodes. The corresponding reservoirs of the EM pumps may be vertical having nozzles that deviate from the vertical such that the ejected molten metal streams intersect. Each EM pump injector may be connected to a source of electrical power of opposite polarity such that current flows through the metal streams at the point of intersection. The positive terminal of the source of electrical power 2 may be connected to one EM pump injector and the negative terminal may be connected to the other EM pump injector. The ignition electrical connections may comprise ignition electromagnetic pump bus bars 5k2a. The source of electrical power 2 may supply voltage and current to the ignition process while avoiding substantial electrical inference with the EM pump power supplies. The source of electrical power 2 may comprise at least one of a floating voltage power supply and a switching power supply. The electrical connection may be at an electrically conductive component of the EM pump such as at least one of EM pump tube 5k6, heat transfer blocks 5k7, and EM pump bus bars 5k2. Each heat transfer blocks 5k7 may be thermally coupled to the pump tubes 5k6 by conductive paste such as a metal powder such as W or Mo powder. The ignition power may be connected to each set of heat transfer blocks 5k7 such that a good electrical connection of opposite polarity is established between the source of electrical power 2 and each set of heat transfer blocks 5k7. The heat transfer blocks may distribute the heat from the ignition power along the heat transfer blocks.

In an embodiment, the injection tube 5k61 may be bent to place the nozzle 5q in about the center at the top of the reservoir 5c. In an embodiment, the injection tube 5k61 may be angled from the vertical to center the nozzle 5q at the top of the reservoir 5c. The angle may be fixed at the connector at the bottom of the reservoir 5k9. The connector may establish the angle. The connector may comprise a Swagelok 5k9 with a locking nut to the reservoir base and further comprising an angled female connector to a threaded-end injection tube 5k61. The female connector may comprise a bent collar with a female connector or an angled nut so that the angle of the female threads are titled. Alternatively, the reservoir base may be angled to establish the angle of the injector tube.

The reservoir support plate 5b8 may comprise an electrical insulator such as SiC. Alternatively, the support plate may be a metal such as titanium capable of operating at the local temperature wherein electrical isolation is provided by an insulator between the plate and the mounting fixtures and also the reservoir and the plate. The insulators may comprise insulator washers or bushings such as SiC or ceramic ones. The support plate of the dual reservoirs may be one or separate support plates. The reservoir support plate may comprise a longitudinally split plate with insulator collars or bushing such as SiC ones to electrically isolate the reservoirs. The reservoir support plate may comprise a longitudinally split, two piece base plate with slots for SiC gaskets on which the reservoirs are seated.

The intersection point may be any desired such as in a region ranging from in the reservoir to a region at the top of the reaction cell chamber 5b31. The intersection point may be about in the center of the reaction cell chamber. The point of intersection may be controlled by at least one of the pump pressure and the relative bend or tilt of the nozzles from vertical. The reservoirs may be separate and electrically isolated. The molten metal such as molten silver may flow back from the reaction cell chamber to each reservoir to be recycled. The returning silver may be prevented from electrically shorting across the two reservoirs by a metal stream interrupter or splitter to interrupt the continuity of silver that would otherwise bridge the two reservoirs and provide a conductive path. The splitter may comprise an irregular surface comprised of a material that causes silver to bead to interrupt the electrical connection between reservoirs. The splitter may comprise a cutback of each reservoir wall at the region of shorting such that the silver drops over the cut back or drip edge such that the continuity is broken. The splitter may comprise a dome or hemisphere capping the intersection of the two reservoirs wherein the base of the dome or hemisphere comprises the cut back for each reservoir. In an embodiment, the two reservoirs 5c and their bottoms or base plates and the lower hemisphere of the blackbody radiator 5b41 may comprise one piece. The lower hemisphere of the blackbody radiator 5b41 may comprise a raised dome or transverse ridge in the bottom into which the reservoirs are set. In an embodiment, the top of each reservoir may comprise a ring plate or washer that serves as a lip over which returning silver flows. The lip may cause an interruption in the metal stream flowing into each reservoir to break any current path between the reservoirs that may otherwise flow through the returning silver. The top of each reservoir may comprise a machined circumferential groove into which the washer is seated to form the lip or drip edge 5ca as shown in FIGURE 2I83. At least one cell component such as the splitter such as a dome or hemisphere splitter, reservoirs 5c, lower hemisphere of the blackbody radiator 5b41, the raised or domed bottom of the lower hemisphere of the blackbody radiator 5b41, and lip on each reservoir may comprise carbon. In an embodiment, the generator comprises a sensor and ignition controller to reduce at least one of the ignition voltage and current to prevent a short through a cell component such as the lower hemisphere 5b41 from causing damage to the component. The electrical short sensor may comprise a current or voltage sensor that feeds a signal into the ignition controller that controls at least one of the ignition current and voltage.

In an embodiment, the SunCell comprises a reservoir silver level equalization system comprising silver level sensors, EM pump current controllers, and a controller such as a programmable logic controller (PLC) or a computer 100 that receives input from the level sensors and drives the current controllers to maintain about equal metal levels in the reservoirs 5c. In an embodiment, the SunCell comprises a molten metal equalizer to maintain about equal levels such as silver levels in each reservoir 5c. The equalizer may comprise a reservoir level sensor and an EM pump rate controller on each reservoir and a controller to activate each EM pump to maintain about equal levels. The sensor may comprise one based on at least one physical parameter such as radioactivity opacity, resistance or capacitance, thermal emission, temperature gradient, sound such as ultrasound frequency, level-dependent acoustic resonance frequency, impedance, or velocity, optical such as infrared emission, or other sensor known in the art suitable for detecting a parameter indicative of the reservoir molten metal level by a change in the parameter due to a change in the level or a change across the level interface. The level sensor may indicate the activation level of the EM pumps and thereby indicate molten metal flow. The ignition status may be monitored by the monitoring at least one of the ignition current and voltage.

The sensor may comprise a source 5s1 of radioactivity such as a radionuclide such as at least one of americium such as $^{241}$Am that emits a 60 keV gamma ray, $^{133}$Ba, $^{14}$C, $^{109}$Cd, $^{137}$Cs, $^{57}$Co, $^{60}$Co, $^{152}$Eu, $^{55}$Fe, $^{54}$Mn, $^{22}$Na, $^{210}$Pb, $^{210}$Po, $^{90}$Sr, $^{204}$Tl, or $^{65}$Zn. The radionuclide radiation may be collimated. The source 5s1 may comprise an X-ray or gamma ray generator such as a Bremsstrahlung X-ray source such as those at http://www.source1xray.com/index-1.html. The sensor may further comprise at least one radiation detector 5s2 on the opposite side of the reservoir relative to the source of radioactivity. The sensor may further comprise a position scanner or means such as a mechanical means to move at least one of the source of radiation and radiation detector along the vertical reservoir axis while maintaining alignment between source and detector. The movement may be across the molten metal level. The change in the penetrating radiation counts upon crossing the level with the collimated radiation may identify the level. Alternatively, the scanner may cyclically change the relative orientation of the source and detector to scan above and below the metal level in order to detect it. In another embodiment, the sensor may comprise a plurality of sources 5s1 arranged along the vertical axis of each reservoir. The sensor may comprise a plurality of radiation detectors 5s2 on the opposite side of the reservoir relative to the corresponding source. In an embodiment, the radiation detectors may be paired with sources of radiation such that the radiation travels along an axial path from the source through the reservoir to the detector. The source of radiation may be attenuated by the reservoir metal when present such that the radiation detector will record a lower signal as the level rises over the radiation path and will record a higher signal when the level drops below the path. The source may comprise a broad beam or one having a broad angular extent of radiation that traverses the reservoir to a spatially extended detector or extended array of detectors such as an X-ray sensitive linear diode array to provide a measurement of the longitudinal or depth profile of the metal content of the reservoir in the radiation path. An exemplary X-ray sensitive linear diode array (LDA) is X-Scan Imaging Corporation XI8800 LDA. The attenuation of the counts by the metal level may indicate the level. An exemplary source may comprise a spread beam from a radioactive or X-ray tube source, and the detector may comprise an extended scintillation or Geiger counter detector. The detector may comprise at least one of a Geiger counter, a CMOS detector, a scintillator detector, and a scintillator such as sodium iodide or cesium iodide with a photodiode detector. The detector may comprise an ionization detector such a MOSFET detector such as one in a smoke detector. The ionization chamber electrodes may comprise at least one thin foil or wire grid on the radiation incoming side and a counter electrode as is typical of a smoke detector circuit.

In an embodiment, the sensor comprising a source of penetrating radiation such as X-rays, a detector, and a controller further comprises an algorithm to process the intensity of the signal received at the detector from the source into a reservoir molten metal level reading. The sensor may comprise a single, wide-angle emitter and single wide-angle detector. The X-rays or gamma rays may penetrate the inside of the reservoir at an angle to the reservoir transverse plane to increase the path length through the molten metal containing region in flight to the detector. The angle may sample a greater depth of the molten metal to increase the discrimination for determining the depth of the molten metal in the reservoir. The detector signal intensity may be calibrated against known reservoir molten metal levels. As the level rises, the detector intensity signal decreases wherein the level may be determined from the calibration. Exemplary sources are a radioisotope such as americium 241 and an X-ray source such as a Bremsstrahlung device. Exemplary detectors are a Geiger counter and a scintillator and photodiode. The X-ray source may comprise an AmeTek source such as Mini-X and the detector may comprise a NaI or YSO crystal detector. At least one of the radiation source such as the X-ray source and detector may be scanned to get a longitudinal profile of the X-ray attenuation and thereby the metal level. The scanner may comprise a mechanical scanner such as a cam driven scanner. The cam may be turned by a rotating shaft that may be driven by an electric motor. The scanner may comprise a mechanical, pneumatic, hydraulic, piezoelectric, electromagnetic, servomotor-driven or other such scanner or means known by those skilled in the art to reversibly translate or re-orient at least one of the X-ray source and detector to depth profile the metal level. The radioisotope such as americium may be encased in a refractory material such as W, Mo, Ta, Nb, alumina, ZrO, MgO, or another refractory material such as one of the disclosure to permit is it to be placed in close proximity to the reservoir where the temperature is high. At least one of the X-ray source and emitter and detector may be mounted in a housing that may have at least one of the pressure and temperature controlled. The housing may be mounted to the outer pressure vessel 5b3a. The housing may be removal to permit easy removal of the outer pressure vessel 5b3a. The housing may be horizontally removal to permit the vertical removal of the outer pressure vessel 5b3a. The housing may have an inner window for passage of X-rays while maintaining a pressure gradient across the window. The window may comprise carbon fiber. The outer end of the housing may be open to atmosphere or closed off.

The sensor may comprise a series of electrical contacts spaced along the vertical axis of the reservoir and at least one of a conductivity and capacitance meter to measure at least one of the conductivity and capacitance between electrical contacts wherein at least one of the conductivity and capacitance changes measurably across the molten metal level inside the reservoir. The electrical contracts may each comprise a conductive ring. The conductivity meter may comprise an ohmmeter.

The sensor may comprise a series of temperature measurement devices such as thermistors or thermocouples spaced along the vertical axis of the reservoir to measure the temperature between temperature measurement devices wherein the temperature changes measurably across the molten metal level inside the reservoir.

The sensor may comprise an infrared camera. The infrared temperature signature may change across the silver level.

The sensor may comprise a level-dependent acoustic resonance frequency sensor. The reservoir may comprise a cavity. In general, cavities such as musical instruments such as partially filled water bottles each have a resonance frequency such as a fundamental note depending on the water fill level. In an embodiment, the reservoir cavity has a resonance acoustic frequency that is dependent on the molten metal fill level. The frequency may shift as the molten metal level changes and the volume of the gas filled portion versus metal filled portion of the reservoir cavity changes. At least one resonance acoustic wave may be supported in the reservoir with a frequency that is dependent on the fill level. The sensor may be calibrated using the fill level and corresponding frequency at a given operating condition such as reservoir and cell temperatures.

The resonance acoustic sensor may comprise a means to excite an acoustic wave such as a standing acoustic wave and an acoustic frequency analyzer to detect the frequency of the level dependent acoustic wave. The means to excite the sound in the reservoir cavity may comprise a mechanical, pneumatic, hydraulic, piezoelectric, electromagnetic, servomotor-driven source means to reversible deform the wall of the reservoir. The means to at least one of excite and receive the sound in the reservoir cavity may comprise a driven diaphragm. The diaphragm may cause sound to propagate into the reservoir. The diaphragm may comprise a component of the cell such as at least one of an EM pump, the upper hemisphere and the lower hemisphere. The contact between the acoustic excitation source and the component for acoustic excitation may be through a probe such as a refractory material probe that is stable to the temperature of the contact point with the component. The means to excite the sound in the reservoir cavity may comprise a pinger such as a sonar pinger. The frequency analyzer may be a microphone that may receive the resonance frequency response of the reservoir as sound through gas surrounding the component. The means to receive and analyze the sound may comprise a microphone, a transducer, a pressure transducer, a capacitor plate that may be deformable by sound and may have a residual charge, and may comprise other sound analyzers known in the art. In an embodiment, at least one of the means to cause the acoustic excitation of the reservoir and to receive the resonance acoustic frequency may comprise a microphone. The microphone may comprise a frequency analyzer to determine the fill level. At least one of the excitation source and the receiver may be located outside of the outer pressure vessel 5b3a.

In an embodiment, the acoustic sensor comprises a piezoelectric transducer of sound frequency. The sensor may receive sound through a sound guide such as a hollow conduit or a solid conduit. The sound may be exited with a reservoir pinger. The piezoelectric transducer may comprise an automotive knock sensor. The knock senor may be matched to the acoustic resonance characteristics of the reservoir with the silver at the desired level. The resonance characteristics may be determined using an accelerometer. The sound conduit conductor may be directly attached to the reservoir and the transducer. The sound conductor may comprise a refractory material such as tungsten or carbon. The transducer may be located outside of the hot area such as outside of the outer pressure vessel 5b3a. In an exemplary embodiment, a knock sensor is threaded into a hole in the base plate 5b3b of the outer vessel 5b3a connected to the sound conductor that is in contact with the reservoir on the opposite end. The conduit may travel along the vertical axis to avoid interference with the motion of the coil 5f. A notch filter could selectively pass the frequencies appropriate for sensing the silver level in the reservoir. The controller may adjust the EM pump currents to change the silver level to the desired level as determined from the frequencies that are a function of level.

The sensor may comprise an impedance meter that is responsive to the reservoir silver level. The impedance meter may comprise a coil that is responsive to the inductance that is function of the metal level. The coil may comprise the inductively coupled heater coil. The coil may comprise a high-temperature or refractory metal wire such as W or Mo coated with high temperature insulation. The wire pitch of a coil may be such that non-insulated wire does not electrically short. The molten silver may comprise an additive such as a ferromagnetic or paramagnetic metal or compound such as ones known in the art to increase the inductance response. The inductance may be measured by the phase shift between the current and voltage measured on an alternating current waveform driven coil. The frequency may be radio frequency such as in the range of about 5 kHz to 1 MHz.

In an embodiment, the sensor comprises a pressure sensor wherein the pressure increases as the level increases. The pressure increase may be due to the head pressure increase due to the additional weight of the molten metal column in the reservoir 5c.

In an embodiment, the sensor comprises a weight sensor to detect the change in weight of at least one reservoir or the change in the center of gravity between the reservoirs wherein the weight increases as the reservoir molten metal level increases. The differential weight distribution between the reservoirs shifts the measured center of gravity. The weight sensor may be located on the support of the corresponding reservoir.

A spontaneous increase in the molten metal flow rate through the EM pump may occur due to an increased head pressure when the molten metal level is elevated in the corresponding reservoir. The head pressure may contribute to the pump pressure and give rise to a corresponding contribution in the flow rate. In an embodiment, the reservoir height is sufficient to given rise to a sufficient head pressure differential between the extremes comprising the lowest and highest desired molten metal levels to provide a control signal for at least one EM pump to maintain about equal molten metal levels. The EM pump sensor may comprise a flow sensor such as a Lorentz force sensor or other EM pump flow sensor known in the art. The flow rate may change due to the change in head pressure due to a change in level. At least one flow rate parameter such as the individual EM pump flow rate, the combined flow rate, the individual differential flow rate, the combined differential flow rate, the relative flow rates, the rate of change of the individual flow rate, the rate of change of the combined flow rates, the rate of change of the relative flow rates, and other flow rate measurements may be used to sense the molten metal level in at least one reservoir. The sensed flow rate parameter may be compared to at least one EM pump current to determine the control adjustment of at least one EM pump current to maintain the about equal reservoir molten metal levels.

In an embodiment, the generator comprises a circuit control system that senses the molten silver level in each reservoir and adjusts the EM pump current to maintain about matching levels in the reservoirs. The control system may about continuously maintain minimum injection pressures on each EM pump such that the opposing molten silver streams intersect to cause ignition. In an embodiment, the injection system comprises two metal streams in the same plane wherein the streams hit with non-matched EM pump speeds so that the speeds can be variably controlled to maintain matched reservoir silver levels. In an embodiment, the generator may comprise a level sensor on one reservoir rather than comprise two level sensors, one for each reservoir. The total amount of molten metal such as silver is constant in the case of a closed reaction cell chamber 5b31. Thus, by measurement of the level in one reservoir, the level in the other reservoir may be determined. The generator may comprise a circuit control system for the EM pump of one reservoir rather than comprise two circuit control systems, one for the EM pump of each reservoir. The current of the EM pump of the reservoir without a level sensor may be fixed. Alternatively, the EM pump for the reservoir without a level sensor may comprise a circuit control system that is responsive to the level sensed in the reservoir with the level sensor.

In an embodiment, the lower hemisphere 5b41 may comprise mirror-image height-graded channels to direct overflow from one reservoir 5c to the other and further facilitate return of the molten metal such as silver to the reservoirs. In another embodiment, the levels are equalized by a conduit connecting the two reservoirs with a drip edge at each end of the conduit to prevent a short between the two reservoirs. Silver in an over-filled reservoir flows back to the other through the conduit to more equalize the levels.

In an embodiment, the levels between reservoirs 5c remain essentially the same by at least one of active and passive mechanisms. The active mechanism may comprise adjusting the EM pump rate in response to the level measured by the sensor. The passive mechanism may comprise a spontaneous increase in molten metal rate through the EM pump due to an increased head pressure when the molten metal level is elevated in the corresponding reservoir. The head pressure may contribute to a fixed or varied EM pump pressure to maintain the about equal reservoir levels. In an embodiment, the reservoir height is sufficient to given rise to a sufficient head pressure differential between the extremes comprising the lowest and highest desired molten metal levels to maintain the reservoir levels about the same during operation. The maintenance may be achieved due to the differential flow rate due to a differential head pressure corresponding to a differential in molten metal level between the reservoirs.

Each EM pump may be powered by an independent power supply. Alternatively, the plurality of EM pumps such as two EM pumps may be powered by a common power supply through parallel electrical connections. The current of each pump may be controlled by a current regulator of each parallel circuit. Each parallel circuit may comprise isolation diodes to cause each circuit to be electrically isolated. The electrical isolation may prevent shorting of the ignition power between EM pump injectors. In an embodiment, the EM pump coolant lines 5k11 may be common to both EM pump assemblies 5ka. In an embodiment, the nozzle 5q of at least one EM pump injector may be submerged in the molten silver. The submersion may at least partially prevent the nozzle from being degraded by the plasma.

The nozzle 5q may be below the molten metal level to prevent nozzle damage by the plasma. Alternatively, the nozzle section 5k61 of the pump tube may be elevated, and the nozzle may comprise a side hole to cause sideways injection towards the opposite matching nozzle such that the streams intersect. The nozzle may be angled to cause the point of intersection of the dual streams at a desired location. The nozzle may comprise a spherical tube end with a hole at an angular position on the sphere to direct the molten metal to the desired location in the reaction cell chamber 5b31. The nozzle tube section such as a refractory one such as one comprising W or Mo may be vertical. It may comprise a threaded connection to another section of the pump tube. It may comprise a threaded connection to a Swagelok or VCR fitting such as the one at the reservoir penetration 5k9. The nozzle 5q such as a refractory one such as a W or Mo one may have an angled outlet. The nozzle may join the nozzle section 5k61 of the pump tube by a threaded joint. The screwed in nozzle may be held at the desired position that results in intersection of the molten metal streams by a fastener such as a setscrew or lock nut or by a weld. The weld may comprise a laser weld.

In an embodiment, the lower hemisphere of the blackbody radiator 5b41 comprising two reservoirs and two EM pumps that serve as dual liquid electrodes is divided into at least two sections connected by an electrically insulating seal. The seal may comprise flanges, gaskets, and fasteners. The gasket may comprise an electrical insulator. The seal may electrically isolate the two liquid electrodes. In an embodiment, the electrically insulated boundary between the two reservoirs may be achieved by orienting the flange and gasket of the upper 5b41 and lower 5b42 hemispheres vertically rather than horizontally such that the blackbody radiator 5b4 comprises left and right halves joined at the vertical flange. Each half may comprise a vertically sectioned half of the blackbody radiator 5b4 and one reservoir 5c.

In an embodiment, the lower hemisphere of the blackbody radiator 5b41 comprises a separate piece having two reservoirs 5c that are fastened or connected to it. The connections may each comprise a threaded union or joint. Each reservoir 5c may comprise threads on the outer surface at the top that mates with threads of the lower hemisphere 5b41. The threads may be coated with a paste or coating that at least partially electrically isolates each reservoir from the lower hemisphere to further electrically isolate the two reservoirs from each other. The coating may comprise one of the disclosure such as ZrO. In an embodiment, the electrically insulating surface coating may comprise a coating or high-temperature material of the disclosure such as at least one of ZrO, SiC, and functionalized graphite. The insulating surface coating may comprise a ceramic such as a zirconium-based ceramic. An exemplary zirconium oxide coating comprises yttria-stabilized zirconia such as 3 wt% yttria. Another possible zirconium ceramic coating is zirconium diboride ($ZrB_2$). The surface coating may be applied by thermal spray or other techniques known in the art. The coating may comprise an impregnated graphite coating. The coating may be multi-layer. An exemplary multi-layer coating comprises alternating layers of a zirconium oxide and alumina. The functionalized graphite may comprise terminated graphite. The terminated graphite may comprise at least one of H, F, and O terminated graphite. In an embodiment, at least one reservoir may be electrically isolated and at least one another may be in electrical contact with the lower hemisphere of the blackbody radiator 5b41 such that the lower hemisphere may comprise an electrode. The lower hemisphere may comprise the negative electrode. In an embodiment, the connection between each reservoir 5c and the lower hemisphere of the blackbody radiator 5b41 is distal from the reaction cell chamber 5b31 such the electrically insulating coating of the connection is maintained at a temperature below the melting or degradation temperature of the coating such as SiC or ZrO.

The electrical isolation between the reservoirs may be achieved by a spacer that comprises an electrical insulator such as a silicon carbide spacer. The lower hemisphere 5b41 may comprise an extended connection to the spacer that is sufficiently extended from the body of the lower reservoir such that the temperature at the connection is suitably below that of the spacer. The spacer may be connected at the extended connection by threads and may connect to the reservoir 5c. The connection to the reservoir 5c may comprise threads. The spacer may comprise a silicon carbide cylinder that connects to an extension of the lower reservoir 5b41 by threads and connects by threads to the reservoir 5c at the opposite end of the SiC cylinder. The union may be sealed by the threads directly and may further comprise at least one of a sealant and a gasket such as one at the connection between the spacer and the lower hemisphere and one at the connection between the spacer and the reservoir. The gasket may comprise graphite such as Perma-Foil (Toyo Tanso) or Graphoil. The SiC spacer may comprise reaction bonded SiC. The spacer comprising the threads may initially comprise Si that is carbonized to form the threaded SiC spacer. The spacer may be bonded to the lower hemisphere and the upper portion of the corresponding reservoir. The bonding may comprise a chemical bonding. The bonding may comprise SiC. SiC spacers may fuse to carbon components such as the corresponding lower hemisphere and reservoir. The fusing may occur at high temperature. Alternatively, the bonding may comprise an adhesive. The spacer may comprise the drip edge to prevent the returning flow of molten metal from electrically shorting the reservoirs. The drip edge may be machined or cast into the spacer such as the SiC spacer. Alternatively, the spacer may comprise a recess for inserting a drip edge such as an annular disc drip edge. The spacer may comprise other refractory, electrical insulating materials of the disclosure such as zirconium oxide, yttria stabilized zirconium oxide, and MgO. In an embodiment, the ignition system comprises a safety cutoff switch to sense an electrical short between the dual reservoir-injectors and terminate the ignition power to prevent damage to the injectors such as the nozzles 5q. The sensor may comprise a current sensor of the current between the reservoir circuits through the lower hemisphere 5b41.

In an embodiment shown in FIGURES 2I95-2I103, the joints of the cell are reduced in number to avoid the risk of failure. In an embodiment, at least one of the joints between (i) the lower hemisphere 5b41 and the upper hemisphere 5b42, (ii) the lower hemisphere and the non-conducting spacer, and (iii) the non-conducting spacer and the reservoir are eliminated. The joint elimination may be achieved by forming a single piece rather than joined pieces. For example, the lower and upper hemispheres may be formed to comprise a single dome 5b4. At least one joint between (i) the lower hemisphere and the non-conducting spacer and (ii) the non-conducting spacer and the reservoir may be eliminated by forming a single piece. The lower and upper hemispheres may comprise a single piece or two pieces wherein at least one joint between (i) the lower hemisphere and the non-conducting spacer and (ii) the non-conducting spacer and the reservoir may be eliminated by forming a single piece. The single piece may be formed by at least one method of casting, molding, sintering, pressing, 3D printing, electrical discharge machining, laser ablation machining, laser ablation with chemical etching such as laser ignition of carbon-oxygen combustion in an atmosphere comprising oxygen, pneumatic or liquid machining such as water jet machining, chemical or thermal etching, tool machining, and other methods known in the art.

In an embodiment, at least one section of a cell component such as the blackbody radiator 5b4 such as a dome blackbody radiator and at least one reservoir 5c is non-conductive. A circumferential section of at least one of a reservoir 5c and the blackbody radiator comprising a dome 5b4 or the lower hemisphere 5b41 and the upper hemisphere 5b42 may be non-conductive or comprise a non-conductor. The non-conducting section of the blackbody radiator may comprise a plane transverse to the line between the two nozzles of a dual liquid injector embodiment. The non-conductor may be formed by conversion of the material of a section of the component to be non-conductive. The non-conductor may comprise SiC or boron carbide such as $B_4C$. The SiC or $B_4C$ section of the cell component may be formed by reacting a carbon cell component with a silicon source or boron source, respectively. For example, a carbon reservoir may be reacted with at least one of liquid silicon or a silicon polymer such as poly(methylsilyne) to form the silicon carbide section. The polymer may be formed at a desired section of the component. The cell component may be heated. An electrical current may be passed through the component to cause the reaction to form the non-conducting section. The non-conductive section may be formed by other methods known by those skilled in the art. The outside surface of the reservoir 5c may comprise raised circumferential bands to hold molten silicon or boron during the conversion of carbon to silicon carbide or boron carbide in the desired section. The silicon carbide may be formed by reaction bonding. An exemplary method of forming boron carbide from boron and carbon is given in https://www.google.com/patents/US3914371. which is incorporated by reference. The silicon carbide or boron carbide sections may be formed by combustion synthesis as given in https://www3.nd.edu/~amoukasi/combustion synthesis of silicon carbide.pdf and Study Of Silicon Carbide Formation By Liquid Silicon Infiltration By Porous Carbon Structures by Jesse C. Margiotta, which are incorporated by reference.

As shown in FIGURES 2I95-2I103, the dome 54b and reservoirs 5c may comprise a single piece. The reservoir may comprise a non-conducting section near the top close to the dome. The reservoir may connect to a baseplate. The reservoir may sit into a female collar. At least one of the external surfaces of the collar and the end of the reservoir just distal to the top of the collar may be threaded. A nut, tightened on the threads, may join the reservoir and the baseplate. The threads may be in pitched such that rotation of the nut draws the reservoir and baseplate together. The threads may have opposite pitch on opposing pieces with mating nut threads. The reservoir may comprise a slipnut 5k14 at the baseplate 5b8 end wherein the slipnut is tightened on the outer threaded baseplate collar 5k15 to form a tight joint. The outer threaded baseplate collar may further be tapered to receive the reservoir. The slipnut 5k14 fastener may further comprise a gasket 5k14a or an O-ring such as a Graphoil or Perma-Foil (Toyo Tanso) gasket or ceramic rope O-ring to seal the reservoir to the baseplate. The collar may comprise an internal taper to receive the reservoir to compress the gasket with the tightening of the slipnut. The reservoir may comprise an external taper to be received by the collar to compress the gasket with the tightening of the slipnut. The collar may comprise an external taper to apply tension to the O-ring with the tightening of the slipnut. The baseplate may comprise carbon. The baseplate may comprise fasteners to the EM pump tube such as Swageloks with gaskets such as Graphoil or Perma-Foil (Toyo Tanso) gaskets. Alternatively, the baseplate may comprise metal such as stainless steel or a refractory metal. The EM pump tube may be fastened to a metal baseplate by welds. The baseplate metal may be selected to match the thermal expansion of the reservoir and joint parts. The slipnut and gasket may accommodate a differential in expansion of the baseplate and reservoir components. In an embodiment, the reservoir may comprise an insulator such as a ceramic such as SiC or alumina that is joined at the dome 5b4 by a union. The union may comprise a slipnut union such as one of the same type as that between the reservoir and baseplate. The slipnut may comprise at least one of a refractory material such as carbon, SiC, W, Ta, or another refractory metal. The ceramic reservoir may be milled by means such as diamond tool milling to form a precision surface suitable to achieve the slipnut seal.

The joining surfaces that interface the gasket or O-ring may be roughened or grooved to form a high-pressure capable seal. The gasket or O-ring may be further sealed with a sealant. Silicon such as silicon powder or liquid silicon may be added to a gasket or O-ring comprising carbon wherein the reaction to form SiC may occur at elevated temperature to form a chemical bond as a sealant. In addition to the slipnut to create a gasket or O-ring seal, the joined parts may comprise mating threads to prevent the parts from separating due to elevated reaction cell chamber pressure. The union may further comprise a structural support between the blackbody radiator 5b4 and the bottom of the reservoir 5c or baseplate to prevent the union from separating under internal pressure. The structural support may comprise at least one clamp that holds the parts together. Alternatively, the structural support may comprise end-threaded rods with end nuts that bolt the blackbody radiator and the bottom of the reservoir or baseplate together wherein the blackbody radiator and the bottom of the reservoir or baseplate comprise structural anchors for the rods. The rods and nuts may comprise carbon.

In an embodiment, the union may comprise at least one end flange and an O-ring or gasket seal. The union may comprise a slipnut or a clamp. The slipnut may be placed on the joined pieces before the flange is formed. Alternatively, the slipnut may comprise metal such as stainless steel or a refractory metal that is welded together from at least two pieces about at least one of the reservoir and a collar.

The baseplate and EM pump parts may be assembled to comprise the baseplate-EM pump-injector assembly 5kk (FIGURE 2I98). In the case of the dual molten metal injector embodiment, the generator comprises two electrically isolated baseplate-EM pump-injector assemblies. The electrical isolation may be achieved by physical separation of the two assemblies. Alternatively, the two assemblies are electrically isolated by electrical insulation between the assemblies. The nozzles of the dual liquid injector embodiment may be aligned. The reservoirs may be placed upside down or in an inverted position, and the metal to serve as the molten metal may be added to the reaction cell chamber through the open end of at least one reservoir. Then, the baseplate-EM pump-injector assembly may be connected to the reservoirs. The connection may be achieved with the slipnut-collar connector. The nozzles may be run submerged in liquid metal to prevent electrical arc and heating damage.

In an embodiment, a reservoir that is less electrically conductive or insulating such as a SiC or $B_4C$ reservoir may replace the carbon reservoir. The insulating reservoir may comprise at least one of (i) threads at the top to connect to the lower hemisphere 5b41 or a one-piece blackbody radiator dome 5b4 and (ii) a reservoir bottom wherein the reservoir and reservoir bottom are one piece. A SiC reservoir may join to a carbon lower hemisphere by at least one of a gasket and a sealant comprising silicon wherein the silicone may react with carbon to form SiC. Other sealants known in the art may be used as well. The reservoir bottom may comprise threaded penetrations for the EM pump tube fasteners such as Swagelok fasteners. The reservoir bottom may be a separate piece such as a baseplate that may comprise metal. The metal baseplate may comprise welded joints to the EM pump tube at the penetrations. The baseplate may comprise a threaded collar that connects to the mating fastener of the reservoir such as a slipnut. The collar may be tapered to receive the reservoir. The collar taper may be internal. The reservoir end may be tapered. The reservoir taper may be external to be received inside of the collar. The fastener may comprise a gasket such as a Graphoil or Perma-Foil (Toyo Tanso) gasket. The tightening of the slipnut may apply compression to the gasket.

In an embodiment, the blackbody radiator 5b4 may comprise one piece such as a dome or may comprise upper and lower hemispheres, 5b42 and 5b41. The dome 5b4 or lower hemisphere 5b41 may comprise at least one threaded collar at the base. The threads may mate to a reservoir 5c. The union of the collar and the reservoir may comprise external threads on the reservoir screwing into internal threads of the collar or vice versa. The union may further comprise a gasket. Alternatively, the union may comprise a slipnut on the reservoir that screws onto external threads on the collar. The collar may comprise an internal taper at the end that receives the reservoir. The union may comprise a gasket such as a Graphoil or Perma-Foil (Toyo Tanso) gasket, ceramic rope, or other high temperature gasket material known by those skilled in the art. The gasket may seat at the union between the reservoir and the collar. The reservoir may comprise a nonconductor such as SiC, $B_4C$, or alumina. The reservoir may be cast or machined. The dome or lower hemisphere may comprise carbon. The slipnut may comprise a refractory material such as carbon, SiC, W, Ta, or other refractory metal or material such as one of the disclosure. The reservoir may further attach to a baseplate assembly at the EM pump end. The union may comprise the same type as at the blackbody radiator end. The baseplate assembly may comprise (i) the union collar that may be internally or externally threaded to mate with the matching threaded reservoir, (ii) the union collar that may be internally tapered at the end to receive the reservoir and externally threaded to mate with the slipnut, (iii) the reservoir bottom, and (iv) the EM pump tube components wherein the penetrations may be joined by welds. The baseplate assembly and slipnut may comprise stainless steel. In an embodiment, slipnut may be attached to the reservoir at a flange or grove. The grove may be cast or machined into a cylindrical reservoir wall. The reservoir and collar may both comprise a flange on at least one end wherein the union comprises an O-ring or gasket between the mating flanges of the joined pieces and a clamp the goes over the flanges and draws them together when tightened. In the case that the inductively coupled heater is inefficient at heating the reservoir such as ceramic reservoir such as a SiC reservoir, the reservoir may comprise a refractory covering or sleeve capable of efficiently absorbing inductively coupled heater radiation. An exemplary RF absorbing sleeve comprises carbon.

In an embodiment, each reservoir may comprise a heater such as an inductively coupled heater to maintain the reservoir metal such as silver in a molten state for at least startup. The generator may further comprise a heater around the blackbody radiator to prevent the molten metal such as silver from adhering for at least during startup. In an embodiment wherein the blackbody radiator 5b4 heater is not necessary, the blackbody radiator such a 5b41 and 5b42 may comprise a material to which the molten metal such silver does not adhere. The non-adhesion may occur at a temperature that is achieved by heat transfer from the reservoir 5c heaters. The blackbody radiator may comprise carbon and may be heated to a temperature at or above that to which the molten metal such as silver is non-adherent before the EM pumps are activated. In an embodiment, the blackbody radiator is heated by the reservoir heaters during startup. The blackbody radiator 5b4 walls may be sufficiently thick to permit heat transfer from the reservoirs to the blackbody radiator to permit the blackbody radiator to achieve a temperature that is at least one of above the temperature at which the molten metal adheres to the blackbody radiator and greater than the melting point of the molten metal. In an embodiment, the inductively coupled heater (ICH) antenna that is in proximity to a heated cell component such as coiled around the reservoirs 5c is well thermally insulated from the cell component wherein the RF radiation from the ICH penetrates the insulation. The thermal insulation may reduce the heat flow from the cell component to the coolant of the ICH antenna to a desired flow rate.

The system further comprises a startup power/energy source such as a battery such as a lithium ion battery. Alternatively, external power such as grid power may be provided for startup through a connection from an external power source to the generator. The connection may comprise the power output bus bar.

In an embodiment, the blackbody radiator may be heated by an external radiative heater such as at least one heat lamp during startup. The heat lamps may be external to the PV converter 26a and may provide radiation through removal panels in the PV converter. Alternatively, the blackbody radiator may be heated during startup, and the heaters may be removed after the cell is continuously operating and producing enough power to maintain the reaction cell chamber 5b31 at a sufficient temperature to maintain the hydrino reaction. The inductively coupled heater antenna 5f may comprise sections that are movable. The inductively couple heater may comprise at least one coil 5f for each reservoir that may be retractable (FIGURES 2I84-2I103). The coil may comprise a shape or geometry that efficiently applies power to the reservoir. An exemplary shape is a cradle or adjustable clamshell for a cylindrical reservoir. The cradle may apply RF power to the corresponding reservoir during heat up and may be retracted thereafter. The generator may comprise an actuator 5f1 such as at least one of a mechanical such as rack and pinion, screw, linear gear and others known in the art, pneumatic, hydraulic, and electromagnetic system to apply and retract the heater coil. The electromagnetic actuator may comprise a speaker mechanism. The pneumatic and hydraulic may comprise pistons. The heater antenna may comprise a flexible section to permit the retraction. An exemplary flexible antenna is wire braided Teflon tubing such as copper braided. In an embodiment, the outer pressure vessel 5b3a may comprise recessed chambers to house the retracted antenna.

In an embodiment, the heater such as an inductively coupled heater comprises a single retractable coil 5f (FIGURES 2I93-2I94). The coil may be circumferential about at least one of the reservoirs 5c. The heater may comprise a single multi-turn coil about both reservoirs 5c. The heater may comprise a low frequency heater such as a 15 kHz heater. The frequency of the heater may be in at least one range of about 1 kHz to 100 kHz, 1 kHz to 25 kHz, and 1 kHz to 20 kHz. The single coil may be retractable along the vertical axis of the reservoirs. The coil 5f may be moved along the vertical axis by an actuator such as one of the disclosure such as a pneumatic, hydraulic, electromagnetic, mechanical, or servomotor-driven actuator, gear-motor-drive actuator. The coil may be moved with mechanical devices known by those skilled in the art such as a screw, rack and pinion, and piston. The coil may be mounted to the actuator at one or more side or end positions or other convenient position that permits the desired motion while not overloading the actuator with weight. The antenna may be connected to the power supply through a flexible antenna section to permit the motion. In an embodiment, the inductively coupled heater comprises a split unit having the transmitter component separate from the balance of the heater. The separate transmitter component may comprise a capacitor/RF transmitter. The capacitor/RF transmitter may mount on the actuator. The capacitor/RF transmitter may be connected to the balance of the heater by flexible electrical lines and cooling lines in the outer pressure vessel chamber 5b3a1. These lines may penetrate the wall of the outer pressure vessel 5b3a. The capacitor/RF transmitter may be mounted on the actuator connected to the RF antenna wherein the antenna is also mounted on the actuator. The capacitors may be mounted in an enclosure box that may be cooled. The box may comprise a thermal reflective coating. The enclosure box may serve as the mounting fixture. The box may comprise mounting brackets to guide rails and other drive mechanisms. The inductively coupled heater may comprise a parallel resonance model heater that uses a long heater such as one 6 to 12 meter long. A heat exchanger such as cooling plates may be mounted on the capacitor/RF transmitter with cooling provided by the antenna cooling lines. The actuator may be driven by an electric servomotor or gear motor controlled by a controller that may be responsive to temperature profile inputs to achieve a desired temperature profile of the generator components such as the reservoirs 5c, EM pump, lower hemisphere 5b41, and upper hemisphere 5b42.

In an embodiment, the actuator may comprise a drive mechanism such as a servo-motor that is mounted in a recessed chamber such as one in the base of the outer pressure vessel 5b3b. The servo-motor or gear motor may drive a mechanical movement device such as a screw, piston, or rack and pinion. At least one of the coil 5f and the capacitor for the inductively coupled heater may be moved by the movement device wherein the motion may be achieved by moving a guided mount to which the moved components are attached. In an embodiment, the actuator may be at least partially located outside of the outer pressure vessel 5b3a. The actuator may be at least partially located outside of the base of the outer pressure vessel 5b3b. The lifting mechanism may comprise at least one of a pneumatic, hydraulic, electromagnetic, mechanical, or servomotor-driven mechanism. The coil may be moved with mechanical devices known by those skilled in the art such as a screw, rack and pinion, and piston. The actuator may comprise at least one lift piston with piston penetrations that may be sealed in bellows wherein the mechanism to move the pistons vertically may be outside of the pressure vessel 5b3a such as outside of the base of the outer pressure vessel 5b3b. An exemplary actuator of this type comprises that of an MBE/MOCVD system such as a Veeco system comprising exemplary shutter blade bellows. In an embodiment, the accuator may comprise a magnetic coupling mechanism wherein an external magnetic field can cause a mechanical movement inside of the outer pressure vessel 5b3a. The magnetic coupling mechanism may comprise an external motor, an external permanent or electromagnet, an internal permanent or electromagnet and a mechanical movement device. The external motor may cause the rotation of the external magnet. The rotating external magnet may couple to the internal magnet to cause it to rotate. The internal magnet may be connected to the mechanical movement device such as a rack and pinion or screw wherein the rotation causes the device to move at least one of the coil 5f and the capacitor. The actuator may comprise an electronic external source of rotating magnetic field and an internal magnetic coupler. In an embodiment, the external rotating magnetic field coupling to an internal magnet may be achieved electronically. The rotating outer field may be produced by a stator, and the coupling may be to an internal rotor such as the ones of an electric motor. The stator may be an electronically commutating type.

In an embodiment such as shown in FIGURES 2I95-2I103, the motor 93 such as a servomotor or gear motor may drive a mechanical movement device such as a ball screw 94 with bearing 94a, piston, or rack and pinion. The drive connection between the motor 93 and the mechanical movement device such as a ball screw mechanism 94 may comprise a gearbox 92. The motor such as the gear motor and the mechanical movement device such as the rack and pinion or ball and screw 94, and guide rails 92a may be inside or outside of the outer pressure vessel 5b3a such as outside of the base plate of the outer pressure vessel 5b3b and may further comprise a linear bearing 95 and bearing shaft that may be capable of at least one of high-temperature and high-pressure. The linear bearing 95 may comprise a glide material such as Glyon. The bearing shaft may penetrate the outer pressure vessel chamber 5b3a1 such as through the base plate of the outer pressure vessel 5b3b and attach to at least one of the heater coil 5f and the heater coil capacitor box to cause their vertical movement when the shaft is driven vertically in either the upward or downward direction by the mechanical movement device. The linear bearing may be mounted in a recessed chamber such as one in the base of the outer pressure vessel 5b3b. The bearing shaft may penetrate the base plate of the outer pressure vessel 5b3b through a hole. At least one of the coil 5f and the capacitor 90 for the inductively coupled heater may be moved by the movement device wherein the motion may be achieved by moving a guided mount to which the moved components are attached.

In an embodiment, the cell components such as the lower hemisphere 5b41, the upper hemisphere 5b42, the reservoirs 5c and connectors may be capable of being pressurized to the pressure at the operating temperature of the blackbody radiator such as 3000K corresponding to a silver vapor pressure of 10 atm. The blackbody radiator may be covered with a mesh bottle of carbon fiber to maintain the high pressure. The outer pressure vessel chamber 5b3a1 may not be pressurized to balance the pressure in the reaction cell chamber 5b31. The outer pressure vessel may be capable of atmospheric or less than atmospheric pressure. The outer pressure vessel chamber 5b3a1 may be maintained under vacuum to avoid heat transfer to the chamber wall. The actuator may comprise a sealed bearing at the base plate 5b3b of the outer vessel 5b3a for the penetration of a turning or drive shaft driven by an external motor such as a servo or stepper motor controller by a controller such as a computer. The drive system may comprise at least one of a stepper motor, timing belt, tightening pulley, drive pulley or gearbox for increased torque, encoder, and controller. The drive shaft may turn a gear such as a worm gear, a bevel gear, a rack and pinion, a ball screw and nut, a swashplate, or other mechanical means to move the heater coil 5f. The bearing for the drive shaft penetration may be capable of sealing against at least one of vacuum, atmospheric, and elevated pressure. The bearing may be capable of operating at elevated temperature. In an embodiment, the bearing may be offset from the base plate 5b3b by a collar or tube and flange fitting to position the bearing in a lower operating temperature environment.

The generator may comprise a heater system. The heater system may comprise a movable heater, an actuator, temperature sensors such as thermocouples, and a controller to receive the sensor input such as temperatures of the cell components such as those of the upper hemisphere, the lower hemisphere, the reservoir, and the EM pump components. The thermocouples may comprise one in a thermocouple well that provides access to the temperature in the cell interior such as at least one of the temperature inside of the EM pump tube and the temperature inside of the reservoir. The thermocouple may penetrate into at least one of the EM pump tube and reservoir through the wall of the EM pump tube. The thermocouple may measure the temperature of the connector of the EM pump tube and the reservoir such as the Swagelok temperature that may be measured internal to the EM pump tube. The Swagelok temperature may be measured with an external thermocouple that has good thermal contact to the Swagelok surface by means such as a bonding means or thermal conductor such as thermal paste. The controller may at least one of drive the actuator to move the heater coil and control the heater power to control the temperatures of the cell components in desired ranges. The ranges may each be above the melting point of the molten metal and below the melting point or failure point of the cell component. The thermocouples may be capable of high temperature operation such as ones comprised of lead selenide, tantalum, and others known in the art. The thermocouples may be electrically isolated or biased to prevent interference for external power sources such as the inductively coupled heater. The electrical isolation may be achieved with an electrically insulating, high temperature capable sheath such as a ceramic sheath. The thermocouples may be replaced by infrared temperature sensors. The optical sensors may comprise fiber optic temperature sensors.

The thermocouples that measure at least one of the lower and upper hemisphere temperatures may be retractable. The reaction may occur when the measured temperature reaches an upper limit of its operation. The retractor may comprise a mechanical, pneumatic, hydraulic, piezoelectric, electromagnetic, servomotor-driven or other such retractor known by those skilled in the art. The retraction may be within or more distal to the PV converter that is cooled. The temperature of at least one of the lower and upper hemisphere above the operating temperature of the thermocouple may be measured by at least one of an optical sensor such as a pyrometer or spectrometer and by the PV converter response.

The coil may be lowered after cell startup. The base plate 5b3b may have recessed housings for at least one of the coil 5f and the corresponding capacitor bank mounted on the actuator. The coil may comprise a water-cooled radio frequency (RF) antenna. The coil may further serve as a heat exchanger to provide cooling water-cooling. The coil may serve to water cool the electromagnetic pump when its operating temperature becomes too high due to heating from the hydrino reaction in the reaction cell chamber 5b31 wherein heat is conducted to the EM pump along the reservoirs 5c. Cell components such as the EM pump and reservoirs may be insulated to maintain the desired temperature of the component with the heating power lowered or terminated wherein the antenna may also provide cooling to non-insulated components. An exemplary desired temperature is above the melting point of the molten metal injected by the EM pump.

In an embodiment, the inductively coupled heater may extend to the EM pump region to heat the EM pump tube to maintain the molten metal when needed such as during startup. The magnets may comprise an electromagnetic radiation shield to reflect a substantial portion of the heating power from the inductively coupled heater. The shield may comprise a highly electrically conductively covering such as one comprising aluminum or copper. The EM pump magnets may be shielded with an RF reflector to allow the coil 5f to be at the level of the magnets. The avoidance of heating the EM pump magnets may be at least partially achieved by using a notched coil design wherein the notch is at the magnet location. The inductively coupled heater power may be increased as the EM pump power is decreased and vice versa to maintain a stable temperature to avoid rapid changes that cause EM pump and reservoir connector thread failures.

The EM magnets 5k4 may comprise a conduit for internal cooling. The internal cooling system may comprise two concentric water lines. The water lines may comprise an internal cannula that delivers water to the EM-pump-tube end of the magnet and an outer return water line. The water lines may comprise a bend or elbow to permit a vertical exit of the outer pressure vessel 5b3a through the base 5b3b. The two concentric internal water lines of each magnet may be on the center longitudinal axis of the magnets. The water lines may press into a channel in the magnets. The internal cooling system may further comprise heat transfer paste to increase the thermal contact between the cooling lines and the magnets. The internal water-cooling lines may decrease the size of the magnet cooling system to allow the heater coil 5f to move vertically in the region of the EM pump. The magnets may comprise a non-linear geometry to provide axial magnetic field across the pump tube while further providing a compact design. The design may allow passage of the coil 5f over the magnets. The magnets may comprise an L-shape with the L oriented such that the cooling lines may be directed in a desired direction to provide a compact design. The water lines may be directed downwards towards the base of the outer pressure vessel 5b3b or to horizontally such as towards the center between the two reservoirs. Consider a clockwise circular path of the latter case that follows the axes of the four EM pump magnets of two reservoirs. The magnetic poles may be oriented S-N-S-N // S-N-S-N wherein // designates the two sets of EM pump magnets, and the current orientation of one EM pump relative to the other may be reversed. Other compact magnet cooling designs are within the scope of the present disclosure such magnet-fitted coolant jackets and coils.

The EM pump may comprise a RF shield at EM pump magnets 5k4 to prevent the magnets from being heated by the inductively coupled heater coil 5f. The shield can later serve as a heat transfer plate when the RF coil 5f contacts it in cooling mode with RF of the inductively coupled heater off. In another embodiment, the coolant lines may penetrate through the sides of the magnets in a coolant loop through each magnet. Other coolant geometries may be used that are favorable for removing the heat from the magnets while permitting the heater coil to pass by them when moved vertically.

In an embodiment, the heater indirectly heats the pump tube 5k6 by heating the reservoir 5c and the molten metal contained in the reservoir. Heat is transferred to the pump tube such as the section having an applied magnetic field through at least one of the molten metal such a silver, the reservoir wall, and the heat transfer blocks 5k7. The EM pump may further comprise a temperature sensor such as a thermocouple or thermistor. The temperature reading may be input to a control system such as a programmable logic controller and a heater power controller that reads the pump tube temperature and controls the heater to maintain the temperature in a desired range such as above the melting point of the metal and below the melting point of the pump tube such as within 100 °C of the melting point of the molten metal such as in the range of 1000 °C to 1050 °C in the case of molten silver.

Cell components such as at least one of the lower hemisphere 5b41, the upper hemisphere 5b42, the reservoirs 5c, the heat transfer blocks 5k7, and the EM pump tube 5k6 may be insulated. The insulation may be removable following startup. The insulation may be reusable. The insulation may comprise at least one of particles, beads, grains, and flakes such as ones comprising at least one of MgO, CaO, silicon dioxide, alumina, silicates such as mica, and alumina-silicates such as zeolites. The insulation may comprise sand. The insulation may be dried to remove water. The insulation may be held in a vessel 5e1 (FIGURES 2I102 and 2I103) that may be transparent to the radiation from the inductively coupled heater. The vessel may be configured to permit the heater coil 5f to move along the vertical axis. In an exemplary embodiment, the insulation comprising sand is contained in a fiberglass or ceramic vessel 5e1 wherein the heater coil can move vertically along the vessel inside of the coil 5f. The particulate insulation vessel 5e1 may comprise an inlet 5e2 and an outlet 5e3. The insulation may be drained or added back to change the insulation. The insulation may be drain out of the vessel by gravity. The removal may be such that the insulation is removed in order from the top of the reservoir to the bottom of the EM pump tube. The insulation may be removed in order from the closest to the farthest from the power producing hydrino reaction. The removed insulation may be stored in an insulation reservoir. The insulation may be recycled by returning it to the vessel. The insulation may be returned by at least one of mechanical and pneumatic means. The insulation may be mechanically moved by an auger or conveyor belt. The insulation may be pneumatically moved with a blower or suction pump. The insulation may be moved by other means known by those skilled in the art. In an embodiment, the particulate insulation such as sand may be replaced by a heat transfer medium such as copper shot that may be added from a storage container following generator startup to remove heat from at least one of the reservoirs and EM pump. The heat transfer may be to the water-cooled antenna of the inductively coupled heater.

The reaction may self sustain under favorable reaction conditions such as at least one of an elevated cell temperature and plasma temperature. The reaction conditions may support thermolysis at a sufficient rate to maintain the temperature and the hydrino reaction rate. In an embodiment wherein the hydrino reaction becomes self-sustaining, at least one startup power source may be terminated such as at least one of the heater power, the ignition power, and the molten metal pumping power. In an embodiment, the electromagnetic pump may be terminated when the cell temperature is sufficiently elevated to maintain a sufficiently high vapor pressure of the molten metal such that the metal pumping is not required to maintain the desired hydrino reaction rate. The elevated temperature may be above the boiling point of the molten metal. In an exemplary embodiment, the temperature of the walls of the reaction cell chamber comprising the blackbody radiator 5b4 is in the range of about 2900K to 3600K and the molten silver vapor pressure is in the range of about 5 to 50 atm wherein the reaction cell chamber 5b31 serves as a boiler that refluxes molten silver such the EM pump power may be eliminated. In an embodiment, the molten metal vapor pressure is sufficiently high such that the metal vapor serves as a conductive matrix to eliminate the need for the arc plasma and thereby the need for the ignition current. In an embodiment, the hydrino reaction provides the heat to maintain the cell components such as the reservoirs 5c, the lower hemisphere 5b41, and upper hemisphere 5b42 at a desired elevated temperature such that the heater power may be removed. The desired temperature may be above the melting point of the molten metal. In an embodiment, the cell startup may be achieved with at least one removable power source such as at least one of removable heater, ignition, and EM pump power sources. The cell may be operated in continuous operation once started. In an embodiment, the startup may be achieved with an energy storage device such as at least one of battery and capacitor such as supercapacitor devices. The devices may be charged by the electrical power output of the generator or by an independent power source. In an embodiment, the generator may be started up at the factory using independent startup power supplies and shipped in continuous operation absence the startup power supplies such as at least one of heater, ignition, and pumping power supplies.

In exemplary embodiments, the SunCell comprises molten aluminum (M.P. = 660 °C, B.P. = 2470 °C) or molten silver (M.P. = 962 °C, B.P. = 2162 °C) in carbon reservoirs injected into a reaction cell chamber 5b31 comprising carbon lower 5b41 and carbon upper 5b42 hemispheres by dual EM pumps comprising at least one of stainless steel such as Hayes 230, Ti, Nb, W, V and Zr fasteners such as Swageloks 5k9 and at least one of stainless steel such as Haynes 230 or SS 316, Ti, Nb, W, V and Zr EM pump tube, carbon or iron heat transfer blocks 5k7, at least one of a stainless steel, Ti, Nb, W, V and Zr initial section of nozzle pump tube with a tack welded W end nozzle section 5k61 of the pump tube and a W nozzle. Each EM pump tube may further comprise an ignition source bus bar for connection to a terminal of the source of electrical power 2 comprising the same metal as the EM pump tube. In an embodiment, the ignition system may further comprise a circuit comprising a switch that when closed shorts the ignition source EM pump tube bus bars to heat the pump tube during startup. The switch in the open position during cell operation causes the current to flow through the crossed molten metal streams. Carbon heat transfer blocks may comprise heat transferring carbon powder to line the indentation for the EM pump tube. The reservoirs may be made longer to reduce the temperature at the EM pump components such as fasteners 5k9 and EM pump tube 5k6. The oxide source of HOH catalyst with added source of hydrogen such as argon-$H_2$ (3%) may comprise at least one of $LiVO_3$, $Al_2O_3$, and $NaAlO_2$. HOH may form in the ignition plasma. In an embodiment, cell components in contact with molten aluminum may comprise a ceramic such as SiC or carbon. The reservoir and EM pump tube and nozzle may comprise carbon. The component may comprise a metal such a stainless steel that is coated with a protective coating such as a ceramic. Exemplary ceramic coatings are those of the disclosure such as graphite, aluminosilicate refractories, AlN, $Al_2O_3$, $Si_3N_4$, and sialons. In an embodiment, the cell component in contact with molten aluminum may comprise at least one corrosion resistant material such as Nb-30Ti-20W alloy, Ti, Nb, W, V, Zr, and a ceramic such as graphite, aluminosilicate refractories, AlN, $Al_2O_3$, $Si_3N_4$, and sialons.

In an embodiment, the splitter comprises an EM pump that may be located at the region of the joining of the two reservoirs. The EM pump may comprise at least one of electromagnets and permanent magnets. The polarity of at least one of the current on the EM pump bus bars and the electromagnet current may be reversed periodically to direct the returning silver to one and then the other reservoir to avoid an electrical short between the reservoirs. In an embodiment, the ignition circuit comprises an electrical diode to force the current in one direction through the dual EM pump injector liquid electrodes.

In an embodiment, the electromagnetic pump tube section that is connected to the nozzle 5q, the nozzle section 5k61, may comprise a refractory material such as tungsten. The nozzle section may be extendible such as telescoping. The telescoping section may be extended by the pressure of the internal molten metal exerted by the EM pump. The telescoping nozzle may have a track to prevent it from rotating as it extends. The track could comprise a crease. The extension of the tube by the molten metal serves to permit the nozzle section to be heated before molten metal flows through this tube section. The preheating may avoid the solidification and clogging of the nozzle section. In an embodiment, the nozzle section 5k61 is heated by at least one of conduction, convection, radiation, and metal vapor from the components heated by the inductively coupled heater such as the reservoir and the metal contained therein such as silver. The thickness of the nozzle section may be sufficient to provide adequate heat transfer from the heated components to the nozzle section to raise its temperature above the melting point of the metal such as silver before the EM pump is activated to present solidification and clogging of the nozzle section. In an embodiment, the each reservoir 5c may comprise an independent inductively coupled heater coil 5f and radio frequency (RF) power supply. Alternatively, the inductively coupled heater coil 5f may comprise a section for each reservoir 5c and may be powered by a single radio frequency power supply 5m.

In an embodiment, the cell components comprised of carbon are coated with a coating such as a carbon coating capable of maintaining about zero vapor pressure at the operating temperature of the cell component. An exemplary operating temperature of the blackbody radiator is 3000K. In an embodiment, the coating to suppress sublimation applied to the surface such as the outside surface of a carbon cell component such as the blackbody radiator 5b4 or reservoir 5c comprises pyrolytic graphite, a Pyrograph coating (Toyo Tanso), graphitized coating (Poco/Entegris), silicon carbide, TaC or another coating of the disclosure or known in the art that suppresses sublimation. The coating may be stabilized at high temperature by applying and maintaining a high gas pressure on the coating. In an embodiment, the EM pump tube 5k6, current bus bar 5k2, heat transfer blocks 5k7, nozzle 5q and fittings 5k9 may comprise at least one of Mo and W. In an embodiment, the Swagelok-type and VCR-type fittings 5k9 may comprise carbon wherein the reservoir may comprise carbon. Carbon fittings may comprise a liner such as a refractory metal mesh or foil such as W ones. In an embodiment, the electrodes penetrate the pressure vessel wall at feed throughs 10a and at least one of the lower hemisphere 5b41 of the blackbody radiator 5b4 and the reservoir 5c. The electrodes 8 may be locked in place with an electrode O-ring lock nut 8a1. The electrode bus bars 9 and 10 may be connected to the source of electrical power through bus bar current collectors 9a. The electrodes penetrations may be coated with an electrical insulator such as ZrO. Since C has low conductivity, the electrodes may be sealed directly at the penetration such as ones at the reservoir wall with a sealant such as graphite paste. Alternatively, the electrodes may be sealed at the penetrations with VCR or Swagelok feed throughs. The mechanical joining of parts with different thermal coefficients of expansion such as at least one of the VCR-type or Swage-like type fittings between the EM pump tube and the base of the reservoir 5c and the electrodes and the reservoir wall may comprise a compressible seal such as a carbon gasket or washer such as a Perma-Foil or Graphoil gasket or washer.

In an exemplary embodiment, the reaction cell chamber power is 400 kW, the operating temperature of the carbon blackbody radiator having a 6 inch diameter is 3000 K, the pumping rate of the EM pump is about 10 cc/s, the inductively coupled heater power to melt the silver is about 3 kW, the ignition power is about 3 kW, the EM pump power is about 500 W, the reaction cell gases comprise Ag vapor and argon/$H_2$(3%), the outer chamber gas comprises argon/$H_2$(3%), and the reaction cell and outer chamber pressures are each about 10 atm.

The outer pressure vessel may be pressurized to balance the pressure of the reaction cell chamber 5b31 wherein the latter pressure increases with temperature due to the vaporization of the matrix metal such as silver. The pressure vessel may be initially pressurized, or the pressure may be increased as the reaction cell chamber temperature increases. Hydrogen may be added to the pressure vessel to permeate into the reaction cell chamber. In an embodiment wherein the blackbody radiation is isotropic carbon, the dome is at least partially permeable to gases such as at least one of hydrogen and an inert gas such as argon to balance the pressure and supply hydrogen to the reaction. In an embodiment, the power may be controlled by controlling the hydrogen flow to the hydrino reaction in the reaction cell chamber 5b31. The hydrino reaction may be stopped by purging or evacuating the hydrogen. The purging may be achieved by flowing an inert gas such as argon gas. The SunCell may comprise a high-pressure water electrolyzer such as one comprising a proton exchange membrane (PEM) electrolyzer having water under high pressure to provide high-pressure hydrogen. The PEM may serve as at least one of the separator and salt bridge of the anode and cathode compartments to allow for hydrogen to be produced at the cathode and oxygen at the anode as separate gases. The hydrogen may be produced at high pressure and may be supplied to the reaction cell chamber 5b31 directly or by permeation such as permeation through the blackbody radiator. The SunCell may comprise a hydrogen gas line from the cathode compartment to the point of delivery of the hydrogen gas to the cell. The SunCell may comprise an oxygen gas line from the anode compartment to the point of delivery of the oxygen gas to a storage vessel or a vent.

The pressure of the reaction chamber 5b31 may be measured by measuring the extension or displacement of at least one cell component due to the internal pressure. The extension or displacement due to internal pressure may be calibrated at a given reaction chamber 5b31 temperature by measuring at least one of these parameters as a function of the internal pressure caused by a non-condensable gas at the given reaction chamber temperature.

In an embodiment, the coating of a graphite cell component such as a surface of the blackbody radiator, the reservoir, and VCR-type fittings may comprise pyrolytic graphite, silicon carbide, or another coating of the disclosure or known in the art that is resistant to reaction with hydrogen. The coating may be stabilized at high temperature by applying and maintaining a high gas pressure on the coating.

In an embodiment, the excess water in the reaction cell chamber gas such as argon is removed. The water partial pressure may be maintained at a level that at least one of maintains an optimal hydrino reaction rate and avoids or reduces corrosion of at least one cell component such as the dome 5b4 such as a tungsten dome. The water may be removed with a getter. In an embodiment, the generator comprises a condenser to remove at least one of the molten metal vapor such as silver vapor and water vapor, a water getter such as a drying chamber comprising a hydroscopic material or desiccant such as zeolite or an alkaline earth oxide, a pump to circulate at least one reaction cell chamber gas and lines and valves to control the gas flow. The gas may flow from the reaction cell chamber 5b31 through the condenser to remove metal vapor that may drip or be pumped back into the reaction cell chamber as a liquid, then through the drying chamber to remove the water vapor and back to the reaction cell chamber. The gas may return to the reaction cell chamber through a port such as one at the cone reservoir. The gas recirculation flow rate through the drying chamber may be controlled to maintain the reaction chamber gas at a desired partial pressure of $H_2O$. An exemplary reaction cell chamber water pressure is in the range of about 0.1 Torr to 5 Torr. The desiccant may be regenerated. The regeneration may be achieved by at least one of chemical regeneration such as by hydrogen reduction of a metal getter such as by reduction of CuO to Cu and electrolysis of $Al_2O_3$ to Al, and heating. The heating may cause the water to be driven off as vapor. The driven off water vapor may be vented to the outside atmosphere or returned to the water bubbler. In the heating case, the desiccant such as hydrated zeolite or an alkaline earth hydroxide may be heated to the anhydrous form. The generator may comprise a plurality of drying chambers, heaters, and valves and gas lines. At least one drying chamber may be connected to dry and recirculate reaction cell chamber gas while at least one other drying chamber is undergoing regeneration. The generator may comprise a control system that switches the valves to the proper gas connections with the reaction cell chamber and outside of the chamber to control the recirculation and regeneration.

The generator may further comprise lines and valves and a water source such as a water bubbler and a port to inject water into the molten metal. The bubbler may comprise a heater and a controller to control the water pressure. The injection port may be in at least one of the reservoir and pump tube such as the outlet portion of the pump tube. In an embodiment, the injector may be at or near the electrode gap 8g. The gas may flow from the drying chamber may be at least partially diverted to the bubbler wherein it bubbles through the water therein. The gas may acquire a desired partial pressure of water vapor depending on the bubbler temperature and the gas flow rate. A controller may control the gas pump and valves to control the gas flow rate. Alternatively, the generator may comprise an independent steam injector of the disclosure.

In an embodiment, a negative (reducing) potential is applied to cell components such as at least one of the cone or dome, reservoir, cone reservoir, and pump tube that may undergo oxidation from the reaction of the material of the component with at least one of $H_2O$ and oxygen. The generator may comprise a voltage source at least two electrical leads and a counter electrode to apply the negative voltage to the cell component. In an embodiment, the positive counter electrode may be in contact with the plasma. In an embodiment, the generator comprises an external power source such as a DC power source to apply a voltage to at least one cell component to prevent the very elevated temperature cell component from oxidation by at least one of steam and oxygen. The oxygen can be scavenged with a hydrogen atmosphere. The cell may comprise an electrical break comprising a thermal and electrical insulator such as SiC between the dome and the silver reservoir. The metal melt such as silver in the reservoir may serve as the anode, and the cell component such as the dome 5b4 may serve as the cathode biased negatively. Alternatively, the anode may comprise at least one of the bus bars, the electrodes, and an independent electrode inside the reaction cell chamber 5b31 in contact with the plasma therein. In an embodiment, the other power sources to the generator such as the electromagnetic pump power supply and the source of electrical power to the electrodes may be electrically floated such that the negative voltage may be applied to the cell component. The cell component may comprise a surface coating to protect it against at least one of temperature, wear, and reaction with at least one of water and oxygen. The surface coating may comprise one of the disclosure such as a carbide such as hafnium carbide or tantalum carbide. In an embodiment, the component comprising a refractory ceramic such as at least one of SiC, HfC, TaC, and WC is formed by high-energy milling and hot pressing. The component may be formed by at least one of casting, powder sintering, and milling.

In an embodiment, the water-cooled bus bars may comprise the magnet(s) of the electromagnetic pump. The magnets of the electromagnetic pump may be incorporated into the water-cooled bus bars such that the bus bar cooling system may also cool the magnet(s). The magnets may each comprise a ferromagnetic yolk in closer proximity to the electrodes and may further comprise a gap between the magnet and yoke to reduce the heating of the magnet. The yoke may be cooled as well. The yoke may have a higher Curie temperature than the magnet such that it may be operated at a higher temperature to reduce the cooling load. The electromagnetic pump may comprise one magnetic circuit comprising a magnet and optionally a gap and yoke.

In an alternative embodiment to water injection, at least one of a hydrogen and oxygen mixture such as one from electrolysis of water, and both hydrogen gas and oxygen gas are injected from sources wherein the gases react to form water in the melt. In an embodiment, the melt comprises a hydrogen and oxygen recombiner catalyst such as copper to catalyze the reaction of the gases to water. The autoignition temperature of hydrogen is 536 °C. In an embodiment, the injection of both gases into the melt such as molten silver will result in $H_2O$ being injected into the melt. A source of a stoichiometric mixture of $H_2$ and $O_2$ is the electrolysis of $H_2O$. In an embodiment, the gas line may comprise a flame arrestor to prevent ignition from propagating back up the gas line. In an embodiment, at least one of the $H_2$ and $O_2$ gas are delivered through concentric tubes (tube-in-tube) wherein one tube carries one gas, and the other carries the other gas. The tube-in-tube may penetrate the pump tube 5k6 to inject the gases into the flowing metal melt to form $H_2O$. Alternatively, the injection may occur in at least one of the reservoir 5c and cone reservoir 5b. In an embodiment, at least one of the $H_2$ and $O_2$ gas are delivered through a membrane permeable to the corresponding gas. In an exemplary embodiment, hydrogen may permeate through a Pd or Pd-Ag membrane. Oxygen may permeate through an oxide conductor. The supply of at least one of $H_2$ and $O_2$ may be controlled by at least one of a voltage and a current. The oxygen may be supplied by following a current through an oxide electrode such as one used in a solid oxide fuel cell. Excess $H_2$ may be added to the gas mixture to prevent cell corrosion and to react with the oxygen product of the hydrino reaction of $H_2O$ to hydrino and oxygen. The gas flow such as hydrogen gas flow and oxygen gas flow and hydrogen-oxygen mixture gas flow may be controlled by a flow control system such as one comprising at least one of an $H_2O$ electrolyzer, gas separator, gas supply tanks, pressure gauges, valves, flow meters, computer 100, and a controller. To prevent $O_2$ corrosion, the $O_2$ line may comprise a non-corrosive material such as alumina. The gases may be premixed and auto-ignited in a delivery tube before flowing into the melt. Water vapor and optimally hydrogen may be injected with a tube-in-tube design. The water vapor may be dry. The dry water vapor may be formed by a steam generator comprising a steam-water droplet separator such as a water vapor permeable membrane such as a frit or membrane that blocks water droplets in the flow stream. The membrane may comprise steam-permeable Teflon. The frit may comprise a powered ceramic such as powdered alumina. The membrane may comprise a sheet with perforations such as a metal screen or a metal plate with perforations such as one comprised of nickel. The preformations may be drilled such as water jet or laser drilled. The frit may comprise a plug of metal mesh, metal foam, metal screen, or sintered metal. The metal may comprise Ni. The gas nozzle such as the water vapor nozzle may have a small opening to prevent molten silver from entering. The nozzle may comprise a material resistant to silver adherence such as at least one of Mo, C, W, graphene and other Ag non-adherent materials. $CO_2$ from the reaction of carbon with oxygen may be scavenging with a $CO_2$ sequestration compound known in the art.

In an embodiment, cell components that contact injected water vapor such as at least one of the cone reservoir, the reservoir, the inner surface of the pump tube, the outer surface of the pump tube, the water injection tube, the hydrogen injection tube, the frit, and the nozzle comprise or are coated with an anticorrosive coating such as one that is unfavorable to react with water such as Ni. The anticorrosive coating may be applied by at least one of electroplating such as electroless electroplating such as electroless Ni plating, vapor deposition, cladding, other known in the art, and as a liner.

In an embodiment shown in FIGURES 2I24-2I43, at least one of the water and hydrogen may be supplied to the hydrino reaction by at least one of injection into the pump tube 5k6 such as at the nozzle 5q end and injection into the reaction cell chamber 5b31 by corresponding injectors 5z1. The generator may comprise a steam line 5g that may penetrate at least one of the lower chamber 5b5, and the cell chamber 5b3 and reaction cell chamber 5b31 through a steam inlet line feed-through 5g1 or a common hydrogen and steam inlet line feed-through 5h2. The generator may comprise a hydrogen line 5h that may penetrate at least one of the lower chamber 5b5, and the cell chamber 5b3 and reaction cell chamber 5b31 through a hydrogen inlet line feed-through 5h1 or a common hydrogen and steam inlet line feed-through 5h2. Each of the hydrogen and steam may comprise separate lines or they may combine into a hydrogen steam manifold 5y that may penetrate at least one of the lower cell chamber 5b5 and cell chamber 5b3 and reaction cell chamber 5b31 through a common hydrogen and steam inlet line feed-through 5h2. The injection may be controlled by valves such as flow or pressure valves 5z2 such as solenoid valves.

The generator may comprise at least on of a fan and a pump to recirculate the reaction chamber gas. The cell gas may comprise a mixture of at least two of $H_2O$, hydrogen, oxygen, and an inert gas such as argon. The recirculated cell gas may be bubbled through water to resupply water. The water bubbler may comprise a means to control its temperature such as at least one of a heater, a chiller, and a temperature controller. At least one of the bubbling rate and temperature may be dynamically adjusted in response to the hydrino reaction rate to optimize the reaction rate. The flow rate may be increased when the water vapor pressure is below the desired pressure and decreased or stopped when it is above the desired pressure. Different bubbler temperatures and flow rates may be applied to alter the water partial pressure and replenish rate. The temperature may alter the kinetics of establishing an equilibrium vapor pressure as well as the vapor pressure. In another embodiment, the excess water may be removed by circulating the reaction cell gases such as a mixture of $H_2O$, hydrogen, oxygen, and an inert gas such as argon through at least one of a condenser and a desiccant. The gas circulation may be achieved with a vacuum pump or a fan. The desiccant may be regenerated by means such as heating and pumping. An exemplary commercial system is made by ZeoTech (http://zeo-tech.de/index.php/en/). Oxygen may be removed with a getter such a metal that form an oxide as copper that can be regenerated by means such as hydrogen reduction. Oxygen may be removed by addition of hydrogen. The source may be the electrolysis of water. The hydrogen may flow through a hollow electrolysis cathode into the reaction cell chamber. Other exemplary oxygen scavengers comprise sodium sulfite ($Na_2SO_3$), hydrazine ($N_2H_4$), 1,3-diaminourea (carbohy-drazide), diethylhydroxylamine (DEHA), nitrilotriacetic acid (NTA), ethylenediaminetetraacetic acid (EDTA), and hydroquinone. Oxygen can also be removed by reaction with supplied excess hydrogen. The excess water product may be removed by means of the disclosure.

The generator may comprise a controller to control the power output by controlling the hydrino reaction parameters. In addition to optimization of the water vapor pressure, the corresponding molten metal injection rate and mass of corresponding aliquot or shot, injection current, electrode design such as one that produces a near point contact such as rounded or inverted back-to-back V shapes, and firing rate or frequency are correspondingly optimized to maximize the power. Exemplary optimal parameters are about 80 mg molten Ag shot, circuit voltage of 2 V with a 1 V electrode voltage drop, 8 to 10 kA peak current pulse, 1 % water absorbed in the Ag shot, 1 Torr ambient water with 759 Torr argon or other noble gas, and low electrode and bus bar temperature such as below 500 °C to minimize the resistance and maximize the current pulse. In an embodiment, at least one of the ignition system and injection system such as the source of electricity, the bus bars, the electrodes, the electromagnetic pump, and the nozzle may be designed to produce a natural frequency of the circuit and mechanics of injection and ignition to achieve the desired ignition rate. In an exemplary embodiment, varying the circuit impedance varies the natural frequency of the ignition system. The circuit impedance may be adjusted by means known in the art such as by adjusting at least one of resistance, capacitance, and inductance. In an exemplary embodiment, the mechanical frequency may be adjusted by at least one of adjusting the rate of metal injection, the resistance to injection flow, and rate that ignited metal is cleared from the electrodes. The rates may be adjusted by adjusting the size, shape, and gap of the electrodes. The desired ignition rate may be in at least one range of about 10 Hz to 10,000 Hz, 100 Hz to 5000 Hz, and 500 Hz to 1000 Hz.

In an embodiment, a plurality of generators may be ganged to provide a desired power output. A plurality of generators may be interconnected in at least one of series and parallel to achieve the desired power output. The system of ganged generators may comprise a controller to control at least one of series and parallel connections between the generators to control at least one of the power, voltage, and current of the superimposed output electricity of the plurality of ganged generators. A plurality of generators may each comprise a power controller to control the power output. The power controller may control the hydrino reaction parameters to control the generator power output. Each generator may comprise switches between at least one of PV cells or groups of PV cells of the PV converter 26a and further comprise a controller to control at least one of series and parallel connections between PV cells or groups of PV cells. The controller may switch the interconnections to achieve at least one of a desired voltage, current, and electrical power output from the PV converter. The central controller of the ganged plurality of generators may control at least one of the series and parallel interconnections between ganged generators, hydrino reaction parameters of at least on generator, and connections between PV cells or groups of PV cells of at least one PV converter of at least one generators of the plurality of ganged generators. The central controller may control at least one of the generator and PV connections and hydrino reaction parameters directly or through the individual generator controllers. The power output may comprise DC or AC power. Each generator may comprise a DC to AC inverter such as an inverter. Alternatively, the DC power of a plurality of generators may be combined through the connections between generators and converted to AC power using a DC to AC converter such as an inverter capable of converting the superimposed DC power. Exemplary output voltages of at least one of the PV converter and ganged generator systems is about 380V DC or 780V DC. The about 380V output may be converted into two phase AC. The about 760V output may be converted into three phase AC. The AC power may be converted to another desirable voltage such as about 120 V, 240 V, or 480 V. The AC voltage may be transformed using a transformer. In an embodiment, DC voltage may be changed to another DC voltage using an IGBT. In an embodiment, at least one IGBT of the inverter may also be used as the IGBT of the inductively coupled heater 5m.

In an embodiment, the electrodes may be cooled by being in contact with an extension of the cooled bus bars that may contact the back of the electrodes. In an embodiment, the electrode cooling system may comprise a centered tube-in-tube water cannula that extends to the end of the electrodes wherein the coolant such as at least one of water and ethylene glycol flows into the inner cannula, and the return flow is through the outer circumferential tube. The cannula may comprise holes along its length to the electrode end to allow some water to bypass traveling to the end. The electrode cooling system may be housed in a groove in back-to-back electrode plates such a w plates. In an embodiment, the electrode may comprise a cooling system such as a liquid cooling system such as one comprising a coolant such as water or a molten material such as metal or salt. In another embodiment, the electrodes may comprise a plurality of solid materials wherein one may reversibly melt in response to a power load surge. The power load surge may be due to an energetic even from the hydrino process. The outer surface of the electrode may comprise a material of the highest melting point of the plurality of materials, and the inside may comprise a material of a lower melting point such that heat from a power surge is transferred to the interior to cause the inner material to melt. The heat of fusion of the inner material absorbs some of the heat of the surge to prevent the outer surface from melting. Then, the heat may be dissipated on a longer time scale than that of the surge as the inner material cools and solidifies.

In an embodiment, excess water reaction cell chamber water from local injection such as at the electrodes may be removed as oxygen gas and optionally as hydrogen gas following water decomposition in the cell by means such as thermolysis and plasma decomposition. The hydrogen may be recovered from the plasma and recirculated wherein the oxygen may be pumped off through a selective membrane. The hydrogen may be reacted with oxygen from the atmosphere to recirculate the hydrogen. In the case that the atmosphere in the reaction cell chamber contains substantial amounts of oxygen, the cell 26 components may comprise a material resistant to oxidation such as a ceramic such as MgO or $ZrO_2$. In an embodiment, the generator comprises a condenser or cold trap. The excess water may be removed by a condenser that first removes silver vapor as liquid silver that may flow from the condenser back into the reaction cell chamber. The water may be condensed at a second colder stage of the condenser or cold trap. The condensed water may be removed through a selective valve such as a water valve or pump to prevent back flow of atmospheric gases into the cell. The pump may comprise at least one of a gas pump and a liquid pump. The liquid pump may pump liquid water against atmospheric pressure. In an embodiment, the reaction cell chamber 5b31 comprises a gas such as a noble gas such as argon. The chamber pressure may be less than, equal to, or greater than atmospheric. The chamber gas may be recirculated from the chamber 5b31 through the condenser and back to the chamber wherein the metal vapor and the excess water vapor may be condensed in the condenser. The metal vapor may flow to the cone reservoir 5b. The condensed water may be flowed or pumped from the cell to the water source such as 5v or external to the generator.

In an embodiment, excess hydrogen is supplied to at least one of the cell chamber 5b3 and the reaction cell chamber 5b31 to scavenge oxygen in the reaction cell chamber by the combustion of the hydrogen to water. In an embodiment, the generator comprises a selective oxygen vent to release product oxygen from the reaction cell chamber. In this embodiment, the pumping may be reduced.

In an embodiment, the source of HOH catalyst and source of H comprises water that is injected into the electrodes. A high current is applied to cause ignition into a brilliant light emitting plasma. A source of water may comprise bound water. A solid fuel that is injected into the electrodes may comprise water and a highly conductive matrix such as a molten metal such as at least one of silver, copper, and silver-copper alloy. The solid fuel may comprise a compound that comprises the bound water. The bound-water compound that may be supplied to the ignition may comprise a hydrate such as $BaI_2$ $2H_2O$ having a decomposition temperature of 740 °C. The compound that may comprise bound water may be miscible with the molten metal such as silver. The miscible compound may comprise flux such as at least one of hydrated $Na_2CO_3$, KCl, carbon, borax such as $Na_2B4O_7\cdot 10H_2O$, calcium oxide, and PbS. The bound water compound may be stable to water loss up to the melting point of the molten metals. For example, the bound water may be stable to over 1000 °C, and loses the water at the in the ignition event. The compound comprising bound water may comprise oxygen. In the case that the oxygen is released, the molten metal may comprise silver since silver does not form a stable oxide at its melting point. The compound comprising bound water may comprise hydroxide such as at least one of an alkali, alkaline earth, transition metal, inner transition metal, rare earth, Group 13, Group 14, Group 15, and Group 16 hydroxide, and a mineral such as talc, a mineral composed of hydrated magnesium silicate with the chemical formula $H_2Mg_3(SiO_3)_4$ or $Mg_3Si_4O_{10}(OH)_2$, and muscovite or mica, a phyllosilicate mineral of aluminum and potassium with formula $KAl_2(AlSi_3O_{10})(F,OH)_2$, or $(KF)_2(Al_2O_3)_3(SiO_2)6(H_2O)$. In an embodiment, the dehydrated compound serves as a desiccant to maintain a low reaction cell chamber pressure. For example, barium hydroxide decomposes to barium oxide and $H_2O$ when heated to 800 °C and the boiling point of the resulting BaO is 2000 °C such that it remains substantially vaporized for a plasma temperature above 2300 K. In an embodiment, the source of water comprises an oxide and hydrogen that may also serve as the source of H. The source of hydrogen may comprise hydrogen gas. The oxide may be capable of being reduced by hydrogen to form $H_2O$. The oxide may comprise at least one of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, and Zn. At least one of the source of $H_2O$ compound, the concentration of the source of $H_2O$ compound, the water vapor pressure in the reaction cell chamber, the operating temperature, and the EM pumping rate may be controlled to control the amount of water supplied to the ignition. The concentration of the source of $H_2O$ compound may be in at least one range of about 0.001 mole% to 50 mole%, 0.01 mole% to 20 mole%, and 0.1 mole% to 10 mole%. In an embodiment, water is dissolved into the fuel melt such as one comprising at least one of silver, copper, and silver-copper alloy. The solubility of water is increased with the partial pressure of water in contact with the melt such as the water vapor partial pressure of the reaction cell chamber. The water pressure in the reaction cell chamber may be equilibrated with the water vapor pressure in the cell chamber. The equilibration may be achieved by means of the disclosure such as those for other gases such as argon. The reaction cell chamber water vapor pressure may be in at least one range of about 0.01 Torr to 100 atm, 0.1 Torr to 10 atm, and 0.5 Torr to 1 atm. The EM pumping rate may be in at least one range of about 0.01 ml/s to 10,000 ml/s, 0.1 ml/s to 1000 ml/s, and 0.1 ml/s to 100 ml/s.

The SF-CIHT cell power generation system includes a photovoltaic power converter configured to capture plasma photons generated by the fuel ignition reaction and convert them into useable energy. In some embodiments, high conversion efficiency may be desired. The reactor may expel plasma in multiple directions, e.g., at least two directions, and the radius of the reaction may be on the scale of approximately several millimeter to several meters, for example, from about 1 mm to about 25 cm in radius. Additionally, the spectrum of plasma generated by the ignition of fuel may resemble the spectrum of plasma generated by the sun and/or may include additional short wavelength radiation. FIGURE 3 shows an exemplary the absolute spectrum in the 5 nm to 450 nm region of the ignition of a 80 mg shot of silver comprising absorbed $H_2$ and $H_2O$ from gas treatment of silver melt before dripping into a water reservoir showing an average optical power of 527 kW, essentially all in the ultraviolet and extreme ultraviolet spectral region. The ignition was achieved with a low voltage, high current using a Taylor-Winfield model ND-24-75 spot welder. The voltage drop across the shot was less than 1 V and the current was about 25 kA. The high intensity UV emission had a duration of about 1 ms. The control spectrum was flat in the UV region. In an embodiment, the plasma is essentially 100% ionized that may be confirmed by measuring the Stark broadening of the H Balmer $\alpha$ line. The radiation of the solid fuel such as at least one of line and blackbody emission may have an intensity in at least one range of about 2 to 200,000 suns, 10 to 100,000 suns, 100 to 75,000 suns.

The UV and EUV spectrum may be converted to blackbody radiation. The conversion may be achieved by causing the cell atmosphere to be optically thick for the propagation of at least one of UV and EUV photons. The optical thickness may be increased by causing metal such as the fuel metal to vaporize in the cell. The optically thick plasma may comprise a blackbody. The blackbody temperature may be high due to the extraordinarily high power density capacity of the hydrino reaction and the high energy of the photons emitted by the hydrino reaction. The spectrum (100 nm to 500 nm region with a cutoff at 180 nm due to the sapphire spectrometer window) of the ignition of molten silver pumped into W electrodes in atmospheric argon with an ambient $H_2O$ vapor pressure of about 1 Torr is shown in FIGURE 4. The source of electrical power 2 comprised two sets of two capacitors in series (Maxwell Technologies K2 Ultracapacitor 2.85V/3400F) that were connected in parallel to provide about 5 to 6 V and 300 A of constant current with superimposed current pulses to 5kA at frequency of about 1 kHz to 2 kHz. The average input power to the W electrodes (1 cm X 4 cm) was about 75 W. The initial UV line emission transitioned to 5000K blackbody radiation when the atmosphere became optically thick to the UV radiation with the vaporization of the silver by the hydrino reaction power. The power density of a 5000K blackbody radiator with an emissivity of vaporized silver of 0.15 is 5.3 MW/$m^2$. The area of the observed plasma was about 1 $m^2$. The blackbody radiation may heat a component of the cell 26 such as top cover 5b4 that may serve as a blackbody radiator to the PV converter 26a in a thermophotovoltaic embodiment of the disclosure.

An exemplary test of a melt comprising a source of oxygen comprised the ignition an 80 mg silver/1 wt% borax anhydrate shot in an argon/5 mole% $H_2$ atmosphere with the optical power determined by absolute spectroscopy. Using a welder (Acme 75 KVA spot welder) to apply a high current of about 12 kA at a voltage drop of about 1 V 250 kW of power was observed for duration of about 1 ms. In another exemplary test of a melt comprising a source of oxygen comprised the ignition an 80 mg silver/2 mol% $Na_2O$ anhydrate shot in an argon/5 mole% $H_2$ atmosphere with the optical power determined by absolute spectroscopy. Using a welder (Acme 75 KVA spot welder) to apply a high current of about 12 kA at a voltage drop of about 1 V 370 kW of power was observed for duration of about 1 ms. In another exemplary test of a melt comprising a source of oxygen comprised the ignition an 80 mg silver/2 mol% $Li_2O$ anhydrate shot in an argon/5 mole% $H_2$ atmosphere with the optical power determined by absolute spectroscopy. Using a welder (Acme 75 KVA spot welder) to apply a high current of about 12 kA at a voltage drop of about 1 V 500 kW of power was observed for duration of about 1 ms.

Based on the size of the plasma recorded with an Edgertronics high-speed video camera, the hydrino reaction and power depends on the reaction volume. The volume may need to be a minimum for optimization of the reaction power and energy such as about 0.5 to 10 liters for the ignition of a shot of about 30 to 100 mg such as a silver shot and a source of H and HOH catalyst such as hydration. From the shot ignition, the hydrino reaction rate is high at very high silver pressure. In an embodiment, the hydrino reaction may have high kinetics with the high plasma pressure. Based on high-speed spectroscopic and Edgertronics data, the hydrino reaction rate is highest at the initiation when the plasma volume is the lowest and the Ag vapor pressure is the highest. The 1 mm diameter Ag shot ignites when molten (T = 1235 K). The initial volume for the 80 mg (7.4 X $10^{-4}$ moles) shot is 5.2 X $10^{-7}$ liters. The corresponding maximum pressure is about 1.4 X $10^5$ atm. In an exemplary embodiment, the reaction was observed to expand at about sound speed (343 m/s) for the reaction duration of about 0.5 ms. The final radius was about 17 cm. The final volume without any backpressure was about 20 liters. The final Ag partial pressure was about 3.7E-3 atm. Since the reaction may have higher kinetics at higher pressure, the reaction rate may be increased by electrode confinement by applying electrode pressure and allowing the plasma to expand perpendicular to the inter-electrode axis.

The power released by the hydrino reaction caused by the addition of one mole% or 0.5 mole% bismuth oxide to molten silver injected into ignition electrodes of a SunCell at 2.5 ml/s in the presence of a 97% argon/3% hydrogen atmosphere was measured. The relative change in slope of the temporal reaction cell water coolant temperature before and after the addition of the hydrino reaction power contribution corresponding to the oxide addition was multiplied by the constant initial input power that served as an internal standard. For duplicate runs, the total cell output powers with the hydrino power contribution following oxygen source addition were determined by the products of the ratios of the slopes of the temporal coolant temperature responses of 97, 119, 15, 538, 181, 54, and 27 corresponding to total input powers of 7540 W, 8300 W, 8400 W, 9700 W, 8660 W, 8020 W, and 10,450 W. The thermal burst powers were 731,000 W, 987,700 W, 126,000 W, 5,220,000 W, 1,567,000 W, 433,100 W, and 282,150 W, respectively.

The power released by the hydrino reaction caused by the addition of one mole% bismuth oxide ($Bi_2O_3$), one mole% lithium vanadate ($LiVO_3$), or 0.5 mole% lithium vanadate to molten silver injected into ignition electrodes of a SunCell at 2.5 ml/s in the presence of a 97% argon/3% hydrogen atmosphere was measured. The relative change in slope of the temporal reaction cell water coolant temperature before and after the addition of the hydrino reaction power contribution corresponding to the oxide addition was multiplied by the constant initial input power that served as an internal standard. For duplicate runs, the total cell output powers with the hydrino power contribution following oxygen source addition were determined by the products of the ratios of the slopes of the temporal coolant temperature responses of 497, 200, and 26 corresponding to total input powers of 6420 W, 9000 W, and 8790 W. The thermal burst powers were 3.2 MW, 1.8 MW, and 230,000 W, respectively.

In an exemplary embodiment, the ignition current was ramped from about 0 A to 2000 A corresponding to a voltage increase from about 0 V to 1 V in about 0.5, at which voltage the plasma ignited. The voltage is then increased as a step to about 16 V and held for about 0.25 s wherein about 1 kA flowed through the melt and 1.5 kA flowed in series through the bulk of the plasma through another ground loop other than the electrode 8. With an input power of about 25 kW to a SunCell comprising Ag (0.5 mole % $LiVO_3$) and argon-$H_2$ (3%) at a flow rate of 9 liters/s, the power output was over 1 MW. The ignition sequence repeated at about 1.3 Hz.

In an exemplary embodiment, the ignition current was about 500 A constant current and the voltage was about 20 V. With an input power of about 15 kW to a SunCell comprising Ag (0.5 mole % $LiVO_3$) and argon-$H_2$ (3%) at a flow rate of 9 liters/s, the power output was over 1 MW.

In an embodiment, the converter comprises a plurality of converters that are ganged to comprise combined cycles. The combined cycle converters may be selected from the group of a photovoltaic converter, a photoelectronic converter, a plasmadynamic converter, a thermionic converter, a thermoelectric converter, a Sterling engine, a Brayton cycle engine, a Rankine cycle engine, and a heat engine, and a heater. In an embodiment, the SF-CIHT cell produces predominantly ultraviolet and extreme ultraviolet light. The converter may comprise a combined cycle comprising a photoelectron converter then a photoelectric converter wherein the photoelectric converter is transparent to ultraviolet light and may be primarily responsive to extreme ultraviolet light. The converter may further comprise additional combined cycle converter elements such as at least one of a thermoelectric converter, a Sterling engine, a Brayton cycle engine, and a Rankine cycle engine.

In an embodiment, the SunCell may serve as a blackbody light calibration source wherein the temperature may exceed that of conventional blackbody light sources. The blackbody temperature may be in at least one range of 1000K to 15,000K. In an embodiment, the SunCell may achieve very high temperatures such as in the range of 2000K to 15,000K. The SunCell may serve as a high temperature source for material processing such as heat treatment, curing, annealing, welding, melting, and sintering. The material to be heated may be placed in the plasma, or the heat may be indirectly directed to the material by means such as radiation, conduction, and convection by a corresponding heat transfer means such as a heat conduit, heat pipe, radiation path, and heat exchanger. In an embodiment, EUV emission form by the hydrino reaction such as EUV emission form at low voltage comprises as a method to detect the presence of hydrogen.

A schematic drawing of a triangular element of the geodesic dense receiver array of the photovoltaic converter is shown in FIGURE 5. The PV converter 26a may comprise a dense receiver array comprised of triangular elements 200 each comprised of a plurality of concentrator photovoltaic cells 15 capable of converting the light from the blackbody radiator 5b4 into electricity. The PV cells 15 may comprise at least one of GaAs P/N cells on a GaAs N wafer, InAlGaAs on InP, and InAlGaAs on GaAs. The cells may each comprise at least one junction. The triangular element 200 may comprise a cover body 203, such as one comprising stamped Kovar sheet, a hot port and a cold port such as ones comprising press fit tubes 202, and attachment flanges 203 such as ones comprising stamped Kovar sheet for connecting contiguous triangular elements 200.

In an embodiment, the SunCell comprises a reaction mixture that forms hydrinos as a reaction product. The reaction may form energetic plasma. The reaction mixture may further comprise a source of carbon such as at least one of graphite and a hydrocarbon. The energetic plasma may bombard solid carbon or carbon deposited on a substrate from the source of carbon. In an embodiment, the bombardment converts graphitic carbon to diamond form of carbon. In exemplary embodiments described in Mills publications R. L. Mills, J. Sankar, A. Voigt, J. He, B. Dhandapani, "Synthesis of HDLC Films from Solid Carbon," J. Materials Science, J. Mater. Sci. 39 (2004) 3309-3318 and R. L. Mills, J. Sankar, A. Voigt, J. He, B. Dhandapani, "Spectroscopic Characterization of the Atomic Hydrogen Energies and Densities and Carbon Species During Helium-Hydrogen-Methane Plasma CVD Synthesis of Diamond Films," Chemistry of Materials, Vol. 15, (2003), pp. 1313-1321 incorporated by reference, the SunCell comprises the energetic plasma source to cause formation of diamond from non-diamond form of carbon. The production of diamond may be measured by the presence of the 1333 cm$^{-1}$ Raman peak.

Molecular hydrino gas may be purified and isolated by ionizing ordinary hydrogen. The ionized hydrogen may be separated removed by at least one of electric and magnetic fields. Alternatively, the ordinary hydrogen can be removed by reaction with a reactant that forms a condensable reaction product wherein the reaction is made favorable by the plasma condition. An exemplary reactant is nitrogen that forms condensable ammonia that is removed in a cryotrap to yield purified molecular hydrino gas. Alternatively, molecular hydrino gas may be purified and isolated using molecular sieves that separate ordinary hydrogen from molecular hydrino gas based on the higher diffusion of the latter. An exemplary separatory molecular sieve is $Na_8(Al_6Si_6O_{24})Cl_2$.

## Claims

1. A power system comprising:

    a) an inductively coupled heater to melt a metal and form a molten metal in a reservoir;
    b) an injection system comprising an electromagnetic pump to inject the molten metal across a pair of electrodes;
    c) a gas injector to inject at least one of water vapor and hydrogen gas into the system;
    d) an ignition system to produce a current flow through the molten metal injected across the electrodes and induce the formation of a light emitting plasma;
    e) a blackbody radiator heated to incandescent temperature by the plasma; and
    f) a light to electricity converter to receive light from the blackbody radiator and be converted to electricity.

2. The power system according to claim 1, wherein said molten metal is silver or silver-copper alloy.

3. The power system according to claim 1, wherein the light to electricity converter is a photovoltaic converter comprising perovskite cells.

4. The power system according to claim 1, wherein the light to electricity converter comprises a geodesic dome comprised of an array of triangular elements, each element comprising a plurality of PV cells and backing cold plates.

5. The power system of claim 1, wherein the gas injector further injects oxygen gas.

6. The power system of claim 1, wherein the injection system comprises two reservoirs; two nozzles; and at least two electromagnetic pumps; such that two molten metal streams are created and intersect;
    wherein the current flow through the molten metal occurs when the two molten metal streams intersect.

7. The power system of claim 6, wherein the two reservoirs are electrically isolated.

8. The power system of claim 1, wherein the inductively coupled heater comprises a coil circumferential about the reservoir.

9. The power system of claim 1, wherein the molten metal further comprises a metal oxide or a Group 13, 14, 15, 16, 17 oxide.

FIG. 2I10

EP 3 869 522 A2

Fig. 2|11

5a. Pelletizer
5b. First Vessel
5c. Second Vessel
5d. Crucible
5e. Insulation
5f. Inductively Coupled Heater
Coil Section One
5k. Electromagnetic Pump
5m. Inductively Coupled Heater
Power Supply to Coils
5o. Inductively Coupled Heater
Coil Section Two
5p. Inductively Coupled Heater
Leads
5q. Nozzle
5s. Nozzle Cooler
5t. Shot
5u. Hydrogen Tank and Line
5v. H₂O/Steam Tank and Line
5w. Hydrogen Manifold and
Feed Lines
5x. H₂O/Steam Manifold and
Feed Lines
8. Stationary Electrode
9. Negative Electrode Bus Bar
10. Positive Electrode Bus Bar
31. Photovoltaic Converter
Cooling System Chiller
31a. Nozzle Cooling System
Chiller
31d. Nozzle Cooling System
Chiller Inlet
31e. Nozzle Cooling System
Chiller Outlet

**FIG. 2I12**

Fig. 2I13

5a. Pelletizer
5b. First Vessel
5c. Second Vessel
5d. Crucible
5e. Insulation
5f. Inductively Coupled Heater
Coil Section One
5k. Electromagnetic Pump
5m. Inductively Coupled Heater
Power Supply to Coils
5o. Inductively Coupled Heater
Coil Section Two
5p. Inductively Coupled Heater
Leads
5q. Nozzle
5s. Nozzle Cooler
5t. Shot
5u. Hydrogen Tank and Line
5v. H₂O/Steam Tank and Line
5w. Hydrogen Manifold and
Feed Lines
5x. H₂O/Steam Manifold and
Feed Lines
5y. H₂/Steam Manifold
5z. Pipe Bubbler
8. Stationary Electrode
9. Negative Electrode Bus Bar
10. Positive Electrode Bus Bar
31. Photovoltaic Converter
Cooling System Chiller
31a. Nozzle Cooling System
Chiller
31d. Nozzle Cooling System
Chiller Inlet
31e. Nozzle Cooling System
Chiller Outlet
31f. Electrode Cooling System
Inlet
31g. Electrode Cooling System
Outlet

FIG. 2I14

FIG. 2I15

EP 3 869 522 A2

FIG. 2I16

5e

31e

31d

5u

5v

5k4

5k1

5k3

5m

5k3

5f

5o

5b

5c

5b1

5z

5k3

5k2

5k5

5k

5k1

5k6

5k4

31e

5b1

31d

5y

EP 3 869 522 A2

**FIG. 2I17**

FIG. 2I18

# FIG. 2I19

FIG. 2120

EP 3 869 522 A2

**FIG. 2I21**

# FIG. 2I22

**FIG. 2I23**

EP 3 869 522 A2

**FIG. 2I24**

EP 3 869 522 A2

**FIG. 2I25**

**FIG. 2I26**

EP 3 869 522 A2

FIG. 21/27

FIG. 2I28

**FIG. 2I29**

EP 3 869 522 A2

FIG. 2I30

FIG. 2I31

**FIG. 2I32**

FIG. 2I/33

FIG. 2I34

EP 3 869 522 A2

**FIG. 2I35**

**FIG. 2/36**

**FIG. 2I37**

FIG. 2I38

**FIG. 2/3**

**FIG. 2I40**

**FIG. 2141**

FIG. 2142

FIG. 2I43

EP 3 869 522 A2

FIG. 2144

FIG. 2145

FIG. 2146

**FIG. 2I47**

FIG. 218

**FIG. 2I49**

**FIG. 2/50**

**FIG. 2I51**

**FIG. 2I52**

FIG. 2153

5b4

8    8    5q

EP 3 869 522 A2

174

FIG. 2I54

**FIG. 2155**

**FIG. 2I56**

EP 3 869 522 A2

FIG. 2I57

**FIG. 2I58**

**FIG. 2I59**

FIG. 2I60

FIG. 2I61

5b4

5b81

5b7

5q

5k6

5k9

5k9

5k10

5k9

5c

5b8

5k6

5k7

5k7

5k2

**FIG. 2I62**

**FIG. 2I63**

**FIG. 2I64**

EP 3 869 522 A2

**FIG. 2165**

FIG. 2I66

EP 3 869 522 A2

FIG. 2I67

FIG. 2I68

**FIG. 2/69**

**FIG. 2I70**

FIG. 2I71

FIG. 2I72

FIG. 2I73

9a

9, 10

8

FIG. 2174

5b3a

26a

5b4a

5b4

5b82

5b81

# FIG. 2I75

5b82

5b7

5b81

5b81

*FIG. 2I76*

**FIG. 2I77**

FIG. 2I78

**FIG. 2I79**

Labels: 5b42, 5b4b, 5b71, 5q, 5k6, 5k9, 5k10, 5b41, 5c, 5b8, 5k7, 5k9, 5k6, 5k2, 5k7

**FIG. 2I80**

FIG. 2I81

**FIG. 2I82**

EP 3 869 522 A2

FIG. 2I83

**FIG. 2I84**

**FIG. 2I85**

**FIG. 2I86**

**FIG. 2I87**

**FIG. 2/88**

FIG. 21/89

*FIG. 2190*

211

EP 3 869 522 A2

**FIG. 2/91**

FIG. 2/92

FIG. 2193

FIG. 2193

FIG. 2194

**FIG. 2I95**

EP 3 869 522 A2

FIG. 2I96

**FIG. 2l97**

5q

5k61

5k15

5b8

5k6

5k3

5k2

5k2a

5k2

5kk

**FIG. 2198**

FIG. 2/99

**FIG. 2I100**

5b4 5k14 5q 5c 5k14 5b8 5k7 5k3 5k2 5k2a

FIG. 21/101

FIG. 2I102

FIG. 21/103

*FIG. 3*

INTEGRATED POWER: 527kW

WAVELENGTH nm

*FIG. 3*

*FIG. 4*

Fig. 5

200

Cover
Stamped Cover sheet

Has a hot post and a
cold post with press-fit
holes (one shown)

Cover body

Attachment Flange:
Stamped Cover sheet

15

203

202

201

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62280300
- US 62298431 B
- US 62311896 B
- US 62317230 B
- US 62318694 B
- US 62326527 B
- US 62338041 B
- US 62342774 B
- US 62353426 B
- US 62355313 B
- US 62364192 B
- US 62368121 B
- US 62380301 B
- US 62385872 B
- US 62411398 B
- US 62434331 B

- US 62446256 B
- US 0861455 W
- US 09052072 W
- US 1027828 W
- US 1128889 W
- US 1231369 W
- US 13041938 W
- US IB2014058177 W
- US 1432584 W
- US 2015033165 W
- US 2015065826 W
- US 1612620 W
- US 5390854 A
- US 5277551 A
- US 3914371 A

**Non-patent literature cited in the description**

- **R. MILLS ; X YU ; Y. LU ; G CHU ; J. HE ; J. LOTOSKI.** Catalyst Induced Hydrino Transition (CIHT) Electrochemical Cell. *International Journal of Energy Research,* 2013
- **R. MILLS ; J. LOTOSKI ; J. KONG ; G CHU ; J. HE ; J. TREVEY.** *High-Power-Density Catalyst Induced Hydrino Transition (CIHT) Electrochemical Cell,* 2014
- **R. MILLS ; J. LOTOSKI ; W. GOOD ; J. HE.** *Solid Fuels that Form HOH Catalyst,* 2014
- **J. LÉDÉ ; F. LAPICQUE ; J. VILLERMAUX.** Production of hydrogen by direct thermal decomposition of water. *International Journal of Hydrogen Energy,* 1983, vol. 8, 675-679
- **H. H. G. JELLINEK ; H. KACHI.** The catalytic thermal decomposition of water and the production of hydrogen. *International Journal of Hydrogen Energy,* 1984, vol. 9, 677-688
- **S. Z. BAYKARA.** Hydrogen production by direct solar thermal decomposition of water, possibilities for improvement of process efficiency. *International Journal of Hydrogen Energy,* 2004, vol. 29, 1451-1458
- **S. Z. BAYKARA.** Experimental solar water thermolysis. *International Journal of Hydrogen Energy,* 2004, vol. 29, 1459-1469

- **E. BULBUL ; M. MARKEVITCH ; A. FOSTER ; R. K. SMITH ; M. LOEWENSTEIN ; S. W. RANDALL.** Detection of an unidentified emission line in the stacked X-Ray spectrum of galaxy clusters. *The Astrophysical Journal,* 2014, vol. 789 (1
- **A. BOYARSKY ; O. RUCHAYSKIY ; D. IAKUBOVSKYI ; J. FRANSE.** *An unidentified line in X-ray spectra of the Andromeda galaxy and Perseus galaxy cluster,* 2014
- **B. L. SATER ; N. D. SATER.** High voltage silicon VMJ solar cells for up to 1000 suns intensities. *Photovoltaic Specialists Conference, 2002. Conference Record of the Twenty-Ninth IEEE,* 19 May 2002, 1019-1022
- **R. L. MILLS ; J. SANKAR ; A. VOIGT ; J. HE ; B. DHANDAPANI.** Synthesis of HDLC Films from Solid Carbon. *J. Materials Science, J. Mater. Sci.,* 2004, vol. 39, 3309-3318
- **R. L. MILLS ; J. SANKAR ; A. VOIGT ; J. HE ; B. DHANDAPANI.** Spectroscopic Characterization of the Atomic Hydrogen Energies and Densities and Carbon Species During Helium-Hydrogen-Methane Plasma CVD Synthesis of Diamond Films. *Chemistry of Materials,* 2003, vol. 15, 1313-1321